# EUROPEAN PATENT SPECIFICATION

(11) **EP 4 418 363 B1**
(45) Date of publication and mention of the grant of the patent: **25.11.2026**
(21) Application number: 22882998.2
(22) Date of filing: 21.10.2022
(51) Int. Cl.: H01M 4/136, H01M 4/58, H01M 4/36, H01M 4/505, H01M 4/525, H01M 4/62, H01M 10/052, H01M 4/1397, C01B 25/45, C01G 45/22, H01M 4/02

(54) **POSITIVE ELECTRODE ACTIVE MATERIAL, POSITIVE ELECTRODE PLATE, SECONDARY BATTERY, BATTERY MODULE, BATTERY PACK AND POWER CONSUMING DEVICE**
POSITIVELEKTRODENAKTIVMATERIAL, POSITIVELEKTRODENPLATTE, SEKUNDÄRBATTERIE, BATTERIEMODUL, BATTERIEPACK UND STROMVERBRAUCHENDE VORRICHTUNG
MATÉRIAU ACTIF D'ÉLECTRODE POSITIVE, PLAQUE D'ÉLECTRODE POSITIVE, BATTERIE SECONDAIRE, MODULE DE BATTERIE, BLOC-BATTERIE ET DISPOSITIF CONSOMMATEUR D'ÉNERGIE

(30) Priority: 22.10.2021 WO PCT/CN2021/125898; 12.11.2021 WO PCT/CN2021/130350; 22.12.2021 WO PCT/CN2021/140462; 01.04.2022 WO PCT/CN2022/084923; 01.04.2022 WO PCT/CN2022/084907; 17.06.2022 WO PCT/CN2022/099484; 17.06.2022 WO PCT/CN2022/099516; 17.06.2022 WO PCT/CN2022/099523; 20.06.2022 WO PCT/CN2022/099868
(43) Date of publication of application: 21.08.2024
(73) Proprietor: Contemporary Amperex Technology (Hong Kong) Limited, Central, Central And Western District (HK)
(72) Inventor: JIANG, Yao, Ningde, Fujian 352100 (CN); OUYANG, Chuying, Ningde, Fujian 352100 (CN); ZHANG, Xinxin, Ningde, Fujian 352100 (CN); DENG, Bin, Ningde, Fujian 352100 (CN); WANG, Zhiqiang, Ningde, Fujian 352100 (CN); YUAN, Tianci, Ningde, Fujian 352100 (CN); XU, Bo, Ningde, Fujian 352100 (CN); CHEN, Shangdong, Ningde, Fujian 352100 (CN)
(74) Representative: Jacob, Reuben Ellis
(86) International application number: PCT/CN2022/126838
(87) International publication number: WO 2023/066394

(56) References cited:
- CN-A- 101 339 994
- CN-A- 103 682 266
- CN-A- 104 332 614
- CN-A- 104 577 115
- CN-A- 105 470 479
- CN-A- 106 058 225
- CN-A- 106 816 600
- CN-A- 108 511 715
- CN-A- 108 630 904
- CN-A- 110 416 525
- CN-A- 111 697 203
- US-A1- 2016 190 584
- US-A1- 2017 365 859
- US-A1- 2019 355 983
- BRUNO LANSON: "Decomposition of Experimental X-ray Diffraction Patterns (Profile Fitting): A Convenient Way to Study Clay Minerals", CLAYS AND CLAY MINERALS, vol. 45, no. 2, 1 January 1997 (1997-01-01), pages 132 - 146, XP055207121, ISSN: 0009-8604, DOI: 10.1346/CCMN.1997.0450202

## Description

### Technical Field

The present application relates to the technical field of lithium batteries, and in particular to a positive electrode active material as well as a positive electrode plate, a secondary battery, a battery module, a battery pack and a power consuming device comprising same.

### Background Art

In recent years, with an increasingly wide application range of secondary batteries, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc. As an existing positive electrode active material for secondary batteries, the material having active transition metal doping elements, such as lithium manganese phosphate, still needs to be improved in terms of performance.

The relevant prior art can be found in CN 111 697 203 A, US 2016/190584 A1, US 2019/355983 A1 and CN 108 511 715 A.

Therefore, the existing positive electrode active material and positive electrode plate comprising same, secondary battery, battery module, battery pack, and power consuming device remain to be improved.

### Summary

The present application has been made in view of the above-mentioned problems, and an objective thereof is to provide such a lithium manganese phosphate positive electrode active material that the secondary battery using same has a higher capacity per gram, and good cycling performance and safety performance.

In order to achieve the above objective, the present application provides a lithium manganese phosphate positive electrode active material and a preparation method therefor, as well as related a secondary battery and a battery module.

In order to achieve the above objective, the invention is defined in the independent claim 1, interrelated claims 13-15 and preferable features are defined in the dependent claims, wherein a first aspect of the present application provides a positive electrode active material with a core-shell structure, comprising an inner core and a shell coating the inner core, wherein the inner core has a chemical formula of LiₘAₓMn_{1-y}B_{y}P_{1-z}C_{z}O₄₋ₙDₙ, where A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, D includes one or more elements selected from S, F, Cl and Br, m is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1, and the inner core is electrically neutral; and the shell comprises a first coating layer coating the inner core, a second coating layer coating the first coating layer, and a third coating layer coating the second coating layer, wherein the first coating layer comprises a crystalline pyrophosphate of LiₐMP₂O₇ and/or M_{b}(P₂O₇)_{c} where 0 ≤ a ≤ 2, 1 ≤ b ≤ 4, 1 ≤ c ≤ 6, the values of a, b, and c satisfy the condition of keeping the crystalline pyrophosphate LiₐMP₂O₇ or M_{b}(P₂O₇)_{c} electrically neutral, and M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb, and Al; the second coating layer comprises a crystalline phosphate of XPO₄, where X is selected from one or more elements of Li, Fe, Ni, Mg, Co, Cu, Zn, Ti, Ag, Zr, Nb and Al; and the third coating layer is carbon.

In another aspect of the present application, provided is a positive electrode active material with a core-shell structure, comprising an inner core and a shell coating the inner core, wherein the inner core has a chemical formula of LiₐAₓMn_{1-y}B_{y}P_{1-z}C_{z}O₄₋ₙDₙ, where A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, D includes one or more elements selected from S, F, Cl and Br, a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1, and the inner core is electrically neutral; and the shell comprises a first coating layer coating the inner core and a second coating layer coating the first coating layer, wherein the first coating layer comprises a pyrophosphate of MP2O7 and a phosphate of XPO₄, where M and X are each independently selected from one or more of Li, Fe, Ni, Mg, Co, Cu, Zn, Ti, Ag, Zr, Nb and Al; and the second coating layer comprises carbon.

In yet another aspect of the present application, proposed is a positive electrode active material with a core-shell structure, comprising an inner core and a shell coating the inner core, wherein the inner core comprises Li₁₊ₓMn_{1-y}A_{y}P_{1-z}R_{z}O₄, where x is any numerical value in a range of 0.100-0.100, y is any numerical value in a range of 0.001-0.500, z is any numerical value in a range of 0.001-0.100, A is selected from one or more elements of Zn, Al, Na, K, Mg, Mo, W, Ti, V, Zr, Fe, Ni, Co, Ga, Sn, Sb, Nb and Ge, optionally from one or more elements of Zn, Fe, Ti, V, Ni, Co and Mg, and R is selected from one or more elements of B, Si, N and S; and the shell comprises a first coating layer coating the inner core and a second coating layer coating the first coating layer; wherein the first coating layer comprises a crystalline pyrophosphate of MaP₂O₇ and a crystalline oxide of M'_{b}O_{c}, where a is greater than 0 and less than or equal to 4, b is greater than 0 and less than or equal to 2, c is greater than 0 and less than or equal to 5, M is selected from one or more elements of Li, Fe, Ni, Mg, Co, Cu, Zn, Ti, Ag, Zr, Nb and Al, optionally from one or more elements of Li, Fe and Zr, and M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Si, Zn, Zr and Sn; and the second coating layer comprises carbon.

In yet another aspect of the present application, provided is a positive electrode active material with a core-shell structure, comprising an inner core and a shell coating the inner core, wherein the inner core comprises Li₁₊ₓMn_{1-y}A_{y}P_{1-z}R_{z}O₄, where x is any numerical value in a range of 0.100-0.100, y is any numerical value in a range of 0.001-0.600, z is any numerical value in a range of 0.001-0.100, A is selected from one or more elements of Zn, Al, Na, K, Mg, Mo, W, Ti, V, Zr, Fe, Ni, Co, Ga, Sn, Sb, Nb and Ge, optionally from one or more elements of Fe, V, Ni, Co and Mg, and R is selected from one or more elements of B, Si, N and S, optionally from one or more elements of Si, N and S; and the shell comprises a first coating layer coating the inner core, a second coating layer coating the first coating layer, and a third coating layer coating the second coating layer, wherein the first coating layer comprises a crystalline pyrophosphate of LiₐMP₂O₇ and/or M_{b}(P₂O₇)_{c}, where a is greater than 0 and less than or equal to 2, b is any numerical value in a range of 1-4, c is any numerical value in a range of 1-3, and M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb and Al, optionally from one or more elements of Fe, Ni, Mg, Co, Cu, Zn, Ti, Ag, Zr and Al; the second coating layer comprises a crystalline oxide of M'_{d}Oₑ, where d is greater than 0 and less than or equal to 2, e is greater than 0 and less than or equal to 5, and M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Si, Ti, V, Ni, Cu, Zr and W; and the third coating layer comprises carbon.

In yet another aspect of the present application, provided is a positive electrode active material with a core-shell structure, comprising an inner core and a shell coating the inner core, wherein the inner core comprises LiₙAₓMn_{1-y}B_{y}P_{1-z}C_{z}O₄₋ₙDₙ, where m is selected from any numerical value in a range of 0.5-1.2, optionally from any numerical value in a range of 0.9-1.1, x is selected from any numerical value in a range of 0.001-0.5, optionally from any numerical value in a range of 0.001-0.1, y is selected from any numerical value in a range of 0.001-0.5, z is selected from any numerical value in a range of 0.001-0.2, optionally from any numerical value in a range of 0.001-0.1, n is selected from any numerical value in a range of 0.001-0.5, optionally from any numerical value in a range of 0.001-0.1, A is selected from one or more elements of Zn, Al, Na, K, Mg, Nb, Mo and W, optionally from one or more elements of Al, Mg, Nb, Mo and W, B is selected from one or more elements of Ti, V, Zr, Fe, Ni, Mg, Co, Ga, Sn, Sb, Nb and Ge, optionally from one or more elements of Ti, V, Fe, Ni, Mg and Co, C is selected from one or more elements of B, S, Si and N, optionally from one or more elements of S, Si and N, and D is selected from one or more elements of S, F, Cl and Br, optionally from one or more elements of F, Cl and Br; and the shell comprises a first coating layer coating the inner core and a second coating layer coating the first coating layer; wherein the first coating layer comprises a crystalline pyrophosphate of MₐP₂O₇ and an oxide of M'_{b}O_{c}, where a is greater than 0 and less than or equal to 4, and optionally is greater than 0 and less than or equal to 3, b is greater than 0 and less than or equal to 2, c is greater than 0 and less than or equal to 5, M is selected from one or more elements of Li, Fe, Ni, Mg, Co, Cu, Zn, Ti, Ag, Zr, Nb and Al, optionally from one or two elements of Li and Fe, and M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, V, Cu, Zn, Zr and W; and the second coating layer comprises carbon.

In yet another aspect of the present application, proposed is a positive electrode active material with a core-shell structure, comprising an inner core and a shell coating the inner core, wherein the inner core comprises LiₙAₓMn_{1-y}B_{y}P_{1-z}C_{z}O₄₋ₙDₙ, where m is selected from any numerical value in a range of 0.9-1.1, x is selected from any numerical value in a range of 0.001-0.1, y is selected from any numerical value in a range of 0.001-0.6, optionally from any numerical value in a range of 0.001-0.5, z is selected from any numerical value in a range of 0.001-0.1, n is selected from any numerical value in a range of 0.001-0.1, A is selected from one or more elements of Zn, Al, Na, K, Mg, Nb, Mo and W, optionally from one or more elements of Al, Mg, Nb, Mo and W, B is selected from one or more elements of Ti, V, Zr, Fe, Ni, Mg, Co, Ga, Sn, Sb, Nb and Ge, optionally from one or more elements of Ti, V, Fe, Ni, Mg and Co, C is selected from one or more elements of B, S, Si and N, optionally from one or more elements of S, Si and N, and D is selected from one or more elements of S, F, Cl and Br, optionally from one or more elements of F, Cl and Br; and the shell comprises a first coating layer coating the inner core, a second coating layer coating the first coating layer, and a third coating layer coating the second coating layer, wherein the first coating layer comprises a crystalline pyrophosphate of LiₐMP₂O₇ and/or M_{b}(P₂O₇)_{c}, where a is greater than 0 and less than or equal to 2, b is any numerical value in a range of 1-4, c is any numerical value in a range of 1-3, and M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb and Al, optionally from one or more elements of Fe, Ni, Mg, Co, Cu, Zn, Ti, Ag, Zr and Al; the second coating layer comprises an oxide of M'_{d}Oₑ, where d is greater than 0 and less than or equal to 2, e is greater than 0 and less than or equal to 5, and M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Ca, Ti, V, Co, Ni, Cu, Zn and Zr; and the third coating layer comprises carbon.

In yet another aspect of the present application, provided is a positive electrode active material having a chemical formula of LiₐAₓMn_{1-y}B_{y}P_{1-z}C_{z}O₄₋ₙDₙ, wherein A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, D includes one or more elements selected from S, F, Cl and Br, a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; and the positive electrode active material is electrically neutral.

In yet another aspect of the present application, provided is a positive electrode active material with a core-shell structure, comprising an inner core and a shell coating the inner core, wherein the inner core has a chemical formula of Li₁₊ₓMn_{1-y}A_{y}P_{1-z}R_{z}O₄, where x is any numerical value in a range of 0.100-0.100, y is any numerical value in a range of 0.001-0.500, z is any numerical value in a range of 0.001-0.100, A is selected from one or more elements of Zn, Al, Na, K, Mg, Mo, W, Ti, V, Zr, Fe, Ni, Co, Ga, Sn, Sb, Nb and Ge, optionally one or more elements of Fe, Ti, V, Ni, Co, and Mg, and R is selected from one or more elements of B, Si, N, and S, and optionally, R is selected from an element of B, Si, N, and S; and the values of x, y, and z satisfy the condition of keeping the entire inner core electrically neutral; and the shell comprises a first coating layer coating the inner core, a second coating layer coating the first coating layer, and a third coating layer coating the second coating layer, wherein the first coating layer comprises a crystalline pyrophosphate of LiₐMP₂O₇ and/or M_{b}(P₂O₇)_{c}, where 0 ≤ a ≤ 2, 1 ≤ b ≤ 4, 1 ≤ c ≤ 6, the values of a, b, and c satisfy the condition of keeping the crystalline pyrophosphate of LiₐMP₂O₇ or M_{b}(P₂O₇)_{c} electrically neutral, and M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb, or Al; the second coating layer comprises a crystalline phosphate of XPO₄, where X is selected from one or more elements of Li, Fe, Ni, Mg, Co, Cu, Zn, Ti, Ag, Zr, Nb or Al; and the third coating layer is carbon.

In yet another aspect of the present application, provided is a positive electrode active material with a core-shell structure, comprising an inner core and a shell coating the inner core, wherein the inner core comprises Li₁₊ₓMn_{1-y}A_{y}P_{1-z}R_{z}O₄, where x = 0.100-0.100, y = 0.001-0.500, z = 0.001-0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S; and the shell comprises a first coating layer coating the inner core and a second coating layer coating the first coating layer, wherein the first coating layer comprises a pyrophosphate of MP₂O₇ and a phosphate of XPO₄, where M and X are each independently selected from one or more of Li, Fe, Ni, Mg, Co, Cu, Zn, Ti, Ag, Zr, Nb or Al; and the second coating layer comprises carbon.

In yet another aspect of the present application, proposed is a method for providing the inner core material, the method comprising the following steps: step (1): dissolving a manganese source, a source of a B element, and an acid in a solvent and stirring same to generate a suspension of a B element-doped manganese salt, filtering the suspension, and drying the resultant filter cake to obtain the B element-doped manganese salt; step (2): adding a lithium source, a phosphorus source, a source of an A element, a source of a C element and a source of a D element, a solvent and the B element-doped manganese salt obtained in step (1) into a reaction container, grinding and mixing same to obtain a slurry; step (3): transferring the slurry obtained in step (2) into a spray drying apparatus for spray-drying granulation to obtain particles; and step (4): sintering the particles obtained in step (3) to obtain an inner core of LiₘAₓMn_{1-y}B_{y}P_{1-z}C_{z}O₄₋ₙDₙ. In any embodiment of the present application, a source of the A element is selected from at least one of the elementary substance, oxide, phosphate, oxalate, carbonate and sulfate of the A element, a source of the B element is selected from at least one of the elementary substance, oxide, phosphate, oxalate, carbonate and sulfate of the B element, a source of the C element is selected from at least one of the sulfate, borate, nitrate and silicate of the C element, and a source of D element is selected from at least one of the elementary substance and ammonium salt of the D element. The distribution uniformity of the doping elements can be improved by selecting the sources of the doping elements, such that the properties of the positive electrode active material are improved.

In another aspect of the present application, proposed is a positive electrode active material comprising an inner core and a shell coating the inner core, wherein the inner core comprises at least one of a ternary material, _{d}Li₂MnO₃·(1-d)LiMO₂ and LiMPO₄, where 0 < d < 1, and M includes one or more selected from Fe, Ni, Co, and Mn; and the shell comprises a crystalline inorganic substance having a full width at half maximum of the main peak of 0-3° as measured by means of X-ray diffraction, and the crystalline inorganic substance includes one or more selected from a metal oxide and an inorganic salt.

The shell comprises at least one of the metal oxide and the inorganic salt, and carbon. Thus, the electrical conductivity, cycling performance and rate performance of the positive electrode active material can be improved.

The inner core comprises LiMPO₄, and M includes Mn and a non-Mn element, wherein the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6.

The present application can achieve at least one of the following effects through the scheme of doping a non-Mn element mentioned above:
1) the lattice change rate of the material is reduced, such that the difference of lattice constants between two phases at a grain boundary and the interface stress are decreased, and the Li+ transport ability at the interface is enhanced, thereby improving the rate performance of the positive electrode active material;
2) the capacity performance of the material is promoted, thereby increasing the capacity of a battery;
3) the change rate of the bond length becomes larger, which decreases the small-polaron migration barrier of the material, thereby increasing the electronic conductivity;
4) the activity of the surface oxygen is reduced, which inhibits the dissolution of Mn and reduces the interfacial side reaction between the positive electrode active material and the electrolyte solution;
5) the antisite defect concentration in the material is reduced, which improves the dynamic performance and capacity per gram of the material; and
6) the particle morphology is changed, such that the compacted density is increased.

The present application can achieve at least one of the following beneficial effects by adjusting and controlling the doping site of the non-Mn element, and the type and content of the element: increasing the electrical conductivity and capacity of the positive electrode active material, and addressing or even overcoming the disadvantages of poor stability and cycling performance of the material. Specifically, doping a non-Mn element at least one of the Mn site and the P site, in particular the Mn site, can reduce the lattice change rate of the positive electrode active material, improve the interfacial properties, reduce the interfacial side reaction with the electrolyte solution, and increase the capacity. Doping the Li site and the O site with a non-Mn element can assist in improving the properties of the positive electrode active material. For example, it also can reduce the lattice change rate, the interfacial side reaction between the electrolyte solution and the positive electrode active material and the antisite defect concentration, and increase the resistance to acidic corrosion by the electrolyte solution, which in turn can assist in improving the dynamic performance and capacity per gram of the material; and moreover, adjusting and controlling the above non-Mn element can further change the particle morphology, thereby increasing the compacted density. In general, the positive electrode active material has a significantly improved cycling performance and/or high-temperature stability, and a higher capacity per gram and compacted density, relative to materials such as lithium manganese phosphate that can be applied in a high-voltage system in the related art.

In any embodiment, the non-Mn element comprises one or two of a first doping element and a second doping element, the first doping element is doped at the manganese site, and the second doping element is doped at the phosphorus site. The first and second doping elements can not only effectively reduce the dissolution of manganese, which in turn reduces the migration of manganese ions to the negative electrode and the consumption of electrolyte solution due to the SEI film decomposition, thereby improving the cycling performance and safety performance of secondary batteries, but also can facilitate the adjustment of the Mn-O bond, lower the migration barrier of lithium ions and accelerate the migration of lithium ions, thereby improving the rate performance of secondary batteries.

In any embodiment, the first doping element satisfies at least one of the following conditions: the ionic radius of the first doping element being denoted as a, and the ionic radius of manganese element being denoted as b, |a-b|/b is not greater than 10%; and the valence alternation voltage of the first doping element being denoted as U, 2 V < U < 5.5 V. Thus, the lattice change rate of the positive electrode active material can be further reduced.

In any embodiment, the second doping element satisfies at least one of the following conditions: the chemical activity of a chemical bond formed by the second doping element and O is not less than that of a P-O bond; and the highest valence of the second doping element is not greater than 6. Thus, the change rate of the Mn-O bond can be increased and the small-polaron migration barrier of the positive electrode active material can be reduced, thereby improving the electronic conductivity. Therefore, the doping of the second element can also reduce the antisite defect concentration in the material and improve the dynamic performance and capacity per gram of the material, and also can change the particle morphology of the material, thereby increasing the compacted density of the material.

In any embodiment, the positive electrode active material contains at least two of the first doping elements.

In any embodiment, the first doping element includes one or more elements selected from Zn, Al, Na, K, Mg, Mo, W, Ti, V, Zr, Fe, Ni, Co, Ga, Sn, Sb, Nb and Ge.

In any embodiment, the first doping element includes at least two selected from Fe, Ti, V, Ni, Co, and Mg. Thus, the doping of the manganese site with two or more metals in the above range is beneficial for enhancing the doping effect, such that the surface oxygen activity is further reduced, thereby inhibiting the dissolution of manganese. In addition, doping with multiple elements can increase the synergistic effect between elements, which can, for example, not only increase the capacity of a battery, but also reduce the lattice change rate of the material, thereby enhancing the dynamic performance of the battery. Preferably, the first doping element includes an Fe element and a trivalent element, and the molar ratio of the trivalent element in the positive electrode active material is 0.001-0.05.

In any embodiment, the second doping element includes one or more elements selected from B (boron), S, Si and N.

In any embodiment, the positive electrode active material comprises Li₁₊ₓMn_{1-y}A_{y}P_{1-z}R_{z}O₄, where x is any numerical value in a range of 0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and R includes one or more elements selected from B (boron), S, Si and N. The selection of the A element doped at the manganese site from the above elements also facilitates reducing the lattice change rate of the lithium manganese phosphate during the process of lithium intercalation and de-intercalation, and improves the structural stability of the lithium manganese phosphate positive electrode material, greatly reducing the dissolution of manganese and reducing the oxygen activity on the particle surface; and The selection of the R element doped at the phosphorus site from the above elements is also beneficial to change the difficulty of the change of the Mn-O bond length, thereby improving the electronic conductivity and reducing the migration barrier of lithium ions, accelerating the migration of lithium ions, and improving the rate performance of a secondary battery. If the value of x is too small, the lithium content of the entire inner core system will decrease, which will affect the capacity per gram of the material. The value of y will limit the total amount of all doping elements. If y is too small, that is, the doping amount is too small, and the doping elements will have no effect. If y exceeds 0.5, the content of Mn in the system will be less, which will affect the voltage plateau of the material. The element R is doped at the position of P, and since the P-O tetrahedron is relatively stable, an excessive z value will affect the stability of the material. Therefore, when x, y, and z are selected from the ranges above, the positive electrode active material can have better performance.

In any embodiment, the positive electrode active material comprises Li₁₊ₓCₘMn_{1-y}A_{y}P₁₋₂R_{z}O₄₋ₙDₙ, wherein C includes one or more elements selected from Zn, Al, Na, K, Mg, Nb, Mo and W, A includes one or more elements selected from Zn, Al, Na, K, Mg, Mo, W, Ti, V, Zr, Fe, Ni, Mg, Co, Ga, Sn, Sb, Nb and Ge, R includes one or more elements selected from B (boron), S, Si and N, D includes one or more elements selected from S, F, Cl and Br, x is any numerical value in a range of 0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1. Doping the compound at all the Li, Mn, P and O sites thereof with specific amounts of specific elements can significantly improve the rate performance while significantly reducing the dissolution of Mn and Mn-site doping element, thereby significantly improving the cycling performance and/or high-temperature stability; moreover, the capacity per gram and compacted density of the material can also be increased.

In any embodiment, the ratio of y to 1-y is 1 : 10 to 1 : 1, optionally 1 : 4 to 1 : 1. Thus, the energy density and cycling performance of the positive electrode active material can be further improved.

In any embodiment, (1+x) : m is in a range of 9 to 1100, optionally in a range of 190-998. Thus, the energy density and cycling performance of the positive electrode active material can be further improved.

In any embodiment, the ratio of z to 1-z is 1 : 9 to 1 : 999, optionally 1 : 499 to 1 : 249. Thus, the cycling performance and rate performance of the secondary battery using the positive electrode active material can be further improved.

In any embodiment, C, R and D are each independently any element within the respective ranges above, and A is at least two elements within the range thereof; Optionally, C is selected from any element of Mg and Nb, and/or A is at least two elements selected from Fe, Ti, V, Co and Mg, and optionally is Fe and one or more elements selected from Ti, V, Co and Mg, and/or R is S, and/or D is F. Thus, the rate performance, capacity per gram and/or high-temperature performance of the secondary battery can be further improved.

In any embodiment, x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. Thus, the capacity per gram and rate performance and/or dynamic performance of the material can be further improved, and/or the rate performance and/or high-temperature performance of the battery is further improved.

In any embodiment, the lattice change rate of the positive electrode active material is 8% or less, optionally 4% or less, optionally 3.8% or less, more optionally 2.0-3.8%. Thus, the capacity per gram and rate performance of a cell can be improved.

In any embodiment, the Li/Mn antisite defect concentration of the positive electrode active material is 4% or less, optionally 2.2% or less, more optionally 1.5-2.2%, more optionally 2% or less, more optionally 0.5% or less. The Li/Mn antisite defect concentration within the above range can avoid the prevention of transport of Li⁺ by Mn²⁺, while increasing the capacity per gram and rate performance of the positive electrode active material.

In any embodiment, the surface oxygen valency of the positive electrode active material is -1.89 to -1.98, optionally -1.90 to -1.98, more optionally -1.90 or less, more optionally -1.82 or less. Thus, the surface energy of the highly active surfaces can be increased, which reduces the proportion of the highly active surfaces. Moreover, the interfacial side reactions between the positive electrode material and an electrolyte solution can be alleviated, such that the cycling performance, gas production during high-temperature storage, etc., of a cell are improved, which in turn can improve the cycling performance and high-temperature stability of the cell.

In any embodiment, the positive electrode active material has a compacted density under 3T of 2.0 g/cm³ or more, optionally 2.2 g/cm³ or more, optionally 2.2 g/cm³ or more and 2.8 g/cm³ or less. Thus, the volumetric energy density of the cell can be improved.

In any embodiment, the crystalline inorganic substance includes a pyrophosphate of QP₂O₇ and a phosphate of XPO₄, and the metal oxide includes Q'ₑO_{f}, where Q and X are each independently selected from one or more of Li, Fe, Ni, Mg, Co, Cu, Zn, Ti, Ag, Zr, Nb or Al, and optionally, Q includes Li and one or more selected from Fe, Ni, Mg, Co, Cu, Zn, Ti, Ag, Zr, Nb or Al; Q' is selected from one or more elements of Li, Fe, Ni, Mg, Co, Cu, Zn, Ti, Ag, Zr, Nb and Al, optionally from one or more elements of Li, Fe and Zr; M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Si, Zn, Zr and Sn; e is greater than 0 and less than or equal to 2; and f is greater than 0 and less than or equal to 5.

In any embodiment, the pyrophosphate includes LiₐQP₂O₇ and/or Q_{b}(P₂O₇)_{c}, where 0 ≤ a ≤ 2, 1 ≤ b ≤ 4, 1 ≤ c ≤ 6, the values of a, b, and c satisfy the condition of keeping the LiₐQP₂O₇ or Q_{b}(P₂O₇)_{c} electrically neutral, and Q in the LiₐQP₂O₇ and Q_{b}(P₂O₇)_{c} is each independently selected from one or more elements of Fe, Ni, Mg, Co, Cu, Zn, Ti, Ag, Zr, Nb, or Al.

The phosphate has an interplanar spacing of 0.244-0.425 nm, optionally 0.345-0.358 nm, and an included angle of crystal orientation (111) of 20.00° - 37.00°, optionally 24.25° - 26.45°; and the pyrophosphate has an interplanar spacing of 0.293-0.470 nm, optionally 0.293-0.326 nm, and an included angle of crystal orientation (111) of 18-32.57°, optionally 18-32°, optionally 19.211° - 30.846°, more optionally 26.41° - 32.57°. As the interplanar spacing and included angle of the crystalline substance are within the ranges above, the impurity phases in the coating layer can be effectively avoided, such that the capacity per gram, cycling performance and rate performance of the material are improved, which can more effectively reduce the lattice change rate and dissolution of manganese ions of the positive electrode active material during the process of lithium intercalation and de-intercalation, thereby improving the high-temperature cycling performance and high-temperature storage performance of the battery.

In any embodiment, the shell comprises a carbon coating layer, the crystalline inorganic substance is between the inner core and the carbon coating layer, and the carbon for the carbon coating layer is a mixture of SP2-form carbon and SP3-form carbon, and optionally, the molar ratio of the SP2-form carbon to the SP3-form carbon is any numerical value in a range of 0.07-13, optionally any numerical value in a range of 0.1-10, optionally any numerical value in a range of 2.0-3.0. In the present application, the overall performance of the secondary battery is improved by limiting the molar ratio of the SP2-form carbon to the SP3-form carbon within the above ranges. The following situations can be avoided by using a mixed form of SP2-form carbon and SP3-form carbon and limiting the ratio of SP2-form carbon to SP3-form carbon within a certain range: if the carbon in the coating layer is in the form of amorphous SP3 only, the electrical conductivity is poor; and if all the carbon is in a graphitized SP2-form, although the electrical conductivity is good, there are few lithium ion paths, which is not conducive to lithium intercalation and de-intercalation. In addition, limiting the molar ratio of SP2-form carbon to SP3-form carbon within the above ranges can not only achieve good electrical conductivity, but also can ensure the paths of lithium ions, which is beneficial to the realization of the function of the secondary battery and the cycling performance thereof.

In any embodiment, the shell comprises a first coating layer coating the inner core and a second coating layer coating the first coating layer, wherein the first coating layer comprises a pyrophosphate of QP₂O₇ and a phosphate of XPO₄, and the second coating layer is a carbon coating layer.

In any embodiment, the coating amount of the first coating layer is greater than 0 wt% and less than or equal to 7 wt%, optionally 4-5.6 wt%, based on the weight of the inner core.

In any embodiment, the weight ratio of the pyrophosphate to phosphate in the first coating layer is 1 : 3 to 3 : 1, optionally 1 : 3 to 1 : 1.

In any embodiment, the coating amount of the second coating layer is greater than 0 wt% and less than or equal to 6 wt%, optionally 3-5 wt%, based on the weight of the inner core.

In any embodiment, the coating amount of the first coating layer is greater than 0 wt% and less than or equal to 7 wt%, optionally 4-5.6 wt%, based on the weight of the inner core. When the coating amount of the first coating layer is within the above range, the function of the first coating layer may be effectively achieved without affecting the dynamic performance of the secondary battery due to the excessively thick coating layer.

In any embodiment, the weight ratio of the pyrophosphate to phosphate in the first coating layer is 1 : 3 to 3 : 1, optionally 1 : 3 to 1 : 1. Thus, the weight ratio of the pyrophosphate to phosphate within a suitable range can not only effectively prevent the dissolution of manganese, but also can effectively reduce the content of lithium impurities on the surface and reduce interfacial side reactions, thereby improving the high-temperature storage performance, safety performance and cycling performance of the secondary battery.

In any embodiment, the pyrophosphate and the phosphate each independently have a crystallinity of 10% to 100%, optionally 50% to 100%. Thus, the pyrophosphate and phosphate with a crystallinity being within the above ranges are beneficial to the full function of the pyrophosphate to inhibit the dissolution of manganese and the function of the phosphate to reduce the content of lithium impurities on the surface and reduce interfacial side reactions. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interfacial side reactions, but also a better lattice matching between the phosphate coating layer and the phosphate coating layer, such that a more close combination between the coating layers can be achieved.

In any embodiment, the coating amount of the second coating layer is greater than 0 wt% and less than or equal to 6 wt%, optionally 3-5 wt%, based on the weight of the inner core.

In any embodiment, the shell comprises a first coating layer coating the inner core and a second coating layer coating the first coating layer, wherein the first coating layer comprises a crystalline pyrophosphate of QP₂O₇ and a metal oxide of Q'ₑO_{f}, and the second coating layer is a carbon coating layer.

In any embodiment, the coating amount of the first coating layer is greater than 0 wt% and less than or equal to 7 wt%, optionally 4-5.6 wt%, based on the weight of the inner core.

In any embodiment, the weight ratio of the pyrophosphate to the oxide in the first coating layer is 1 : 3 to 3 : 1, optionally 1 : 3 to 1 : 1.

In any embodiment, the coating amount of the second coating layer is greater than 0 wt% and less than or equal to 6 wt%, optionally 3-5 wt%, based on the weight of the inner core.

In any embodiment, the shell comprises a first coating layer coating the inner core, a second coating layer coating the first coating layer, and a third coating layer coating the second coating layer, wherein the first coating layer comprises a crystalline pyrophosphate; the second coating layer comprises a metal oxide of Q'ₑO_{f}; the crystalline pyrophosphate includes LiₐQP₂O₇ and/or Q_{b}(P₂O₇)_{c}, where a is greater than 0 and less than or equal to 2, b is any numerical value in a range of 1-4, and c is any numerical value in a range of 1-3; and the third coating layer comprises carbon.

In any embodiment, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2 wt% - 4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In any embodiment, the first coating layer has a thickness of 2-10 nm; and/or the second coating layer has a thickness of 3-15 nm; and/or the third coating layer has a thickness of 5-25 nm.

In any embodiment, based on the weight of the positive electrode active material, the content of manganese element is in a range of 10-35 wt%, optionally in a range of 15-30 wt%, more optionally in a range of 17-20 wt%, and the content of phosphorus element is in a range of 12-25 wt%, optionally in a range of 15-20 wt%; and optionally, the weight ratio of manganese element to phosphorus element is in a range of 0.90-1.25, more optionally in a range of 0.95-1.20. As the content of manganese element is in the ranges above, the problems such as poor structural stability and reduced density of the material which may be caused if the content of manganese element is too high can be effectively avoided, thereby improving the cycling performance, storage performance, compacted density, etc., of the secondary battery; moreover, the problems such as low voltage plateau that may be caused if the content of the manganese element is too low can be effectively avoided, thereby improving the energy density of the secondary battery.

In any embodiment, the positive electrode active material comprises a first coating layer coating the inner core, a second coating layer coating the first coating layer, and a third coating layer coating the second coating layer, wherein the first coating layer comprises a crystalline pyrophosphate of LiₐQP₂O₇ and/or Q_{b}(P₂O₇)_{c}, the second coating layer comprises a crystalline phosphate of XPO₄, and the third coating layer is carbon.

In any embodiment, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2-4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In any embodiment, the first coating layer has a thickness of 1-10 nm; and/or the second coating layer has a thickness of 2-15 nm; and/or the third coating layer has a thickness of 2-25 nm.

In any embodiment, based on the weight of the positive electrode active material, the content of manganese element is in a range of 10-35 wt%, optionally in a range of 15-30 wt%, more optionally in a range of 17-20 wt%, the content of phosphorus element is in a range of 12-25 wt%, optionally in a range of 15-20 wt%, and the weight ratio of manganese element to phosphorus element is in a range of 0.90-1.25, optionally 0.95-1.20.

In another aspect of the present application, proposed is a method for preparing a positive electrode active material. The method comprises steps of forming an inner core and forming a shell at least on the surface of the inner core, wherein the inner core comprises at least one of a ternary material, _{d}Li₂MnO₃·(1-d)LiMO₂ and LiMPO₄, where 0 < d < 1, and M includes one or more selected from Fe, Ni, Co, and Mn; and the shell comprises a crystalline inorganic substance having a full width at half maximum of the main peak of 0-3° as measured by means of X-ray diffraction, and the crystalline inorganic substance includes one or more selected from a metal oxide and an inorganic salt.

In any embodiment, when the non-Mn element includes a first doping element and a second doping element, the method comprises: mixing a manganese source, a dopant of the manganese-site element and an acid to obtain manganese salt particles having the first doping element; and mixing the manganese salt particles having the first doping element with a lithium source, a phosphorus source, and a dopant of the second doping element in a solvent to obtain a slurry, and sintering same under the protection of an inert gas atmosphere to obtain a lithium manganese phosphate compound having the doping element M.

In any embodiment, a source of the C element is selected from at least one of the elementary substance, oxide, phosphate, oxalate, carbonate and sulfate of the C element; a source of the A element is selected from at least one of the elementary substance, oxide, phosphate, oxalate, carbonate, sulfate, chloride, nitrate, organic acid salt, hydroxide and halide of the A element; a source of the R element is selected from at least one of the sulfate, borate, nitrate and silicate, organic acid, halide, organic acid salt, oxide and hydroxide of the R element; and a source of the D element is selected from at least one of the elementary substance and ammonium salt of the D element.

In any embodiment, the manganese salt particles having a first doping element is obtained when at least one of the following conditions is satisfied: the manganese source, the manganese-site element and the acid are mixed at a temperature of 20-120°C, optionally 40-120°C, optionally 60-120°C, more optionally 25-80°C; and/or the mixing is carried out under stirring at 200-800 rpm, optionally 400-700 rpm, more optionally 500-700 rpm for 1-9 h, optionally 3-7 h, more optionally 2-6 h.

In any embodiment, the manganese salt particles having a first doping element, and a lithium source, a phosphorus source, and a dopant of the second doping element are mixed in a solvent at a temperature of 20-120°C, optionally 40-120°C, for 1-10 h. The prepared inner core and the positive electrode active material prepared therefrom have a higher crystallinity and fewer lattice defects, which is beneficial to inhibiting the dissolution of manganese and reducing the interfacial side reactions between the positive electrode active material and the electrolyte solution, thereby improving the cycling performance and safety performance of the secondary battery.

In any embodiment, LiMPO₄ is formed according to a chemical formula of Li₁₊xCₓMn_{1-y}A_{y}P_{1-z}R_{z}O₄₋ₙDₙ, and the manganese salt particles having the first doping element, and a lithium source, a phosphorus source, and a dopant of the second doping element are ground and mixed in a solvent for 8-15 hours.

In any embodiment, when the shell comprises a first coating layer coating the inner core and a second coating layer coating the first coating layer, the first coating layer contains the pyrophosphate of QP₂O₇ and the phosphate of XPO₄, and the second coating comprises carbon, the method comprises: providing a QP₂O₇ powder and an XPO₄ suspension containing a carbon source, adding the inner core and the QP₂O₇ powder into the XPO₄ suspension containing a carbon source, and mixing and sintering same to obtain a positive electrode active material.

In any embodiment, the QP₂O₇ powder is provided by adding a source of a Q element and a phosphorus source into a solvent to obtain a mixture, adjusting the pH of the mixture to be 4-6, and stirring same for complete reaction, followed by drying and sintering; and the QP₂O₇ powder is provided when at least one of the following conditions is satisfied: the drying is carried out at 100-300°C, optionally 150-200°C, for 4-8 h; and the sintering is carried out at 500-800°C, optionally 650-800°C, in an inert gas atmosphere for 4-10 h.

In any embodiment, for forming the coating layer, the sintering temperature is 500-800°C, and the sintering time is 4-10 h.

In any embodiment, the shell is formed by: providing LiₐQP₂O₇ and/or Q_{b}(P₂O₇)_{c} and an XPO₄ suspension respectively, adding the inner core into the above suspension, and mixing and sintering same to obtain a positive electrode active material.

In any embodiment, the shell is formed by: dissolving a source of a Q element, a phosphorus source and an acid, and optionally a lithium source in a solvent to obtain a first coating layer suspension; mixing the inner core with the first coating layer suspension, and sintering same to obtain a first coating layer-coated material; dissolving a source of an X element, a phosphorus source and an acid in a solvent to obtain a second coating layer suspension; mixing the first coating layer-coated material with the second coating layer suspension, and sintering same to obtain a material coated with two coating layers; dissolving a carbon source in a solvent to obtain a third coating layer solution; and adding the material coated with two coating layers into the third coating layer solution, and mixing, drying and sintering same to obtain the positive electrode active material.

In any embodiment, when the first coating layer-coated material is formed, the pH of the solution in which a source of the Q element, a phosphorus source, an acid, and optionally a lithium source are dissolved is controlled to be 3.5-6.5, and the solution is stirred for reaction for 1-5 h, and then heated to 50-120°C and held for 2-10 h, and/or, the sintering is carried out at 650-800°C for 2-6 hours.

In any embodiment, when the material coated with two coating layers is formed, a source of an X element, a phosphorus source and an acid are dissolved in a solvent, and the resulting solution is then stirred for reaction for 1-10 h, and then heated to 60-150°C and held for 2-10 h, and/or, the sintering is carried out at 500-700°C for 6-10 hours.

In any embodiment, the sintering in the step of forming the third coating layer is carried out at 700-800°C for 6-10 hours.

In any embodiment, when the shell comprises a first coating layer coating the inner core and a second coating layer coating the first coating layer, wherein the first coating layer comprises a crystalline pyrophosphate of QP₂O₇ and the metal oxide of Q'ₑO_{f}, and the second coating layer comprises carbon, the shell is formed by: providing a powder comprising a crystalline pyrophosphate of QP₂O₇ and a suspension comprising a carbon source and an oxide of Q'ₑO_{f}, and mixing the inner core, the powder comprising a crystalline pyrophosphate of QP₂O₇, and the suspension comprising a carbon source and an oxide of Q'ₑO_{f}, and sintering same to obtain a positive electrode active material.

In any embodiment, when the shell comprises a first coating layer coating the inner core, a second coating layer coating the first coating layer, and a third coating layer coating the second coating layer, wherein the first coating layer comprises a crystalline pyrophosphate of QP₂O₇, the second coating layer comprises the metal oxide of Q'ₑO_{f}, and the third coating layer comprises carbon, the shell is formed by: providing a first mixture comprising a pyrophosphate of LiₐQP₂O₇ and/or Q_{b}(P₂O₇)_{c}, and mixing an inner core material and the first mixture, followed by drying and sintering to obtain a first coating layer-coated material; providing a second mixture comprising the metal oxide of Q'ₑO_{f}, and mixing the first coating layer-coated material and the second mixture, followed by drying and sintering to obtain a second coating layer-coated material; and providing a third mixture comprising a carbon source, and mixing the second coating layer-coated material and the third mixture, followed by drying and sintering to obtain the positive electrode active material.

In any embodiment, when the first coating layer is formed, a source of the Q element, a phosphorus source, an acid, an optional lithium source, and an optional solvent are mixed to obtain the first mixture; and/or when the second coating layer is formed, a source of a Q' element and a solvent are mixed to obtain the second mixture; and/or when the third coating layer is formed, a carbon source and a solvent are mixed to obtain the third mixture; optionally, when the first coating layer is formed, the source of the Q element, the phosphorus source, the acid, the optional lithium source, and the optional solvent are mixed at room temperature for 1-5 h, and the mixture is then heated to 50°C - 120°C and held at the temperature for mixing for 2-10 h, and the mixing is each carried out at pH of 3.5-6.5; and optionally, when the second coating layer is formed, the source of the Q' element and the solvent are mixed at room temperature for 1-10 h, and the mixture is then heated to 60°C - 150°C and held at the temperature for mixing for 2-10 h.

In any embodiment, in the first coating step, the sintering is carried out at 650-800°C for 2-8 hours; and/or in the second coating step, the sintering is carried out at 400-750°C for 6-10 h; and/or in the third coating step, the sintering is carried out at 600-850°C for 6-10 h.

In any embodiment, when the shell comprises a first coating layer coating the inner core and a second coating layer coating the first coating layer, wherein the first coating layer comprises a crystalline pyrophosphate of QP₂O₇ and the metal oxide of Q'ₑO_{f}, and the second coating layer comprises carbon, the shell is formed by: providing a powder comprising a crystalline pyrophosphate of QP₂O₇ and a suspension comprising a carbon source and an oxide of Q'ₑO_{f}, and mixing the inner core, the powder comprising a crystalline pyrophosphate of QP₂O₇, and the suspension comprising a carbon source and an oxide of Q'ₑO_{f}, and sintering same to obtain a positive electrode active material.

In any embodiment, when the shell comprises a first coating layer coating the inner core, a second coating layer coating the first coating layer, and a third coating layer coating the second coating layer, wherein the first coating layer comprises a crystalline pyrophosphate of QP₂O₇, the second coating layer comprises the metal oxide of Q'ₑO_{f}, and the third coating layer comprises carbon, the shell is formed by: providing a first mixture comprising a pyrophosphate of LiₐQP₂O₇ and/or Q_{b}(P₂O₇)_{c}, and mixing an inner core material and the first mixture, followed by drying and sintering to obtain a first coating layer-coated material; providing a second mixture comprising the metal oxide of Q'ₑO_{f}, and mixing the first coating layer-coated material and the second mixture, followed by drying and sintering to obtain a second coating layer-coated material; and providing a third mixture comprising a carbon source, and mixing the second coating layer-coated material and the third mixture, followed by drying and sintering to obtain the positive electrode active material.

In any embodiment, when the first coating layer is formed, a source of the Q element, a phosphorus source, an acid, an optional lithium source, and an optional solvent are mixed to obtain the first mixture; and/or when the second coating layer is formed, a source of a Q' element and a solvent are mixed to obtain the second mixture; and/or when the third coating layer is formed, a carbon source and a solvent are mixed to obtain the third mixture; optionally, when the first coating layer is formed, the source of the Q element, the phosphorus source, the acid, the optional lithium source, and the optional solvent are mixed at room temperature for 1-5 h, and the mixture is then heated to 50°C - 120°C and held at the temperature for mixing for 2-10 h, and the mixing is each carried out at pH of 3.5-6.5; and optionally, when the second coating layer is formed, the source of the Q' element and the solvent are mixed at room temperature for 1-10 h, and the mixture is then heated to 60°C - 150°C and held at the temperature for mixing for 2-10 h.

In any embodiment, in the first coating step, the sintering is carried out at 650-800°C for 2-8 hours; and/or in the second coating step, the sintering is carried out at 400-750°C for 6-10 h; and/or in the third coating step, the sintering is carried out at 600-850°C for 6-10 h.

Thus, with the control of the reaction temperature, the stirring speed and the mixing time during doping, the doping elements can be uniformly distributed, and the sintered material has a higher crystallinity, thereby improving the capacity per gram, rate performance, etc., of the material.

In yet another aspect of the present application, the present application provides a secondary battery comprising a positive electrode active material described above, or a positive electrode active material prepared by the method described above, or a positive electrode plate described above.

In yet another aspect of the present invention, the present application provides a battery module comprising the secondary battery described above.

In yet another aspect of the present invention, the present application provides a battery pack comprising the battery module described above.

In yet another aspect of the present invention, the present application provides a power consuming device comprising at least one selected from the secondary battery, the battery module or the battery pack described above.

### Brief Description of the Drawings

Fig. 1 shows X-ray diffraction (XRD) spectrum of undoped LiMnPO4 and a positive electrode active material prepared in example 2.
Fig. 2 shows energy-dispersive X-ray spectroscopy (EDS) images of the positive electrode active material prepared in example 2.
Fig. 3 shows a schematic diagram of a positive electrode active material with a core-shell structure described in the present application.
Fig. 4 shows a schematic diagram of a positive electrode active material with a core-shell structure in an embodiment of the present application.
Fig. 5 shows a schematic diagram of a secondary battery in an embodiment of the present application.
Fig. 6 shows an exploded view of the secondary battery in an embodiment of the present application as shown in Fig. 5.
Fig. 7 shows a schematic diagram of a battery module in an embodiment of the present application.
Fig. 8 shows a schematic diagram of a battery pack in an embodiment of the present application.
Fig. 9 is an exploded view of the battery pack in an embodiment of the present application as shown in Fig. 8.
Fig. 10 shows a schematic diagram of a power consuming device using a secondary battery in an embodiment of the present application as a power source.

### Description of reference signs:

11 inner core; 12 first coating layer; 13 second coating layer; 14 third coating layer; 1 battery pack; 2 upper box body; 3 lower box body; 4 battery module; 5 secondary battery; 51 housing; 52 electrode assembly; 53 top cover assembly

### Detailed Description of Embodiments

The embodiments of the present application are described in detail herebelow, with examples thereof being shown in the accompanying drawings, where identical or similar reference numerals throughout represent identical or similar elements or elements with identical or similar functions. The embodiments with reference to accompanying drawings described below are exemplary and are merely for explaining the present application, and should not be construed as limiting the present application.

It should be noted that the features and effects described in various aspects of the present application can be mutually applicable and will not be repeated here.

Hereinafter, embodiments of the positive electrode active material and the preparation method therefor, the negative electrode plate, the secondary battery, the battery module, the battery pack, and the power consuming device of the present application are described in detail and specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc. In the present application, "about" a numerical value means a range, i.e., a range of ±10% of the numerical value.

All the embodiments and optional embodiments of the present application can be combined with one another to form new technical solutions, unless otherwise stated. All the technical features and optional technical features of the present application can be combined with one another to form a new technical solution, unless otherwise stated. Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included. In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

It should be noted that, herein, the terms "coating layer" and "coating" refer to a material layer coated on an inner core material such as lithium manganese phosphate, and the material layer can completely or partially coat the inner core, and the use of "coating layer" is just for convenience of description and is not intended to limit the present invention. In addition, each coating layer may be completely coated or may also be partially coated. Likewise, the term "thickness of the coating layer" refers to the thickness of the substance layer coated on the inner core in the radial direction of the inner core.

In an aspect of the present application, the present application provides a positive electrode active material comprising an inner core and a shell coating the inner core, wherein the inner core comprises at least one of a ternary material, _{d}Li₂MnO₃·(1-d)LiMO₂ and LiMPO₄, where 0 < d < 1, and M includes one or more selected from Fe, Ni, Co, and Mn; and the shell comprises a crystalline inorganic substance having a full width at half maximum of the main peak of 0-3° as measured by means of X-ray diffraction, and the crystalline inorganic substance comprises one or more selected from a metal oxide and an inorganic salt. The crystalline substance has a stable crystal lattice structure and has a better retention effect on active metal ions such as Mn that are easily dissolved.

The inventors of the present application have found that in order to improve the battery performance, such as increasing the capacity, improving the rate performance, the cycling performance, etc., it is common for the positive electrode active materials currently used for lithium ion secondary batteries to be prepared by adding doping elements to materials, such as a ternary positive electrode active material, LiMPO₄ that can be applied in a high-voltage system, such as LiMnPO₄, LiNiPO₄, and LiCoPO₄, or a Li-rich manganese based positive electrode active material. The doping elements above can replace active transition metals and other sites in the above-mentioned materials, thereby having the effect of improving the performance of the battery comprising the materials achieved. On the other hand, the material such as lithium iron phosphate may be added with an Mn element, but the addition or doping of these active transition metals and other elements may easily lead to the dissolution of active metals such as Mn ions caused by the material during deep charging and discharging processes. The dissolved active metal elements, on the one hand, will further migrate to the electrolyte solution and cause a catalyst-like effect after the reduction of the negative electrode, leading to the dissolution of the SEI film (solid electrolyte interphase, solid electrolyte interphase film) on the negative electrode surface. On the other hand, the dissolution of the above metal elements will also cause the capacity loss of the positive electrode active material, and lattice defects of the positive active material will occur after dissolution, leading to problems such as poor cycling performance. Therefore, it is necessary to improve the above positive electrode materials containing active metal elements to alleviate or even solve the above-mentioned problems. The inventors have found that the crystalline inorganic substance, with the main peak measured by means of X-ray diffraction of which having the above full width at half maximum, has a good ability to intercept and retain the dissolved active metal ions, and the crystalline inorganic substance can be well combined with the inner core materials above with a stable bonding force and thus is not easy to peel off during use; moreover, a coating layer with appropriate area and good uniformity can be formed by relatively simple methods.

Specifically, taking lithium manganese phosphate positive electrode active material as an example, the inventors of the present application have found in practical work that the existing lithium manganese phosphate positive electrode active material suffers from severe dissolution of manganese ions during deep charging and discharging. Although there is an attempt in the prior art to coat lithium manganese phosphate with lithium iron phosphate to reduce interfacial side reactions, this coating cannot prevent the dissolved manganese ions from continuing to migrate into the electrolyte solution. After migration to a negative electrode, the dissolved manganese ions are reduced to the metal manganese. The metal manganese produced in this way is equivalent to a "catalyst", which can catalyze the decomposition of the SEI film (solid electrolyte interphase, solid electrolyte interphase film) on the surface of the negative electrode to produce by-products; a part of the by-products is gas, thus causing the secondary battery to swell and affecting the safety performance of the secondary battery; in addition, another part of the by-products is deposited on the surface of the negative electrode, and hinders the passage of lithium ions into and out of the negative electrode, resulting in an increase in the impedance of the secondary battery, thus affecting the dynamic performance of the secondary battery. In addition, in order to supplement the lost SEI film, the active lithium in the electrolyte solution and the battery are continuously consumed, which will have an irreversible impact on the capacity retention rate of the secondary battery. A novel positive electrode active material with a core-shell structure can be obtained by modifying lithium manganese phosphate and coating lithium manganese phosphate with multiple layers. The positive electrode active material can achieve a significantly reduced dissolution of manganese ions and lowered lattice change rate, and when such a positive electrode active material is applied to a secondary battery, the cycling performance, rate performance, safety performance and capacity of the battery can be improved.

In some embodiments of the present application, the inner core comprises LiMPO₄, and M includes Mn and a non-Mn element, wherein the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6.

As positive electrode active materials for lithium ion secondary batteries, compounds such as lithium manganese phosphate, lithium iron phosphate, or lithium nickel phosphate that can be applied in a high-voltage system in the future have lower costs and better application prospects. However, taking lithium manganese phosphate as an example, it has a disadvantage of a poor rate performance when compared with other positive electrode active materials, and this problem is now usually solved by means of coating or doping, etc. However, it is still desirable to further improve the rate performance, cycling performance, high-temperature stability and the like of the lithium manganese phosphate positive electrode active material.

The inventors of the present application have repeatedly studied the effects of doping the Li, Mn, P, and O sites of lithium manganese phosphate with various elements and found that the capacity per gram, rate performance, and cycling performance of the positive electrode active material can be improved by controlling the doping sites, and the specific elements and doping amounts.

Specifically, selecting a suitable manganese-site doping element can reduce the lattice change rate of the lithium manganese phosphate material during the process of lithium intercalation and de-intercalation, improve the structural stability of the positive electrode material, greatly reduce the dissolution of manganese, and reduce the oxygen activity on the particle surface, such that the capacity per gram of the material can be increased, and the interfacial side reactions with the electrolyte solution during the use of the material can be reduced, thereby improving the cycling performance of the material. More specifically, selecting an element with an ionic radius similar to Mn element as the Mn-site doping element, or selecting an element with a valence that is variable within the valence conversion range of Mn for doping can control the length change of the bond formed by the doping element and O and the Mn-O bond, which is conducive to stabilizing the lattice structure of the doped positive electrode material. In addition, a vacancy element has a lattice supporting effect can also be introduced at the Mn site, such as elements with a valence greater than or equal to the sum of the valence of Li and Mn. This is equivalent to introducing vacancy points that cannot bind with Li at the active and easily soluble Mn site, thereby providing support for the lattice.

For another example, selecting a suitable P-site doping element can help to reduce the difficulty in changing the length of the Mn-O bond, thereby improving the electronic conductivity and reducing the migration barrier of lithium ions, accelerating the migration of lithium ions, and improving the rate performance of a secondary battery. Specifically, the tetrahedral structure of the P-O bonds itself is relatively stable, such that it is difficult to change the length of the Mn-O bond, resulting in a higher overall lithium ion migration barrier of the material. However, appropriate P-site doping elements can improve the firmness of the P-O bond tetrahedron, thereby promoting the improvement of the rate performance of the material. Specifically, elements for which the chemical bond formed with O has a chemical activity not less than that of a P-O bond can be selected for doping at the P site, thereby reducing the difficulty in changing the length of Mn-O bonds. In the present application, unless otherwise stated, "the chemical activity of the chemical bond formed with O that is not less than that of a P-O bond" can be determined by testing methods known to those skilled in the art to determine the chemical bond activity. For example, it can be determined by detecting the bond energy, or by referring to the electrochemical potential of a oxidation or reduction reagent that is used to break the chemical bond. Alternatively, an element with a valency that is not significantly higher than P, for example, 6 or less, can be selected for doping at the P site, which is beneficial for reducing the repulsive effect between Mn and P elements, and can also improve the capacity per gram, rate performance, etc., of the material.

Similarly, appropriate element doping at the Li site can also improve the lattice change rate of the material and maintain the capacity of the battery comprising the material.

Element doping at the O site can help to reduce the interfacial side reactions between the material and the electrolyte solution and reduce the interface activity, thus facilitating the improvement of the cycling performance of the positive electrode active material. In addition, element doping at the O site can also provide the material with an improved resistance to acid corrosion by HF, etc., which is beneficial for improving the cycling performance and service life of the material.

In some embodiments, the non-Mn element for doping at the above sites includes one or two of a first doping element and a second doping element, the first doping element is doped at the manganese site, and the second doping element is doped at the phosphorus site. The first doping element satisfies at least one of the following conditions: the ionic radius of the first doping element being denoted as a, and the ionic radius of manganese element being denoted as b, |a-b|/b is not greater than 10%; and the valence alternation voltage of the first doping element being denoted as U, 2 V < U < 5.5 V. The second doping element satisfies at least one of the following conditions: the chemical activity of a chemical bond formed by the second doping element and O is not less than that of a P-O bond; and the highest valence of the second doping element of the doping element M is not greater than 6. In some embodiments, the positive electrode active material also can contain two of the first doping elements.

In some embodiments, both the Mn site and the P site among the sites described above can be doped. Thus, this doping can not only effectively reduce the dissolution of manganese, which in turn reduces the migration of manganese ions to the negative electrode and the consumption of electrolyte solution due to the SEI film decomposition, thereby improving the cycling performance and safety performance of secondary batteries, but also can facilitate the adjustment of the Mn-O bond, lower the migration barrier of lithium ions and accelerate the migration of lithium ions, thereby improving the rate performance of secondary batteries.

In some other embodiments of the present application, doping at all the four sites with specific amounts of specific elements can achieve a significantly improved rate performance and improved cycling performance and/or high-temperature stability, thereby obtaining an improved lithium manganese phosphate positive electrode active material.

The positive electrode active material of the present application can, for example, be used in a lithium ion secondary battery.

The first doping element includes one or more elements selected from Zn, Al, Na, K, Mg, Mo, W, Ti, V, Zr, Fe, Ni, Co, Ga, Sn, Sb, Nb and Ge. The first doping element includes at least two selected from Fe, Ti, V, Ni, Co, and Mg. The second doping element includes one or more elements selected from B (boron), S, Si and N.

The doping elements mentioned above should keep the system electrically neutral, which can ensure that the defects and impurity phases in the positive electrode active material are as few as possible. If there is an excess of a transition metal (such as manganese) in the positive electrode active material, since the structure of the material system itself is relatively stable, the excess transition metal is likely prone to be precipitated in the form of an elementary substance, or form impurity phases inside the lattice to keep the electrical neutrality, so that such an impurity can be as little as possible. In addition, ensuring the electrical neutrality of the system can also result in lithium vacancies in the material in some cases, so that the dynamic performance of the material is more excellent.

Taking lithium manganese phosphate material as an example, the specific parameters of the positive electrode active material proposed in the present application and the principles of achieving the above-mentioned beneficial effects will be detailed below:

The inventors of the present application have found in practical work that the existing lithium manganese phosphate positive electrode active material at present has relatively serious manganese dissolution during deep charging and discharging. From extensive research, the inventors have found that a novel positive electrode active material that can be obtained by modifying lithium manganese phosphate can achieve significantly reduced manganese dissolution and reduced lattice change rate, and when such a positive electrode active material is applied to a secondary battery, the cycling performance, rate performance, safety performance and capacity of the battery can be improved. Doping the compound of LiMnPO₄ at all the Li, Mn, P and O sites with specific amounts of specific elements can significantly improve the rate performance while reducing the dissolution of Mn and Mn-site doping element, thereby improving the cycling performance and/or high-temperature stability, and the capacity per gram and compacted density of the positive electrode active material can also be increased. In addition, the entire inner core system keeps electrical neutrality, which can ensure that the defects and impurity phases in the positive electrode active material are as small as possible. If there is an excess of a transition metal (such as manganese) in the positive electrode active material, since the structure of the material system itself is relatively stable, the excess transition metal is likely prone to be precipitated in the form of an elementary substance, or form impurity phases inside the lattice to keep the electrical neutrality, so that such an impurity can be as little as possible. In addition, ensuring the electrical neutrality of the system can also result in lithium vacancies in the positive electrode active material in some cases, so that the dynamic performance of the positive electrode active material is more excellent.

In some embodiments, the positive electrode active material above may have a compound with a chemical formula of Li₁₊ₓMn_{1-y}A_{y}P_{1-z}R_{z}O₄, where x is any numerical value in a range of 0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and R includes one or more elements selected from B (boron), S, Si and N. The values of x, y, and z satisfy the condition of keeping the entire compound electrically neutral.

In some other embodiments, the positive electrode active material above may have a compound with a chemical formula of Li₁₊xCₘMn_{1-y}A_{y}P_{1-z}R_{z}O₄₋ₙDₙ, wherein C includes one or more elements selected from Zn, Al, Na, K, Mg, Nb, Mo and W, A includes one or more elements selected from Zn, Al, Na, K, Mg, Mo, W, Ti, V, Zr, Fe, Ni, Mg, Co, Ga, Sn, Sb, Nb and Ge, R includes one or more elements selected from B (boron), S, Si and N, D includes one or more elements selected from S, F, Cl and Br, x is any numerical value in a range of 0.100- 0.100, y is any numerical value in a range of 0.001-0.500, z is any numerical value in a range of 0.001-0.100, n is any numerical value in a range of 0.001 to 0.1, and m is any numerical value in a range of 0.9 to 1.1. Similarly, the values of x, y, and z satisfy the condition of keeping the entire compound electrically neutral.

Unless otherwise stated, in the chemical formula of the above inner core, when a site is doped with two or more of elements above, the above definition of the numerical range of x, y, z or m not only represents a definition of the stoichiometric number of each element at the site, but also represents a definition of the sum of the stoichiometric numbers of the elements at the site. For example, when a compound having a chemical formula of Li₁₊ₓMn_{1-y}A_{y}P_{1-z}R_{z}O₄ is comprised, where A is two or more of elements A1, A2...An, the stoichiometric numbers y1, y2...yn of A1, A2...An each fall within the numerical range of y defined in the present application, and the sum of y1, y2...yn shall also fall within this numerical range. Similarly, when R is two or more of elements, the definition of the numerical range of the stoichiometric number of R in the present application also has the above meaning.

In an optional embodiment, when A is selected from one, two, three or four elements of Zn, Al, Na, K, Mg, Mo, W, Ti, V, Zr, Fe, Ni, Co, Ga, Sn, Sb, Nb and Ge, A_{y} is Gₙ₁Dₙ₂Eₙ₃Kₙ₄, wherein n1 + n2 + n3 + n4 = y, and n1, n2, n3 and n4 are all positive numbers and not zero, and G, D, E and K are each independently selected from one of Zn, Al, Na, K, Mg, Mo, W, Ti, V, Zr, Fe, Ni, Co, Ga, Sn, Sb, Nb and Ge, and optionally, at least one of G, D, E and K is Fe. Optionally, one of n1, n2, n3 and n4 is zero, and the remaining ones are not zero; more optionally, two of n1, n2, n3 and n4 are zero, and the remaining ones are not zero; and further optionally, three of n1, n2, n3 and n4 are zero, and the remaining one is not zero. In Li₁₊ₓMn_{1-y}A_{y}P_{1-z}R_{z}O₄, it is advantageous to dope one, two, three or four of the above A elements, optionally one, two or three of the above A elements, at the manganese site; and in addition, it is advantageous to dope one or two R elements at the phosphorus site, which is conducive to even distribution of doping elements.

Specifically, for example, the Mn site can be doped with both Fe and V.

In some embodiments, in Li₁₊ₓMn_{1-y}A_{y}P_{1-z}R_{z}O₄, the ratio of y to 1-y is 1 : 10 to 1 : 1, optionally 1 : 4 to 1 : 1. Here, y denotes the sum of the stoichiometric numbers of the Mn-site doping elements A. When the above conditions are satisfied, the energy density and cycling performance of the secondary battery using the positive electrode active material can be further improved. In some embodiments, the ratio of z to 1-z is 1 : 9 to 1 : 999, optionally 1 : 499 to 1 : 249. Here, z denotes the sum of the stoichiometric numbers of the P-site doping R element. When the above conditions are satisfied, the energy density and cycling performance of the secondary battery using the positive electrode active material can be further improved.

In some other embodiments of the present application, the positive electrode active material may comprise Li₁₊ₓCₘMn_{1-y}A_{y}P_{1-z}R_{z}O₄₋ₙDₙ. The value of x is affected by the valency of A and R, and the values of y and z, so as to ensure that the entire system is electrically neutral. If the value of x is too small, the lithium content of the entire inner core system will decrease, which will affect the capacity per gram of the material. The value of y will limit the total amount of all doping elements. If y is too small, that is, the doping amount is too small, and the doping elements will have no effect. If y exceeds 0.5, the content of Mn in the system will be less, which will affect the voltage plateau of the material. The doping with element R is in the position of P, and since the P-O tetrahedron is relatively stable and the excessive z value will affect the stability of the material, the value of z is defined as being 0.001-0.100. More specifically, x is any numerical value in a range of 0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1. For example, 1+x is selected from a range of 0.9 to 1.1, for example, 0.97, 0.977, 0.984, 0.988, 0.99, 0.991, 0.992, 0.993, 0.994, 0.995, 0.996, 0.997, 0.998 and 1.01, x is selected from a range of 0.001 to 0.1, for example, 0.001 and 0.005, y is selected from a range of 0.001 to 0.5, for example, 0.001, 0.005, 0.02, 0.05, 0.1, 0.15, 0.2, 0.25, 0.3, 0.34, 0.345, 0.349, 0.35 and 0.4, z is selected from a range of 0.001 to 0.1, for example, 0.001, 0.005, 0.08 and 0.1, n is selected from a range of 0.001 to 0.1, for example, 0.001, 0.005, 0.08 and 0.1, and the positive electrode active material is electrically neutral.

As mentioned previously, the positive electrode active material of the present application is obtained by element doping in compounds such as LiMnPO₄, and without wishing to be bound by theory, it is now believed that the performance improvement of lithium manganese phosphate is related to the decrease of the lattice change rate and surface activity of lithium manganese phosphate during the process of lithium intercalation and de-intercalation. The decrease in the lattice change rate can reduce the difference of lattice constants between two phases at a grain boundary, lower the interface stress and enhance the Li⁺ transport ability at the interface, thereby improving the rate performance of the positive electrode active material. A high surface activity can easily lead to severe interfacial side reactions, and exacerbates gas production, electrolyte solution consumption and interface damage, thereby affecting the cycling performance and the like of the battery. In the present application, the lattice change rate is reduced by doping at the sites of Li and Mn. The Mn-position doping also effectively decreases the surface activity, thereby inhibiting the Mn dissolution and the interfacial side reactions between the positive electrode active material and the electrolyte solution. The P-site doping increases the change rate of the Mn-O bond length and reduces the small-polaron migration barrier of the material, which is beneficial for electronic conductivity. The O-site doping plays a good role in reducing the interfacial side reactions. The P-position and O-position doping also has an effect on the dissolution of Mn of antisite defects and the dynamic performance. Therefore, the doping reduces the antisite effect concentration in the material, improves the dynamic performance and capacity per gram of the material, and can also change the particle morphology, thereby increasing the compacted density. The applicant has unexpectedly found that: Doping the compound of LiMnPO₄ at all the Li, Mn, P and O sites thereof with specific amounts of specific elements can significantly improve the rate performance while significantly reducing the dissolution of Mn and Mn-site doping element, thereby significantly improving the cycling performance and/or high-temperature stability; moreover, the capacity per gram and compacted density of the material can also be increased.

Selecting the Li-site doping element in the above ranges can further reduce the lattice change rate during a lithium de-intercalation process, thereby further improving the rate performance of the battery. Selecting the Mn-site doping element in the above ranges can further increase the electronic conductivity while the lattice change rate is further reduced, thereby improving the rate performance and capacity per gram of the battery. Selecting the P-site doping element in the above ranges can further the rate performance of the battery. Selecting the O-site doping element in the above ranges can further alleviate the interfacial side reactions, thereby improving the high-temperature performance of the battery.

In some embodiments, x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. By selecting the y value in the above ranges, the capacity per gram and rate performance of the material can be further improved. By selecting the x value in the above ranges, the dynamic performance of the material can be further improved. By selecting the z value in the above ranges, the rate performance of the secondary battery can be further improved. By selecting the n value in the above ranges, the high-temperature performance of the secondary battery can be further improved.

In some embodiments, the positive electrode active material with all the 4 sites being doped with non-Mn elements satisfies: (1-y) : y is in a range of 1 to 4, optionally in a range of 1.5 to 3, and (1+x) : m is in a range of 9 to 1100, optionally in a range of 190-998. Here, y denotes the sum of the stoichiometric numbers of the Mn-site doping elements. When the above conditions are satisfied, the energy density and cycling performance of the positive electrode active material can be further improved.

In some embodiments, the positive electrode active material may comprise at least one of Li₁₊ₓMn_{1-y}A_{y}P_{1-z}R_{z}O₄ and Li₁₊ₓCₘMn_{1-y}A_{y}P_{1-z}R_{z}O₄₋ₙDₙ. The ratio of y to 1-y is 1 : 10 to 1 : 1, optionally 1 : 4 to 1 : 1. The ratio of z to 1-z is 1 : 9 to 1 : 999, optionally 1 : 499 to 1 : 249. C, R and D are each independently any element within the respective ranges above, and A is at least two elements within the range thereof; Optionally, C is selected from any element of Mg and Nb, and/or A is at least two elements selected from Fe, Ti, V, Co and Mg, and optionally is Fe and one or more elements selected from Ti, V, Co and Mg, and/or R is S, and/or D is F. x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. Unless otherwise stated, the above parameters can be freely combined, and the combinations thereof will not be enumerated herein.

In some embodiments, the lattice change rate of the positive electrode active material is 8% or less, optionally 4% or less. By lowering the lattice change rate, the Li ion transport can be made easier, that is, the Li ions have a stronger migration ability in the material, which is beneficial in improving the rate performance of the secondary battery. The lattice change rate may be measured with a method known in the art, e.g., X-ray diffraction (XRD). The process of lithium intercalation and de-intercalation in LiMnPO₄ is a two-phase reaction. The interfacial stress of the two phases is determined by the lattice change rate. The smaller the lattice change rate, the smaller the interfacial stress and the easier the Li⁺ transport. Therefore, reducing the lattice change rate of the doped LiMnPO₄ is beneficial to enhance the Li+ transport capacity, thereby improving the rate performance of the secondary battery.

In some embodiments, optionally, the average discharge voltage of a button battery comprising the positive electrode active material is 3.5 V or more and the discharge capacity per gram is 140 mAh/g or more. Optionally, the average discharge voltage is 3.6 V or more and the discharge capacity per gram is 145 mAh/g or more.

Although the average discharge voltage of the undoped LiMnPO₄ is 4.0 V or more, the discharge capacity per gram thereof is low, usually less than 120 mAh/g, and thus the energy density is low. By adjusting the lattice change rate by doping, the discharge capacity per gram can be greatly increased, and the overall energy density can be significantly increased when the average discharge voltage reduces slightly.

In some embodiments, the Li/Mn antisite defect concentration of the positive electrode active material is 2% or less, and optionally, the Li/Mn antisite defect concentration is 0.5% or less. The so-called Li/Mn antisite defect means that the sites of Li⁺ and Mn²⁺ have been exchanged in the LiMnPO4 lattices. The Li/Mn antisite defect concentration refers to the percentage of Li⁺ exchanged with Mn²⁺ relative to the total amount of the Li⁺ in the positive electrode active material. The Mn²⁺ of antisite defects can hinder the transport of Li⁺, and a reduction in the Li/Mn antisite defect concentration is beneficial in improving the capacity per gram and rate performance of the positive electrode active material. The Li/Mn antisite defect concentration may be measured with a method known in the art, e.g., XRD.

In some embodiments, the surface oxygen valency of the positive electrode active material is -1.82 or less, optionally -1.89 to -1.98. By lowering the surface oxygen valency, the interfacial side reactions between the positive electrode active material and an electrolyte solution can be alleviated, thereby improving the cycling performance and high-temperature stability of the secondary battery. The surface oxygen valency may be measured with a method known in the art, e.g., electron energy loss spectroscopy (EELS).

In some embodiments, the positive electrode active material has a compacted density under 3 T (ton) of 2.0 g/cm3 or more, optionally 2.2 g/cm3 or more. A higher compacted density indicates a greater weight of the active material per unit volume, and thus, increasing the compacted density is beneficial for increasing the volumetric energy density of a cell. The compacted density may be measured in accordance with GB/T 24533-2009.

The average particle size range of the inner core prepared in the present application is 50-500 nm, and the Dv50 is 200-300 nm. The primary particle size of the core is in a range of 50-500 nm, and the Dv50 is 200-300 nm. If the average particle size of the inner core is too large (greater than 500 nm), the capacity per gram of the battery in which this material is used will be affected; and if the average particle size of the inner core is too small, the inner core's specific surface area will be large, and the inner core will be easy to aggregate, making it difficult to achieve uniform coating.

It is possible to ensure that each element is uniformly distributed in the crystal lattice without aggregation by means of process control (for example, sufficient mixing and grinding of various source materials). After preparing the positive electrode active material of the present application, the inventors of the present application cut out an middle area (inner core region) of the prepared positive electrode active material particles by a focusing ion beam (abbreviated as FIB), and tested through transmission electron microscope (abbreviated as TEM) and X-ray energy dispersive spectrum (abbreviated as EDS) analysis and found that the elements are uniformly distributed with no aggregation. Meanwhile, the positions of the main characteristic peaks of the inner core of the positive electrode active material according to the present application are basically consistent with those of LiMnPO₄ before doping, indicating that the doped lithium manganese phosphate inner core of the positive electrode active material has no impurity phase, and the improvement of the performance of the battery mainly results from doping with elements, rather than the impurity phase.

In some embodiments, the positive electrode active material has a core-shell structure, wherein the shell comprises at least one of a crystalline inorganic substance and a metal oxide. Specifically, the crystalline inorganic substance includes a pyrophosphate of QP₂O₇ and a phosphate of XPO₄, and the metal oxide includes Q'ₑO_{f}. Q and X are each independently selected from one or more of Li, Fe, Ni, Mg, Co, Cu, Zn, Ti, Ag, Zr, Nb or Al, and optionally, Q includes Li and one or more selected from Fe, Ni, Mg, Co, Cu, Zn, Ti, Ag, Zr, Nb or Al; Q' is selected from one or more elements of Li, Fe, Ni, Mg, Co, Cu, Zn,

Ti, Ag, Zr, Nb and Al, optionally from one or more elements of Li, Fe and Zr; M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Si, Zn, Zr and Sn; e is greater than 0 and less than or equal to 2; and f is greater than 0 and less than or equal to 5.

In some embodiments, the pyrophosphate includes LiₐQP₂O₇ and/or Q_{b}(P₂O₇)_{c}, where 0 ≤ a ≤ 2, 1 ≤ b ≤ 4, 1 ≤ c ≤ 6, the values of a, b, and c satisfy the condition of keeping the LiₐQP₂O₇ or Q_{b}(P₂O₇)_{c} electrically neutral, and Q in the LiₐQP₂O₇ and Q_{b}(P₂O₇)_{c} is each independently selected from one or more elements of Fe, Ni, Mg, Co, Cu, Zn, Ti, Ag, Zr, Nb, or Al.

The inventors have found that since metal ions are difficult to migrate in pyrophosphate, pyrophosphate as the coating layer can effectively isolate doped metal ions from the electrolyte solution. Moreover, the structure of the crystalline pyrophosphate is stable, and therefore, coating with the crystalline pyrophosphate can effectively inhibit the dissolution of transition metals and improve cycling performance. The crystalline phosphate and crystalline pyrophosphate have a relatively high lattice matching degree (with a mismatch degree of only 3%), good stability and excellent lithium-ion conductivity; therefore, coating the inner core with the crystalline phosphate and crystalline pyrophosphate can improve the stability of the positive electrode active material and effectively reduce the interfacial side reactions with the electrolyte solution, thereby improving the high-temperature cycling and storage performance of the battery. Similarly, the oxides can also have an effect of stabilizing the dissolution of active doping metals, and oxides are easy to be synthesized with lower costs. In some embodiments, an appropriate ratio of oxides to the crystalline inorganic substances such as pyrophosphate is conducive for the synergistic effect thereof being completely achieved, which can not only further inhibit the dissolution of manganese but also maintain a lower impedance of the secondary battery.

In some embodiments, the pyrophosphate and the phosphate each independently have a crystallinity of 10% to 100%, optionally 50% to 100%. The inventors have found that the above inorganic salts in the crystalline form can better combine with the inner core and have an improved ability to intercept and retain the dissolved active metal ions such as Mn. Specifically, the phosphate has an interplanar spacing of 0.244-0.425 nm, optionally 0.345-0.358 nm, and an included angle of crystal orientation (111) of 20.00° - 37.00°, optionally 24.25° - 26.45°; and the pyrophosphate has an interplanar spacing of 0.293-0.470 nm, optionally 0.293-0.326 nm, and an included angle of crystal orientation (111) of 18-32.57°, optionally 19.211° - 30.846°, more optionally 26.41° - 32.57°. The pyrophosphate and phosphate with a certain crystallinity enable not only the full achievement of the ability of the pyrophosphate coating layer to prevent the dissolution of manganese ions and the excellent ability of the phosphate coating layer to conduct lithium ions, as well as the reduction of the interfacial side reactions, but also the better lattice matching between the phosphate coating layer and the phosphate coating layer, such that a close combination of the coating layers can be achieved.

In some embodiments, the inorganic salts in the coating layers comprised in the shell are all crystalline substances. Specifically, the crystalline pyrophosphate and the crystalline phosphate in the coating layers can be characterized by conventional technical means in the art, and can also be characterized, for example, by means of a transmission electron microscope (TEM). Under TEM, the inner core and the coating layers can be distinguished by testing the interplanar spacing. The specific test method of the interplanar spacing and the included angle of the crystalline pyrophosphate and the crystalline phosphate in the coating layers can comprise the following steps: A certain amount of coated positive electrode active material sample powder is placed in a test tube, and a solvent such as ethanol is injected into the test tube, then fully stirred and dispersed, and then a clean disposable plastic straw is used to take an appropriate amount of the solution, which is dripped on a 300-mesh copper mesh, at this moment, part of the powder will remain on the copper mesh. The copper mesh and the sample are transferred to TEM sample chamber for testing, and the original images of the TEM test is obtained. The original picture obtained from the above TEM test is opened in a diffractometer software and subjected to Fourier transform to obtain a diffraction pattern, the distance from the diffraction spot to the center position in the diffraction pattern is measured to obtain the interplanar spacing, and the included angle is calculated according to the Bragg equation.

The difference between the interplanar spacing range of the crystalline pyrophosphate and that of the crystalline phosphate can be directly determined by the value of interplanar spacing. The crystalline pyrophosphate and crystalline phosphate having an interplanar spacing and included angle within the ranges above can more effectively reduce the lattice change rate and the dissolution amount of manganese ions of the positive electrode active material during the process of lithium intercalation and de-intercalation, thereby improving the high-temperature cycling performance and the high-temperature storage performance of the battery.

In some embodiments, the coating layer may further contain carbon. The carbon material has a good electronic conductivity. Since an electrochemical reaction occurs in the application of the secondary battery and the participation of electrons is required, carbon with excellent electrical conductivity can be used to coat the positive electrode active material to increase electron transport between particles and at different positions on the particles. Therefore, carbon coating can effectively improve the electrical conductivity and desolvation ability of the positive electrode active material.

For example, in some embodiments of the present application, the carbon in the inner coating layer is a mixture of SP2-form carbon and SP3-form carbon, and optionally, the molar ratio of the SP2-form carbon to the SP3-form carbon is any numerical value in a range of 0.1-10, optionally any numerical value in a range of 2.0-3.0. Specifically, the molar ratio of the SP2-form carbon to SP3-form carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or within any range of any of the above values.

The comprehensive electrical performance of the secondary battery is improved by selecting the form of carbon in the carbon coating layer. Specifically, by using a mixed form of SP2-form carbon and SP3-form carbon and limiting the ratio of SP2-form carbon to SP3-form carbon within a certain range, the following can be avoided: if the carbon in the coating layer is in the form of amorphous SP3 only, the electrical conductivity is poor; and if all the carbon is in a graphitized SP2-form, although the electrical conductivity is good, there are few lithium ion paths, which is not conducive to lithium intercalation and de-intercalation. In addition, limiting the molar ratio of SP2-form carbon to SP3-form carbon within the above ranges can not only achieve good electrical conductivity, but also can ensure the paths of lithium ions, which is beneficial to the realization of the function of the secondary battery and the cycling performance thereof.

The mixing ratio of the SP2-form carbon to the SP3-form carbon in the carbon coating layer can be controlled by sintering conditions such as the sintering temperature and sintering time. For example, in the case where sucrose is used as the carbon source to prepare the third coating layer, after being subjected to pyrolysis at a high temperature, the sucrose is deposited on the second coating layer, while both the SP3-form and SP2-form carbon coating layers will be produced at a high temperature. The ratio of the SP2-form carbon to the SP3-form carbon may be adjusted by selecting high-temperature pyrolysis conditions and sintering conditions.

The structure and characteristics of the carbon coating layer can be determined by a Raman spectroscopy, and the specific test method is as follows: subjecting the energy spectrum of the Raman test to peaking splitting to obtain Id/Ig (wherein Id is the peak intensity of SP3-form carbon, and Ig is the peak intensity of SP2-form carbon), thus confirming the molar ratio of the two forms.

In some embodiments of the present application, the shell comprises an inorganic coating layer and a carbon coating layer, wherein the inorganic coating layer is provided to be close to the inner core, and the inorganic coating layer comprises at least one of the phosphates, pyrophosphates, and metal oxides above. For example, in the present application, a person skilled in the art can make choices according to the actual situation: whether the phosphate and pyrophosphate are present in the same coating layer, and which one is provided to be closer to the inner core are not particularly limited. For example, the phosphate and pyrophosphate can together form an inorganic salt coating layer, and the outer side of the inorganic salt coating layer can further be provided with a carbon layer. Alternatively, the pyrophosphate and phosphate each independently form separate coating layers, with one being provided to be closer to the inner core, and the other coating the crystalline inorganic salt coating layer that is closer to the inner core, and a carbon layer is provided on the outermost side. Alternatively, the core-shell structure may be composed of only one inorganic salt coating layer formed by a phosphate or pyrophosphate, and a carbon layer provided on the outer side.

The combination between the inorganic coating layer and the inner core is similar to a heterojunction, and the firmness of the combination is limited by the lattice matching degree. When the lattice mismatch is 5% or less, the lattice matching is better, and the two are easy to combine closely. The close combination can ensure that the coating layer will not fall off in the subsequent cycling process, which is beneficial to ensuring the long-term stability of the material. The measurement of the degree of the combination between the coating layer and the core is mainly carried out by calculating the mismatch degree of each lattice constant between the core and the coating layer. In the present application, after element doping in the inner core, in particular element doping at the Mn site and the P site, the matching degree between the inner core and the coating layer is improved compared with that without doping with elements, and the inner core and the crystalline inorganic salt coating layer can be combined more closely.

In some embodiments of the present application, the shell comprises a first coating layer, a second coating layer, and a third coating layer, with the first coating layer coating the inner core and comprising a crystalline pyrophosphate. The second coating layer comprises a crystalline phosphate and coats the first coating layer, and the third coating layer is carbon. The pyrophosphate as the first coating layer can effectively isolate doped metal ions from the electrolyte solution. The structure of the crystalline pyrophosphate is stable, and therefore, the coating of the crystalline pyrophosphate can effectively inhibit the dissolution of transition metals and improve cycling performance. The crystalline phosphate as the second coating layer has a relatively high lattice matching degree (with a mismatch degree of only 3%) with the crystalline pyrophosphate as the first coating material, better stability than the pyrophosphate, and excellent lithium-ion conductivity, which is beneficial to improving the stability of the positive electrode active material and reducing the interfacial side reactions between the positive electrode active material and the electrolyte solution. The third coating layer can improve the electronic conductivity of the positive electrode active material, and carbon coating can also effectively improve the electrical conductivity and desolvation ability of the positive electrode active material.

In the embodiments above, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core. In some embodiments, the coating amount of the second coating layer is greater than 0 and less than or equal to 6 wt%, optionally greater than 0 and less than or equal to 5.5 wt%, more optionally 2-4 wt%, based on the weight of the inner core. In some embodiments, the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core. In the present application, the coating amount of each layer is not zero.

In the positive electrode active material with a core-shell structure of the present application, the coating amount of the three coating layers in the present application is preferably within the above range, which thus can enable the full coating of the inner core, while further improving the dynamic performance, cycling performance and safety performance of the battery without sacrificing the capacity per gram of the positive electrode active material.

For the first coating layer, the following situations can be effectively avoided by controlling the coating amount within the above-mentioned range: too small coating amount means that the coating layer is relatively thin, which may not be able to effectively prevent the migration of transition metals; and too high coating amount means that the coating layer is too thick, and may affect the migration of Li+, thereby affecting the rate performance of the positive electrode active material. For the second coating layer, the following situations can be effectively avoided by controlling the coating amount within the above-mentioned range: too high coating amount may affect the overall plateau voltage of the positive electrode active material; too small coating amount may not be able to achieve a sufficient coating effect. For the third coating layer, the carbon coating mainly functions for enhancing the electron transport between particles. However, since a large amount of amorphous carbon is comprised in the structure, the density of the carbon is low. Therefore, if the coating amount is too large, the compacted density of the electrode plate will be affected.

In some embodiments, the first coating layer has a thickness of 1-10 nm. In some embodiments, the second coating layer has a thickness of 2-15 nm. In some embodiments, the third coating layer has a thickness of 2-25 nm. In some embodiments, the thickness of the first coating layer may be about 2 nm, about 3 nm, about 4 nm, about 5 nm, about 6 nm, about 7 nm, about 8 nm, about 9 nm, or about 10 nm, or within any range of any of the above numerical values. In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above numerical values. In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm or about 25 nm, or within any range of any of the above numerical values.

When the thickness of the first coating layer is in a range of 1-10 nm, the adverse effect on the dynamic performance of the positive electrode active material resulting from a too thick first coating layer can be avoided, and the problem that the first coating layer cannot effectively hinder the migration of transition metal ions when the first coating layer is too thin can be avoided. When the thickness of the second coating layer is in a range of 2-15 nm, the surface structure of the second coating layer is stable, and less side reaction with the electrolyte solution occurs, so the interfacial side reaction can be effectively reduced, thereby improving the high-temperature cycling performance and the high-temperature storage performance of the battery. When the thickness of the third coating layer is in a range of 2-25 nm, the electrical conductivity of the positive electrode active material can be improved and the compacted density of the positive electrode plate prepared by using the positive electrode active material can be improved. The thickness determination of the coating layer is mainly carried out by FIB, and the specific method may comprise the following steps: randomly selecting a single particle from the positive electrode active material powder to be tested, cut out a thin slice with a thickness of about 100 nm from the middle position or near the middle position of the selected particle, and then conducting a TEM test on the slice, measuring the thickness of the coating layer, at 3-5 positions and taking the average value.

In some embodiments, based on the weight of the positive electrode active material, the manganese element content is in a range of 10 wt% to 35 wt%, optionally in a range of 15 wt% to 30 wt%, more optionally in a range of 17 wt% to 20 wt%. In some embodiments, based on the weight of the positive electrode active material, the content of phosphorus element is in a range of 12 wt% to 25 wt%, more optionally in a range of 15 wt% to 20 wt%. In some embodiments, the weight ratio of manganese element to phosphorus element is in the range of 0.90-1.25, optionally 0.95-1.20. In the present application, in the case where manganese is contained only in the inner core of the positive electrode active material, the content of manganese may correspond to that of the inner core.

Limiting the content of the phosphorus element within the ranges above can effectively avoid the following situations: if the content of phosphorus element is too high, the covalency of P-O may be too strong and affect the conduction of small polarons, thereby affecting the conductivity of the positive electrode active material; if the content of phosphorus element is too low, the stability of the pyrophosphate lattice structure in the inner core and the first coating layer and/or the phosphate lattice structure in the second coating layer may be reduced, thereby affecting the overall stability of the positive electrode active material. The weight ratio of manganese to phosphorus content has the following effects on the performance of the battery: If the weight ratio is too large, it means that there are too many manganese element, and the dissolution of manganese ions may be increased, thereby affecting the stability and capacity per gram performance of the positive electrode active material, and affecting the cycling performance and storage performance of the battery; and if the weight ratio is too small, it means that there are too much phosphorus element, and impurity phases are easily formed, and the discharge voltage plateau of the positive electrode active material may drop, thereby reducing the energy density of the battery. The determination of manganese and phosphorus elements can be carried out by conventional technical means in the art. In particular, the following methods are used to determine the content of the manganese and phosphorus elements: dissolving the positive electrode active material in dilute hydrochloric acid (with a concentration of 10-30%), measuring the content of each element in the solution using ICP, and then determining and converting the content of manganese element to obtain the weight percentage thereof.

In some other embodiments of the present application, the inorganic coating layers include a first coating layer coating the inner core and a second coating layer coating the first coating layer, wherein the first coating layer comprises a pyrophosphate of QP₂O₇ and a phosphate of XPO₄, and the second coating layer is a carbon coating layer. The chemical composition and crystallinity of the pyrophosphate QP₂O₇ and the phosphate XPO₄ are similar to those in the previous embodiments, and will not be repeated here.

Specifically, in these embodiments, the coating amount of the first coating layer is greater than 0 wt% and less than or equal to 7 wt%, optionally 4-5.6 wt%, based on the weight of the inner core. Optionally, the weight ratio of the pyrophosphate to phosphate in the first coating layer is 1 : 3 to 3 : 1, optionally 1 : 3 to 1 : 1. Optionally, the coating amount of the second coating layer is greater than 0 wt% and less than or equal to 6 wt%, optionally 3-5 wt%, based on the weight of the inner core. The coating amount of each layer is not zero. When the coating amount of the first coating layer is within the above range, the dissolution of manganese can be further inhibited, and at the same time, the transport of lithium ions can be further promoted. Besides, the following situations may be effectively avoided: if the coating amount of the first coating layer is too small, it may lead to insufficient inhibition of the dissolution of manganese by pyrophosphate, and non-significant improvement of lithium ion transport performance; and if the coating amount of the first coating layer is too large, it may cause the coating layer to be too thick, increase the impedance of the battery, and affect the dynamic performance of the battery. The proper ratio of pyrophosphate to phosphate is conducive to the full achievement of the synergistic effect of the two. Besides, the following situations may be effectively avoided: if the pyrophosphate is too much and the phosphate is too little, the impedance of the battery may increase; and if there is too much phosphate and too little pyrophosphate, the effect of inhibiting the dissolution of manganese will not be significant.

In the first coating layer of the lithium manganese phosphate positive electrode active material, the pyrophosphate and phosphate with certain crystallinities are beneficial to keep the structure of the first coating layer stable and reduce lattice defects. For one thing, this is conducive to the exertion of the pyrophosphate in hindering the dissolution of manganese; for another thing, this is also beneficial to reducing the surface lithium content and the surface oxygen valency of phosphate, thereby reducing the interfacial side reactions between the positive electrode material and the electrolyte solution, reducing the consumption of electrolyte solution, and improving the cycling performance and safety performance of the battery.

In some embodiments, optionally, the phosphate of the first coating layer has an interplanar spacing of 0.345-0.358 nm, and an included angle of crystal orientation (111) of 24.25° - 26.45°; and optionally the pyrophosphate of the first coating layer has an interplanar spacing of 0.293-0.326 nm, and an included angle of crystal orientation (111) of 26.41° - 32.57°. When the interplanar spacings and the included angles of the crystal orientation (111) of the phosphate and pyrophosphate in the first coating layer are within the above ranges, the impurity phase in the coating layer may be effectively avoided and thus the capacity per gram, the cycling performance, and the rate performance of the positive electrode active material are improved. Similarly, the crystallinity of the pyrophosphate and phosphate may be adjusted, for example, by adjusting the process conditions of the sintering process, such as the sintering temperature and the sintering time. The crystallinity of the pyrophosphate and phosphate may be measured by a method known in the art, such as by X-ray diffraction, density, infrared spectroscopy, differential scanning calorimetry, and nuclear magnetic resonance absorption methods.

The carbon-containing layer as the second coating layer can function as a "barrier" to avoid the direct contact between the positive electrode active material and the electrolyte solution, thereby reducing the corrosion of the active material by the electrolyte solution and improving the safety performance of the battery at high temperatures. Moreover, it has strong electrical conductivity, which can reduce the internal resistance of the battery, thereby improving the dynamic performance of the battery. However, since the capacity per gram of the carbon material is relatively low, when the amount of the second coating layer is excessively large, the capacity per gram of the positive electrode active material as a whole may be reduced. Thus, when the coating amount of the second coating layer is in the above range, the dynamic performance and safety performance of the battery can be further improved without compromising the capacity per gram of the positive electrode active material.

In some other embodiments, the shell of the positive electrode active material may also comprise a first coating layer and a second coating layer, wherein the first coating layer comprises a crystalline pyrophosphate of QP₂O₇ and a metal oxide of Q'ₑO_{f}, and the second coating layer is a carbon coating layer. The specific composition of the pyrophosphate QP₂O₇ and the metal oxide Q'ₑO_{f} has been described in detail above and will not be repeated here.

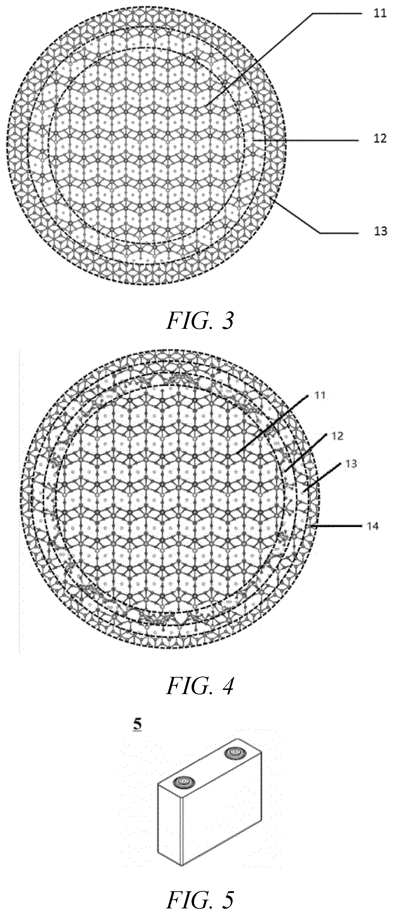

As shown in Fig. 3, the first coating layer 12 comprises a crystalline phosphate and a crystalline oxide; due to the high migration barrier (> 1 eV) of transition metals in pyrophosphate, the dissolution of the transition metals can be effectively inhibited; and the crystalline oxide has a high structural stability and a low surface activity; therefore, coating with the crystalline oxide can effectively reduce the interfacial side reactions, thereby improving the high-temperature cycling and storage performance of the battery. In addition, since the second coating layer 13 is a carbon-containing layer, the electrical conductivity and desolvation ability of the inner core 11 can be effectively improved. In addition, the "barrier" effect of the second coating layer 13 can further hinder the migration of manganese ions into the electrolyte solution and reduce the corrosion of the active material by the electrolyte solution. Therefore, with the inner core being lithium manganese phosphate as an example, the positive electrode active material of the present application obtained by doping lithium manganese phosphate with specific elements and coating the surface thereof can not only reduce the generation of Li/Mn antisite defects and effectively inhabit the dissolution of Mn in the process of lithium intercalation and de-intercalation, but also can accelerate the migration of lithium ions, thereby improving the rate performance of the cell, and improving the cycling performance, high-temperature performance, and safety performance of the secondary battery.

In addition, it should be noted that Fig. 3 shows a schematic structural diagram of an positive electrode active material proposed in the present application, and is not limited to the embodiments mentioned above. Any positive electrode active material having two coating layers of the present application can have a structure as shown in Fig. 3. The coating layers (12 and 13 as shown in the figure) can achieve complete or partial coating of the inner structure, with a coating amount or area of 100%, 90%, 80%, 70%, 60%, 50%, etc., of the inner structure.

In the embodiments above, the pyrophosphate in the first coating layer has an interplanar spacing of 0.293-0.326 nm and an included angle of crystal orientation (111) of 26.41° - 32.57°; optionally, the pyrophosphate in the first coating layer has an interplanar spacing of 0.300-0.310 nm (e.g., 0.303 nm); and/or optionally, the pyrophosphate in the first coating layer has an included angle of crystal orientation (111) of 29.00° - 30.00° (e.g., 29.496°). When the interplanar spacing and included angle of crystal direction (111) of the pyrophosphate in the first coating layer are within the ranges above, the impurity phase in the coating layer can be effectively avoided, thereby improving the capacity per gram of the material, and improving the cycling performance and rate performance of the secondary battery.

The coating amount of the first coating layer is greater than 0 wt% and less than or equal to 7 wt%, optionally 4-5.6 wt%, based on the weight of the inner core. When the coating amount of the first coating layer is within the ranges above, the dissolution of manganese can be further inhibited while further accelerating the transport of lithium ions and enabling the secondary battery to maintain a low impedance, thereby improving the dynamic performance of the secondary battery. In some embodiments, the weight ratio of the pyrophosphate to the oxide in the first coating layer is 1 : 3 to 3 : 1, optionally 1 : 3 to 1 : 1. An appropriate ratio of an pyrophosphate to an oxide is conducive for the full achievement of the synergistic effect thereof, which can not only further inhibit the dissolution of manganese but also maintain a lower impedance of the secondary battery. The coating amount of the second coating layer is greater than 0 wt% and less than or equal to 6 wt%, optionally 3-5 wt%, based on the weight of the inner core. The properties and advantages of the carbon coating layer are similar to those described in the embodiments above and will not be repeated here.

In the above embodiments, the first coating layer has a thickness of 1-100 nm. Thus, due to the high migration barrier of transition metals in the first coating layer, the dissolution of the transition metals can be effectively reduced. The oxide in the first coating layer has a higher stability, which can effectively reduce interfacial side reactions, thereby improving the high-temperature stability of the material. In some embodiments, the second coating layer has a thickness of 1-100 nm. In some embodiments, the pyrophosphate in the first coating layer has a crystallinity of 10% to 100%, optionally 50% to 100%. In the first coating layer of the lithium manganese phosphate positive electrode active material of the present application, the pyrophosphate with a certain crystallinity is beneficial for keeping the structure of the first coating layer stable and reducing lattice defects. For one thing, it is conducive for the full achievement of the effect of pyrophosphate on preventing the dissolution of manganese; and for another, it is also beneficial for reducing the content of lithium impurities on the surface and the surface oxygen valency, thereby reducing the interfacial side reactions between the positive electrode material and the electrolyte solution, reducing the consumption of the electrolyte solution, and improving the cycling performance and safety performance of the secondary battery.

In some other embodiments of the present application, the shell can also comprise a first coating layer coating the inner core, a second coating layer coating the first coating layer, and a third coating layer coating the second coating layer. Similarly, such a positive electrode active material may have a structure as shown in Fig. 4. The first coating layer 12 comprises a crystalline pyrophosphate; the second coating layer 13 comprises a metal oxide of Q'ₑO_{f}; the crystalline pyrophosphate includes LiₐQP₂O₇ and/or Q_{b}(P₂O₇)_{c}, where a is greater than 0 and less than or equal to 2, b is any numerical value in a range of 1-4, and c is any numerical value in a range of 1-3; and the third coating layer 14 comprises carbon. The specific composition of the crystalline pyrophosphates including LiₐQP₂O₇ and/or Q_{b}(P₂O₇)_{c} and the metal oxide of Q'ₑO_{f} has been described in detail above and will not be repeated here.

Similarly, the combination between the first coating layer and the inner core is similar to a heterojunction, and the firmness of the combination is limited by the lattice matching degree. The crystalline oxide as the second coating layer has a relatively high lattice matching degree (with a mismatch degree of only 3%) with the crystalline pyrophosphate as the first coating material and better stability than the pyrophosphate, such that coating the pyrophosphate with same is beneficial for improving the stability of the material. Coating with a crystalline oxide can effectively reduce the interfacial side reaction on the surface of the positive electrode active material, thereby improving the high-temperature cycling and storage performance of the secondary battery. The mode for the lattice matching between the second coating layer and the first coating layer is similar to the above combination between the first coating layer and the core. When the lattice mismatch is 5% or less, the lattice matching is better, and the two are easy to combine closely. The main reason why carbon is used as the third layer of coating is that the carbon layer has a better electronic conductivity.

In some embodiments, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2 wt% - 4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core. The coating amount of each layer is not zero. The coating amounts of the three coating layers are preferably within the ranges above, such that the inner core can be fully coated, while the dynamic performance and safety performance of the secondary battery can be further improved without sacrificing the capacity per gram of the positive electrode active material. Specifically, with the coating amount of the first coating layer being within the ranges above, the dissolution of the transition metals can be reduced, which ensures the successful migration of lithium ions, thereby improving the rate performance of the positive electrode active material. With the coating amount of the second coating layer being within the ranges above, the positive electrode active material can maintain a certain plateau voltage while ensuring the coating effect. For the third coating layer, the carbon coating mainly functions for accelerating the electron transport between particles. However, since a large amount of amorphous carbon is comprised in the structure, the density of the carbon is low. Therefore, the coating amount of the carbon being within the range above can ensure the compacted density of the electrode plate.

In some embodiments, the first coating layer has a thickness of 2-10 nm; and/or the second coating layer has a thickness of 3-15 nm; and/or the third coating layer has a thickness of 5-25 nm. The thickness of the first coating layer may be about 2 nm, about 3 nm, about 4 nm, about 5 nm, about 6 nm, about 7 nm, about 8 nm, about 9 nm, or about 10 nm, or within any range of any of the above numerical values. In some embodiments, the thickness of the second coating layer may be about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above numerical values. In some embodiments, the thickness of the third coating layer may be about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm or about 25 nm, or within any range of any of the above numerical values. When the first coating layer has a thickness in a range of 2-10 nm, the dissolution of the transition metals can be effectively reduced, and the dynamic performance of the secondary battery can be ensured. When the second coating layer has a thickness in the range of 3-15 nm, the surface structure of the second coating layer is stable, and there will be less side reaction with the electrolyte solution, such that the interfacial side reactions can be effectively reduced, thereby improving the high-temperature performance of the secondary battery. When the third coating layer has a thickness in the range of 5-25 nm, the electrical conductivity of the material can be improved and the compacted density performance of the battery electrode plate prepared by using the positive electrode active material can be improved. Similarly, the thickness of the coating layer is mainly determined by FIB.

In the above embodiments, based on the weight of the positive electrode active material, the content of manganese element is in a range of 10-35 wt%, optionally in a range of 15-30 wt%, more optionally in a range of 17-20 wt%, and the content of phosphorus element is in a range of 12-25 wt%, optionally in a range of 15-20 wt%; and optionally, the weight ratio of manganese element to phosphorus element is in a range of 0.90-1.25, more optionally in a range of 0.95-1.20. In the present application, in the case where manganese is contained only in the inner core of the positive electrode active material, the content of manganese may correspond to that of the inner core. In the present application, limiting the content of manganese element within the above ranges can ensure a higher stability and density of the positive electrode active material, such that the cycling performance, storage performance, compacted density, etc., of the secondary battery can be improved; moreover, the positive electrode active material can maintain a certain voltage plateau height, thereby increasing the energy density of the secondary battery. In the present application, limiting the content of phosphorus element within the above ranges can effectively increase the electrical conductivity of the material, and improve the overall stability of the material. In the present application, limiting the weight ratio of the manganese to phosphorus content within the above ranges can effectively reduce the dissolution of transition metal elements such as manganese and increase the stability and capacity per gram of the positive electrode active material, thereby improving the cycling performance and storage performance of the secondary battery; moreover, facilitating to reduce the impurity phases in the material and maintain the discharge voltage plateau height of the material, thereby increasing the energy density of the secondary battery.

In some embodiments of the present application, the positive electrode active material comprises a first coating layer coating the inner core, a second coating layer coating the first coating layer, and a third coating layer coating the second coating layer, wherein the first coating layer comprises a crystalline pyrophosphate of LiₐQP₂O₇ and/or Q_{b}(P₂O₇)_{c}, the second coating layer comprises a crystalline phosphate of XPO₄, and the third coating layer is carbon.

Similarly, in this embodiment, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2-4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core. The first coating layer has a thickness of 1-10 nm; and/or the second coating layer has a thickness of 2-15 nm; and/or the third coating layer has a thickness of 2-25 nm.

Based on the weight of the positive electrode active material, the content of manganese element is in a range of 10 wt% - 35 wt%, optionally in a range of 15 wt% - 30 wt%, more optionally in a range of 17 wt% - 20 wt%, the content of phosphorus element is in a range of 12 wt % - 25 wt %, optionally in a range of 15 wt % - 20 wt %, and the weight ratio of manganese element to phosphorus element is in a range of 0.90-1.25, optionally 0.95-1.20.

The effects of the parameters, such as the thickness, the content of phosphorus, the content of manganese, and the content of the coating layer, and the principles for achieving these effects, have been described in detail above and will not be repeated here.

In some embodiments, the primary particles of the positive electrode active material have an average particle size in a range of 50-500 nm and a volume median particle size Dv50 in a range of 200-300 nm. Due to the agglomeration of the particles, the actually measured size of the agglomerated secondary particles may be 500-40000 nm. The particle size of the positive electrode active material affects the processing of the material and the compacted density performance of the electrode plate. By selecting the average particle size of the primary particles within the above range, the following situations can be avoided: if the average particle size of the primary particles of the positive electrode active material is too small, it may cause particle aggregation, difficult dispersion, and need more binder, resulting in poor brittleness of the electrode plate; if the average particle size of the primary particles of the positive electrode active material is too large, the gaps between the particles may be large and the compacted density may be reduced. Through the above solution, the lattice change rate and dissolution of Mn of the lithium manganese phosphate during the process of lithium intercalation and de-intercalation can be effectively inhibited, thereby improving the high-temperature cycling stability and high-temperature storage performance of the secondary battery.

A second aspect of the present application relates to a method for preparing the positive electrode active material of the first aspect of the present application. The method comprises steps of forming an inner core and forming a shell at least on the surface of the inner core, wherein the inner core comprises at least one of a ternary material, _{d}Li₂MnO₃·(1-d)LiMO₂ and LiMPO₄, where 0 < d < 1, and M includes one or more selected from Fe, Ni, Co, and Mn; and the shell comprises a crystalline inorganic substance having a full width at half maximum of the main peak of 0-3° as measured by means of X-ray diffraction, and the crystalline inorganic substance includes one or more selected from a metal oxide and an inorganic salt.

The structure and content of the inner core and the coating layers in the shell have been explained in detail above and will not be repeated here. Hereafter, with the inner core containing LiMPO₄ and M including Mn and a non-Mn element as an example, the steps of the method will be explained in detail below:

Specifically, the method comprises the operation of forming a LiMPO₄ compound, wherein the LiMPO₄ compound may have all the characteristics and advantages of the LiMPO₄ compounds mentioned above and will not be repeated here. In brief, M includes Mn and a non-Mn element, and the non-Mn element satisfies at least one of the following conditions: the ionic radius of the non-Mn element being denoted as a, and the ionic radius of manganese element being denoted as b, |a-b|/b is not greater than 10%; the variable range of the valence of the non-Mn element is not greater than that of Mn element; the chemical activity of a chemical bond formed by the non-Mn element and O is not less than that of a P-O bond; and the highest valence of the non-Mn element is not greater than 6.

In some embodiments, when the non-Mn element includes a first doping element and a second doping element, the method comprises: mixing a manganese source, a dopant of the manganese-site element and an acid to obtain manganese salt particles having the first doping element; and mixing the manganese salt particles having the first doping element with a lithium source, a phosphorus source, and a dopant of the second doping element in a solvent to obtain a slurry, and sintering same under the protection of an inert gas atmosphere to obtain the LiMPO₄ compound. The types of the first doping element and the second doping element have been described in detail above and will not be repeated here. In some embodiments, the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

In some embodiments, the LiMPO₄ compound is formed according to the chemical formula of Li₁₊ₓMn_{1-y}A_{y}P_{1-z}R_{z}O₄, and in some other embodiments, the LiMPO₄ compound is formed according to the chemical formula of Li₁₊ₓCₘMn_{1-y}A_{y}P_{1-z}R_{z}O₄₋ₙDₙ. The elements of each substitution site and the selection principles and beneficial effects thereof, as well as the atomic ratio range have been described in detail above and will not be repeated here. Here, a source of the C element is selected from at least one of the elementary substance, oxide, phosphate, oxalate, carbonate and sulfate of the C element; a source of the A element is selected from at least one of the elementary substance, oxide, phosphate, oxalate, carbonate, sulfate, chloride, nitrate, organic acid salt, hydroxide and halide of the A element; a source of an R element is selected from at least one of the sulfate, borate, nitrate and silicate, organic acid, halide, organic acid salt, oxide and hydroxide of the R element; and a source of an D element is selected from at least one of the elementary substance and ammonium salt of the D element.

In some embodiments, the acid is selected from one or more of hydrochloric acid, sulfuric acid, nitric acid, phosphoric acid, an organic acid like oxalic acid, etc, and may be, for example, oxalic acid. In some embodiments, the acid is a dilute acid with a concentration of 60 wt% or less. In some embodiments, the manganese source may be a manganese-containing substance useful for preparing lithium manganese phosphate that is known in the art. For example, the manganese source may be selected from one or a combination of elemental manganese, manganese dioxide, manganese phosphate, manganese oxalate and manganese carbonate. In some embodiments, the lithium source may be a lithium-containing substance useful for preparing lithium manganese phosphate that is known in the art. For example, the lithium source may be selected from one or a combination of lithium carbonate, lithium hydroxide, lithium phosphate and lithium dihydrogen phosphate. In some embodiments, the phosphorus source may be a phosphorus-containing substance useful for preparing lithium manganese phosphate that is known in the art. For example, the phosphorus source may be selected from one or a combination of diammonium hydrogen phosphate, ammonium dihydrogen phosphate, ammonium phosphate and phosphoric acid. The added amounts of respective sources of the doping elements at each site depend on a target doping amount, and the ratio of the amounts of the lithium source, the manganese source and the phosphorus source conforms to a stoichiometric ratio.

In some embodiments, the manganese salt particles having a first doping element is obtained when at least one of the following conditions is satisfied: the manganese source, the manganese-site element and the acid are mixed at a temperature of 20-120°C, optionally 40-120°C, optionally 60-120°C, more optionally 25-80°C; and/or the mixing is carried out under stirring at 200-800 rpm, optionally 400-700 rpm, more optionally 500-700 rpm for 1-9 h, optionally 3-7 h, more optionally 2-6 h.

In some embodiments, the positive electrode active material may have a first doping element and a second doping element. In this method, the manganese salt particles having the first doping element, and a lithium source, a phosphorus source, and a dopant of the second doping element are ground and mixed in a solvent for 8-15 h. For example, the manganese salt particles having the first doping element, and a lithium source, a phosphorus source, and a dopant of the second doping element are mixed in a solvent at a temperature of 20-120°C, optionally 40-120°C, for 1-10 h.

Specifically, in this method, the LiMPO₄ compound can be formed according to the chemical formula of Li₁₊xCₓMn_{1-y}A_{y}P_{1-z}R_{z}O₄₋ₙDₙ. More specifically, the manganese salt particles having the first doping element, and a lithium source, a phosphorus source, and a dopant of the second doping element can be ground and mixed in a solvent for 8-15 h. For example, a manganese source, a source of the A element and an acid can be dissolved in a solvent to form a suspension of an A element -doped manganese salt, and the suspension is filtered, followed by drying to obtain the A element -doped manganese salt; a lithium source, a phosphorus source, a source of the C element, a source of R element, a source of D element, a solvent and the A element -doped manganese salt are mixed to obtain a slurry; the slurry is subjected to a spray-drying granulation to obtain particles; and the particles are sintered to obtain the positive electrode active material. The sintering may be carried out at a temperature in a range of 600-900°C for 6-14 hours.

By controlling the reaction temperature, the stirring speed and the mixing time during the doping, the doping elements can be uniformly distributed, and the sintered material has a higher degree of crystallinity, thereby improving the capacity per gram, rate performance and the like of the material.

In some specific embodiments, the operation of forming the inner core may comprise the following steps: (1) a manganese source, a source of a B element and an acid are dissolved and stirred in a solvent to generate a suspension of a B element-doped manganese salt, the suspension is filtered, and the resultant filter cake is dried, to obtain the B element-doped manganese salt; (2) a lithium source, a phosphorus source, a source of an A element, a source of a C element and a source of a D element, a solvent and the B element-doped manganese salt obtained in step (1) are added into a reaction container, and ground and mixed to obtain a slurry; (3) the slurry obtained in step (2) is transferred into a spray drying apparatus for spray-drying granulation, to obtain particles; and (4) the particles obtained in step (3) are sintered.

In some embodiments, the solvents in step (1) and step (2) may each independently be a commonly used solvent for preparing a manganese salt and lithium manganese phosphate by those skilled in the art. For example, the solvents may each independently be selected from at least one of ethanol and water (e.g., deionized water), etc.

In some embodiments, the stirring of step (1) is carried out at a temperature in a range of 60°C to 120°C. In some embodiments, the stirring of step (1) is carried out at a stirring speed of 200 to 800 rpm, or 300 to 800 rpm, or 400 to 800 rpm. In some embodiments, the stirring of step (1) is carried out for 6 to 12 h. In some embodiments, the grinding and mixing of step (2) are carried out for 8 to 15 h.

By controlling the reaction temperature, the stirring speed and the mixing time during the doping, the doping elements can be uniformly distributed, and the sintered material has a higher degree of crystallinity, thereby improving the capacity per gram, rate performance and the like of the material.

In some embodiments, in step (1), the filter cake may be washed before drying. In some embodiments, the drying in step (1) may be carried out by means and conditions known to those skilled in the art. For example, the temperature of the drying may be in a range of 120°C to 300°C. Optionally, the dried filter cake may be ground into particles, for example, until the median particle size Dv50 of the particles is in a range of 50-200 nm. Herein, the median particle size Dv50 refers to a particle size corresponding to a cumulative volume distribution percentage of the positive electrode active material reaching 50%. In the present application, the median particle size Dv50 of the positive electrode active material may be determined by using a laser diffraction particle size analysis method. For example, the determination may be performed with reference to the standard GB/T 19077-2016 by using a laser particle size analyzer (e.g., Malvern Master Size 3000).

In some embodiments, in step (2), a carbon source is also added into the reaction vessel for grinding and mixing. Thus, the method can obtain a positive electrode active material having a surface coated with carbon. Optionally, the carbon source includes one or a combination of starch, sucrose, glucose, polyvinyl alcohol, polyethylene glycol and citric acid. A molar ratio of the amount of the carbon source to the amount of the lithium source is usually in a range of 0.1% to 5%. The grinding may be carried out by suitable grinding means known in the art, e.g., sanding.

The temperature and time of the spray drying in step (3) may be conventional temperature and time for spray drying in the art, e.g., at 100°C to 300°C for 1 to 6 h.

In some embodiments, the sintering is carried out in a temperature range of 600°C to 900°C for 6 to 14 h. By controlling the sintering temperature and time, the degree of crystallinity of the material can be controlled, and the dissolution of Mn and Mn-position doping element after cycling of the positive electrode active material is reduced, thereby improving the high-temperature stability and cycling performance of the battery. In some embodiments, the sintering is carried in a protective atmosphere, and the protective atmosphere may be nitrogen, an inert gas, hydrogen or a mixture thereof.

In some other embodiments, the inner core of the positive electrode active material may only comprise a Mn-site doping element and a P-site doping element. The steps of providing the positive electrode active material may include: step (1): mixing and stirring a manganese source, a dopant of the A element, and an acid in a container to obtain an element-A doped manganese salt particle; step (2): mixing the A element -doped manganese salt particles with a lithium source, a phosphorus source, and a dopant of R element in a solvent to obtain a slurry, and sintering same under the protection of an inert gas atmosphere to obtain an inner core doped with elements A and R. In some optional embodiments, after the manganese source, the A element dopant and the acid react in a solvent to obtain a suspension of an A element -doped manganese salt, the suspension is filtered, dried and sanded to obtain A element -doped manganese salt particles with a particle size of 50-200 nm. In some optional embodiments, the slurry in step (2) is dried to obtain a powder, and the powder is then sintered to obtain a positive electrode active material doped with elements A and R.

In some embodiments, in step (1), the mixing is carried out at a temperature of 20-120°C, optionally 40-120°C; and/or in step (1), the stirring is carried out at 400-700 rpm for 1-9 h, optionally for 3-7 h. Optionally, the reaction temperature in the step (1) can be at about 30°C, about 50°C, about 60°C, about 70°C, about 80°C, about 90°C, about 100°C, about 110°C or about 120°C; the stirring in the step (1) is carried out for about 2 hours, about 3 hours, about 4 hours, about 5 hours, about 6 hours, about 7 hours, about 8 hours or about 9 hours; and optionally, the reaction temperature and stirring time in the step (1) may be within any range of any of the above-mentioned numerical values.

In some embodiments, in step (2), the mixing is carried out at a temperature of 20-120°C, optionally 40-120°C, for 1-12 h. Optionally, the reaction temperature in the step (2) may be about 30°C, about 50°C, about 60°C, about 70°C, about 80°C, about 90°C, about 100°C, about 110°C or about 120°C; the mixing in the step (2) is carried out for about 2 hours, about 3 hours, about 4 hours, about 5 hours, about 6 hours, about 7 hours, about 8 hours, about 9 hours, about 10 hours, about 11 hours or about 12 hours; optionally, the reaction temperature and mixing time in the step (2) may be within any range of any of the above-mentioned numerical values.

When the temperature and time during the preparation of the positive electrode active particles are within the above ranges, the prepared positive electrode active material prepared therefrom has fewer lattice defects, which is beneficial to inhibiting the dissolution of manganese and reducing the interfacial side reactions between the positive electrode active material and the electrolyte solution, thereby improving the cycling performance and safety performance of the secondary battery.

In some embodiments, optionally, during the preparation of dilute acid manganese particles doped with elements A and R, the pH of the solution is controlled to be 3.5-6; optionally, the pH of the solution is controlled to be 4-6; and even more optionally, the pH of the solution is controlled to be 4-5. It should be noted that the pH of the obtained mixture may be adjusted in the present application by a method commonly used in the art, for example by adding an acid or a base. In some embodiments, optionally, in step (2), the molar ratio of the manganese salt particle, the lithium source, and the phosphorus source is 1 : 0.5-2.1 : 0.5-2.1, and more optionally, the molar ratio of the A element -doped manganese salt particle, the lithium source, and the phosphorus source is about 1 : 1: 1.

In some embodiments, optionally, the sintering condition during the preparation of lithium manganese phosphate doped with element A and element R is: sintering is carried out at 600-950°C for 4-10 hours under an atmosphere of inert gas or a mixture of inert gas and hydrogen; optionally, the sintering may be performed at about 650°C, about 700°C, about 750°C, about 800°C, about 850°C or about 900°C for about 2 hours, about 3 hours, about 4 hours, about 5 hours, about 6 hours, about 7 hours, about 8 hours, about 9 hours or about 10 hours; Optionally, the sintering temperature and the sintering time may be in any range of any of the above-mentioned numerical values. During the preparation of the lithium manganese phosphate doped with element A and element R, if the sintering temperature is too low and the sintering time is too short, the crystallinity of the inner core of the material will be relatively low, which will affect the overall performance, and if the sintering temperature is too high, impurity phases are prone to appear in the inner core of the material, thereby affecting the overall performance; if the sintering time is too long, the inner core particles of the material will be grown to be relatively large, which will affect the capacity per gram, compacted density, rate performance, and the like. In some optional embodiments, optionally, the protective atmosphere is a mixed gas of 70-90 vol% nitrogen and 10-30 vol% hydrogen.

In some embodiments, with the particle having the above chemical composition being used as the inner core, the method further includes steps of forming a shell coating the inner core.

Specifically, the coating steps may include a step of forming a carbon coating layer. Optionally, the carbon source includes one or a combination of starch, sucrose, glucose, polyvinyl alcohol, polyethylene glycol and citric acid. A molar ratio of the amount of the carbon source to the amount of the lithium source is usually in a range of 0.1% to 5%. The grinding may be carried out by suitable grinding means known in the art, e.g., sanding.

Before forming the carbon layer, the method further includes a step of forming the inorganic coating layer mentioned above.

For example, when the coating layers include a first coating layer and a second coating layer coating the first coating layer, wherein the first coating layer comprises a pyrophosphate of QP₂O₇ and a phosphate of XPO₄, and the second coating comprises carbon, the method comprises: providing a QP₂O₇ powder and an XPO₄ suspension containing a carbon source, adding the lithium manganese phosphate oxide and the QP₂O₇ powder into the XPO₄ suspension containing a carbon source, and mixing and sintering same to obtain a positive electrode active material.

Herein, the QP₂O₇ powder is a commercially available product, or optionally, the QP₂O₇ powder is provided by: adding a source of a Q element and a phosphorus source into a solvent to obtain a mixture, adjusting the pH of the mixture to be 4-6, and stirring same for complete reaction, followed by drying and sintering; and the QP₂O₇ powder is provided when at least one of the following conditions is satisfied: the drying is carried out at 100-300°C, optionally 150-200°C, for 4-8 h; and the sintering is carried out at 500-800°C, optionally 650-800°C, in an inert gas atmosphere for 4-10 h. Specifically, for example, for forming the coating layer, the sintering temperature is 500-800°C, and the sintering time is 4-10 hours.

In some embodiments, optionally, the XPO₄ suspension comprising a carbon source is commercially available, or optionally, prepared by the following method: uniformly mixing a lithium source, an X source, a phosphorus source, and a carbon source in a solvent, then heating the reaction mixture to 60-120°C, and maintaining the temperature for 2-8 hours to obtain an XPO₄ suspension containing a carbon source. Optionally, during the process of preparing the XPO₄ suspension containing a carbon source, the pH of the mixture is adjusted to 4-6.

In some embodiments, optionally, the primary particles of the two-layer coated lithium manganese phosphate positive electrode active material in the present application have a median particle size Dv50 of 50-2000 nm.

In some other embodiments, the coating layers include a first coating layer coating the LiMPO₄ compound, a second coating layer coating the first coating layer, and a third coating layer coating the second coating layer, wherein the first coating layer comprises a crystalline pyrophosphate of LiₐQP₂O₇ and/or Q_{b}(P₂O₇)_{c} where 0 ≤ a ≤ 2, 1 ≤ b ≤ 4, 1 ≤ c ≤ 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al; the second coating layer comprises crystalline phosphate XPO₄ in which X is one or more elements selected from Li, Fe, Ni, Mg, Co, Cu, Zn, Ti, Ag, Zr, Nb, or Al; and the third coating layer is carbon.

Specifically, in the first coating step, the pH of the solution in which the source of element Q, the phosphorus source, the acid, and optionally the lithium source are dissolved is controlled to be 3.5-6.5, the solution is then stirred and reacted for 1-5 h, and the solution is then heated to 50-120°C and maintained at this temperature for 2-10 h and/or sintered at 650-800°C for 2-6 hours. Optionally, in the first coating step, the reaction is performed completely. Optionally, in the first coating step, the reaction is performed for about 1.5 hours, about 2 hours, about 3 hours, about 4 hours, about 4.5 hours or about 5 hours. Optionally, in the first coating step, the reaction time of the reaction may be within any range of any of the above-mentioned numerical values. Optionally, in the first coating step, the pH of the solution is controlled to be 4-6. Optionally, in the first coating step, the solution is heated to about 55°C, about 60°C, about 70°C, about 80°C, about 90°C, about 100°C, about 110°C or about 120°C, and maintained at that temperature for about 2 hours, about 3 hours, about 4 hours, about 5 hours, about 6 hours, about 7 hours, about 8 hours, about 9 hours, or about 10 hours; optionally, in the first coating step, the heating temperature and maintaining time may be within any range of any of the above-mentioned numerical values. Optionally, in the first coating step, the sintering may be performed at about 650°C, about 700°C, about 750°C, or about 800°C for about 2 hours, about 3 hours, about 4 hours, about 5 hours or about 6 hours; Optionally, the sintering temperature and the sintering time may be in any range of any of the above-mentioned numerical values.

In the first coating step, by controlling the sintering temperature and time within the above ranges, the following situations can be avoided: when the sintering temperature is too low and the sintering time is too short in the first coating step, the crystallinity of the first coating layer maybe low, and there may be many amorphous substances, which may lead to a decline in the effect of inhibiting metal dissolution, thereby affecting the cycling performance and the high temperature storage performance of the secondary battery; if the sintering temperature is too high, impurity phases will appear in the first coating layer, which will also affect its effect of inhibiting the dissolution of metals, thereby affecting the performances, such as cycling and high-temperature storage performance, of the secondary battery; and if the sintering time is too long, the thickness of the first coating layer will increase, which will affect the migration of Li+, thereby affecting the performances, such as capacity per gram and rate performance, of the material.

In some embodiments, the second coating step, an X element source, a phosphorus source, and an acid are dissolved in a solvent, the solution is then stirred and reacted for 1-10 h, and the solution is then heated to 60-150°C and maintained at this temperature for 2-10 hours and/or sintered at 500-700°C for 6-10 hours. Optionally, in the second coating step, the reaction is performed completely. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours or about 10 hours. Optionally, in the second coating step, the reaction time of the reaction may be within any range of any of the above-mentioned numerical values. Optionally, in the second coating step, the solution is heated to about 65°C, about 70°C, about 80°C, about 90°C, about 100°C, about 110°C, about 120°C, about 130°C, about 140°C or about 150°C and maintained at that temperature for about 2 hours, about 3 hours, about 4 hours, about 5 hours, about 6 hours, about 7 hours, about 8 hours, about 9 hours or about 10 hours; optionally, in the second coating step, the heating temperature and maintaining time may be within any range of any of the above-mentioned numerical values.

In the step of providing the inner core material, the first coating step, and the second coating step, before sintering, i.e., during the preparation of the inner core material with chemical reactions and during the preparation of the first coating layer suspension and the second coating layer suspension, the following situations can be avoided by selecting the selected appropriate reaction temperature and reaction time as described above: if the reaction temperature is too low, the reaction cannot take place or the reaction rate is relatively low; if the temperature is too high, the product decomposes or forms an impurity phase; if the reaction time is too long, the particle size of the product is relatively large, which may prolong the time and increase the difficulty of the subsequent processes; and if the reaction time is too short, the reaction is incomplete and fewer products are obtained.

Optionally, in the second coating step, the sintering may be performed at about 550°C, about 600°C, or about 700°C for about 6 hours, about 7 hours, about 8 hours, about 9 hours or about 10 hours; Optionally, the sintering temperature and the sintering time may be in any range of any of the above-mentioned numerical values. In the second coating step, by controlling the sintering temperature and time within the above ranges, the following situations can be avoided: when the sintering temperature in the second coating step is too low and the sintering time is too short, the crystallinity of the second coating layer is low and there are more amorphous substances, leading to compromised performance in terms of reducing the surface reactivity of the material, thereby affecting the cycling and high-temperature storage performance, etc., of the secondary battery; if the sintering temperature is too high, impurity phases will appear in the second coating layer, which will also affect its effect of reducing the surface reactivity of the material, thereby affecting the performances, such as cycling and high-temperature storage performance, of the secondary battery; and if the sintering time is too long, the thickness of the second coating layer will increase, which will affect the voltage plateau of the material, thereby reducing the energy density of the material.

In some embodiments, in the third coating step, the sintering is carried out at 700-800°C for 6-10 h. Optionally, in the third coating step, the sintering may be performed at about 700°C, about 750°C, or about 800°C for about 6 hours, about 7 hours, about 8 hours, about 9 hours or about 10 hours; Optionally, the sintering temperature and the sintering time may be in any range of any of the above-mentioned numerical values. In the third coating step, by controlling the sintering temperature and time within the above ranges, the following situations can be avoided: when the sintering temperature in the third coating step is too low, the graphitization degree of the third coating layer decreases, which affects the electrical conductivity thereof, thereby affecting the capacity per gram of the material; if the sintering temperature is too high, the degree of graphitization of the third coating layer will be too high, which will affect the transport of Li+, thereby affecting the performances, such as capacity per gram, of the material; if the sintering time is too short, the coating layer will be too thin, which will affect the electrical conductivity of the coating layer, thereby affecting the capacity per gram of the material; and if the sintering time is too long, the coating layer will be too thick, which will affect the performances, such as compacted density, of the material.

In all the above first coating step, the second coating step and the third coating step, the drying is carried out at a drying temperature of 100°C to 200°C, optionally 110°C to 190°C, more optionally 120°C to 180°C, even more optionally 120°C to 170°C, and most optionally 120°C to 160°C, and the drying time is 3-9 h, optionally 4-8 h, more optionally 5-7 h, and most optionally about 6 h.

When the shell of the positive electrode active material above comprises a first coating layer coating the inner core and a second coating layer coating the first coating layer, wherein the first coating layer comprises a crystalline pyrophosphate of QP₂O₇ and the metal oxide of Q'ₑO_{f}, and the second coating layer comprises carbon, the shell is formed by: providing a powder comprising a crystalline pyrophosphate of QP₂O₇ and a suspension comprising a carbon source and an oxide of Q'ₑO_{f}; and mixing the inner core, the powder comprising a crystalline pyrophosphate of QP₂O₇, and the suspension comprising a carbon source and an oxide of Q'ₑO_{f}, and sintering same to obtain a positive electrode active material. The suspension of the oxide Q'ₑO_{f} may be a suspension formed by mixing a commercially available metal oxide and raw materials including but not limited to a carbon source such as sucrose in a solvent.

Alternatively, when the shell of the positive electrode active material above comprises a first coating layer coating the inner core, a second coating layer coating the first coating layer, and a third coating layer coating the second coating layer, wherein the first coating layer comprises a crystalline pyrophosphate of QP₂O₇, the second coating layer comprises the metal oxide of Q'ₑO_{f}; and the third coating layer comprises carbon, the shell is formed by: providing a first mixture comprising a pyrophosphate of LiₐQP₂O₇ and/or Q_{b}(P₂O₇)_{c}, and mixing an inner core material and the first mixture, followed by drying and sintering to obtain a first coating layer-coated material; providing a second mixture comprising the metal oxide of Q'ₑO_{f}, and mixing the first coating layer-coated material and the second mixture, followed by drying and sintering to obtain a second coating layer-coated material; and providing a third mixture comprising a carbon source, and mixing the second coating layer-coated material and the third mixture, followed by drying and sintering to obtain the positive electrode active material.

For example, when the coating layer containing a metal oxide, when the first coating layer is formed, a source of a Q element, a phosphorus source, an acid, an optional lithium source, and an optional solvent are mixed to obtain the first mixture; and/or when the second coating layer is formed, a source of a Q' element and a solvent are mixed to obtain the second mixture; and/or when the third coating layer is formed, a carbon source and a solvent are mixed to obtain the third mixture; optionally, when the first coating layer is formed, the source of the Q element, the phosphorus source, the acid, the optional lithium source, and the optional solvent are mixed at room temperature for 1-5 h, and the mixture is then heated to 50°C - 120°C and held at the temperature for mixing for 2-10 h, and the mixing is each carried out at pH of 3.5-6.5; and optionally, when the second coating layer is formed, the source of the Q' element and the solvent are mixed at room temperature for 1-10 h, and the mixture is then heated to 60°C - 150°C and held at the temperature for mixing for 2-10 h.

When the shell has a three-layer structure and contains a metal oxide, in the step of forming the first coating layer, the sintering is carried out at 650-800°C for 2-8 h; and/or in the second coating step, the sintering is carried out at 400-750°C for 6-10 h; and/or in the third coating step, the sintering is carried out at 600-850°C for 6-10 h. For example, in some embodiments, in the first coating step, the sintering is carried out at 650-800°C (e.g., about 650°C, about 700°C, about 750°C, or about 800°C) for 2-8 hours (about 2 hours, about 3 hours, about 4 hours, about 5 hours, about 6 hours or about 8 hours); and/or, in the second coating step, the sintering is carried out at 400-750°C (e.g., about 400°C, about 450°C, about 500°C, about 550°C, about 600°C, about 700°C, or about 750°C) for 6-10 hours (e.g., about 6 hours, about 7 hours, about 8 hours, about 9 hours, or about 10 hours); and/or, in the third coating step, the sintering is carried out at 600-850°C (e.g., about 600°C, about 650°C, about 700°C, about 750°C, about 800°C, or about 850°C, ) for 6-10 hours (e.g., about 6 hours, about 7 hours, about 8 hours, about 9 hours, or about 10 hours).

In all the first coating step, the second coating step, and the third coating step described above, the drying is carried out at a temperature of 80°C to 200°C, optionally 80°C to 190°C, more optionally 120°C to 180°C, even more optionally 120°C to 170°C, and most optionally 120°C to 160°C, for 3-9 h, optionally 4-8 h, more optionally 5-7 h, and most optionally about 6 h.

A third aspect of the present application provides a positive electrode plate, comprising a positive electrode current collector and a positive electrode film layer arranged on at least one surface of the positive electrode current collector, wherein the positive electrode film layer comprises the positive electrode active material of the first aspect of the present application or a positive electrode active material prepared by the method of the second aspect of the present application, and the content of the positive electrode active material in the positive electrode film layer is 10 wt% or more, based on the total weight of the positive electrode film layer.

In some embodiments, the content of the positive electrode active material in the positive electrode film layer is 95-99.5 wt%, based on the total weight of the positive electrode film layer.

A fourth aspect of the present application provides a secondary battery, comprising the positive electrode active material of the first aspect of the present application or the positive electrode active material prepared by the method of the second aspect of the present application or the positive electrode plate of the third aspect of the present application.

Typically, a secondary battery comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

The secondary battery, battery module, battery pack, and power consuming device of the present application will be described below by appropriately referring to the accompanying drawings.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver, and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: synthetic graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dot, carbon nanotube, graphene, and carbon nanofiber.

In some embodiments, the negative electrode film layer may optionally comprise other auxiliary agents, such as thickeners (e.g., sodium carboxymethyl cellulose (CMC-Na)), etc.

In some embodiments, the negative electrode plate can be prepared by dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene, and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application and may be cylindrical, square or of any other shape. For example, Fig. 5 shows a secondary battery 5 with a square structure as an example.

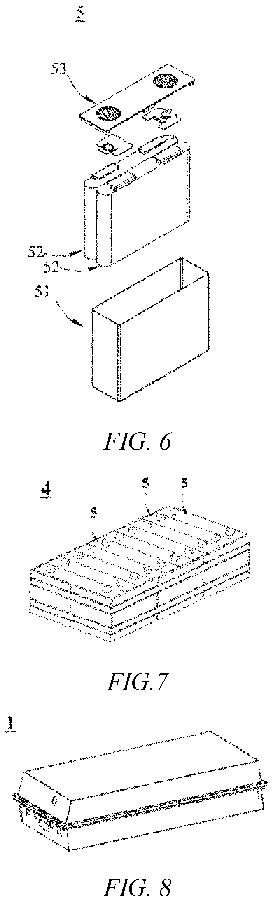

In some embodiments, with reference to Fig. 6, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 7 shows a battery module 4 as an example. Referring to Fig. 7, in the battery module 4, a plurality of secondary batteries 5 may be sequentially arranged in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

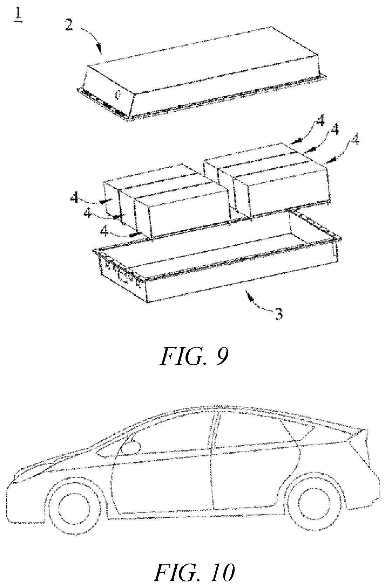

Figs. 8 and 9 show a battery pack 1 as an example. With reference to Fig. 8 and Fig. 9, the battery pack 1 may comprise a battery box and a plurality of battery modules 4 provided in the battery box. The battery box comprises an upper box body 2 and a lower box body 3, where the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 10 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### I. Methods for testing properties of positive electrode active material and battery performance

### 1. Method for measuring lattice change rate

In a constant-temperature environment at 25°C, a positive electrode active material sample is placed in an XRD (model: Bruker D8 Discover) and tested at 1°/min, and the test data are organized and analyzed; and with reference to the standard PDF card, lattice constants a0, b0, c0 and v0 at this moment are calculated (a0, b0 and c0 represent the lengths of a unit cell on all sides, and v0 represents the volume of the unit cell, which may be obtained directly from XRD refinement results).

The positive electrode active material sample is made into a button battery by the method for preparing a button battery in the examples above, and the button battery is charged at a small rate of 0.05 C until the current is reduced to 0.01C. The positive electrode plate in the button battery is then taken out and soaked in DMC for 8 h. Then, the positive electrode plate is dried and subjected to powder scraping, and particles with a particle size of less than 500 nm are screened out. Sampling is performed, and the lattice constant v1 of the sample is calculated in the same way as that for a fresh sample as described above, and (v0 - v1)/v0 × 100% is shown in Tables as the lattice change rate of the sample before and after complete lithium intercalation and de-intercalation.

### 2. Method for measuring Li/Mn antisite defect concentration

The XRD test results in the "Method for measuring lattice change rate" are compared with the PDF (Powder Diffraction File) card of a standard crystal, so as to obtain the Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

### 3. Method for measuring surface oxygen valency

5 g of a positive electrode active material sample is made into a button battery according to the method for preparing a button battery in the examples above. The button battery is charged at a small rate of 0.05 C until the current is reduced to 0.01 C. The positive electrode plate in the button battery is then taken out and soaked in DMC for 8 h. Then, the positive electrode plate is dried and subjected to powder scraping, and particles with a particle size of less than 500 nm are screened out. The obtained particles are measured with an electron energy loss spectroscopy (EELS, instrument model: Talos F200S) to obtain an energy loss near-edge structure (ELNES), which reflected the density of states and the energy level distribution of an element. According to the density of states and the energy level distribution, the number of occupied electrons is calculated by integrating the data of the density of states in the valence band, and the surface oxygen valency after charging is then extrapolated.

### 4. Method for measuring compacted density

5 g of powder is put into a dedicated compaction mold (U.S. CARVER mold, model: 13 mm), and then the mold is placed on a compacted density instrument. A pressure of 3T is exerted, the thickness (after pressure relief) of the powder under the pressure is read from the instrument, and a compacted density is calculated through ρ = m/v. Herein, the area value used is a standard small image area of 1540.25 mm².

### 5. Method for measuring dissolution of Mn (and Fe doped at the Mn site) after cycling

After cycling at 45°C until the capacity is attenuated to 80%, the full battery is discharged to a cut-off voltage of 2.0 V at a rate of 0.1 C. Then, the battery is disassembled, the negative electrode plate is taken out, a round piece with 30 unit area (1540.25 mm²) is randomly taken from the negative electrode plate, and the inductively coupled plasma (ICP) emission spectroscopy is determined with Agilent ICP-OES730. The amount of Fe (if the Mn site of the positive electrode active material is doped with Fe) and Mn therein is calculated according to the ICP results, and thus the dissolution of Mn (and Fe doped at the Mn site) after cycling is calculated. The testing standard is in accordance with EPA-6010D-2014.

### 6. Method for measuring initial capacity per gram of button battery

At 2.5 to 4.3 V, a button battery is charged at 0.1 C to 4.3 V, then charged at a constant voltage of 4.3 V until the current is less than or equal to 0.05 mA, allowed to stand for 5 min, and then discharged at 0.1 C to 2.0 V; and the discharge capacity at this moment is the initial capacity per gram, marked as D0.

### 7. Method for measuring 3C charge constant current rate

In a constant-temperature environment at 25°C, a fresh full battery is allowed to stand for 5 min and discharged at 1/3 C to 2.5 V. The full battery is allowed to stand for 5 min, charged at 1/3 C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3 C to 2.5 V, allowed to stand for 5 min, then charged at 3 C to 4.3 V, and allowed to stand for 5 min, and the charge capacity at this moment is recorded as C1. The 3C charge constant current rate is C1/C0 × 100%. A higher 3C charge constant current rate indicated a better rate performance of the battery.

### 8. Test of cycling performance of full battery at 45°C

In a constant-temperature environment at 45°C, at 2.5-4.3 V, a full battery is charged at 1 C to 4.3 V and then charged at a constant voltage of 4.3 V until the current is less than or equal to 0.05 mA. The full battery is allowed to stand for 5 min and then discharged at 1 C to 2.5V, and the discharge capacity at this moment is recorded as D0. The charge/discharge cycle is repeated until the discharge capacity is reduced to 80% of D0. The number of cycles experienced by the battery at this time is recorded.

### 9. Expansion test of full battery at 60°C

At 60°C, a full battery with 100% SOC (State of Charge) is stored. Before, after and during the storage, the open-circuit voltage (OCV) and AC internal impedance (IMP) of a cell are measured for monitoring the SOC, and the volume of the cell is measured. Herein, the full battery is taken out after every 48 h of storage and allowed to stand for 1 h, then the open-circuit voltage (OCV) and the internal impedance (IMP) are measured, and the volume of the cell is measured by means of a displacement method after the full battery is cooled to room temperature. The drainage method specifically included that the gravity F₁ of a cell is measured separately using a balance with automatic unit conversion of on-board data, the cell is then completely placed in deionized water (with a density known to be 1 g/cm³), the gravity F₂ of the cell at this time is measured, the buoyancy force F_{buoyancy} on the cell is equal to F₁ - F₂, and the volume of the cell is calculated as V = (F₁ - F₂)/(ρ × g) according to the Archimedes' principle F_{buoyancy} = ρ × g × V_{displacement}.

From the test results of OCV and IMP, the battery of the example always maintained a SOC of 99% or more in the experimental process till the end of the storage.

After 30 days of storage, the volume of the cell is measured, and the percentage increase in cell volume after the storage relative to the cell volume before the storage is calculated.

In addition, residual capacity of the cell is measured. At 2.5-4.3 V, the full battery is charged at 1C to 4.3 V and then charged at a constant voltage of 4.3 V until the current is less than or equal to 0.05 mA. The full battery is allowed to stand for 5 min, and the charge capacity at this moment is recorded as the residual capacity of the cell.

### 10. Measurement of manganese and phosphorus elements in positive electrode active material

5 g of the positive electrode active material prepared above is dissolved in 100 ml of reverse aqua regia (concentrated hydrochloric acid : concentrated nitric acid = 1 : 3) (with the concentration of the concentrated hydrochloric acid being about 37%, and the concentration of the concentrated nitric acid being about 65%). The content of each element in the solution is tested by ICP, and then the content of the manganese element or phosphorus element is measured and converted (the amount of the manganese element or phosphorus element/the amount of the positive electrode active material * 100%) to obtain the weight percentage thereof.

### 11. Measurement of interplanar spacing and included angle

1 g of each positive electrode active material powder prepared above is placed in a 50 mL test tube, and 10 mL of ethanol with a mass fraction of 75% is injected into the test tube, then the mixture is fully stirred and dispersed for 30 min, then an appropriate amount of the solution is taken by using a clean disposable plastic straw and dripped on a 300-mesh copper mesh, and at this moment, some powder would remain on the copper mesh. The copper mesh and the sample are transferred to TEM (Talos F200s G2) sample chamber for a TEM test to obtain the original image thereof, and the original image is saved in a format (xx.dm3). The original image obtained from the above TEM test is opened in the Digital Micrograph software and subjected to Fourier transform (automatically completed by the software after a clicking operation) to obtain a diffraction pattern, and the distance from a diffraction spot to the center position in the diffraction pattern is measured to obtain the interplanar spacing, and the included angle is calculated according to Bragg's equation. The different materials in the coating layer could be identified by comparing the obtained interplanar spacing and corresponding included angle data with their standard values.

### 12. Measurement of coating layer thickness

The thickness of the coating layer is mainly measured as follows: a thin slice with a thickness of about 100 nm is cut from the middle of a single particle of the positive electrode active material prepared above by FIB, and then subjected to a TEM test to obtain the original image thereof, and the original image is save in a format (xx.dm3).

The original image obtained from the above TEM test is opened in the Digital Micrograph software, the coating layer is identified with the lattice spacing and included angle information, and the thickness of the coating layer is measured.

The thickness is measured at three locations on the selected particle and the average value is taken.

### 13. Determination of molar ratio of SP2 form to SP3 form of carbon in third coating layer

This test is performed by Raman spectroscopy. The energy spectrum obtained from the Raman test is split to obtain Id/Ig, with Id being the peak intensity of SP3-form carbon, and Ig being the peak intensity of SP2-form carbon, thereby determining the molar ratio thereof.

### 14. Determination of the chemical formula of inner core and composition of different coating layers

The internal microstructure and surface structure of the positive electrode active material is characterized in high spatial resolution by using a spherical aberration corrected transmission electron microscope (ACSTEM), and the chemical formula of the inner core and the composition of different coating layers of the positive electrode active material is obtained by means of a three-dimensional reconstruction technology.

### II. Preparation of positive electrode material and secondary battery

### Example 1

### (1) Preparation of positive electrode active material

### S1: Preparation of doped manganese oxalate

1.3 mol of MnSO₄ · H₂O and 0.7 mol of FeSO₄ · H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

### S2: Preparation of co-doped lithium manganese phosphate inner core

1 mol of the manganese oxalate particles above, 0.497 mol of lithium carbonate, 0.001 mol of Mo(SO₄)₃, a 85% aqueous phosphoric acid solution containing 0.999 mol of phosphoric acid, 0.001 mol of H₄SiO₄, and 0.0005 mol of NH₄HF₂ were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), thus obtaining Li_{0.994}Mo_{0.001}Mn_{0.65}Fe_{0.35}P_{0.999}Si_{0.001}O_{3.999}F_{0.001}, i.e., the co-doped lithium manganese phosphate inner core.

### S3: Preparation of first coating layer suspension

Preparation of a Li₂FeP₂O₇ solution: 7.4 g of lithium carbonate, 11.6 g of ferrous carbonate, 23.0 g of ammonium dihydrogen phosphate and 12.6 g of oxalic acid dihydrate were dissolved in 500 mL of deionized water, with pH being controlled to be 5, the mixture was then stirred for reaction at room temperature for 2 hours to obtain a solution, and the solution was then heated to 80°C and held at this temperature for 4 hours to obtain a first coating layer suspension.

### S4: Coating of first coating layer

10 mol (about 1574 g) of the co-doped lithium manganese phosphate inner core material obtained by the process in step S2 was added into the first coating layer suspension (the content of the first coating layer material was 15.7 g) obtained in step S3, and fully stirred and mixed for 6 hours; and after uniformly mixing, the mixture was transferred into an oven at 120°C and dried for 6 h, and then sintered at 650°C for 6 hours to obtain a pyrophosphate coated material.

### S5: Preparation of second coating layer suspension

3.7 g of lithium carbonate, 11.6 g of ferrous carbonate, 11.5 g of ammonium dihydrogen phosphate and 12.6 g of oxalic acid dihydrate were dissolved in 1500 mL of deionized water, then the mixture was stirred for reaction for 6 hours to obtain a solution, and the solution was then heated to 120°C and held at this temperature for 6 hours to obtain a second coating layer suspension.

### S6: Coating of second coating layer

The pyrophosphate coated material obtained in step S4 was added to the second coating layer suspension (the content of the second coating layer material was 47.1 g) obtained in step S5, fully stirred and mixed for 6 h; and after uniformly mixing, the mixture was transferred into an oven at 120°C and dried for 6 h, and then sintered at 700°C for 8 hours to obtain a two-layer coated material.

### S7: Preparation of aqueous solution of third coating layer

37.3 g of sucrose was dissolved in 500 g of deionized water, then stirred and fully dissolved to obtain an aqueous solution of sucrose.

### S8: Coating of third coating layer

The two-layer coated material obtained in step S6 was added to the sucrose solution obtained in step S7, stirred and mixed for 6 h; and after uniformly mixing, the mixture was transferred into an oven at 150°C and dried for 6 h, and then sintered at 700°C for 10 hours to obtain a three-layer coated material.

### (2) Preparation of positive electrode plate

The three-layer coated positive electrode active material prepared above, a conductive agent of acetylene black, a binder of polyvinylidene fluoride (PVDF) were added at a weight ratio of 97.0 : 1.2 : 1.8 into N-methylpyrrolidone (NMP), and stirred and mixed until uniform to obtain a positive electrode slurry. The positive electrode slurry was then uniformly applied to an aluminum foil at 0.280 g/1540.25 mm², followed by drying, cold pressing and slitting to obtain a positive electrode plate.

### (3) Preparation of negative electrode plate

The negative electrode active material of synthetic graphite, hard carbon, a conductive agent of acetylene black, a binder of styrene butadiene rubber (SBR), and a thickener of sodium carboxymethyl cellulose (CMC) were dissolved in a solvent of deionized water at a weight ratio of 90 : 5 : 2 : 2 : 1, and stirred and mixed until uniform to prepare a negative electrode slurry. The negative electrode slurry was uniformly coated onto a negative electrode current collector of a copper foil at 0.117 g/1540.25 mm², followed by drying, cold pressing, and slitting to obtain a negative electrode plate.

### (4) Preparation of electrolyte solution

In an argon atmosphere glove box (H₂O < 0.1 ppm, and O₂ < 0.1 ppm), the organic solvent ethylene carbonate (EC)/ethyl methyl carbonate (EMC) was mixed uniformly by a volume ratio of 3/7, and 12.5% (on the basis of the weight of the ethylene carbonate/ethyl methyl carbonate solvent) by weight of LiPF₆ was dissolved in the above organic solvent and stirred uniformly to obtain the electrolyte solution.

### (5) Preparation of separator

A commercially available PP-PE copolymer microporous film having a thickness of 20 µm and an average pore size of 80 nm (Model 20, from Zhuogao Electronic Technology Co. Ltd.) was used.

### (6) Preparation of full battery

The positive electrode plate, separator, and negative electrode plate obtained above were stacked in sequence, such that the separator was located between the positive electrode and the negative electrode and played a role of isolation, and the stack was wound to obtain an electrode assembly. The electrode assembly was placed in an outer package, the above electrolyte solution was injected, and the electrode assembly was packaged to obtain a full battery.

### (7) Preparation of button battery

The three layer-coated positive electrode active material prepared above, polyvinylidene fluoride (PVDF), and acetylene black were added into N-methylpyrrolidone (NMP) at a weight ratio of 90 : 5 : 5, and stirred in a drying room to form a slurry. An aluminum foil was coated with the slurry above, followed by drying and cold pressing to obtain a positive electrode plate. The coating amount was 0.2 g/cm², and the compacted density was 2.0 g/cm³.

A lithium plate as the negative electrode, a solution of 1 mol/L of LiPF₆ in ethylene carbonate (EC), diethyl carbonate (DEC) and dimethyl carbonate (DMC) at a volume ratio of 1 : 1 : 1 as the electrolyte solution, and the positive electrode plate prepared above were assembled into a button battery in a button battery box.

### Example 2

Except that in step S1 and step S2, the amount of FeSO₄· H₂O was changed to 0.68 mol, the amount of Li₂CO₃ was changed to 0.4885 mol, Mo(SO₄)₃ was replaced with MgSO₄, H₄SiO₄ was replaced with HNO₃, and 0.02 mol of Ti(SO₄)₂ was further added during the preparation of a doped manganese oxalate in step S1, the other conditions were the same as example 1.

### Example 3

Except that in step S1 and step S2, the amount of Li₂CO₃ was changed to 0.496 mol, Mo(SO₄)₃ was replaced with W(SO₄)₃, and H₄SiO₄ was replaced with H₂SO₄, the other conditions were the same as example 1.

### Example 4

Except that in step S1 and step S2, the amount of Li₂CO₃ was changed to 0.4985 mol, 0.001 mol of Mo(SO₄)₃ was replaced with 0.0005 mol of Al₂(SO₄)₃, and NH₄HF₂ was replaced with NH₄HCl₂, the other conditions were the same as example 1.

### Example 5

Except that in step S1 and step S2, the amount of FeSO₄· H₂O was changed to 0.69 mol, the amount of Li₂CO₃ was changed to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ was further added during the preparation of a doped manganese oxalate in step S1, the other conditions were the same as example 1.

### Example 6

Except that in step S1 and step S2, the amount of FeSO₄· H₂O was changed to 0.68 mol, the amount of Li₂CO₃ was changed to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ and 0.01 mol of MgSO₄ were further added during the preparation of a doped manganese oxalate in step S1, the other conditions were the same as example 1.

### Example 7

Except that in step S1 and step S2, MgSO₄ was replaced with CoSO₄, the other conditions were the same as example 6.

### Example 8

Except that in step S1 and step S2, MgSO₄ was replaced with NiSO₄, the other conditions were the same as example 6.

### Example 9

Except that in step S1 and step S2, the amount of FeSO₄· H₂O was changed to 0.698 mol, the amount of Li₂CO₃ was changed to 0.4955 mol, 0.001 mol of Mo(SO₄)₃ was replaced with 0.0005 mol of Nb₂(SO₄)₅, H₄SiO₄ was replaced with H₂SO₄, NH₄HF₂ was replaced with NH₄HCl₂, and 0.002 mol of Ti(SO₄)₂ was further added during the preparation of a doped manganese oxalate in step S1, the other conditions were the same as example 1.

### Example 10

Except that in step S1 and step S2, the amount of FeSO₄· H₂O was changed to 0.68 mol, the amount of Li₂CO₃ was changed to 0.4975 mol, 0.001 mol of Mo(SO₄)₃ was replaced with 0.0005 mol of Nb₂(SO₄)₅, NH₄HF₂ was replaced with NH₄HBr₂, and 0.01 mol of VCl₂ and 0.01 mol of MgSO₄ were further added during the preparation of a doped manganese oxalate in step S1, the other conditions were the same as example 1.

### Example 11

Except that in step S1 and step S2, the amount of FeSO₄· H₂O was changed to 0.69 mol, the amount of Li₂CO₃ was changed to 0.499 mol, Mo(SO₄)₃ was replaced with MgSO₄, NH₄HF₂ was replaced with NH₄HBr₂, and 0.01 mol of VCl₂ was further added during the preparation of a doped manganese oxalate in step S1, the other conditions were the same as example 1.

### Example 12

Except that in step S1 and step S2, the amount of MnSO₄· H₂O was changed to 1.36 mol, the amount of FeSO₄· H₂O was changed to 0.6 mol, the amount of Li₂CO₃ was changed to 0.4985 mol, Mo(SO₄)₃ was replaced with MgSO₄, H₄SiO₄ was replaced with HNO₃, and 0.04 mol of VCl₂ was further added during the preparation of a doped manganese oxalate in step S1, the other conditions were the same as example 1.

### Example 13

Except that in step S1 and step S2, the amount of MnSO₄· H₂O was changed to 1.16 mol, and the amount of FeSO₄· H₂O was changed to 0.8 mol, the other conditions were the same as example 12.

### Example 14

Except that in step S1 and step S2, the amount of MnSO₄· H₂O was changed to 1.3 mol, and the amount of VCl₂ was changed to 0.1 mol, the other conditions were the same as example 12.

### Example 15

Except that in step S1 and step S2, the amount of MnSO₄· H₂O was changed to 1.2 mol, the amount of Li₂CO₃ was changed to 0.494 mol, 0.001 mol of Mo(SO₄)₃ was replaced with 0.005 mol of MgSO₄, H₄SiO₄ was replaced with H₂SO₄, and 0.1 mol of VCl₂ was further added during the preparation of a doped manganese oxalate in step S1, the other conditions were the same as example 1.

### Example 16

Except that in step S1 and step S2, the amount of MnSO₄· H₂O was changed to 1.2 mol, the amount of Li₂CO₃ was changed to 0.467 mol, 0.001 mol of Mo(SO₄)₃ was replaced with 0.005 mol of MgSO₄, 0.001 mol of H₄SiO₄ was replaced with 0.005 mol of H₂SO₄, 1.175mol of 85% phosphoric acid was replaced with 1.171 mol of 85% phosphoric acid, and 0.1 mol of VCl₂ was further added during the preparation of a doped manganese oxalate in step S1, the other conditions were the same as example 1.

### Example 17

Except that in step S1 and step S2, the amount of MnSO₄· H₂O was changed to 1.2 mol, the amount of Li₂CO₃ was changed to 0.492 mol, 0.001 mol of Mo(SO₄)₃ was replaced with 0.005 mol of MgSO₄, H₄SiO₄ was replaced with H₂SO₄, the amount of NH₄HF₂ was changed to 0.0025 mol, and 0.1 mol of VCl₂ was further added during the preparation of a doped manganese oxalate in step S1, the other conditions were the same as example 1.

### Example 18

Except that in step S1 and step S2, the amount of FeSO₄· H₂O was changed to 0.5 mol, the amount of Li₂CO₃ was changed to 0.492 mol, 0.001 mol of Mo(SO₄)₃ was replaced with 0.005 mol of MgSO₄, H₄SiO₄ was replaced with H₂SO₄, the amount of NH₄HF₂ was changed to 0.0025 mol, and 0.1 mol of VCl₂ and 0.1 mol of CoSO₄ were further added during the preparation of a doped manganese oxalate in step S1, the other conditions were the same as example 1.

### Example 19

Except that in step S1 and step S2, the amount of FeSO₄· H₂O was changed to 0.4 mol, and the amount of CoSO₄ was changed to 0.2 mol, the other conditions were the same as example 18.

### Example 20

Except that in step S1 and step S2, the amount of MnSO₄· H₂O was changed to 1.5 mol, the amount of FeSO₄· H₂O was changed to 0.1 mol, and the amount of CoSO₄ was changed to 0.3 mol, the other conditions were the same as example 18.

### Example 21

Except that in step S1 and step S2, CoSO₄ was replaced with NiSO₄, the other conditions were the same as example 18.

### Example 22

Except that in step S1 and step S2, the amount of MnSO₄· H₂O was changed to 1.5 mol, the amount of FeSO₄· H₂O was changed to 0.2 mol, and 0.1 mol of CoSO₄ was replaced with 0.2 mol of NiSO₄, the other conditions were the same as example 18.

### Example 23

Except that in step S1 and step S2, the amount of MnSO₄· H₂O was changed to 1.4 mol, the amount of FeSO₄· H₂O was changed to 0.3 mol, and the amount of CoSO₄ was changed to 0.2 mol, the other conditions were the same as example 18.

### Example 24

Except that in step S1 and step S2, the amount of MnSO₄· H₂O was changed to 1.2 mol, the amount of FeSO₄· H₂O was changed to 0.5 mol, and the amount of CoSO₄ was changed to 0.2 mol, the other conditions were the same as example 18.

### Example 25

Except that in step S1 and step S2, the amount of MnSO₄· H₂O was changed to 1.0 mol, the amount of FeSO₄· H₂O was changed to 0.7 mol, and the amount of CoSO₄ was changed to 0.2 mol, the other conditions were the same as example 18.

### Example 26

Except that in step S1 and step S2, the amount of MnSO₄· H₂O was changed to 1.4 mol, the amount of FeSO₄· H₂O was changed to 0.3 mol, the amount of Li₂CO₃ was changed to 0.4825 mol, 0.001 mol of Mo(SO₄)₃ was replaced with 0.005 mol of MgSO₄, the amount of H₄SiO₄ was changed to 0.1 mol, the amount of phosphoric acid was changed to 0.9 mol, the amount of NH₄HF₂ was changed to 0.04 mol, and 0.1 mol of VCl₂ and 0.2 mol of CoSO₄ were further added during the preparation of a doped manganese oxalate in step S1, the other conditions were the same as example 1.

### Example 27

Except that in step S1 and step S2, the amount of MnSO₄· H₂O was changed to 1.4 mol, the amount of FeSO₄· H₂O was changed to 0.3 mol, the amount of Li₂CO₃ was changed to 0.485 mol, 0.001 mol of Mo(SO₄)₃ was replaced with 0.005 mol of MgSO₄, the amount of H₄SiO₄ was changed to 0.08 mol, the amount of phosphoric acid was changed to 0.92 mol, the amount of NH₄HF₂ was changed to 0.05 mol, and 0.1 mol of VCl₂ and 0.2 mol of CoSO₄ were further added during the preparation of a doped manganese oxalate in step S1, the other conditions were the same as example 1.

### Examples 28 to 44

Except that in steps S3 to S6, different first coating layer materials or second coating layer materials were selected for coating, the other conditions were the same as example 1. The preparation methods of each coating layer material were shown in Table 1 and Table 2.

### Examples 45 to 59

Except that in step S4, step S6 and step S8, the amount of the raw materials for each coating layer material used was correspondingly adjusted based on the coating amount shown in Table 8, the other conditions were the same as example 1.

### Example 60

Except that in the powder sintering step in step S4, the sintering temperature was adjusted to 550°C and the sintering time was adjusted to 1 hour to control the crystallinity of Li₂FeP₂O₇ to be 30%, and in step S5, the coating sintering temperature was adjusted to 650°C and the sintering time was adjusted to 2 hours to control the crystallinity of LiFePO₄ to be 30%, the other conditions were the same as example 1.

### Example 61

Except that in the powder sintering step in step S4, the sintering temperature was adjusted to 550°C and the sintering time was adjusted to 2 hours to control the crystallinity of Li₂FeP₂O₇ to be 50%, and in step S5, the coating sintering temperature was adjusted to 650°C and the sintering time was adjusted to 3 hours to control the crystallinity of LiFePO₄ to be 50%, the other conditions were the same as example 1.

### Example 62

Except that in the powder sintering step in step S4, the sintering temperature was adjusted to 600°C and the sintering time was adjusted to 3 hours to control the crystallinity of Li₂FeP₂O₇ to be 70%, and in step S5, the coating sintering temperature was adjusted to 650°C and the sintering time was adjusted to 4 hours to control the crystallinity of LiFePO₄ to be 70%, the other conditions were the same as example 1.

### Comparative example 1

Except that the preparation steps of the positive electrode active material were changed, the other conditions were the same as example 1.

Preparation of manganese oxalate: 1 mol of MnSO₄· H₂O was added into a reaction kettle, and 10 L of deionized water and 1 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a manganese oxalate suspension. Then, the suspension was filtered, and the resultant filter cake was dried at 120°C and then ground, so as to obtain manganese oxalate particles with a median particle size Dv₅₀ of 50-200 nm.

Preparation of positive electrode active material: 1 mol of the manganese oxalate particles above, 0.5 mol of lithium carbonate, a 85% aqueous phosphoric acid solution containing 1 mol of phosphoric acid, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated LiMnPO₄.

### Comparative example 2

Except that in comparative example 2, 1 mol of MnSO₄· H₂O was replaced with 0.85 mol of MnSO₄· H₂O and 0.15 mol of FeSO₄· H₂O, which were added into a mixer and thoroughly mixed for 6 hours before adding into a reaction kettle, the other conditions were the same as comparative example 1.

### Comparative example 3

Except that the preparation steps of the positive electrode active material were changed, the other conditions were the same as example 1.

Preparation of doped manganese oxalate: 1.9 mol of MnSO₄· H₂O and 0.1 mol of ZnSO₄ were thoroughly mixed for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.495 mol of lithium carbonate, 0.005 mol of MgSO₄, a 85% aqueous phosphoric acid solution containing 1 mol of phosphoric acid, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.990}Mg_{0.005}Mn_{0.95}Zn_{0.05}PO₄. Comparative example 4

Except that the preparation steps of the positive electrode active material were changed, the other conditions were the same as example 1.

Preparation of doped manganese oxalate: 1.2 mol of MnSO₄· H₂O and 0.8 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.45 mol of lithium carbonate, 0.005 mol of Nb₂(SO₄)₅, a 85% aqueous phosphoric acid solution containing 1 mol of phosphoric acid, 0.025 mol of NH₄HF₂ and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.90}Nb_{0.01}Mn_{0.6}Fe_{0.4}PO_{3.95}F_{0.05}.

### Comparative example 5

Except that the preparation steps of the positive electrode active material were changed, the other conditions were the same as example 1.

Preparation of doped manganese oxalate: 1.4 mol of MnSO₄· H₂O and 0.6 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.38 mol of lithium carbonate, 0.12 mol of MgSO₄, a 85% aqueous phosphoric acid solution containing 0.999 mol of phosphoric acid, 0.001 mol of H₄SiO₄, 0.0005 mol of NH₄HF₂, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.76}Mg_{0.12}Mn_{0.7}Fe_{0.3}P_{0.999}Si_{0.001}O_{3.999}F_{0.001}.

### Comparative example 6

Except that the preparation steps of the positive electrode active material were changed, the other conditions were the same as example 1.

Preparation of doped manganese oxalate: 0.8 mol of MnSO₄· H₂O and 1.2 mol of ZnSO₄ were thoroughly mixed for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.499 mol of lithium carbonate, 0.001 mol of MgSO₄, a 85% aqueous phosphoric acid solution containing 0.999 mol of phosphoric acid, 0.001 mol of H₄SiO₄, 0.0005 mol of NH₄HF₂, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.998}Mg_{0.001}Mn_{0.4}Zn_{0.6}P_{0.999}Si_{0.001}O_{3.999}F_{0.001}.

### Comparative example 7

Except that the preparation steps of the positive electrode active material were changed, the other conditions were the same as example 1.

Preparation of doped manganese oxalate: 1.4 mol of MnSO₄· H₂O and 0.6 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.534 mol of lithium carbonate, 0.001 mol of MgSO₄, a 85% aqueous phosphoric acid solution containing 0.88 mol of phosphoric acid, 0.12 mol of H₄SiO₄, 0.025 mol of NH₄HF₂, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{1.068}Mg_{0.001}Mn_{0.7}Fe_{0.3}P_{0.88}Si_{0.12}O_{3.95}F_{0.05}.

### Comparative example 8

Except that the preparation steps of the positive electrode active material were changed, the other conditions were the same as example 1.

Preparation of doped manganese oxalate: 1.2 mol of MnSO₄· H₂O and 0.8 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.474 mol of lithium carbonate, 0.001 mol of MgSO₄, a 85% aqueous phosphoric acid solution containing 0.93 mol of phosphoric acid, 0.07 mol of H₄SiO₄, 0.06 mol of NH₄HF₂, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.948}Mg_{0.001}Mn_{0.6}Fe_{0.4}P_{0.93}Si_{0.07}O_{3.88}F_{0.12}.

### Comparative example 9

Except that the preparation steps of the positive electrode active material were changed, the other conditions were the same as example 1.

Preparation of doped manganese oxalate: 1.3 mol of MnSO₄· H₂O and 0.7 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

Preparation of positive electrode active material: 1 mol of the manganese oxalate particles above, 0.497 mol of lithium carbonate, 0.001 mol of Mo(SO₄)₃, a 85% aqueous phosphoric acid solution containing 0.999 mol of phosphoric acid, 0.001 mol of H₄SiO₄, 0.0005 mol of NH₄HF₂, and 0.01 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}.

### Comparative example 10

Except that the step S4 was changed and steps S5 and S6 were omitted, the other conditions were the same as example 1.

### S4: Coating of first coating layer

10 mol (about 1574 g) of the co-doped lithium manganese phosphate inner core material obtained by the process in step S2 was added into the first coating layer suspension (the content of the first coating layer material was 62.8 g) obtained in step S3, and fully stirred and mixed for 6 hours; and after uniformly mixing, the mixture was transferred into an oven at 120°C and dried for 6 h, and then sintered at 500°C for 4 hours to control the crystallinity of Li₂FeP₂O₇ to be 5%, so as to obtain an amorphous Li₂FeP₂O₇ coated material. Comparative example 11

Except that the step S6 was changed and steps S3 and S4 were omitted, the other conditions were the same as example 1.

### S6: Coating of second coating layer

10 mol (about 1574 g) of the co-doped lithium manganese phosphate inner core material obtained by the process in step S2 was added into the second coating layer suspension (the content of the second coating layer material was 62.8 g) obtained in step S5, and fully stirred and mixed for 6 hours; and after uniformly mixing, the mixture was transferred into an oven at 120°C and dried for 6 h, and then sintered at 600°C for 4 hours to control the crystallinity of LiFePO₄ to be 8%, so as to obtain an amorphous LiFePO₄ coated material.

### Comparative example 12

Except that steps S4 and S6 were changed, the other conditions were the same as example 1.

### S4: Coating of first coating layer

10 mol (about 1574 g) of the co-doped lithium manganese phosphate inner core material obtained by the process in step S2 was added into the first coating layer suspension (the content of the first coating layer material was 15.7 g) obtained in step S3, and fully stirred and mixed for 6 hours; and after uniformly mixing, the mixture was transferred into an oven at 120°C and dried for 6 hours, and then sintered at 500°C for 4 hours to control the crystallinity of Li₂FeP₂O₇ to be 5%, so as to obtain an amorphous Li₂FeP₂O₇ coated material.

### S6: Coating of second coating layer

The amorphous Li₂FeP₂O₇ coated material obtained in step S4 was added into the second coating layer suspension (the content of the second coating layer material was 47.1 g) obtained in step S5, and fully stirred and mixed for 6 hours; and after uniformly mixing, the mixture was transferred into an oven at 120°C and dried for 6 h, and then sintered at 600°C for 4 hours to control the crystallinity of LiFePO₄ to be 8%, so as to obtain an amorphous Li₂FeP₂O₇ and amorphous LiFePO₄ coated material.

**Table 1**

| First coating layer material | Preparation of first coating layer suspension |
|---|---|
| Crystalline Al₄(P₂O₇)₃ | 53.3 g of aluminum chloride, 34.5 g of ammonium dihydrogen phosphate and 18.9 g of oxalic acid dihydrate were dissolved in 500 mL of deionized water, the pH was controlled to be 4, then the mixture was stirred and fully reacted for 2 hours to obtain a solution, and then the solution was heated to 80°C and held at the temperature for 4 hours to obtain a suspension |
| Crystalline Li₂NiP₂O₇ | 7.4 g of lithium carbonate, 11.9 g of nickel carbonate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline Li₂MgP₂O₇ | 7.4 g of lithium carbonate, 8.4 g of magnesium carbonate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline Li₂CoP₂O₇ | 7.4 g of lithium carbonate, 15.5 g of cobalt sulfate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline Li₂CuP₂O₇ | 7.4 g of lithium carbonate, 16.0 g of copper sulfate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline Li₂ZnP₂O₇ | 7.4 g of lithium carbonate, 12.5g of zinc carbonate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline TiP₂O₇ | 24.0 g of titanium sulfate, 23.0 g of ammonium dihydrogen phosphate and 12.6 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline Ag₄P₂O₇ | 67.9 g of silver nitrate, 23.0 g of ammonium dihydrogen phosphate and 25.2 g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |
| Crystalline ZrP₂O₇ | 56.6g of zirconium sulfate, 23.0 g of ammonium dihydrogen phosphate and 25.2g of oxalic acid dihydrate were dissolved in 500 mL of deionized water, the pH was controlled to be 5, then the mixture was stirred and fully reacted for 2 hours to obtain a solution, and then the solution was heated to 80°C and held at the temperature for 4 hours to obtain a suspension |

**Table 2**

| Second coating layer material | Preparation of second coating layer suspension |
|---|---|
| Crystalline LiCoPO₄ | 3.7 g of lithium carbonate, 15.5 g of cobalt sulfate, 11.5 g of ammonium dihydrogen phosphate and 12.6 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension. |
| Crystalline LiNiPO₄ | 3.7 g of lithium carbonate, 11.9 g of nickel carbonate, 11.5 g of ammonium dihydrogen phosphate and 12.6 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension. |
| Crystalline Cu₃(PO₄)₂ | 48.0 g of copper sulfate, 23.0 g of ammonium dihydrogen phosphate and 37.8 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |
| Crystalline Zn₃(PO₄)₂ | 37.6 g of zinc carbonate, 23.0 g of ammonium dihydrogen phosphate and 37.8 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |
| Crystalline Ti₃(PO₄)₄ | 72.0 g of titanium sulfate, 46.0 g of ammonium dihydrogen phosphate and 75.6 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |
| Crystalline Ag₃PO₄ | 50.9 g of silver nitrate, 11.5 g of ammonium dihydrogen phosphate and 18.9 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |
| Crystalline Zr₃(PO₄)₄ | 85.0 g of zirconium sulfate, 46.0 g of ammonium dihydrogen phosphate and 37.8 g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |
| Crystalline AlPO₄ | 13.3g of aluminum chloride, 11.5g of ammonium dihydrogen phosphate and 18.9g of oxalic acid dihydrate were dissolved in 1500 mL of deionized water, then the mixture was stirred and fully reacted for 6 hours to obtain a solution, and then the solution was heated to 120°C and held at the temperature for 6 hours to obtain a suspension |

Table 3 shows the composition of the positive electrode active materials of comparative examples 1 to 12.

Table 4 shows the performance data of the positive electrode active materials, the positive electrode plates, the button batteries or the full batteries of comparative examples 1 to 12 obtained according to the performance test methods above.

Table 5 shows the composition of the positive electrode active materials of examples 1-44.

Table 6 shows the performance data of the positive electrode active materials, the positive electrode plates, the button batteries or the full batteries of examples 1 to 44 obtained according to the performance test methods above.

**Table 3**

| No. | Inner core | First coating layer | Second coating layer | Third coating layer |
|---|---|---|---|---|
| Comparative example 1 | LiMnPO₄ | - | - | 1% of carbon |
| Comparative example 2 | LiMn_{0.85}Fe_{0.15}PO₄ | - | - | 1% of carbon |
| Comparative example 3 | Li_{0.990}Mg_{0.005}Mn_{0.95}Zn_{0.05}PO₄ | - | - | 1% of carbon |
| Comparative example 4 | Li_{0.90}Nb_{0.01}Mn_{0.6}Fe_{0.4}PO_{3.95}F_{0.05} | - | - | 1% of carbon |
| Comparative example 5 | Li_{0.76}Mg_{0.12}Mn_{0.7}Fe_{0.3}P_{0.999}Si_{0.001}O_{3.999}F_{0.001} | - | - | 1% of |
| Comparative example 6 | Li_{0.998}Mg_{0.001}Mn_{0.4}Zn_{0.6}P_{0.999}Si_{0.001}O_{3.999}F_{0.001} | - | - | 1% of carbon |
| Comparative example 7 | Li_{1.068}Mg_{0.001}Mn_{0.7}Fe_{0.3}P_{0.88}Si_{0.12}O_{3.95}F_{0.05} | - | - | 1% of carbon |
| Comparative example 8 | Li_{0.948}Mg_{0.001}Mn_{0.6}Fe_{0.4}P_{0.93}Si_{0.07}O_{3.88}F_{0.12} | - | - | 1% of carbon |
| Comparative example 9 | Li_{0.994}Mo_{0.001}Mn_{0.65}Fe_{0.35}P_{0.999}Si_{0.001}O_{3.999}F_{0.001} | - | - | 1% of carbon |
| Comparative example 10 | Li_{0.994}Mo_{0.001}Mn_{0.65}Fe_{0.35}P_{0.999}Si_{0.001}O_{3.999}F_{0.001} | 4% of amorphous Li₂FeP₂O₇ | - | 1% of carbon |
| Comparative example 11 | Li_{0.994}Mo_{0.001}Mn_{0.65}Fe_{0.35}P_{0.999}Si_{0.001}O_{3.999}F_{0.001} | - | 4% of amorphous LiFePO₄ | 1% of carbon |
| Comparative example 12 | Li_{0.994}Mo_{0.001}Mn_{0.65}Fe_{0.35}P_{0.999}Si_{0.001}O_{3.999}F_{0.001} | 1% of amorphous Li₂FeP₂O₇ | 3% of amorphous LiFePO₄ | 1% of carbon |

**Table 4**

| No. | Lattice chang rate (%) | Li/Mn antisite defect concent ration (%) | Surfa ce oxyge n valen cy | Compa cted density (g/cm³) | Dissoluti on of Mn and Fe after cycling (ppm) | Capaci ty of button battery at 0.1C (mAh/ g) | 3C charge consta nt curren t rate (%) | Numb er of cycles for capacity retenti on rate of 80% at 45°C | Expansi on of battery upon 30 days of storage at 60°C (%) |
|---|---|---|---|---|---|---|---|---|---|
| Comparative example 1 | 11.4 | 5.2 | -1.55 | 1.7 | 2060 | 125.6 | 50.1 | 121 | 48.6 |
| Comparative example 2 | 10.6 | 4.3 | -1.51 | 1.87 | 1510 | 126.4 | 50.4 | 129 | 37.3 |
| Comparative example 3 | 10.8 | 3.6 | -1.64 | 1.88 | 1028 | 134.7 | 51.7 | 134 | 31.9 |
| Comparative example 4 | 9.7 | 2.4 | -1.71 | 1.93 | 980 | 141.3 | 62.3 | 148 | 30.8 |
| Comparative example 5 | 5.6 | 1.8 | -1.81 | 1.98 | 873 | 110.8 | 50.2 | 387 | 21.4 |
| Comparative example 6 | 3.7 | 1.5 | -1.8 | 2.01 | 574 | 74.3 | 65.8 | 469 | 15.8 |
| Comparative example 7 | 7.8 | 1.5 | -1.75 | 2.05 | 447 | 139.4 | 64.3 | 396 | 18.3 |
| Comparative example 8 | 8.4 | 1.4 | -1.79 | 2.16 | 263 | 141.7 | 63.9 | 407 | 22.7 |
| Comparative example 9 | 6.3 | 1.2 | -1.82 | 2.21 | 192 | 156 | 64.2 | 552 | 8.4 |
| Comparative example 10 | 6.3 | 1.1 | -1.90 | 2.22 | 156 | 156.2 | 63.7 | 802 | 6.7 |
| Comparative example 11 | 6.2 | 1.1 | -1.91 | 2.21 | 164 | 156.1 | 62.5 | 860 | 6.4 |
| Comparative example 12 | 6.2 | 1.1 | -1.90 | 2.2 | 143 | 156.2 | 67.1 | 1013 | 4.2 |

**Table 5**

| No. | Inner core | First coating layer | Second coating layer | Third coating layer |
|---|---|---|---|---|
| Example 1 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO₄ | 1% of carbon |
| Example 2 | Li_{0.977}Mg_{0.001}Mn_{0.65}Fe_{0.35}Ti_{0.01}P_{0.999}N_{0.001} O_{3.999}F_{0.001} | 1% Li₂FeP₂O₇ | 3% LiFePO₄ | 1% of carbon |
| Example 3 | Li_{0.992}W_{0.001}Mn_{0.65}Fe_{0.35}P_{0.999}S_{0.001}O_{3.999}F _{0.001} | 1% Li₂FeP₂O₇ | 3% LiFePO₄ | 1% of carbon |
| Example 4 | Li_{0.997}Al_{0.001}Mn_{0.65}Fe_{0.35}P_{0.999}S_{0.001}O_{3.999} Cl_{0.001} | 1% Li₂FeP₂O₇ | 3% LiFePO₄ | 1% of carbon |
| Example 5 | Li_{0.993}Nb_{0.001}Mn_{0.65}Fe_{0.345}V_{0.005}P_{0.999}S_{0.001} O_{3.999}F_{0.001} | 1% Li₂FeP₂O₇ | 3% LiFePO₄ | 1% of carbon |
| Example 6 | Li_{0.993}Nb_{0.001}Mn_{0.65}Fe_{0.34}V_{0.005}Mg_{0.005}P_{0.9 99}S_{0.001}O_{3.999}F_{0.001} | 1% Li₂FeP₂O₇ | 3% LiFePO₄ | 1% of carbon |
| Example 7 | Li_{0.993}Nb_{0.001}Mn_{0.65}Fe_{0.34}V_{0.005}Co_{0.005}P_{0.99 9}S_{0.001}O_{3.999}F_{0.001} | 1% Li₂FeP₂O₇ | 3% LiFePO₄ | 1% of carbon |
| Example 8 | Li_{0.993}Nb_{0.001}Mn_{0.65}Fe_{0.34}V_{0.005}Ni_{0 005}P_{0.99 9}S_{0.001}O_{3.999}F_{0.001} | 1% Li₂FeP₂O₇ | 3% LiFePO₄ | 1% of carbon |
| Example 9 | Li_{0.991}Nb_{0.001}Mn_{0 65}Fe_{0.349}Ti_{0.001}P_{0.999}S_{0.00} 103.999C10.001 | 1% Li₂FeP₂O₇ | 3%LiFePO₄ | 1% of carbon |
| Example 10 | Li_{0.995}Nb_{0.001}Mn_{0.65}Fe_{0.34}V_{0.005}Mg_{0.005}P_{0.9 99}Si_{0.001}O_{3.999}Br_{0.001} | 1% Li₂FeP₂O₇ | 3% LiFePO₄ | 1% of carbon |
| Example 11 | Li_{0.998}Mg_{0.001}Mn_{0.65}Fe_{0.345}V_{0.005}P_{0.999}Si_{0.0 01}O_{3.999}Br_{0.001} | 1% Li₂FeP₂O₇ | 3% LiFePO₄ | 1% of carbon |
| Example 12 | Li_{0.997}Mg_{0.001}Mn_{0.68}Fe_{0.3}V_{0.02}P_{0.999}N_{0.001} O_{3.999}F_{0.001} | 1% Li₂FeP₂O₇ | 3% LiFePO₄ | 1% of carbon |
| Example 13 | Li_{0.997}Mg_{0.001}Mn_{0.58}Fe_{0.4}V_{0.02}P_{0.999}N_{0.001} O_{3.999}F_{0.001} | 1% Li₂FeP₂O₇ | 3% LiFePO₄ | 1% of carbon |
| Example 14 | Li_{0.997}Mg_{0.001}Mn_{0.65}Fe_{0.3}V_{0.05}P_{0.999}N_{0.001} O_{3.999}F_{0.001} | 1% Li₂FeP₂O₇ | 3% LiFePO₄ | 1% of carbon |
| Example 15 | Li_{0.988}Mg_{0.005}Mn_{0.6}Fe_{0.35}V_{0.05}P_{0.999}S_{0.001}O _{3.999}F_{0.001} | 1% Li₂FeP₂O₇ | 3% LiFePO₄ | 1% of carbon |
| Example 16 | Li_{0.984}Mg_{0.005}Mn_{0.6}Fe_{0.35}V_{0.05}P_{0.995}S_{0.005}O _{3.999}F_{0.001} | 1% Li₂FeP₂O₇ | 3% LiFePO₄ | 1% of carbon |
| Example 17 | Li_{0.984}Mg_{0.005}Mn_{0.6}Fe_{0.35}V_{0.35}P_{0.999}S_{0.001}O _{3.995}F_{0.005} | 1% Li₂FeP₂O₇ | 3% LiFePO₄ | 1% of carbon |
| Example 18 | Li_{0.984}Mg_{0.005}Mn_{0.65}Fe_{0.25}V_{0.05}Co_{0.05}P_{0.999} S_{0.001}O_{3.995}F_{0.005} | 1% Li₂FeP₂O₇ | 3% LiFePO₄ | 1% of carbon |
| Example 19 | Li_{0.984}Mg_{0.005}Mn_{0.65}Fe_{0.20}V_{0.05}Co_{0.10}P_{0.999} S_{0.001}O_{3.995}F_{0.005} | 1% Li₂FeP₂O₇ | 3% LiFePO₄ | 1% of carbon |
| Example 20 | Li_{0.984}Mg_{0.005}Mn_{0.75}Fe_{0.05}V_{0.05}Co_{0.15}P_{0.999} S_{0.001}O_{3.995}F_{0.005} | 1% Li₂FeP₂O₇ | 3% LiFePO₄ | 1% of carbon |
| Example 21 | Li_{0.984}Mg_{0.005}Mn_{0.65}Fe_{0.25}V_{0.05}Co_{0.05}P_{0.999} S_{0.001}O_{3.995}F_{0.005} | 1% Li₂FeP₂O₇ | 3% LiFePO₄ | 1% of carbon |
| Example 22 | Li_{0.984}Mg_{0.005}Mn_{0.75}Fe_{0.10}V_{0.05}Co_{0.10}P_{0.999} S_{0.001}O_{3.995}F_{0.005} | 1% Li₂FeP₂O₇ | 3% LiFePO₄ | 1% of carbon |
| Example 23 | Li_{0.984}Mg_{0.005}Mn_{0.7}Fe_{0.15}V_{0.05}Co_{0.10}P_{0.999}S _{0.001}O_{3.995}F_{0.005} | 1% Li₂FeP₂O₇ | 3% LiFePO₄ | 1% of carbon |
| Example 24 | Li_{0.984}Mg_{0.005}Mn_{0.6}Fe_{0.25}V_{0.05}Co_{0.10}P_{0.999}S _{0.001}O_{3.995}F_{0.005} | 1% Li₂FeP₂O₇ | 3% LiFePO₄ | 1% of carbon |
| Example 25 | Li_{0.984}Mg_{0.005}Mn_{0.05}Fe_{0.35}V_{0.05}Co_{0.10}P_{0.999}S _{0.001}O_{3.995}F_{0.005} | 1% Li₂FeP₂O₇ | 3% LiFePO₄ | 1% of carbon |
| Example 26 | Li_{1.01}Mg_{0.005}Mn_{0.7}Fe_{0.15}V_{0.05}Co_{0.10}P_{0.9}Si_{0. 1}O_{3.92}F_{0.08} | 1% Li₂FeP₂O₇ | 3% LiFePO₄ | 1% of carbon |
| Example 27 | Li_{0.97}Mg_{0.005}Mn_{0.7}Fe_{0.15}V_{0.05}Co_{0.10}P_{0.92}Si_{0 .08}O_{3.9}F_{0.1} | 1% Li₂FeP₂O₇ | 3% LiFePO₄ | 1% of carbon |
| Example 28 | Li_{0.994}Mo_{0.001}Mn_{0.65}Fe_{0.35}P_{0.999}Si_{0.001}O_{3.99 9}F_{0.001} | 1% Al₄(P₂O₇)₃ | 3% LiFePO₄ | 1% of carbon |
| Example 29 | Li_{0.994}Mo_{0.001}Mn_{0.65}Fe_{0.35}P_{0.999}Si_{0.001}O_{3.99 9}F_{0.001} | 1% Li₂NiP₂O₇ | 3% LiFePO₄ | 1% of carbon |
| Example 30 | Li_{0.994}Mo_{0.001}Mn_{0.65}Fe_{0.35}P_{0.999}Si_{0.001}O_{3.99 9}F_{0.001} | 1% Li₂FeP₂O₇ | 3% LiCoPO₄ | 1% of carbon |
| Example 31 | Li_{0.994}Mo_{0.001}Mn_{0.65}Fe_{0.35}P_{0.999}Si_{0.001}O_{3.99 9}F_{0.001} | 1% Li₂FeP₂O₇ | 3% LiNiPO₄ | 1% of carbon |
| Example 32 | Li_{0.994}Mo_{0.001}Mn_{0.65}Fe_{0.35}P_{0.999}Si_{0.001}O_{3.99} | 1% Li₂MgP₂O₇ | 3% LiFePO₄ | 1% of carbon |
| Example 33 | Li_{0.994}Mo_{0.001}Mn_{0.65}Fe_{0.35}P_{0.999}Si_{0.001}O_{3.999}F_{0.001} | 1% Li₂COP₂O₇ | 3% LiFePO₄ | 1% of carbon |
| Example 34 | Li_{0.994}Mo_{0.001}Mn_{0.65}Fe_{0.35}P_{0.999}Si_{0.001}O_{3.999}F_{0.001} | 1% Li₂CuP₂O₇ | 3% LiFePO₄ | 1% of carbon |
| Example 35 | Li_{0.994}Mo_{0.001}Mn_{0.65}Fe_{0.35}P_{0.999}Si_{0.001}O_{3.99} | 1% Li₂ZnP₂O₇ | 3% LiFePO₄ | 1% of carbon |
| Example 36 | ₉F_{0.001} | 1% TiP₂O₇ | 3% LiFePO₄ | 1% of carbon |
| Example 37 | Li_{0.994}Mo_{0.001}Mn_{0.65}Fe_{0.35}P_{0.999}Si_{0.001}O_{3.99} | 1% Ag₄P₂O₇ | 3% LiFePO₄ | 1% of carbon |
| Example 38 | Li_{0.994}Mo_{0.001}Mn_{0.65}Fe_{0.35}P_{0.999}Si_{0.001}O_{3.99} | 1% ZrP₂O₇ | 3% LiFePO₄ | 1% of carbon |
| Example 39 | Li_{0.994}Mo_{0.001}Mn_{0.65}Fe_{0.35}P_{0.999}Si_{0.001}O_{3.99 9}F_{0.001} | 1% Li₂FeP₂O₇ | 3% Cu₃(PO₄)₂ | 1% of carbon |
| Example 40 | Li_{0.994}Mo_{0.001}Mn_{0.65}Fe_{0.35}P_{0.999}Si_{0.001}O_{3.99} | 1% Li₂FeP₂O₇ | 3% Zn₃(PO₄)₂ | 1% of carbon |
| Example 41 | Li_{0.994}Mo_{0.001}Mn_{0.65}Fe_{0.35}P_{0.999}Si_{0.001}O_{3.99 9}F_{0.001} | 1% Li₂FeP₂O₇ | 3% Ti₃(PO₄)₄ | 1% of carbon |
| Example 42 | Li_{0.994}Mo_{0.001}Mn_{0.65}Fe_{0.35}P_{0.999}Si_{0.001}O_{3.99} | 1% Li₂FeP₂O₇ | 3% Ag₃PO₄ | 1% of carbon |
| Example 43 | Li_{0.994}Mo_{0.001}Mn_{0.65}Fe_{0.35}P_{0.999}Si_{0.001}O_{3.999}F_{0.001} | 1% Li₂FeP₂O₇ | 3% Zr₃(PO₄)₄ | 1% of carbon |
| Example 44 | Li_{0.994}Mo_{0.001}Mn_{0.65}Fe_{0.35}P_{0.999}Si_{0.001}O_{3.99} | 1% Li₂FeP₂O₇ | 3% AlPO₄ | 1% of carbon |
| Note: Both the first coating layer material and the second coating layer material in examples 1 to 44 were crystalline | | | | |

**Table 6**

| No. | Lattic e chang e rate (%) | Li/Mn antisite defect concentra tion (%) | Surface oxygen valency | Compact ed density (g/cm³) | Dissoluti on of Mn and Fe after cycling (ppm) | Capaci ty of button battery at 0.1C (mAh/ g) | 3C charg e const ant curre nt rate (%) | Number of cycles for capacity retentio n rate of 80% at 45°C | Expansi on of battery upon 30 days of storage at 60°C (%) |
|---|---|---|---|---|---|---|---|---|---|
| Examp le 1 | 6.1 | 0.8 | 1.97 | 2.25 | 20 | 157.6 | 68.2 | 1305 | 2.1 |
| Examp le 2 | 6.6 | 0.4 | -1.98 | 2.45 | 5 | 159.4 | 79.1 | 1573 | 1.8 |
| Examp le 3 | 6.3 | 0.8 | -1.97 | 2.26 | 19 | 156.3 | 67.3 | 1367 | 2.1 |
| Examp le 4 | 5.3 | 0.6 | -1.97 | 2.24 | 22 | 154.7 | 66.9 | 1271 | 2.2 |
| Examp le 5 | 5.3 | 0.4 | -1.98 | 2.43 | 5 | 158.6 | 80.2 | 1589 | 1.6 |
| Examp le 6 | 2.4 | 0.3 | -1.99 | 2.50 | 7 | 160.4 | 81.1 | 1532 | 1.8 |
| Examp le 7 | 2.2 | 0.3 | -1.99 | 2.51 | 5 | 161.2 | 78.5 | 1490 | 1.7 |
| Examp le 8 | 3.3 | 0.3 | -1.99 | 2.53 | 5 | 160.1 | 78.6 | 1555 | 1.6 |
| Examp le 9 | 3.4 | 0.4 | -1.98 | 2.48 | 6 | 159.6 | 79.6 | 1624 | 1.7 |
| Examp le 10 | 3.6 | 0.3 | -1.99 | 2.52 | 4 | 160.4 | 81.5 | 1598 | 1.9 |
| Examp le 11 | 3.4 | 0.4 | -1.98 | 2.46 | 3 | 159.8 | 78.9 | 1612 | 1.6 |
| Examp le 12 | 6.8 | 0.4 | -1.98 | 2.46 | 6 | 152.1 | 76.1 | 1443 | 1.9 |
| Examp le 13 | 7.2 | 0.3 | -1.99 | 2.47 | 8 | 158.3 | 74.2 | 1520 | 1.7 |
| Examp le 14 | 7.1 | 0.5 | -1.95 | 2.60 | 7 | 154.5 | 77.2 | 1513 | 1.8 |
| Examp le 15 | 6.2 | 0.4 | -1.97 | 2.50 | 6 | 156.3 | 81.9 | 1427 | 1.4 |
| Examp le 16 | 5.3 | 0.6 | -1.96 | 2.44 | 6 | 155.9 | 81.6 | 1423 | 1.6 |
| Examp le 17 | 3.8 | 0.5 | -1.99 | 2.41 | 8 | 157.1 | 83.1 | 1418 | 1.7 |
| Examp le 18 | 2.4 | 0.3 | -1.98 | 2.47 | 5 | 159.6 | 82.5 | 1562 | 1.8 |
| Examp le 19 | 2.4 | 0.3 | -1.98 | 2.46 | 9 | 157.8 | 80.4 | 1569 | 1.8 |
| Examp le 20 | 2.5 | 0.3 | -1.95 | 2.44 | 6 | 155.3 | 82.8 | 1502 | 2.2 |
| Examp le 21 | 3.1 | 0.4 | -1.94 | 2.46 | 7 | 154.6 | 81.9 | 1512 | 2.2 |
| Examp le 22 | 3.0 | 0.4 | -1.96 | 2.47 | 5 | 158.3 | 82.1 | 1498 | 2.3 |
| Examp le 23 | 2.8 | 0.5 | -1.99 | 2.43 | 7 | 152.1 | 85.6 | 1385 | 1.8 |
| Examp le 24 | 2.4 | 0.4 | -1.97 | 2.44 | 5 | 153.1 | 79.8 | 1508 | 1.7 |
| Examp le 25 | 2.2 | 0.3 | -1.99 | 2.45 | 8 | 152.9 | 81.9 | 1486 | 2.1 |
| Examp le 26 | 3.1 | 0.5 | -1.97 | 2.23 | 5 | 152.6 | 82.3 | 1478 | 1.9 |
| Examp le 27 | 2.5 | 0.4 | -1.98 | 2.29 | 4 | 152 | 81.7 | 1469 | 1.4 |
| Examp le 28 | 6.1 | 0.9 | -1.98 | 2.49 | 25 | 159.7 | 83.2 | 1302 | 1.9 |
| Examp le 29 | 6.1 | 0.8 | -1.98 | 2.26 | 25 | 153.9 | 66.3 | 1289 | 2.0 |
| Examp le 30 | 6.1 | 0.7 | -1.97 | 2.29 | 26 | 154.3 | 66.5 | 1274 | 2.1 |
| Examp le 31 | 6.2 | 0.8 | -1.98 | 2.28 | 25 | 154.8 | 66.6 | 1264 | 2.2 |
| Examp le 32 | 6.1 | 0.7 | -1.98 | 2.32 | 26 | 156.2 | 64.6 | 1274 | 2.2 |
| Examp le 33 | 6.1 | 0.7 | -1.98 | 2.29 | 24 | 155.8 | 63.9 | 1323 | 2.1 |
| Example 34 | 6.0 | 0.8 | -1.97 | 2.31 | 27 | 155.5 | 66.3 | 1297 | 2.0 |
| Examp le 35 | 6.1 | 0.9 | -1.98 | 2.28 | 25 | 154.3 | 67.4 | 1345 | 2.1 |
| Examp le 36 | 6.2 | 0.9 | -1.98 | 2.30 | 25 | 155.2 | 64.6 | 1391 | 2.2 |
| Examp le 37 | 6.2 | 0.8 | -1.98 | 2.31 | 26 | 156.0 | 65.2 | 1384 | 2.2 |
| Examp le 38 | 6.1 | 0.7 | -1.97 | 2.29 | 24 | 153.4 | 65.5 | 1321 | 2.0 |
| Examp le 39 | 6.0 | 0.9 | -1.98 | 2.33 | 26 | 153.4 | 64.5 | 1310 | 2.0 |
| Examp le 40 | 6.1 | 0.9 | -1.97 | 2.28 | 25 | 154.6 | 65.1 | 1280 | 2.0 |
| Examp le 41 | 6.1 | 0.8 | -1.98 | 2.31 | 26 | 154.7 | 63.6 | 1292 | 2.1 |
| Examp le 42 | 6.2 | 0.7 | -1.98 | 2.31 | 23 | 155.0 | 67.6 | 1340 | 2.1 |
| Examp le 43 | 6.1 | 0.7 | -1.98 | 2.29 | 22 | 156.3 | 63.1 | 1293 | 2.2 |
| Examp le 44 | 6.1 | 0.8 | -1.97 | 2.30 | 27 | 155.4 | 63.6 | 1321 | 2.3 |

It can be seen from Tables 4 and 6 that the positive electrode active material of the present application obtained by modifying lithium manganese phosphate via simultaneous doping at Li, Mn, P and O sites with certain amount of specific elements and by multi-layer coating of lithium manganese phosphate achieves a smaller lattice change rate, a smaller Li/Mn antisite defect concentration, a larger compacted density, a surface oxygen valency closer to -2 valence, and less Mn and Fe dissolution after cycling, such that the battery of the present application has better performance, such as a higher capacity, and a better high-temperature storage performance and high-temperature cycling performance.

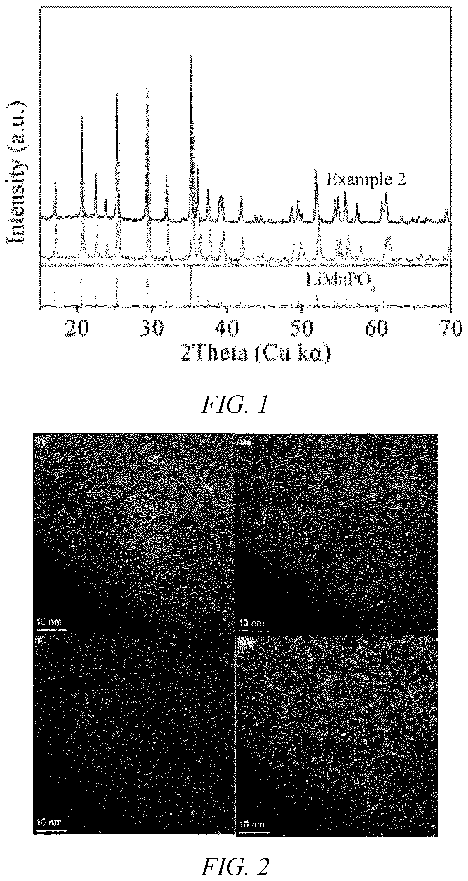

Fig. 1 shows X-ray diffraction (XRD) spectrum of the inner core of undoped LiMnPO₄ and a positive electrode active material prepared in example 2. It can be seen from the figure that the position of main characteristic peaks in the XRD spectra of the inner core of the positive electrode active material of example 2 is consistent with that of the undoped LiMnPO₄, indicating that no impurity phase is introduced in the doping process, and the performance improvement is mainly due to the doping with elements rather than an impurity phase. Fig. 2 shows energy-dispersive X-ray spectroscopy (EDS) images of the inner core of the positive electrode active material prepared in example 2. Those in spotted distribution in the images are the doping elements. It can be seen from the figure that in the inner core of the positive electrode active material of example 2, the elements are uniformly doped.

It also can be seen from examples 12-27 that in the case where the other elements are the same, when (1-y) : y is in a range of 1 to 4 and m : x is in a range of 9 to 1100, and optionally (1-y) : y is in a rage of 1.5 to 3 and m : x is in a range of 190 to 998, the energy density and the cycling performance of the battery can be further improved.

Table 7 shows the interplanar spacing and included angle of the first coating layer material and the second coating layer material in examples 32 to 44.

**Table 7**

| No. | Interplanar spacing of first coating layer material (nm) | Included angle of crystal orientation (111) of first coating layer material (°) | Interplanar spacing of second coating layer material (nm) | Included angle of crystal orientation (111) of second coating layer material (°) |
|---|---|---|---|---|
| Example 1 | 0.303 | 29.496 | 0.348 | 25.562 |
| Example 32 | 0.451 | 19.668 | 0.348 | 25.562 |
| Example 33 | 0.297 | 30.846 | 0.348 | 25.562 |
| Example 34 | 0.457 | 19.456 | 0.348 | 25.562 |
| Example 35 | 0.437 | 20.257 | 0.348 | 25.562 |
| Example 36 | 0.462 | 19.211 | 0.348 | 25.562 |
| Example 37 | 0.45 | 19.735 | 0.348 | 25.562 |
| Example 38 | 0.372 | 23.893 | 0.348 | 25.562 |
| Example 39 | 0.303 | 29.496 | 0.374 | 23.789 |
| Example 40 | 0.303 | 29.496 | 0.36 | 24.71 |
| Example 41 | 0.303 | 29.496 | 0.35 | 25.428 |
| Example 42 | 0.303 | 29.496 | 0.425 | 20.885 |
| Example 43 | 0.303 | 29.496 | 0.356 | 24.993 |
| Example 44 | 0.303 | 29.496 | 0.244 | 36.808 |

It can be seen from Table 7 that both the interplanar spacing and included angle of the first coating layer and the second coating layer are within the range described in the present application, and it can be known by combining Table 6 that when such first coating layers and second coating layers are used, positive electrode active materials with good performance are obtained and good battery performance results are achieved as well.

Table 8 shows the composition of the positive electrode active materials of examples 45 to 59.

Table 9 shows the performance data of the positive electrode active materials, the positive electrode plates, the button batteries or the full batteries of examples 45 to 59 obtained according to the performance test methods above.

**Table 8**

| No. | Inner core | First coating layer | Second coating layer | Third coating layer |
|---|---|---|---|---|
| Example 45 | Li_{0.994}Mo_{0.001}Mn_{0.65}Fe_{0.35}P_{0.999}Si_{0.001}O_{3.999}F_{0.001} | 2% Li₂FeP₂O₇ | 3% LiFeP04 | 1% of carbon |
| Example 46 | Li_{0.994}Mo_{0.001}Mn_{0.65}Fe_{0.35}P_{0.999}Si_{0.001}O_{3.999}F_{0.001} | 3% Li₂FeP₂O₇ | 3% LiFeP04 | 1% of carbon |
| Example 47 | Li_{0.994}Mo_{0.001}Mn_{0.65}Fe_{0.35}P_{0.999}Si_{0.001}O_{3.999}F_{0.001} | 4% Li₂FeP₂O₇ | 3% LiFeP04 | 1% of carbon |
| Example 48 | Li_{0.994}Mo_{0.001}Mn_{0.65}Fe_{0.35}P_{0.999}Si_{0.001}O_{3.999}F_{0.001} | 5.5% Li₂FeP₂O₇ | 3% LiFeP04 | 1% of carbon |
| Example 49 | Li_{0.994}Mo_{0.001}Mn_{0.65}Fe_{0.35}P_{0.999}Si_{0.001}O_{3.999}F_{0.001} | 6% Li₂FeP₂O₇ | 3% LiFeP04 | 1% of carbon |
| Example 50 | Li_{0.994}Mo_{0.001}Mn_{0.65}Fe_{0.35}P_{0.999}Si_{0.001}O_{3.999}F_{0.001} | 1% Li₂FeP₂O₇ | 1% LiFeP04 | 1% of carbon |
| Example 51 | Li_{0.994}Mo_{0.001}Mn_{0.65}Fe_{0.35}P_{0.999}Si_{0.001}O_{3.999}F_{0.001} | 1% Li₂FeP₂O₇ | 2% LiFeP04 | 1% of carbon |
| Example 52 | Li_{0.994}Mo_{0.001}Mn_{0.65}Fe_{0.35}P_{0.999}Si_{0.001}O_{3.999}F_{0.001} | 1% Li₂FeP₂O₇ | 4% LiFeP04 | 1% of carbon |
| Example 53 | Li_{0.994}Mo_{0.001}Mn_{0.65}Fe_{0.35}P_{0.999}Si_{0.001}O_{3.999}F_{0.001} | 1% Li₂FeP₂O₇ | 5.5% LiFeP04 | 1% of carbon |
| Example 54 | Li_{0.994}Mo_{0.001}Mn_{0.65}Fe_{0.35}P_{0.999}Si_{0.001}O_{3.999}F_{0.001} | 1% Li₂FeP₂O₇ | 6% LiFeP04 | 1% of carbon |
| Example 55 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFeP04 | 2% of carbon |
| Example 56 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFeP04 | 3% of carbon |
| Example 57 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFeP04 | 4% of carbon |
| Example 58 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFeP04 | 5.5% of carbon |
| Example 59 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFeP04 | 6% of carbon |

**Table 9**

| No. | Lattic e chang e rate (%) | Li/Mn antisite defect concent ration (%) | Surface oxygen valency | Compa cted density (g/cm³) | Dissolu tion of Mn and Fe after cycling (ppm) | Capacity of button battery at 0.1C (mAh/g) | 3C charge constant current rate (%) | Number of cycles for capacity retention rate of 80% at 45°C | Expans ion of battery upon 30 days of storage at 60°C (%) |
|---|---|---|---|---|---|---|---|---|---|
| Examp le 45 | 6.1 | 0.9 | -1.98 | 2.28 | 15 | 157.1 | 66.3 | 1458 | 2 |
| Examp le 46 | 6.1 | 0.9 | -1.99 | 2.26 | 12 | 156.5 | 64.2 | 1568 | 1.8 |
| Examp le 47 | 6.1 | 0.8 | -1.98 | 2.28 | 10 | 155.9 | 62.8 | 1685 | 1.6 |
| Examp le 48 | 6.0 | 0.9 | -1.97 | 2.25 | 5 | 153.3 | 61.5 | 1775 | 1.4 |
| Examp le 49 | 6.0 | 0.8 | -1.97 | 2.24 | 5 | 153.0 | 60.2 | 1952 | 1.2 |
| Examp le 50 | 6.1 | 1 | -1.98 | 2.25 | 24 | 154.2 | 64.5 | 1126 | 3.1 |
| Examp le 51 | 6.1 | 1 | -1.96 | 2.26 | 21 | 156.2 | 66.8 | 1456 | 2.5 |
| Examp le 52 | 6.1 | 0.9 | -1.99 | 2.25 | 19 | 155.4 | 70.5 | 1546 | 1.8 |
| Examp le 53 | 6.1 | 0.8 | -1.97 | 2.24 | 17 | 153.1 | 72.5 | 1675 | 1.5 |
| Examp le 54 | 6.0 | 0.7 | -1.98 | 2.27 | 16 | 152.3 | 76.8 | 1787 | 1.2 |
| Examp le 55 | 6.1 | 0.8 | -1.98 | 2.25 | 18 | 159.3 | 70.5 | 1310 | 1.9 |
| Examp le 56 | 6.1 | 0.7 | -1.96 | 2.24 | 15 | 161.2 | 74.6 | 1317 | 1.9 |
| Examp le 57 | 6.1 | 0.7 | -1.98 | 2.24 | 12 | 159.8 | 80.4 | 1328 | 1.9 |
| Examp le 58 | 6.2 | 0.9 | -1.97 | 2.21 | 10 | 157.3 | 84.2 | 1345 | 1.8 |
| Examp le 59 | 6.2 | 1 | -1.98 | 2.22 | 9 | 156.6 | 86.5 | 1284 | 1.8 |

It can be seen from Table 9 that when the coating amount of the coating layers is in a suitable range, the performance of the positive electrode active material and battery can be further improved.

Table 10 shows the performance data of the positive electrode active materials, the positive electrode plates, the button batteries or the full batteries of examples 60 to 62 obtained according to the performance test methods above.

**Table 10**

| No. | Crystallin ity of pyrophos phate and phosphate | Latti ce chan ge rate (%) | Li/Mn antisite defect concentra tion (%) | Surfa ce oxyg en valen cy | Compa cted density (g/cm³) | Dissolu tion of Mn and Fe after cycling (ppm) | Capac ity of butto n batter y at 0.1C (mAh /g) | 3C charg e const ant curre nt rate (%) | Numb er of cycles for capac ity retent ion rate of 80% at 45°C | Expans ion of battery upon 30 days of storage at 60°C (%) |
|---|---|---|---|---|---|---|---|---|---|---|
| Exam ple 1 | 100% | 6.1 | 0.8 | -1.97 | 2.25 | 20 | 157.6 | 68.2 | 1305 | 2.1 |
| Exam ple 60 | 30% | 7.7 | 1.1 | -1.98 | 2.22 | 81 | 153.2 | 65.2 | 1185 | 3.1 |
| Exam ple 61 | 50% | 7.2 | 1.0 | -1.97 | 2.22 | 53 | 155.4 | 67.4 | 1252 | 2.4 |
| Exam ple 62 | 70% | 6.7 | 0.9 | -1.99 | 2.24 | 32 | 156.2 | 67.8 | 1275 | 2.2 |

It can be seen from Table 10 that as the crystallinity of pyrophosphate and phosphate gradually increases, the lattice change rate, Li/Mn antisite defect concentration, and dissolution of Fe and Mn after cycling of the corresponding positive electrode active material gradually decrease, the capacity of the battery is gradually increased, and the high-temperature cycling performance and high-temperature storage performance of the battery are also gradually improved.

The specific examples of positive electrode active materials having an inner core of Li₁₊ₓCₘMn_{1-y}A_{y}P_{1-z}R_{z}O₄₋ₙDₙ and a shell comprising a first coating layer (pyrophosphate and phosphate) and a carbon-containing second coating layer are detailed below:

### Example 1-A

### (1) Preparation of positive electrode active material

### S1: Preparation of doped manganese oxalate

The parameters of step S1 were the same as those in example 1.

### S2: Preparation of co-doped lithium manganese phosphate inner core

The parameters of step S2 were the same as those in example 1, so as to obtain Li_{0.994}Mo_{0.001}Mn_{0.65}Fe_{0.35}P_{0.999}Si_{0.001}O_{3.999}F_{0.001}, i.e., a co-doped lithium manganese phosphate inner core.

### S3: Preparation of lithium iron pyrophosphate powder

4.77 g of lithium carbonate, 7.47 g of ferrous carbonate, 14.84 g of ammonium dihydrogen phosphate, and 1.3 g of oxalic acid dihydrate were dissolved in 50 mL of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. The powder was sintered at 650°C in a nitrogen atmosphere for 8 hours, naturally cooled to room temperature, and then ground to obtain a Li₂FeP₂O₇ powder.

### S4: Preparation of lithium iron phosphate suspension

11.1 g of lithium carbonate, 34.8 g of ferrous carbonate, 34.5 g of ammonium dihydrogen phosphate, 1.3 g of oxalic acid dihydrate, and 37.3 g of sucrose (in C₁₂H₂₂O₁₁, the same below) were dissolved in 150 mL of deionized water to obtain a mixture, and the mixture was then stirred for 6 hours for complete reaction. Then, the reacted solution was heated to 120°C and held at the temperature for 6 hours to obtain a suspension comprising sucrose and LiFePO₄.

### S5: Coating

10 mol (about 1570 g) of the co-doped lithium manganese phosphate inner core obtained by the process in step S2 and 15.7 g of the Li₂FeP₂O₇ powder obtained in step S3 were added to the LiFePO₄ suspension (comprising 37.3 g of sucrose and 47.2 g of LiFePO₄) obtained in step S4, stirred and mixed until uniform, and then transferred to a vacuum oven and dried at 150°C for 6 hours. The resulting product was then dispersed by sanding. After dispersion, the obtained product was sintered at 700°C under a nitrogen atmosphere for 6 hours to obtain the positive electrode active material.

### (2) Preparation of positive electrode plate

The positive electrode active material above, a conductive agent of acetylene black, a binder of polyvinylidene fluoride (PVDF) were added at a weight ratio of 92 : 2.5 : 5.5 into N-methylpyrrolidone (NMP), and stirred and mixed until uniform to obtain a positive electrode slurry. The positive electrode slurry was then uniformly applied to an aluminum foil at 0.280 g/1540.25 mm², followed by drying, cold pressing and slitting to obtain a positive electrode plate.

### (3) Preparation of negative electrode plate

The parameters for preparing the negative electrode plate were the same as those in example 1.

### (4) Preparation of electrolyte solution

The parameters of the electrolyte solution were the same as those in example 1.

### (5) Separator

The parameters of the separator were the same as those in example 1.

### (6) Preparation of full battery and button battery

The parameters for obtaining a full battery and a button battery were the same as those in example 1.

### Example 2-A

Except that in step S1 and step S2, the amount of FeSO₄· H₂O was changed to 0.68 mol, the amount of Li₂CO₃ was changed to 0.4885 mol, Mo(SO₄)₃ was replaced with MgSO₄, H₄SiO₄ was replaced with HNO₃, and 0.02 mol of Ti(SO₄)₂ was further added during the preparation of a doped manganese oxalate in step S1, the other conditions were the same as example 1-A.

### Example 3-A

Except that in step S1 and step S2, the amount of Li₂CO₃ was changed to 0.496 mol, Mo(SO₄)₃ was replaced with W(SO₄)₃, and H₄SiO₄ was replaced with H₂SO₄, the other conditions were the same as example 1-A.

### Example 4-A

Except that in step S1 and step S2, the amount of Li₂CO₃ was changed to 0.4985 mol, 0.001 mol of Mo(SO₄)₃ was replaced with 0.0005 mol of Al₂(SO₄)₃, and NH₄HF₂ was replaced with NH₄HCl₂, the other conditions were the same as example 1-A.

### Example 5-A

Except that in step S1 and step S2, the amount of FeSO₄· H₂O was changed to 0.69 mol, the amount of Li₂CO₃ was changed to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ was further added during the preparation of a doped manganese oxalate in step S1, the other conditions were the same as example 1-A.

### Example 6-A

Except that in step S1 and step S2, the amount of FeSO₄· H₂O was changed to 0.68 mol, the amount of Li₂CO₃ was changed to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ and 0.01 mol of MgSO₄ were further added during the preparation of a doped manganese oxalate in step S1, the other conditions were the same as example 1-A.

### Example 7-A

Except that in step S1 and step S2, MgSO₄ was replaced with CoSO₄, the other conditions were the same as example 6-A.

### Example 8-A

Except that in step S1 and step S2, MgSO₄ was replaced with NiSO₄, the other conditions were the same as example 6-A.

### Example 9-A

Except that in step S1 and step S2, the amount of FeSO₄· H₂O was changed to 0.698 mol, the amount of Li₂CO₃ was changed to 0.4955 mol, 0.001 mol of Mo(SO₄)₃ was replaced with 0.0005 mol of Nb₂(SO₄)₅, H₄SiO₄ was replaced with H₂SO₄, NH₄HF₂ was replaced with NH₄HCl₂, and 0.002 mol of Ti(SO₄)₂ was further added during the preparation of a doped manganese oxalate in step S1, the other conditions were the same as example 1-A.

### Example 10-A

Except that in step S1 and step S2, the amount of FeSO₄· H₂O was changed to 0.68 mol, the amount of Li₂CO₃ was changed to 0.4975 mol, 0.001 mol of Mo(SO₄)₃ was replaced with 0.0005 mol of Nb₂(SO₄)₅, NH₄HF₂ was replaced with NH₄HBr₂, and 0.01 mol of VCl₂ and 0.01 mol of MgSO₄ were further added during the preparation of a doped manganese oxalate in step S1, the other conditions were the same as example 1-A.

### Example 11-A

Except that in step S1 and step S2, the amount of FeSO₄· H₂O was changed to 0.69 mol, the amount of Li₂CO₃ was changed to 0.499 mol, Mo(SO₄)₃ was replaced with MgSO₄, NH₄HF₂ was replaced with NH₄HBr₂, and 0.01 mol of VCl₂ was further added during the preparation of a doped manganese oxalate in step S1, the other conditions were the same as example 1-A.

### Example 12-A

Except that in step S1 and step S2, the amount of MnSO₄· H₂O was changed to 1.36 mol, the amount of FeSO₄· H₂O was changed to 0.6 mol, the amount of Li₂CO₃ was changed to 0.4985 mol, Mo(SO₄)₃ was replaced with MgSO₄, H₄SiO₄ was replaced with HNO₃, and 0.04 mol of VCl₂ was further added during the preparation of a doped manganese oxalate in step S1, the other conditions were the same as example 1-A.

### Example 13-A

Except that in step S1 and step S2, the amount of MnSO₄· H₂O was changed to 1.16 mol, and the amount of FeSO₄· H₂O was changed to 0.8 mol, the other conditions were the same as example 12-A.

### Example 14-A

Except that in step S1 and step S2, the amount of MnSO₄· H₂O was changed to 1.3 mol, and the amount of VCl₂ was changed to 0.1 mol, the other conditions were the same as example 12-A.

### Example 15-A

Except that in step S1 and step S2, the amount of MnSO₄· H₂O was changed to 1.2 mol, the amount of Li₂CO₃ was changed to 0.494 mol, 0.001 mol of Mo(SO₄)₃ was replaced with 0.005 mol of MgSO₄, H₄SiO₄ was replaced with H₂SO₄, and 0.1 mol of VCl₂ was further added during the preparation of a doped manganese oxalate in step S1, the other conditions were the same as example 1-A.

### Example 16-A

Except that in step S1 and step S2, the amount of MnSO₄· H₂O was changed to 1.2 mol, the amount of Li₂CO₃ was changed to 0.467 mol, 0.001 mol of Mo(SO₄)₃ was replaced with 0.005 mol of MgSO₄, 0.001 mol of H₄SiO₄ was replaced with 0.005 mol of H₂SO₄, 1.175mol of 85% phosphoric acid was replaced with 1.171 mol of 85% phosphoric acid, and 0.1 mol of VCl₂ was further added during the preparation of a doped manganese oxalate in step S1, the other conditions were the same as example 1-A.

### Example 17-A

Except that in step S1 and step S2, the amount of MnSO₄· H₂O was changed to 1.2 mol, the amount of Li₂CO₃ was changed to 0.492 mol, 0.001 mol of Mo(SO₄)₃ was replaced with 0.005 mol of MgSO₄, H₄SiO₄ was replaced with H₂SO₄, the amount of NH₄HF₂ was changed to 0.0025 mol, and 0.1 mol of VCl₂ was further added during the preparation of a doped manganese oxalate in step S1, the other conditions were the same as example 1-A.

### Example 18-A

Except that in step S1 and step S2, the amount of FeSO₄· H₂O was changed to 0.5 mol, the amount of Li₂CO₃ was changed to 0.492 mol, 0.001 mol of Mo(SO₄)₃ was replaced with 0.005 mol of MgSO₄, H₄SiO₄ was replaced with H₂SO₄, the amount of NH₄HF₂ was changed to 0.0025 mol, and 0.1 mol of VCl₂ and 0.1 mol of CoSO₄ were further added during the preparation of a doped manganese oxalate in step S1, the other conditions were the same as example 1-A.

### Example 19-A

Except that in step S1 and step S2, the amount of FeSO₄· H₂O was changed to 0.4 mol, and the amount of CoSO₄ was changed to 0.2 mol, the other conditions were the same as example 18-A.

### Example 20-A

Except that in step S1 and step S2, the amount of MnSO₄· H₂O was changed to 1.5 mol, the amount of FeSO₄· H₂O was changed to 0.1 mol, and the amount of CoSO₄ was changed to 0.3 mol, the other conditions were the same as example 18-A.

### Example 21-A

Except that in step S1 and step S2, CoSO₄ was replaced with NiSO₄, the other conditions were the same as example 18-A.

### Example 22-A

Except that in step S1 and step S2, the amount of MnSO₄· H₂O was changed to 1.5 mol, the amount of FeSO₄· H₂O was changed to 0.2 mol, and 0.1 mol of CoSO₄ was replaced with 0.2 mol of NiSO₄, the other conditions were the same as example 18-A.

### Example 23-A

Except that in step S1 and step S2, the amount of MnSO₄· H₂O was changed to 1.4 mol, the amount of FeSO₄· H₂O was changed to 0.3 mol, and the amount of CoSO₄ was changed to 0.2 mol, the other conditions were the same as example 18-A.

### Example 24-A

Except that in step S1 and step S2, the amount of MnSO₄· H₂O was changed to 1.2 mol, the amount of FeSO₄· H₂O was changed to 0.5 mol, and the amount of CoSO₄ was changed to 0.2 mol, the other conditions were the same as example 18-A.

### Example 25-A

Except that in step S1 and step S2, the amount of MnSO₄· H₂O was changed to 1.0 mol, the amount of FeSO₄· H₂O was changed to 0.7 mol, and the amount of CoSO₄ was changed to 0.2 mol, the other conditions were the same as example 18-A.

### Example 26-A

Except that in step S1 and step S2, the amount of MnSO₄· H₂O was changed to 1.4 mol, the amount of FeSO₄· H₂O was changed to 0.3 mol, the amount of Li₂CO₃ was changed to 0.4825 mol, 0.001 mol of Mo(SO₄)₃ was replaced with 0.005 mol of MgSO₄, the amount of H₄SiO₄ was changed to 0.1 mol, the amount of phosphoric acid was changed to 0.9 mol, the amount of NH₄HF₂ was changed to 0.04 mol, and 0.1 mol of VCl₂ and 0.2 mol of CoSO₄ were further added during the preparation of a doped manganese oxalate in step S1, the other conditions were the same as example 1-A.

### Example 27-A

Except that in step S1 and step S2, the amount of MnSO₄· H₂O was changed to 1.4 mol, the amount of FeSO₄· H₂O was changed to 0.3 mol, the amount of Li₂CO₃ was changed to 0.485 mol, 0.001 mol of Mo(SO₄)₃ was replaced with 0.005 mol of MgSO₄, the amount of H₄SiO₄ was changed to 0.08 mol, the amount of phosphoric acid was changed to 0.92 mol, the amount of NH₄HF₂ was changed to 0.05 mol, and 0.1 mol of VCl₂ and 0.2 mol of CoSO₄ were further added during the preparation of a doped manganese oxalate in step S1, the other conditions were the same as example 1-A.

### Examples 28-A to 32-A

Except that in step S3 and step S4, the amount of the raw materials were correspondingly adjusted according to the coating amount as shown in Table 5, such that the amounts of Li₂FeP₂O₇/LiFePO₄ in examples 28-A to 32-A were 12.6 g/37.7 g, 14.1 g/42.4 g, 18.8 g/56.5 g, 22.0 g /66.0 g and 25.1 g/75.4 g, respectively, the other conditions were the same as example 1-A.

### Examples 33-A to 36-A

Except that in step S4, the amounts of sucrose were adjusted to be 74.6 g, 149.1 g, 186.4 g and 223.7 g, respectively, such that the corresponding coating amounts of the carbon layers as the second coating layers were 31.4 g, 62.9 g, 78.6 g and 94.3 g, respectively, the other conditions were the same as example 1-A.

### Examples 37-A to 40-A

Except that in step S3 and step S4, the amount of the raw materials were correspondingly adjusted according to the coating amount as shown in Table 5, such that the amounts of Li₂FeP₂O₇/LiFePO₄ in examples 37 to 40 were 23.6 g/39.3 g, 31.4 g/31.4 g, 39.3 g/23.6 g and 47.2 g/15.7 g, respectively, the other conditions were the same as example 1-A.

### Example 41-A

Except that in the powder sintering step in step S4, the sintering temperature was adjusted to 550°C and the sintering time was adjusted to 1 hour to control the crystallinity of Li₂FeP₂O₇ to be 30%, and in step S5, the coating sintering temperature was adjusted to 650°C and the sintering time was adjusted to 2 hours to control the crystallinity of LiFePO₄ to be 30%, the other conditions were the same as example 1-A.

### Example 42-A

Except that in the powder sintering step in step S4, the sintering temperature was adjusted to 550°C and the sintering time was adjusted to 2 hours to control the crystallinity of Li₂FeP₂O₇ to be 50%, and in step S5, the coating sintering temperature was adjusted to 650°C and the sintering time was adjusted to 3 hours to control the crystallinity of LiFePO₄ to be 50%, the other conditions were the same as example 1-A.

### Example 43-A

Except that in the powder sintering step in step S4, the sintering temperature was adjusted to 600°C and the sintering time was adjusted to 3 hour to control the crystallinity of Li₂FeP₂O₇ to be 70%, and in step S5, the coating sintering temperature was adjusted to 650°C and the sintering time was adjusted to 4 hours to control the crystallinity of LiFePO₄ to be 70%, the other conditions were the same as example 1-A.

### Examples 44-A to 57-A

Except that the stirring rotation speed and the heating temperature during the preparation of a doped manganese oxalate in step S1, and the time for grinding and stirring in a sander and the sintering temperature and sintering time during the preparation of a co-doped lithium manganese phosphate inner core in step S2 were changed, the other conditions were the same as example 1-A. See Table 8-A below for details.

### Examples 58-A to 61-A

Except that in step S3 of preparing a lithium iron pyrophosphate powder, the drying temperature/drying time were adjusted to be 100°C/4 h, 150°C/6 h, 200°C/6 h, and 200°C/6 h respectively, and the sintering temperature and sintering time were adjusted to be 700°C/6 h, 700°C/6 h, 700°C/6 h, and 600°C/6 h, respectively, the other conditions were the same as example 1-A.

### Examples 62-A to 64-A

Except that in the coating step S5, the drying temperature/drying time were adjusted to be 150°C/6 h, 150°C/6 h, and 150°C/6 h respectively, and the sintering temperature and sintering time were adjusted to be 680°C/4 h, 750°C/6 h, and 800°C/8 h, respectively, the other conditions were the same as example 38-A.

The preparation of comparative examples (1-A) to comparative example (9-A) was the same as that in comparative examples 1-9 described above, and details would not be described again here.

### Comparative example 10-A

Except that steps S3 and S5 were changed and step S4 was omitted, the other conditions were the same as example 1-A.

### S3: Preparation of lithium iron pyrophosphate powder

9.52 g of lithium carbonate, 29.9 g of ferrous carbonate, 29.6 g of ammonium dihydrogen phosphate, and 32.5 g of oxalic acid dihydrate were dissolved in 50 mL of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. The powder was sintered at 500°C in a nitrogen atmosphere for 4 hours, naturally cooled to room temperature, and then ground to control the crystallinity of Li₂FeP₂O₇ to be 5%.

### S5: Coating

10 mol (about 1570 g) of the co-doped lithium manganese phosphate inner core obtained by the process in step S2, 62.8 g of the Li₂FeP₂O₇ powder obtained in step S3, and 37.3 g of sucrose were added into 500 mL of deionized water and stirred and mixed until uniform, and then transferred to a vacuum oven and dried at 150°C for 6 hours. The resulting product was then dispersed by sanding. After dispersion, the obtained product was sintered at 700°C in a nitrogen atmosphere for 6 hours to obtain an amorphous lithium iron pyrophosphate and carbon coated positive electrode active material.

### Comparative example 11-A

Except that steps S4 and S5 were changed and step S3 was omitted, the other conditions were the same as example 1-A.

### S4: Preparation of lithium iron phosphate suspension

14.7 g of lithium carbonate, 46.1 g of ferrous carbonate, 45.8 g of ammonium dihydrogen phosphate, 50.2 g of oxalic acid dihydrate, and 37.3 g of sucrose were dissolved in 500 mL of deionized water to obtain a mixture, and the mixture was then stirred for 6 hours and completely reacted. Then, the reacted solution was heated to 120°C and held at the temperature for 6 hours to obtain a suspension comprising LiFePO₄.

### S5: Coating

10 mol (about 1570 g) of the co-doped lithium manganese phosphate inner core obtained by the process in step S2 was added into the LiFePO₄ suspension (comprising 37.3 g of sucrose and 62.8 g of LiFePO₄) obtained in step S4, stirred and mixed until uniform, and then transferred to a vacuum oven and dried at 150°C for 6 hours. The resulting product was then dispersed by sanding. After dispersion, the obtained product was sintered at 600°C in a nitrogen atmosphere for 4 hours to obtain an amorphous lithium iron phosphate and carbon coated positive electrode active material.

### Comparative example 12-A

Except that steps S3 to S5 were changed, the other conditions were the same as example 1-A.

### S3: Preparation of lithium iron pyrophosphate powder

2.38 g of lithium carbonate, 7.5 g of ferrous carbonate, 7.4 g of ammonium dihydrogen phosphate, and 8.1 g of oxalic acid dihydrate were dissolved in 50 mL of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. The powder was sintered at 500°C in a nitrogen atmosphere for 4 hours, naturally cooled to room temperature, and then ground to control the crystallinity of Li₂FeP₂O₇ to be 5%.

### S4: Preparation of lithium iron phosphate suspension

11.1 g of lithium carbonate, 34.8 g of ferrous carbonate, 34.5 g of ammonium dihydrogen phosphate, 37.7 g of oxalic acid dihydrate, and 37.3 g of sucrose were dissolved in 1500 mL of deionized water to obtain a mixture, and the mixture was then stirred for 6 hours and completely reacted. Then, the reacted solution was heated to 120°C and held at the temperature for 6 hours to obtain a suspension comprising LiFePO₄.

### S5: Coating

10 mol (about 1570 g) of the co-doped lithium manganese phosphate inner core obtained by the process in step S2 and 15.7 g of the Li₂FeP₂O₇ powder obtained in step S3 were added to the LiFePO₄ suspension (comprising 37.3 g of sucrose and 47.2 g of LiFePO₄) obtained in step S4, stirred and mixed until uniform, and then transferred to a vacuum oven and dried at 150°C for 6 hours. The resulting product was then dispersed by sanding. After dispersion, the obtained product was sintered at 600°C in a nitrogen atmosphere for 4 hours to control the crystallinity of LiFePO₄ to be 8%, so as to obtain an amorphous lithium iron pyrophosphate, amorphous lithium iron phosphate, and carbon coated positive electrode active material.

The performance of the products of the examples and comparative examples above was tested, and the remaining test parameters were the same as those in example 1. The test parameters of the average discharge voltage (V) of a button battery were as follows:

The button battery prepared above was allowed to stand for 5 minutes in a constant-temperature environment at 25°C, discharged to 2.5 V at 0.1 C, allowed to stand for 5 minutes, charged to 4.3 V at 0.1 C, then charged at a constant voltage of 4.3 V until the current was less than or equal to 0.05 mA, and allowed to stand for 5 minutes, and the battery was then discharged to 2.5 V at 0.1 C, and the discharge capacity at the moment was the initial capacity per gram and denoted as DO, and the discharge energy was the initial energy and denoted as EO, and the average discharge voltage (V) of the button battery was EO/DO.

Table 1-A shows the composition of the positive electrode active materials of examples 1-A to 11-A and comparative examples 1-A to 12-A.

Table 2-A shows the performance data of the positive electrode active materials, the positive electrode plates, the button batteries or the full batteries of examples 1-A to 11-A and comparative examples 1-A to 12-A obtained according to the performance test methods above.

**Table 1-A**

| No. | Inner core | First coating layer | Second coating layer |
|---|---|---|---|
| Comparative example 1-A | LiMnPO₄ | - | 1% of carbon |
| Comparative example 2-A | LiMn_{0.85}Fe_{0.15}PO₄ | - | 1% of carbon |
| Comparative example 3-A | Li_{0.990}Mg_{0.005}Mn_{0.95}Zn_{0.05}PO₄ | - | 1% of carbon |
| Comparative example 4-A | Li_{0.90}Nb_{0.01}Mn_{0.6}Fe_{0.4}PO_{3.95}F_{0.05} | - | 1% of carbon |
| Comparative example 5-A | Li_{0.76}Mg_{0.12}Mn_{0.7}Fe_{0.3}P_{0.999}Si_{0.001}O_{3.999}F_{0.001} | - | 1% of carbon |
| Comparative example 6-A | Li_{0.998}Mg_{0.001}Mn_{0.4}Zn_{0.6}P_{0.999}Si_{0.001}O_{3.999}F_{0.001} | - | 1% of carbon |
| Comparative example 7-A | Li_{1.068}Mg_{0.001}Mn_{0.7}Fe_{0.3}P_{0.88}Si_{0.12}O_{3.95}F_{0.05} | - | 1% of carbon |
| Comparative example 8-A | Li_{0.948}Mg_{0.001}Mn_{0.6}Fe_{0.4}P_{0.93}Si_{0.07}O_{3.88}F_{0.12} | - | 1% of carbon |
| Comparative example 9-A | Li_{0.994}Mg_{0.001}Mn_{0.65}Fe_{0.35}P_{0.999}Si_{0.001}O_{3.999}F_{0.001} | - | 1% of carbon |
| Comparative example 10-A | Li_{0.994}Mg_{0.001}Mn_{0.65}Fe_{0.35}P_{0.999}Si_{0.001}O_{3.999}F_{0.001} | 4% of amorphous Li₂FeP₂O₇ | 1% of carbon |
| Comparative example 11-A | Li_{0.994}Mg_{0.001}Mn_{0.65}Fe_{0.35}P_{0.999}Si_{0.001}O_{3.999}F_{0.001} | 4% of amorphous LiFeP04 | 1% of carbon |
| Comparative example 12-A | Li_{0.994}Mg_{0.001}Mn_{0.65}Fe_{0.35}P_{0.999}Si_{0.001}O_{3.999}F_{0.001} | 1% of amorphous Li₂FeP₂O₇ / 3% of amorphous LiFeP04 | 1% of carbon |
| Example 1-A | Li_{0.994}Mg_{0.001}Mn_{0.65}Fe_{0.35}P_{0.999}Si_{0.001}O_{3.999}F_{0.001} | 1% Li₂FeP₂O₇/3% LiFePO₄ | 1% of carbon |
| Example 2-A | Li_{0.977}Mg_{0.001}Mn_{0.65}Fe_{0.34}Ti_{0.01}P_{0.999}N_{0.001}O_{3.999}F_{0.001} | 1% Li₂FeP₂O₇/3% LiFePO₄ | 1% of carbon |
| Example 3-A | Li_{0.992}Mg_{0.001}Mn_{0.65}Fe_{0.35}P_{0.999}S_{0.001}O_{3.999}F_{0.001} | 1% Li₂FeP₂O₇/3% LiFePO₄ | 1% of carbon |
| Example 4-A | Li_{0.997}Al_{0.001}Mn_{0.65}Fe_{0.35}P_{0.999}Si_{0.001}O_{3.999}F_{0.001} | 1% Li₂FeP₂O₇/3% LiFePO₄ | 1% of carbon |
| Example 5-A | Li_{0.993}Nb_{0.001}Mn_{0.65}Fe_{0.345}V_{0.005}P_{0.999}S_{0.001}O_{3.999}F_{0.001} | 1% Li₂FeP₂O₇/3% LiFePO₄ | 1% of carbon |
| Example 6-A | Li_{0.993}Nb_{0.001}Mn_{0.65}Fe_{0.34}V_{0.005}Mg_{0.005}P_{0.999}S_{0.001}O_{3.999}F_{0.001 3.999}F_{0.001} | 1% Li₂FeP₂O₇/3% LiFePO₄ | 1% of carbon |
| Example 7-A | Li_{0.993}Nb_{0.001}Mn_{0.65}Fe_{0.34}V_{0.005}Co_{0.005}P_{0.999}S_{0.001}O_{3.999}F_{0.001} | 1% Li₂FeP₂O₇/3% LiFePO₄ | 1% of carbon |
| Example 8-A | Li_{0.993}Nb_{0.001}Mn_{0.65}Fe_{0.34}V_{0.005}Ni_{0.005}P_{0.999}S_{0.001}O_{3.999}F_{0.001} | 1% Li₂FeP₂O₇/3% LiFePO₄ | 1% of carbon |
| Example 9-A | Li_{0.991}Nb_{0.001}Mn_{0.65}Fe_{0.349}Ti_{0.001}P_{0.999}S_{0.001}O_{3.999}Cl_{0.001} | 1% Li₂FeP₂O₇/3% LiFePO₄ | 1% of carbon |
| Example 10-A | Li_{0.995}Nb_{0.001}Mn_{0.65}Fe_{0.34}V_{0.005}Mg_{0.005}P_{0.999}Si_{0.001}O_{3.999}Br_{0.001} | 1% Li₂FeP₂O₇/3% LiFePO₄ | 1% of carbon |
| Example 11-A | Li_{0.998}Mg_{0.001}Mn_{0.65}Fe_{0.345}V_{0.005}P_{0.999}Si_{0.001}O_{3.999}Br_{0.001} | 1% Li₂FeP₂O₇/3% LiFePO₄ | 1% of carbon |
| Note: 1) the crystallinities of both Li₂FeP₂O₇ and LiFePO₄ in examples 1-A to 11-A were both 100%; and 2) in comparative examples 10-A to 12-A, the crystallinity of Li₂FeP₂O₇ was 5%, and the crystallinity of LiFePO₄ was 8%. | | | |

**Table 2-A**

| No. | Latti ce chan ge rate (%) | Li/Mn antisite defect concentra tion (%) | Surfa ce oxyg en valen cy | Compac ted density (g/cm³) | Dissolut ion of Fe and Mn after cycling (ppm) | Capac ity per gram of button batter y at 0.1 C (mAh /g) | Avera ge discha rge voltag e of button battery (V) | Number of cycles correspon ding to 80% capacity retention rate at 45°C | Expans ion of battery upon 30 days of storage at 60°C (%) |
|---|---|---|---|---|---|---|---|---|---|
| Compara tive example 1-A | 11.4 | 5.2 | *-1.55* | 1.7 | 2060 | 125.6 | 4.02 | 121 | 48.6 |
| Compara tive example 2-A | 10.6 | 4.3 | -1.51 | 1.87 | 1510 | 126.4 | 3.85 | 129 | 37.3 |
| Compara tive example 3-A | 10.8 | 3.6 | -1.64 | 1.88 | 1028 | 134.7 | 4.05 | 134 | 31.9 |
| Compara tive example 4-A | 9.7 | 2.4 | -1.71 | 1.93 | 980 | 141.3 | 3.69 | 148 | 30.8 |
| Compara tive example 5-A | 5.6 | 1.8 | -1.81 | 1.98 | 873 | 110.8 | 3.75 | 387 | 21.4 |
| Compara tive example 6-A | 3.7 | 1.5 | -1.8 | 2.01 | 574 | 74.3 | 3.56 | 469 | 15.8 |
| Compara tive example 7-A | 7.8 | 1.5 | -1.75 | 2.05 | 447 | 139.4 | 3.75 | 396 | 18.3 |
| Compara tive example 8-A | 8.4 | 1.4 | -1.79 | 2.16 | 263 | 141.7 | 3.7 | 407 | 22.7 |
| Compara tive example 9-A | 6.3 | 1.2 | -1.82 | 2.21 | 192 | 156.0 | 3.72 | 552 | 8.4 |
| Compara tive example 10-A | 6.3 | 1.1 | -1.90 | 2.25 | 156 | 156.2 | 3.73 | 802 | 6.7 |
| Compara tive example 11-A | 6.2 | 1.1 | -1.91 | 2.26 | 164 | 156.1 | 3.74 | 860 | 6.4 |
| Compara tive example 12-A | 6.2 | 1.1 | -1.90 | 2.21 | 148 | 156.2 | 3.72 | 950 | 4.2 |
| Example 1-A | 6.2 | 0.7 | 1.97 | 2.23 | 83 | 157.6 | 3.75 | 1285 | 2.1 |
| Example 2-A | 6.8 | 0.5 | -1.98 | 2.45 | 50 | 159.4 | 3.79 | 1553 | 1.8 |
| Example 3-A | 6.4 | 0.6 | -1.97 | 2.26 | 79 | 156.3 | 3.78 | 1337 | 2.1 |
| Example 4-A | 5.4 | 0.7 | -1.97 | 2.24 | 86 | 154.7 | 3.75 | 1251 | 2.2 |
| Example 5-A | 5.3 | 0.4 | -1.98 | 2.43 | 46 | 157.6 | 3.79 | 1598 | 1.8 |
| Example 6-A | 2.4 | 0.3 | -1.99 | 2.50 | 53 | 161.8 | 3.8 | 1474 | 1.7 |
| Example 7-A | 2.2 | 0.3 | -1.99 | 2.51 | 51 | 161 | 3.8 | 1592 | 1.7 |
| Example 8-A | 3.4 | 0.3 | -1.99 | 2.53 | 59 | 161.2 | 3.8 | 1449 | 1.6 |
| Example 9-A | 3.6 | 0.4 | -1.98 | 2.48 | 43 | 159.3 | 3.79 | 1546 | 1.9 |
| Example 10-A | 3.8 | 0.3 | -1.99 | 2.52 | 58 | 160.3 | 3.8 | 1660 | 1.6 |
| Example 11-A | 3.5 | 0.4 | -1.98 | 2.46 | 49 | 159.6 | 3.79 | 1532 | 1.9 |

It can be seen from Table 2-A that the positive electrode active material of the present application obtained by modifying lithium manganese phosphate via simultaneous doping at Li, Mn, P and O sites with certain amount of specific elements and by multi-layer coating of lithium manganese phosphate achieves a smaller lattice change rate, a smaller Li/Mn antisite defect concentration, a larger compacted density, a surface oxygen valency closer to -2 valence, and less Fe and Mn dissolution after cycling, such that the battery of the present application has better performance, such as a higher capacity, and a better high-temperature storage performance and high-temperature cycling performance.

Table 3-A shows the composition of the positive electrode active materials of examples 12-A to 27-A.

Table 4-A shows the performance data of the positive electrode active materials, the positive electrode plates, the button batteries or the full batteries of examples 12-A to 27-A obtained according to the performance test method above.

**Table 3-A**

| No. | Inner core | (1-y) : y | a : x | First coating layer | Second coating layer |
|---|---|---|---|---|---|
| Example 12-A | Li_{0.997}Mg_{0.001}Mn_{0.68}Fe_{0.3}V_{0.02}P_{0.999}N_{0.001}O_{3.999}F_{0.001} | 2.13 | 997 | 1% Li₂FeP₂O₇/ 3% LiFePO₄ | 1% of carbon |
| Example 13-A | Li_{0.997}Mg_{0.001}Mn_{0.58}Fe_{0.4}V_{0.02}P_{0.999}N_{0.001}O_{3.999}F_{0.001} | 1.38 | 997 | 1% Li₂FeP₂O₇/ 3% LiFePO₄ | 1% of carbon |
| Example 14-A | Li_{0.997}Mg_{0.001}Mn_{0.65}Fe_{0.3}V_{0.05}P_{0.999}N_{0.001}O_{3.999}F_{0.001} | 1.86 | 997 | 1% Li₂FeP₂O₇/ 3% LiFePO₄ | 1% of carbon |
| Example 15-A | Li_{0.988}Mg_{0.005}Mn_{0.6}Fe_{0.35}V_{0.05}P_{0.999}N_{0.001}O_{3.999}F_{0.001} | 1.50 | 197.6 | 1% Li₂FeP₂O₇/ 3% LiFePO₄ | 1% of carbon |
| Example 16-A | Li_{0.984}Mg_{0.005}Mn_{0.6}Fe_{0.35}V_{0.05}P_{0.995}S_{0.005}O_{3.999}F_{0.001} | 1.50 | 196.8 | 1% Li₂FeP₂O₇/ 3% LiFePO₄ | 1% of carbon |
| Example 17-A | Li_{0.984}Mg_{0.005}Mn_{0.6}Fe_{0.35}V_{0.05}P_{0.999}S_{0.001}O_{3.995}F_{0.005} | 1.50 | 196.8 | 1% Li₂FeP₂O₇/ 3% LiFePO₄ | 1% of carbon |
| Example 18-A | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 | 1% Li₂FeP₂O₇/ 3% LiFePO₄ | 1% of carbon |
| Example 19-A | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 | 1% Li₂FeP₂O₇/ 3% LiFePO₄ | 1% of carbon |
| Example 20-A | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 | 1% Li₂FeP₂O₇/ 3% LiFePO₄ | 1% of carbon |
| Example 21-A | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 | 1% Li₂FeP₂O₇/ 3% LiFePO₄ | 1% of carbon |
| Example 22-A | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 | 1% Li₂FeP₂O₇/ 3% LiFePO₄ | 1% of carbon |
| Example 23-A | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 | 1% Li₂FeP₂O₇/ 3% LiFePO₄ | 1% of carbon |
| Example 24-A | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 | 1% Li₂FeP₂O₇/ 3% LiFePO₄ | 1% of carbon |
| Example 25-A | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 | 1% Li₂FeP₂O₇/ 3% LiFePO₄ | 1% of carbon |
| Example 26-A | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 | 1% Li₂FeP₂O₇/ 3% LiFePO₄ | 1% of carbon |
| Example 27-A | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 | 1% Li₂FeP₂O₇/ 3% LiFePO₄ | 1% of carbon |
| Note: 1) the crystallinities of both Li₂FeP₂O₇ and LiFePO₄ in examples 12-A to 27-A were both 100% | | | | | |

**Table 4-A**

| No. | Latti ce chan ge rate (%) | Li/Mn antisite defect concentra tion (%) | Surfa ce oxyg en valen cy | Compac ted density (g/cm³) | Dissolut ion of Fe and Mn after cycling (ppm) | Capac ity per gram of button batter y at 0.1 C (mAh/ g) | Avera ge dischar ge voltag e of button battery (V) | Number of cycles correspon ding to 80% capacity retention rate at 45°C | Expans ion of battery upon 30 days of storage at 60°C (%) |
|---|---|---|---|---|---|---|---|---|---|
| Exam ple 12-A | 7.0 | 0.4 | -1.97 | 2.45 | 42 | 155.6 | 3.79 | 1448 | 1.7 |
| Exam ple 13-A | 7.5 | 0.3 | -1.99 | 2.48 | 43 | 159.7 | 3.73 | 1453 | 1.8 |
| Exam ple 14-A | 7.6 | 0.5 | -1.96 | 2.47 | 47 | 157.8 | 3.78 | 1567 | 1.9 |
| Exam ple 15-A | 6.3 | 0.4 | -1.98 | 2.49 | 56 | 158.6 | 3.7 | 1438 | 1.5 |
| Exam ple 16-A | 5.4 | 0.6 | -1.95 | 2.44 | 46 | 158.4 | 3.71 | 1427 | 1.7 |
| Exam ple 17-A | 4.0 | 0.5 | -1.99 | 2.42 | 48 | 158.9 | 3.7 | 1419 | 1.6 |
| Exam ple 18-A | 2.5 | 0.3 | -1.97 | 2.46 | 44 | 159.5 | 3.75 | 1557 | 1.8 |
| Exam ple 19-A | 2.4 | 0.3 | -1.98 | 2.47 | 54 | 159.2 | 3.78 | 1564 | 1.7 |
| Exam ple 20-A | 2.5 | 0.3 | -1.96 | 2.45 | 46 | 157.3 | 3.86 | 1475 | 2.3 |
| Exam ple 21-A | 3.2 | 0.4 | -1.94 | 2.46 | 52 | 158.2 | 3.87 | 1489 | 2.1 |
| Exam ple 22-A | 3.0 | 0.4 | -1.96 | 2.46 | 55 | 159.3 | 3.85 | 1464 | 2 |
| Exam ple 23-A | 2.8 | 0.5 | -1.97 | 2.44 | 47 | 154.4 | 3.8 | 1364 | 1.9 |
| Exam ple 24-A | 2.5 | 0.4 | -1.98 | 2.45 | 45 | 154.7 | 3.72 | 1476 | 1.6 |
| Exam ple 25-A | 2.2 | 0.3 | -1.99 | 2.46 | 38 | 155.6 | 3.68 | 1486 | 2.2 |
| Exam ple 26-A | 3.3 | 0.5 | -1.96 | 2.25 | 25 | 152.5 | 3.82 | 1478 | 2 |
| Exam ple 27-A | 2.6 | 0.4 | -1.99 | 2.28 | 22 | 152.0 | 3.81 | 1437 | 1.5 |

It can be seen from Table 4-A that in the case where the other elements are the same, when (1-y) : y is in a range of 1 to 4 and a : x is in a range of 9 to 1100, and optionally (1-y) : y is in a rage of 1.5 to 3 and a : x is in a range of 190 to 998, the energy density and the cycling performance of the battery can be further improved.

Table 5-A shows the composition of the positive electrode active materials of examples 28-A to 40-A.

Table 6-A shows the performance data of the positive electrode active materials, the positive electrode plates, the button batteries or the full batteries of examples 28-A to 40-A obtained according to the performance test method above.

**Table 5-A**

| No. | Inner core | First coating layer | Second coating layer |
|---|---|---|---|
| Example 28-A | Li_{0.994}Mo_{0.001}Mn_{0.65}Fe_{0.35}P_{0.999}Si_{0.001}O_{3.999}F_{0.001} | 0.8% Li₂FeP₂O₇/2.4% LiFePO₄ | 1% of carbon |
| Example 29-A | Li_{0.994}Mo_{0.001}Mn_{0.65}Fe_{0.35}P_{0.999}Si_{0.001}O_{3.999}F_{0.001} | 0.9% Li₂FeP₂O₄/2.7% LiFePO₄ | 1% of carbon |
| Example 30-A | Li_{0.994}Mo_{0.001}Mn_{0.65}Fe_{0.35}P_{0.999}Si_{0.001}O_{3.999}F_{0.001} | 1.2% Li₂FeP₂O₇/3.6% LiFePO₄ | 1% of carbon |
| Example 31-A | Li_{0.994}Mo_{0.001}Mn_{0.65}Fe_{0.35}P_{0.999}Si_{0.001}O_{3.999}F_{0.001} | 1.4% Li₂FeP₂O₇/4.2% LiFePO₄ | 1% of carbon |
| Example 32-A | Li_{0.994}Mo_{0.001}Mn_{0.65}Fe_{0.35}P_{0.999}Si_{0.001}O_{3.999}F_{0.001} | 1.6% Li₂FeP₂O₇/4.8% LiFePO₄ | 1% of carbon |
| Example 33-A | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 2% of carbon |
| Example 34-A | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 4% of carbon |
| Example 35-A | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 5% of carbon |
| Example 36-A | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 6% of carbon |
| Example 37-A | Li_{0.994}Mo_{0.001}Mn_{0.65}Fe_{0.35}P_{0.999}Si_{0.001}O_{3.999}F_{0.001} | 1.5% Li₂FeP₂O₇/2.5% LiFePO₄ | 1% of carbon |
| Example 38-A | Li_{0.994}Mo_{0.001}Mn_{0.65}Fe_{0.35}P_{0.999}Si_{0.001}O_{3.999}F_{0.001} | 2% Li₂FeP₂O₇/2% LiFePO₄ | 1% of carbon |
| Example 39-A | Li_{0.994}Mo_{0.001}Mn_{0.65}Fe_{0.35}P_{0.999}Si_{0.001}O_{3.999}F_{0.001} | 2.5% Li₂FeP₂O₇/1.5% LiFePO₄ | 1% of carbon |
| Example 40-A | Li_{0.994}Mo_{0.001}Mn_{0.65}Fe_{0.35}P_{0.999}Si_{0.001}O_{3.999}F_{0.001} | 3% Li₂FeP₂O₇/1% LiFePO₄ | 1% of carbon |

**Table 6-A**

| No. | Latti ce chan ge rate (%) | Li/Mn antisite defect concentra tion (%) | Surfa ce oxyg en valen cy | Compac ted density (g/cm³) | Dissolut ion of Fe and Mn after cycling (ppm) | Capac ity per gram of button batter y at 0.1 C (mAh/ g) | Avera ge dischar ge voltag e of button battery (V) | Number of cycles correspon ding to 80% capacity retention rate at 45°C | Expans ion of battery upon 30 days of storage at 60°C (%) |
|---|---|---|---|---|---|---|---|---|---|
| Example 28-A | 6.3 | 1.5 | -1.98 | 2.26 | 105 | 159.1 | 3.76 | 1085 | 2.6 |
| Exam ple 29-A | 6.3 | 0.8 | -1.97 | 2.25 | 89 | 158.7 | 3.74 | 1235 | 2.2 |
| Exam ple 30-A | 6.2 | 0.6 | -1.98 | 2.25 | 53 | 157.0 | 3.75 | 1329 | 1.8 |
| Exam ple 31-A | 6.2 | 0.4 | -1.97 | 2.24 | 31 | 156.4 | 3.75 | 1501 | 1.5 |
| Exam ple 32-A | 6.3 | 0.3 | -1.99 | 2.26 | 18 | 155.3 | 3.76 | 1632 | 1.1 |
| Exam ple 33-A | 6.2 | 0.5 | -1.97 | 2.18 | 65 | 156.8 | 3.77 | 1312 | 1.9 |
| Exam ple 34-A | 6.2 | 0.4 | -1.98 | 2.17 | 51 | 155.6 | 3.78 | 1341 | 1.7 |
| Exam ple 35-A | 6.1 | 0.3 | -1.99 | 2.16 | 39 | *155* | 3.79 | 1518 | 1.5 |
| Exam ple 36-A | 6.1 | 0.3 | -1.98 | 2.15 | 21 | 154.5 | 3.79 | 1649 | 1.4 |
| Exam ple 37-A | 6.2 | 0.5 | -1.99 | 2.18 | 69 | 156.8 | 3.76 | 1258 | 2.2 |
| Exam ple 38-A | 6.3 | 0.4 | -1.97 | 2.17 | 71 | 156.4 | 3.75 | 1201 | 2.3 |
| Exam ple 39-A | 6.3 | 0.5 | -1.96 | 2.16 | 65 | 155.9 | 3.75 | 1169 | 2.4 |
| Exam ple 40-A | 6.3 | 0.6 | -1.94 | 2.19 | 59 | 155.6 | 3.74 | 1131 | 2.5 |

From the combination of example 1-A and examples 28-A to 32-A, it can be seen that as the amount of the first coating layer increases from 3.2% to 6.4%, the Li/Mn antisite defect concentration of the obtained positive electrode active material gradually decreases, the dissolution of Fe and Mn after cycling gradually decreases, and the corresponding battery has an improved safety performance and cycling performance as well but a slightly reduced capacity per gram. Optionally, when the total amount of the first coating layer is 4-5.6 wt%, the overall performance of the corresponding battery is the best.

From the combination of example 1-A and examples 33-A to 36-A, it can be seen that as the amount of the second coating layer increases from 1% to 6%, the Li/Mn antisite defect concentration of the obtained positive electrode active material gradually decreases, the dissolution of Fe and Mn after cycling gradually decreases, and the corresponding battery has an improved safety performance and cycling performance as well but a slightly reduced capacity per gram. Optionally, when the total amount of the second coating layer is 3-5 wt%, the overall performance of the corresponding battery is the best.

From the combination of example 1-A and examples 37-A to 40-A, it can be seen that when the first coating layer comprises both Li₂FeP₂O₇ and LiFePO₄, and in particular the weight ratio of Li₂FeP₂O₇ to LiFePO₄ is 1 : 3 to 3 : 1, especially 1 : 3 to 1 : 1, the performance of the battery is obviously improved.

Table 7-A shows the performance data of the positive electrode active materials, the positive electrode plates, the button batteries or the full batteries of examples 1-A, and 41-A to 43-A obtained according to the performance test method above.

**Table 7-A**

| No. | Crystalli nity of pyrophos phate and phosphat e | Latt ice cha nge rate (%) | Li/Mn antisite defect concentr ation (%) | Surf ace oxy gen valency | Compa cted density (g/cm³ ) | Dissol ution of Fe and Mn after cycling (ppm) | Capa city per gram of butto n batter y at 0.1 C (mA h/g) | Avera ge disch arge voltage of butto n batter y (V) | Number of cycles corresp onding to 80% capacity retentio n rate at 45°C | Expans ion of battery upon 30 days of storage at 60°C (%) |
|---|---|---|---|---|---|---|---|---|---|---|
| Exa mple 1-A | 100% | 6.2 | 0.7 | -1.97 | 2.23 | 83 | 157.6 | 3.75 | 1285 | 2.1 |
| Exa mple 41-A | 30% | 7.8 | 1 | -1.98 | 2.21 | 139 | 152.4 | 3.73 | 915 | 5.9 |
| Exa mple 42-A | 50% | 7.2 | 0.9 | -1.96 | 2.22 | 111 | 154.8 | 3.74 | 1002 | 4.2 |
| Exa mple 43-A | 70% | 6.8 | 0.8 | -1.97 | 2.23 | 98 | 155.9 | 3.75 | 1149 | 3 |

It can be seen from Table 7 that as the crystallinity of pyrophosphate and phosphate in the first coating layer gradually increases, the corresponding positive electrode active material has gradually reduced lattice change rate, Li/Mn antisite defect concentration, and dissolution of Fe and Mn after cycling, such that the capacity of the battery is increased gradually and the safety performance and cycling performance thereof are also improved gradually.

In examples 44-A to 57-A, except that the stirring rotation speed and the heating temperature during the preparation of a doped manganese oxalate in step S1, and the time for grinding and stirring in a sander and the sintering temperature and sintering time during the preparation of a co-doped lithium manganese phosphate inner core in step S2 were changed, the other conditions were the same as example 1-A. See Table 8-A below for details. Table 9-A shows the performance data of the positive electrode active materials, the positive electrode plates, the button batteries or the full batteries of examples 44-A to 57-A obtained according to the performance test method above.

**Table 8-A**

| No. | Step S1 | | Step S2 | | |
|---|---|---|---|---|---|
| | Stirring rotation speed (rpm) | Stirring temperature (°C) | Grinding time (h) | Sintering temperature (°C) | Sintering time (h) |
| Example 44-A | 200 | 50 | 12 | 700 | 10 |
| Example 45-A | 300 | 50 | 12 | 700 | 10 |
| Example 46-A | 400 | 50 | 12 | 700 | 10 |
| Example 47-A | 500 | 50 | 12 | 700 | 10 |
| Example 48-A | 600 | 50 | 10 | 700 | 10 |
| Example 49-A | 700 | 50 | 11 | 700 | 10 |
| Example 50-A | 800 | 50 | 12 | 700 | 10 |
| Example 51-A | 600 | 60 | 12 | 700 | 10 |
| Example 52-A | 600 | 70 | 12 | 700 | 10 |
| Example 53-A | 600 | 80 | 12 | 700 | 10 |
| Example 54-A | 600 | 90 | 12 | 600 | 10 |
| Example 55-A | 600 | 100 | 12 | 800 | 10 |
| Example 56-A | 600 | 110 | 12 | 700 | 8 |
| Example 57-A | 600 | 120 | 12 | 700 | 12 |

**Table 9-A**

| No. | Latti ce chan ge rate (%) | Li/Mn antisite defect concentra tion (%) | Surfa ce oxyg en valen cy | Compac ted density (g/cm³) | Dissolut ion of Fe and Mn after cycling (ppm) | Capac ity per gram of button batter y at 0.1 C (mAh/ g) | Avera ge dischar ge voltag e of button battery (V) | Number of cycles correspon ding to 80% capacity retention rate at 45°C | Expans ion of battery upon 30 days of storage at 60°C (%) |
|---|---|---|---|---|---|---|---|---|---|
| Exam ple 44-A | 7.6 | 0.8 | -1.97 | 2.23 | 88 | 156.2 | 3.74 | 1165 | 2 |
| Example 45-A | 7.2 | 0.7 | -1.98 | 2.22 | 87 | 156.8 | 3.75 | 1190 | 2.1 |
| Exam ple 46-A | 7.3 | 0.7 | -1.97 | 2.21 | 85 | 156.9 | 3.76 | 1198 | 2.2 |
| Exam ple 47-A | 7.0 | 0.7 | -1.98 | 2.22 | 84 | 157 | 3.74 | 1213 | 2.2 |
| Exam ple 48-A | 6.6 | 0.7 | -1.97 | 2.23 | 83 | 157.3 | 3.75 | 1270 | 2 |
| Exam ple 49-A | 6.7 | 0.6 | -1.99 | 2.22 | 81 | 158 | 3.76 | 1301 | 2.1 |
| Exam ple 50-A | 6.4 | 0.6 | -1.97 | 2.24 | 79 | 158.2 | 3.75 | 1268 | 2.1 |
| Exam ple 51-A | 6.3 | 0.7 | -1.98 | 2.22 | 87 | 157.6 | 3.74 | 1199 | 2 |
| Exam ple 52-A | 6.3 | 0.7 | -1.96 | 2.24 | 86 | 157.8 | 3.76 | 1245 | 2 |
| Exam ple 53-A | 6.3 | 0.6 | -1.97 | 2.21 | 82 | 157.8 | 3.75 | 1294 | 2.1 |
| Exam ple 54-A | 6.4 | 0.6 | -1.99 | 2.21 | 79 | 156.4 | 3.76 | 1287 | 2.2 |
| Exam ple 55-A | 6.7 | 0.6 | -1.98 | 2.23 | 88 | 157.1 | 3.74 | 1269 | 2 |
| Exam ple 56-A | 7.0 | 0.7 | -1.97 | 2.22 | 79 | 157.2 | 3.74 | 1248 | 2 |
| Exam ple 57-A | 7.7 | 0.8 | -1.99 | 2.21 | 84 | 157 | 3.76 | 1212 | 2.2 |

It can be seen from Table 9-A that the performance of the positive electrode active material and battery can be further improved by adjusting the stirring rotation speed and the heating temperature during the preparation of a doped manganese oxalate in step S1, and the time for grinding and stirring in a sander and the sintering temperature and sintering time during the preparation of a co-doped lithium manganese phosphate inner core in step S2.

In examples 58-A to 61-A, except that the drying temperature, drying time, sintering temperature and sintering time in step S3 of preparing a lithium iron pyrophosphate powder were changed, the other conditions were the same as example 1-A. See Table 10-A below for details. Table 11-A shows the performance data of the positive electrode active materials, the positive electrode plates, the button batteries or the full batteries of examples 58-A to 61-A obtained according to the performance test method above.

In examples 62-A to 64-A, except that the drying temperature, drying time, sintering temperature and sintering time in the coating step S5 were changed, the other conditions were the same as example 38. See Table 12-A below for details. Table 13-A shows the performance data of the positive electrode active materials, the positive electrode plates, the button batteries or the full batteries of examples 62-A to 64-A obtained according to the performance test method above.

**Table 10-A**

| No. | Li₂FeP₂O₇ : LiFePO₄ (weight ratio) | Step S3 | | | | Lattice spacing of pyrophosp hate (nm) | Included angle of pyrophosp hate (°) | Lattice spacin g of phosph ate (nm) | Include d angle of phosph ate (°) |
|---|---|---|---|---|---|---|---|---|---|
| | | Drying temper ature (°C) | Drying time (h) | Sinter ing tempe rature (°C) | Sinter ing time (h) | | | | |
| Exam ple 58-A | 1 : 3 | 100 | 4 | 700 | 6 | 0.303 | 29.496 | 0.348 | 25.562 |
| Exam ple 59-A | 1 : 3 | 150 | 6 | 700 | 6 | 0.303 | 29.496 | 0.348 | 25.562 |
| Exam ple 60-A | 1 : 3 | 200 | 6 | 700 | 6 | 0.303 | 29.496 | 0.348 | 25.562 |
| Exam ple 61-A | 1 : 3 | 200 | 6 | 600 | 6 | 0.303 | 29.496 | 0.348 | 25.562 |

**Table 11-A**

| No. | Latti ce chan ge rate (%) | Li/Mn antisite defect concentrat ion (%) | Surfa ce oxyge n valen cy | Compact ed density (g/cm³) | Dissoluti on of Fe and Mn after cycling (ppm) | Capaci ty per gram of button battery at 0.1 C (mAh/ g) | Averag e dischar ge voltage of button battery (V) | Number of cycles correspond ing to 80% capacity retention rate at 45°C | Expansi on of battery upon 30 days of storage at 60°C (%) |
|---|---|---|---|---|---|---|---|---|---|
| Examp le 58-A | 6.4 | 0.7 | -1.98 | 2.22 | 78 | 156.8 | 3.74 | 1205 | 1.8 |
| Examp le 59-A | 6.2 | 0.7 | -1.97 | 2.23 | 79 | 158.1 | 3.76 | 1246 | 2 |
| Examp le 60-A | 6.2 | 0.7 | -1.98 | 2.24 | 76 | 159.9 | 3.75 | 1278 | 2.1 |
| Examp le 61-A | 6.3 | 1.2 | -1.96 | 2.23 | 95 | 155.1 | 3.74 | 1179 | 2.4 |

**Table 12-A**

| No. | Li₂FeP₂ O₇ : LiFeP O₄ (weight ratio) | Step S5 | | | | Lattice spacing of pyrophosp hate (nm) | Included angle of pyrophosp hate (°) | Lattice spacing of phosph ate (nm) | Include d angle of phosph ate (°) |
|---|---|---|---|---|---|---|---|---|---|
| | | Drying temperat ure (°C) | Dryi ng time (h) | Sinterin g temperat ure (°C) | Sinteri ng time (h) | | | | |
| Exam ple 62-A | 1 : 1 | 150 | 6 | 680 | 4 | 0.303 | 29.496 | 0.348 | 25.562 |
| Exam ple 63-A | 1 : 1 | 150 | 6 | 750 | 6 | 0.303 | 29.496 | 0.348 | 25.562 |
| Exam ple 64-A | 1 : 1 | 150 | 6 | 800 | 8 | 0.303 | 29.496 | 0.348 | 25.562 |

**Table 13-A**

| No. | Lattice change rate (%) | Li/Mn antisite defect concent ration (%) | Surfa ce oxyge n valen cy | Compact ed density (g/cm³) | Dissoluti on of Fe and Mn after cycling (ppm) | Capaci ty per gram of button battery at 0.1 C (mAh/ g) | Averag e dischar ge voltage of button battery (V) | Number of cycles correspond ing to 80% capacity retention rate at 45°C | Expansi on of battery upon 30 days of storage at 60°C (%) |
|---|---|---|---|---|---|---|---|---|---|
| Exampl e 62-A | 6.5 | 0.8 | -1.98 | 2.22 | 92 | 155.3 | 3.76 | 1185 | 2.5 |
| Exampl e 63-A | 6.3 | 0.5 | -1.96 | 2.24 | 65 | 160.5 | 3.76 | 1305 | 2.2 |
| Exampl e 64-A | 6.2 | 0.5 | -1.97 | 2.24 | 57 | 158.7 | 3.76 | 1269 | 1.9 |

It can be seen from Tables 10-A and 13-A, that the performance of the positive electrode active material and the battery can be further improved by adjusting parameters such as the drying temperature, drying time, sintering temperature and sintering time in steps S3 to S5.

The preparation and performance tests of examples of the positive electrode active material having an inner core of L₁₊xMn_{1-y}A_{y}P_{1-z}R_{z}O₄ and a shell comprising a first coating layer containing a crystalline pyrophosphate of QP₂O₇ and a metal oxide of Q'ₑO_{f} and a second coating layer of a carbon coating layer will be detailed below:

The sources of the raw materials involved in the preparation examples and examples are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄•2H₂O | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Hisian Biotechnology Co., Ltd. | Mass fraction 60% |
| Nitric acid | HNO₃ | Anhui Lingtian Fine Chemical Co., Ltd. | Mass fraction 60% |
| Nitric acid | HNO₃ | Anhui Lingtian Fine Chemical Co., Ltd. | Mass fraction 85% |
| Metasilicic acid | H₂SiO₃ | Shanghai Yuanye Biotechnology Co., Ltd. | 100 g |
| Boronic acid | H₃BO₃ | Changzhou Qidi Chemical Co., Ltd. | 1 Kg |
| Aluminum oxide | Al2O3 | Hebei Guanlang Biotechnology Co., Ltd. | 25 Kg |
| Magnesium oxide | MgO | Hebei Guanlang Biotechnology Co., Ltd. | 25 Kg |
| Zirconium dioxid | ZrO2 | Qingyuan Shengyi Biotechnology Co., Ltd. | 1 Kg |
| Copper oxide | CuO | Hebei Guanlang Biotechnology Co., Ltd. | 25 Kg |
| Silica | SiO2 | Hebei Guanlang Biotechnology Co., Ltd. | 25 Kg |
| Tungsten trioxide | WO3 | Hebei Guanlang Biotechnology Co., Ltd. | 25 Kg |
| Titanium dioxide | TiO2 | Shanghai Yuanye Biotechnology Co., Ltd. | 500 g |
| Vanadium pentoxide | V2O5 | Shanghai Jinjinle Industrial Co., Ltd. | 1 Kg |
| Nickel oxide | NiO | Hubei Wande Chemical Co., Ltd. | 25 Kg |

### Example 1-1

### (1) Preparation of co-doped lithium manganese phosphate inner core

**Preparation of Fe, Co and V co-doped manganese oxalate:** 689.5 g of manganese carbonate (in MnCO₃, the same below), 455.2 g of ferrous carbonate (in FeCO₃, the same below), 4.6 g of cobalt sulfate (in CoSO₄, the same below), and 4.9 g of vanadium dichloride (in VCl₂, the same below) were mixed thoroughly for 6 hours in a mixer. The mixture was transferred into a reaction kettle, and 5 L of deionized water and 1260.6 g of oxalic acid dihydrate (in C₂H₂O₄.2H₂O, the same below) were added. The reaction kettle was heated to 80°C, and the mixture was stirred for 6 hours at a rotation speed of 600 rpm until the reaction was completed (no bubble was generated), so as to obtain a Fe, Co and V co-doped manganese oxalate suspension. Then, the suspension was filtered, and the resultant filter cake was dried at 120°C and then ground, so as to obtain Fe, Co, and V co-doped manganese oxalate dihydrate particles with a median particle size Dv50 of 100 nm.

**Preparation of Fe, Co, V and S co-doped lithium manganese phosphate:** The manganese oxalate dihydrate particles (1793.4 g) obtained in the previous step, 369.0 g of lithium carbonate (in Li₂CO₃, the same below), 1.6 g of 60% dilute sulfuric acid (in 60% H₂SO₄, the same below), and 1148.9 g of ammonium dihydrogen phosphate (in NH₄H₂PO₄, the same below) were added into 20 L of deionized water, and the mixture was stirred for 10 hours until mixed uniformly, so as to obtain a slurry. The slurry was transferred into a spray drying apparatus for spray-drying granulation, where the drying temperature was set at 250°C and the drying time was 4 h, so as to obtain a powder. The above powder was sintered at 700°C for 4 hours in a protective atmosphere of nitrogen (90% by volume) + hydrogen (10% by volume), so as to obtain 1572.1 g of Fe, Co, V and S co-doped lithium manganese phosphate.

### (2) Preparation of lithium iron pyrophosphate and suspension comprising aluminum oxide and sucrose

**Preparation of lithium iron pyrophosphate powder:** 4.77 g of lithium carbonate, 7.47 g of ferrous carbonate, 14.84 g of ammonium dihydrogen phosphate, and 1.3 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 h to obtain a powder. The powder was sintered at 650°C in a nitrogen atmosphere for 8 hours, naturally cooled to room temperature, and then ground to obtain a Li₂FeP₂O₇ powder.

**Preparation of suspension comprising aluminum oxide and sucrose:** 47.1 g of nano-Al₂O₃ (with a particle size of about 20 nm) and 74.6 g of sucrose (in C₁₂H₂₂O₁₁, the same below) were dissolved in 1500 ml of deionized water, and then the mixture was stirred for 6 hours until mixed uniformly. Then, the resulting solution was heated to 120°C and held at the temperature for 6 hours to obtain a suspension comprising aluminum oxide and sucrose.

### (3) Coating

1572.1 g of the Fe, Co, V and S co-doped lithium manganese phosphate above and 15.72 g of the lithium iron pyrophosphate (Li₂FeP₂O₇) powder above were added into the suspension comprising aluminum oxide and sucrose prepared in the previous step, stirred and mixed until uniform, then transferred to a vacuum oven and dried at 150°C for 6 h. The resulting product was then dispersed by sanding. After dispersion, the obtained product was sintered at 700°C in a nitrogen atmosphere for 6 hours to obtain the target product of two-layer coated lithium manganese phosphate.

### Examples 1-2 to 1-6

During the preparation of a co-doped lithium manganese phosphate inner core, the preparation conditions for the lithium manganese phosphate inner cores in examples 1-2 to 1-6 were the same as example 1-1, except that vanadium dichloride and cobalt sulfate were not used, and 463.4 g of ferrous carbonate, 1.6 g of 60% dilute sulfuric acid, 1148.9 g of ammonium dihydrogen phosphate, and 369.0 g of lithium carbonate were used.

In addition, in the process of preparing the lithium iron pyrophosphate and suspension comprising aluminum oxide and sucrose and in the process of coating the first coating layer and the second coating layer, except that the raw materials used were adjusted correspondingly according to the ratio of the coating amount shown in Table 1 to the coating amount corresponding to example 1-1, such that the amount of Li₂FeP₂O₇/Al₂O₃ in examples 1-2 to 1-6 was 12.6 g/37.68 g, 15.7 g/47.1 g, 18.8 g/56.52 g, 22.0 g /65.94 g and 25.1 g/75.36 g, respectively, and the amount of sucrose in examples 1-2 to 1-6 was 37.3 g, the other conditions were the same as example 1-1.

### Examples 1-7 to 1-10

The conditions in examples 1-7 to 1-10 were the same as example 1-3, except that the amounts of sucrose were 74.6 g, 149.1 g, 186.4 g and 223.7 g, respectively, such that the corresponding coating amount of the carbon layer as the second coating layer was 31.4 g, 62.9 g, 78.6 g and 94.3 g, respectively.

### Examples 1-11 to 1-14

The conditions in examples 1-11 to 1-14 were the same as example 1-7, except that in the process of preparing the lithium iron pyrophosphate and suspension comprising aluminum oxide and sucrose, the amounts of raw materials were adjusted correspondingly according to the coating amount shown in Table 1, such that the amount of Li₂FeP₂O₇/Al₂O₃ was 23.6 g/39.25 g, 31.4 g/31.4 g, 39.3 g/23.55 g and 47.2 g/15.7 g, respectively.

### Example 1-15

The conditions in example 1-15 were the same as example 1-14, except that in the process of preparing the co-doped lithium manganese phosphate inner core, ferrous carbonate was replaced with 492.80 g of ZnCO₃.

### Examples 1-16 to 1-18

The conditions in examples 1-16 to 1-18 were the same as example 1-7, except that in the preparation process of the co-doped lithium manganese phosphate inner core of example 1-16, ferrous carbonate was replaced with 466.4 g of NiCO₃, 5.0 g of zinc carbonate and 7.2 g of titanium sulfate; in the preparation process of the co-doped lithium manganese phosphate inner core of example 1-17, 455.2 g of ferrous carbonate and 8.5 g of vanadium dichloride were used; and in the preparation process of the co-doped lithium manganese phosphate inner core of example 1-18, 455.2 g of ferrous carbonate, 4.9 g of vanadium dichloride and 2.5 g of magnesium carbonate were used.

### Examples 1-19 to 1-20

The conditions in examples 1-19 to 1-20 were the same as example 1-18, except that in the preparation process of the co-doped lithium manganese phosphate inner core of example 1-19, 369.4 g of lithium carbonate was used, and dilute sulfuric acid was replaced by 1.05 g of 60% dilute nitric acid; and in the preparation process of the co-doped lithium manganese phosphate inner core of example 1-20, 369.7 g of lithium carbonate was used, and dilute sulfuric acid was replaced with 0.78 g of metasilicic acid.

### Examples 1-21 to 1-22

Except that in the preparation process of the co-doped lithium manganese phosphate inner core of example 1-21, 632.0 g of manganese carbonate, 463.30 g of ferrous carbonate, 30.5 g of vanadium dichloride, 21.0 g of magnesium carbonate and 0.78 g of metasilicic acid were used; and in the preparation process of the co-doped lithium manganese phosphate inner core of example 1-22, 746.9 g of manganese carbonate, 289.6 g of ferrous carbonate, 60.9 g of vanadium dichloride, 42.1 g of magnesium carbonate and 0.78 g of metasilicic acid were used, the conditions in examples 1-21 to 1-22 were the same as example 1-20.

### Examples 1-23 to 1-24

Except that in the preparation process of the co-doped lithium manganese phosphate inner core of example 1-23, 804.6 g of manganese carbonate, 231.7 g of ferrous carbonate, 1156.2 g of ammonium dihydrogen phosphate, 1.2 g of boric acid (with a mass fraction of 99.5%) and 370.8 g of lithium carbonate were used; and in the preparation process of the co-doped lithium manganese phosphate inner core of example 1-24, 862.1 g of manganese carbonate, 173.8 g of ferrous carbonate, 1155.1 g of ammonium dihydrogen phosphate, 1.86 g of boric acid (with a mass fraction of 99.5%) and 371.6 g of lithium carbonate were used, the conditions in examples 1-23 to 1-24 were the same as example 1-22.

### Example 1-25

The conditions in example 1-25 were the same as Example 1-20, except that in the preparation process of the co-doped lithium manganese phosphate inner core of example 1-25, 370.1 g of lithium carbonate, 1.56 g of metasilicic acid and 1147.7 g of ammonium dihydrogen phosphate were used.

### Example 1-26

The conditions in example 1-26 were the same as Example 1-20, except that in the preparation process of the co-doped lithium manganese phosphate inner core of example 1-26, 368.3 g of lithium carbonate, 4.9 g of dilute sulfuric acid (with a mass fraction of 60%), 919.6 g of manganese carbonate, 224.8 g of ferrous carbonate, 3.7 g of vanadium dichloride, 2.5 g of magnesium carbonate and 1146.8 g of ammonium dihydrogen phosphate were used.

### Example 1-27

The conditions in example 1-27 were the same as example 1-20, except that in the preparation process of the co-doped lithium manganese phosphate inner core of example 1-27, 367.9 g of lithium carbonate, 6.5 g of 60% dilute sulfuric acid and 1145.4 g of ammonium dihydrogen phosphate were used.

### Examples 1-28 to 1-33

Except that in the preparation process of the co-doped lithium manganese phosphate inner core of examples 1-28 to 1-33, 1034.5 g of manganese carbonate, 108.9 g of ferrous carbonate, 3.7 g of vanadium dichloride and 2.5 g of magnesium carbonate were used; the amounts of lithium carbonate were respectively: 367.6 g, 367.2 g, 366.8 g, 366.4 g, 366.0 g and 332.4 g; the amounts of ammonium dihydrogen phosphate were respectively: 1144.5 g, 1143.4 g, 1142.2 g, 1141.1 g, 1139.9 g and 1138.8 g; and the amounts of 60% dilute sulfuric acid were respectively: 8.2 g, 9.8 g, 11.4 g, 13.1 g, 14.7 g and 16.3 g, the conditions in examples 1-28 to 1-33 were the same as example 1-20.

### Examples 1-34 to 1-38, and example 1-43

Except that in the process of preparing the lithium iron pyrophosphate and suspension comprising an oxide and sucrose and in the process of coating the first coating layer and the second coating layer, the raw materials used were adjusted correspondingly according to the ratio of the coating amount shown in Table 1 to the coating amount corresponding to example 1-1, such that the amounts of Li₂FeP₂O₇/MgO in example 1-34 were 15.72 g/47.1 g respectively, the amounts of Li₂FeP₂O₇/ZrO₂ in example 1-35 were 15.72 g/47.1 g respectively, the amounts of Li₂FeP₂O₇/ZnO in example 1-36 were 15.72 g/47.1 g respectively, the amounts of Li₂FeP₂O₇/SnO₂ in example 1-37 were 15.72 g/47.1 g respectively, the amounts of Li₂FeP₂O₇/SiO₂ in example 1-38 were 15.72 g/47.1 g respectively, and the amounts of Li₂FeP₂O₇/V₂O₅ in example 1-43 were 15.72 g/47.1 g respectively, the other conditions were the same as example 1-1.

### Example 1-39 to example 1-41

### 1) Preparation of inner core of Li_{1.1}Mn_{0.6}Fe_{0.393}Mg_{0.007}P_{0.9}Si_{0.1}O₄ in example 1-39.

**Preparation of Fe and Mg co-doped manganese oxalate:** 689.5 g of manganese carbonate (in MnCO₃, the same below), 455.2 g of ferrous carbonate (in FeCO₃, the same below) and 5.90 g of magnesium carbonate (in MgCO₃, the same below) were mixed thoroughly for 6 hours in a mixer. The mixture was transferred into a reaction kettle, and 5 L of deionized water and 1260.6 g of oxalic acid dihydrate (in C₂H₂O₄.2H₂O, the same below) were added. The reaction kettle was heated to 80°C, and the mixture was stirred for 6 hours at a rotation speed of 600 rpm until the reaction was completed (no bubble was generated), so as to obtain a Fe and Mg co-doped manganese oxalate suspension. Then, the suspension was filtered, and the resultant filter cake was dried at 120°C and then ground, so as to obtain Fe and Mg co-doped manganese oxalate dihydrate particles with a median particle size Dv50 of 100 nm.

**Preparation of Fe, Mg and Si co-doped lithium manganese phosphate:** Manganese oxalate dihydrate particles (1791.3 g) obtained in the previous step, 406.3 g of lithium carbonate (in Li₂CO₃, the same below), 7.8 g of metasilicic acid (in H₂SiO₃, the same below) and 1035.0 g of ammonium dihydrogen phosphate (in NH₄H₂PO₄, the same below) were added into 20 L of deionized water, and the mixture was stirred for 10 hours until mixed uniformly, so as to obtain a slurry. The slurry was transferred into a spray drying apparatus for spray-drying granulation, where the drying temperature was set at 250°C and the drying time was 4 h, so as to obtain a powder. The above powder was sintered at 700°C for 4 hours in a protective atmosphere of nitrogen (90% by volume) + hydrogen (10% by volume), so as to obtain 1574.0 g of Fe, Mg, and Si co-doped lithium manganese phosphate.

### 2) Preparation of inner core of LiMn_{0.999}Fe_{0.001}P_{0.995}N_{0.005}O₄ in example 1-40.

**Preparation of Fe-doped manganese oxalate:** 1148.0 g of manganese carbonate (in MnCO₃, the same below) and 11.58 g of ferrous carbonate (in FeCO₃, the same below) were mixed thoroughly for 6 hours in a mixer. The mixture was transferred into a reaction kettle, and 5 L of deionized water and 1260.6 g of oxalic acid dihydrate (in C₂H₂O₄.2H₂O, the same below) were added. The reaction kettle was heated to 80°C, and the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe doped manganese oxalate dihydrate particles with a median particle size Dv50 of 100 nm.

**Preparation of Fe and N co-doped lithium manganese phosphate:** Manganese oxalate dihydrate particles (1789.9 g) obtained in the previous step, 369.4 g of lithium carbonate (in Li₂CO₃, the same below), 5.25 g of dilute nitric acid (in 60% HNO₃, the same below) and 1144.3 g of ammonium dihydrogen phosphate (in NH₄H₂PO₄, the same below) were added into 20 L of deionized water, and the mixture was stirred for 10 hours until mixed uniformly, so as to obtain a slurry. The slurry was transferred into a spray drying apparatus for spray-drying granulation, where the drying temperature was set at 250°C and the drying time was 4 h, so as to obtain a powder. The above powder was sintered at 700°C for 4 hours in a protective atmosphere of nitrogen (90% by volume) + hydrogen (10% by volume), so as to obtain 1567.7 g of Fe and N co-doped lithium manganese phosphate.

### 3) Preparation of inner core of LiMn_{0.50}Fe_{0.50}P_{0.995}N_{0.005}O₄ in example 1-41.

**Preparation of Fe-doped manganese oxalate:** 574.7 g of manganese carbonate (in MnCO₃, the same below) and 579.27 g of ferrous carbonate (in FeCO₃, the same below) were mixed thoroughly for 6 hours in a mixer. The mixture was transferred into a reaction kettle, and 5 L of deionized water and 1260.6 g of oxalic acid dihydrate (in C₂H₂O₄.2H₂O, the same below) were added. The reaction kettle was heated to 80°C, and the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe doped manganese oxalate dihydrate particles with a median particle size Dv50 of 100 nm.

**Preparation of Fe and N co-doped lithium manganese phosphate:** Manganese oxalate dihydrate particles (1794.4 g) obtained in the previous step, 369.4 g of lithium carbonate (in Li₂CO₃, the same below), 5.25 g of dilute nitric acid (in 60% HNO₃, the same below) and 1144.3 g of ammonium dihydrogen phosphate (in NH₄H₂PO₄, the same below) were added into 20 L of deionized water, and the mixture was stirred for 10 hours until mixed uniformly, so as to obtain a slurry. The slurry was transferred into a spray drying apparatus for spray-drying granulation, where the drying temperature was set at 250°C and the drying time was 4 h, so as to obtain a powder. The above powder was sintered at 700°C for 4 hours in a protective atmosphere of nitrogen (90% by volume) + hydrogen (10% by volume), so as to obtain 1572.2 g of Fe and N co-doped lithium manganese phosphate.

With regard to the other conditions of example 1-39 to example 1-41, reference can be made to example 1-1.

### Example 1-42

In the preparation process of zirconium pyrophosphate, 123.2 g of zirconium dioxide (in ZrO₂, the same below) and 230.6 g of phosphoric acid (in 85% H₃PO₄, the same below) were mixed thoroughly. The mixture was heated to 350°C while stirring continuously for 2 hours such that the reaction mixture was fully reacted. Then the reacted solution was held at 350°C for 4 hours to obtain a viscous paste comprising ZrP₂O₇, which finally became a solid; the solid was washed with deionized water, and the resulting product was ground in a ball mill containing ethanol for 4 h, and the resulting product was dried under an infrared lamp to obtain a ZrP₂O₇ powder.

### Example 1-44

In the preparation process of silver pyrophosphate, 463.4 of silver oxide (in Ag₂O, the same below) and 230.6 phosphoric acid (in 85% H₃PO₄, the same below) were mixed thoroughly. The mixture was heated to 450°C while stirring continuously for 2 hours such that the reaction mixture was fully reacted. Then the reacted solution was held at 450°C for 4 hours to obtain a viscous paste comprising Ag₄P₂O₇, which finally became a solid; the solid was washed with deionized water, and the resulting product was ground in a ball mill containing ethanol for 4 h, and the resulting product was dried under an infrared lamp to obtain a Ag₄P₂O₇ powder.

### Example 1-45

Except that in the preparation process of the inner core, 1044.6 g of manganese carbonate, 1138.5 g of ammonium dihydrogen phosphate and 369.4 g of lithium carbonate were used, and 105.4 g of ferrous carbonate and 10.5 g of dilute nitric acid (in 60% HNO₃, the same below) were additionally added, the others are the same as example 1-1.

### Example 1-46

Except that in the preparation process of the inner core, 104.5 g of manganese carbonate, 1138.5 g of ammonium dihydrogen phosphate and 371.3 g of lithium carbonate were used, and 1052.8 g of ferrous carbonate and 5.25 g of dilute nitric acid (in 60% HNO₃, the same below) were additionally added, the rest were the same as example 1-1.

### Example 1-47

Except that in the process of preparing the lithium iron pyrophosphate and suspension comprising aluminum oxide and sucrose, the amounts of raw materials were adjusted correspondingly according to the coating amount shown in Table 1, such that the amounts of Li₂FeP₂O₇/Al₂O₃ were 62.9 g/47.1 g, respectively, the conditions in example 1-47 were the same as example 1-1.

### Example 1-48

Except that the amount of sucrose was 111.9 g, such that the corresponding amount of the carbon layer as the second coating layer was 47.1 g, the other operations were the same as example 1-1.

### Example 1-49

Except that in the preparation process of the inner core, 1034.3 g of manganese carbonate, 1138.5 g of ammonium dihydrogen phosphate and 371.3 g of lithium carbonate were used, and 115.8 g of ferrous carbonate and 5.25 g of dilute nitric acid (in 60% HNO₃, the same below) were additionally added, the rest were the same as example 1-1.

### Example 1-50

Except that in the preparation process of the inner core, 1091.8 g of manganese carbonate, 1138.5 g of ammonium dihydrogen phosphate and 371.3 g of lithium carbonate were used, and 57.9 g of ferrous carbonate and 5.25 g of dilute nitric acid (in 60% HNO₃, the same below) were additionally added, the rest were the same as example 1-1.

### Example 1-51

Except that in the preparation process of the inner core, 804.5 g of manganese carbonate, 1138.5 g of ammonium dihydrogen phosphate and 371.3 g of lithium carbonate were used, and 347.4 g of ferrous carbonate and 5.25 g of dilute nitric acid (in 60% HNO₃, the same below) were additionally added, the amount of sucrose was 111.9 g, and the corresponding coating amount of carbon was 47.1 g, the rest were the same as example 1-1.

### Example 1-52

Except that 747.0 g of manganese carbonate, 1138.5 g of ammonium dihydrogen phosphate and 371.3 g of lithium carbonate were used, and 405.3 g of ferrous carbonate and 5.25 g of dilute nitric acid (in 60% HNO₃, the same below) were additionally added, the amount of sucrose was 111.9 g, and the corresponding coating amount of carbon was 47.1 g, the rest were the same as example 1-1.

### Example 2-1

Except that in the powder sintering step during the preparation process of lithium iron pyrophosphate (Li₂FeP₂O₇), the sintering temperature was 550°C and the sintering time was 1 h to control the crystallinity of Li₂FeP₂O₇ to be 30%; and in the coating sintering step during the preparation process of Al₂O₃, the sintering temperature was 650°C and the sintering time was 2 h to control the crystallinity of Al₂O₃ to be 100%, the other conditions were the same as example 1-1.

### Example 2-2

Except that in the powder sintering step during the preparation process of lithium iron pyrophosphate (Li₂FeP₂O₇), the sintering temperature was 550°C and the sintering time was 2 h to control the crystallinity of Li₂FeP₂O₇ to be 50%; and in the coating sintering step during the preparation process of Al₂O₃, the sintering temperature was 650°C and the sintering time was 3 h to control the crystallinity of Al₂O₃ to be 100%, the other conditions were the same as example 1-1.

### Example 2-3

Except that in the powder sintering step during the preparation process of lithium iron pyrophosphate (Li₂FeP₂O₇), the sintering temperature was 600°C and the sintering time was 3 h to control the crystallinity of Li₂FeP₂O₇ to be 70%; and in the coating sintering step during the preparation process of Al₂O₃, the sintering temperature was 650°C and the sintering time was 4 h to control the crystallinity of Al₂O₃ to be 100%, the other conditions were the same as example 1-1.

### Example 2-4

Except that in the powder sintering step during the preparation process of lithium iron pyrophosphate (Li₂FeP₂O₇), the sintering temperature was 650°C and the sintering time was 4 h to control the crystallinity of Li₂FeP₂O₇ to be 10%; and in the coating sintering step during the preparation process of Al₂O₃, the sintering temperature was 500°C and the sintering time was 6 h to control the crystallinity of Al₂O₃ to be 100%, the other conditions were the same as example 1-1.

### Examples 3-1 to 3-12

Except that in the preparation process of Fe, Co and V co-doped manganese oxalate particles, the heating temperature/stirring time in the reaction kettle of example 3-1 was 60°C/120 min, respectively; the heating temperature/stirring time in the reaction kettle of example 3-2 was 70°C/120 min, respectively; the heating temperature/stirring time in the reaction kettle of example 3-3 was 80°C/120 min, respectively; the heating temperature/stirring time in the reaction kettle of example 3-4 was 90°C/120 min, respectively; the heating temperature/stirring time in the reaction kettle of example 3-5 was 100°C/120 min, respectively; the heating temperature/stirring time in the reaction kettle of example 3-6 was 110°C/120 min, respectively; the heating temperature/stirring time in the reaction kettle of example 3-7 was 120°C/120 min, respectively; the heating temperature/stirring time in the reaction kettle of example 3-8 was 130°C/120 min, respectively; the heating temperature/stirring time in the reaction kettle of example 3-9 was 100°C/60 min, respectively; the heating temperature/stirring time in the reaction kettle of example 3-10 was 100°C/90 min, respectively; the heating temperature/stirring time in the reaction kettle of example 3-11 was 100°C/150 min, respectively; and the heating temperature/stirring time in the reaction kettle of example 3-12 was 100°C/180 min, respectively, the other conditions in examples 3-1 to 3-12 were the same as example 1-1.

### Examples 4-1 to 4-4:

Except that in the drying step during the preparation process of lithium iron pyrophosphate (Li₂FeP₂O₇), the drying temperature/drying time was 100°C/4 h, 150°C/6 h, 200°C/6 h and 200°C/6 h, respectively; and in the sintering step during the preparation process of lithium iron pyrophosphate (Li₂FeP₂O₇), the sintering temperature and sintering time were 700°C/6 h, 700°C/6 h, 700°C/6 h and 600°C/6 h, respectively, the other conditions were the same as example 1-7.

### Examples 4-5 to 4-7:

Except that in the coating process, the drying temperature/drying time in the drying step was 150°C/6 h, 150°C/6 h and 150°C/6 h, respectively; and in the coating process, the sintering temperature and sintering time in the sintering step were 600°C/4 h, 600°C/6 h and 800°C/8 h, respectively, the other conditions were the same as example 1-12.

### Comparative example 1-1

**Preparation of manganese oxalate:** 1149.3 g of manganese carbonate was added to a reaction kettle, and 5 L of deionized water and 1260.6 g of oxalic acid dihydrate (in C₂H₂O₄•2H₂O, the same below) were added. The reaction kettle was heated to 80°C, the mixture was stirred for 6 hours at a rotation speed of 600 rpm until the reaction was completed (no bubble was generated), so as to obtain a manganese oxalate suspension. Then, the suspension was filtered, and the resultant filter cake was dried at 120°C and then ground to obtain manganese oxalate dihydrate particles with a median particle size Dv50 of 100 nm.

**Preparation of carbon-coated lithium manganese phosphate:** 1789.6 g of the manganese oxalate dihydrate particles obtained above, 369.4 g of lithium carbonate (in Li₂CO₃, the same below), 1150.1 g of ammonium dihydrogen phosphate (in NH₄H₂PO₄, the same below), and 31 g of sucrose (in C₁₂H₂₂O₁₁, the same below) were added into 20 L of deionized water, and the mixture was stirred for 10 hours until uniformly mixed, so as to obtain a slurry. The slurry was transferred into a spray drying apparatus for spray-drying granulation, where the drying temperature was set at 250°C and the drying time was 4 h, so as to obtain a powder. The above powder was sintered at 700°C for 4 hours in a protective atmosphere of nitrogen (90% by volume) + hydrogen (10% by volume), so as to obtain carbon-coated lithium manganese phosphate.

### Comparative example 1-2

Except that 689.5 g of manganese carbonate was used and 463.3 g of ferrous carbonate was additionally added, the other conditions of comparative example 2 were the same as comparative example 1-1.

### Comparative example 1-3

Except that 1148.9 g of ammonium dihydrogen phosphate and 369.0 g of lithium carbonate were used and 1.6 g of 60% dilute sulfuric acid was additionally added, the other conditions of comparative example 3 were the same as comparative example 1-1.

### Comparative example 1-4

Except that 689.5 g of manganese carbonate, 1148.9 g of ammonium dihydrogen phosphate, and 369.0 g of lithium carbonate were used and 463.3 g of ferrous carbonate and 1.6 g of 60% dilute sulfuric acid were additionally added, the other conditions were the same as comparative example 1-1.

### Comparative example 1-5

Except for the following additional steps: during the preparation of the lithium iron pyrophosphate powder, 9.52 g of lithium carbonate, 29.9 g of ferrous carbonate, 29.6 g of ammonium dihydrogen phosphate and 32.5 g of oxalic acid dihydrate were dissolved in 50 ml of deionized water; the pH of the mixture was 5, and the mixture was stirred for 2 hours such that the reaction mixture was fully reacted; then, the reacted solution was heated to 80°C and held at the temperature for 4 hours to obtain a suspension comprising Li₂FeP₂O₇, and the suspension was filtered, washed with deionized water, and dried at 120°C for 4 h to obtain a powder; and the powder was sintered at 500°C under a nitrogen atmosphere for 4 h, and naturally cooled to room temperature and then ground to control the crystallinity of Li₂FeP₂O₇ to be 5%; and during the preparation a carbon-coated material, the amount of Li₂FeP₂O₇ was 62.8 g, the other conditions were the same as comparative example 1-4.

### Comparative example 1-6

Except for the following additional steps: 62.92 g of nano-Al₂O₃ (with a particle size of about 20 nm) and 37.4 g of sucrose (in C₁₂H₂₂O₁₁, the same below) were dissolved in 1500 ml of deionized water, and then stirred for 6 hours such that the mixture was fully reacted; and then the reacted solution was heated to 120°C and held at the temperature for 6 hours to obtain a suspension comprising aluminum oxide and sucrose, the other conditions were the same as comparative example 1-4.

### Comparative example 1-7

**Preparation of amorphous lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 h to obtain a powder. The powder was sintered at 500°C in a nitrogen atmosphere for 4 hours, naturally cooled to room temperature, and then ground to control the crystallinity of Li₂FeP₂O₇ to be 5%.

**Preparation of suspension comprising aluminum oxide and sucrose:** Except that 47.19 g of nano-Al₂O₃ (with a particle size of 20 nm) and 37.4 g of sucrose (in C₁₂H₂₂O₁₁, the same below) were dissolved in 1500 ml of deionized water, and then stirred for 6 hours such that the mixture was fully reacted; then the reacted solution was heated to 120°C and held at the temperature for 6 hours to obtain a suspension comprising aluminum oxide and sucrose;

1573.0 g of the inner core, and 15.73 g of the lithium iron pyrophosphate powder were added into the suspension above; and in the preparation process, the sintering temperature was 600°C and the sintering time was 4 h in the coating sintering step to control the crystallinity of LiFePO₄ to be 8%, the other conditions in comparative example 7 were the same as comparative example 4, thereby obtaining amorphous lithium iron pyrophosphate, amorphous aluminium oxide, and a carbon-coated positive electrode active material.

### Comparative examples 1-8 to 1-11

Except that in the preparation process of lithium iron pyrophosphate (Li₂FeP₂O₇), the drying temperature/drying time in the drying step in comparative examples 1-8 to 1-10 was 80°C/3 h, 80°C/3 h and 80°C/3 h, respectively; in the coating process, the sintering temperature and sintering time in the sintering step in comparative examples 1-8-1-10 were 400°C/3 h, 400°C/3 h and 350°C/2 h, respectively; in the coating process of comparative example 1-11, the drying temperature/drying time was 80°C/3 h; in comparative examples 1-8 and 1-9, the weight ratio of Li₂FeP₂O₇/Al₂O₃ was 1 : 3 and 1 : 1, respectively; in comparative example 1-10, only Li₂FeP₂O₇ was used; and in comparative example 1-11, only Al₂O₃ was used, the other conditions were the same as examples 1-1 to 1-7.

### Preparation of positive electrode plate

The parameters for preparing a positive electrode plate were the same as example 1-A,

### Preparation of negative electrode plate

A negative electrode active material of synthetic graphite, a conductive agent of superconducting carbon black (Super-P), a binder of styrene butadiene rubber (SBR) and a thickener of sodium carboxymethylcellulose (CMC-Na) were dissolved in deionized water in a mass ratio of 95% : 1.5% : 1.8% : 1.7%, followed by fully stirring and mixing until uniform to obtain a negative electrode slurry with a viscosity of 3000 mPa.s and a solid content of 52%; and the negative electrode slurry was coated onto a negative electrode current collector of a copper foil having a thickness of 6 µm, and then baked at 100°C for 4 hours for drying, followed by roll pressing to obtain a negative electrode plate with a compacted density of 1.75 g/cm³.

### Separator

A polypropylene film was used.

### Preparation of electrolyte solution

Ethylene carbonate, dimethyl carbonate and 1,2-propylene glycol carbonate were mixed in a volume ratio of 1 : 1 : 1, and then LiPF₆ was evenly dissolved in the above solution to obtain an electrolyte solution. In the electrolyte solution, the concentration of LiPF₆ was 1 mol/L.

### Preparation of full battery

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### Preparation of button battery

The parameters for assembling a button battery in a button battery box were the same as example 1-A.

The above results were shown in Table 1-4.

**Table 1-1 Performance test results of examples 1-1 to 1-52 and comparative examples 1-1 to 1-7**

| Exa mpl e No. | Inner core | First coating layer | | Thic knes s of first coati ng laye r | Seco nd coati ng layer | T hi ck ne ss of se co nd co ati ng la ye r | La tti ce ch an ge rat e ( % ) | Li / M n an tis ite de fe ct co nc en tra tio n/ % | Diss oluti on of Fe and Mn after cycli ng (pp m) | | Capa city per gram of butto n batte ry at 0.1 C (mA h/g) | Av era ge dis cha rge vol tag e of but ton bat ter y (V) | Ex pan sio n of cell upo n 30 day s of stor age at 60° C (%) | Num ber of cycle s corre spon ding to 80% capa city reten tion rate at 45°C | Co mp acte d den sity (g/c m³) |
|---|---|---|---|---|---|---|---|---|---|---|---|---|---|---|---|
| Example 1-1 | Li_{0.999}M n_{0.60}Fe_{0.3 93}V_{0.004} Co_{0.003}P _{0.999}S_{0.00 1}O₄ | 1% Li₂Fe P₂O₇ | 3% Al₂ O₃ | 9 | 2% of carb on | 10 | 2. 4 | 0. 4 | 6 | - 1. 96 | 157. 4 | 3.7 6 | 1.5 | 1247 | 2.4 0 |
| Exa mpl e 1-2 | Li_{0.999}M n_{0.60}Fe_{0.4 0}P_{0.999}S_{0. 001}O₄ | 0.8% Li₂Fe P₂O₇ | 2.4 % Al₂ O₃ | 7.2 | 1% of carb on | 5 | 6. 6 | 1. 2 | 56 | - 1. 96 | 147. 4 | 3.7 3 | 5.2 | 726 | 2.4 1 |
| Exa mpl e 1-3 | Li_{0.999}M n_{0.60}Fe_{0.4 0}P_{0.999}S_{0. 001}O₄ | 1% Li₂Fe P₂O₇ | 3% Al₂ O₃ | 9 | 1% of carb on | 5 | 6. 5 | 1. 1 | 39 | - 1. 95 | 147. 3 | 3.7 2 | 4.8 | 783 | 2.4 3 |
| Exa mpl e 1-4 | Li_{0.999}M n_{0.60}Fe_{0.4 0}P_{0.999}S_{0. 001}O₄ | 1.2% Li₂Fe P₂O₇ | 3.6 % Al₂ O₃ | 10.8 | 1% of carb on | 5 | 6. 5 | 0. 8 | 23 | - 1. 96 | 145. 8 | 3.7 1 | 3.4 | 812 | 2.4 2 |
| Exa mpl e 1-5 | Li_{0.999}M n_{0.60}Fe_{0.4 0}P_{0.999}S_{0. 001}O₄ | 1.4% Li₂Fe P₂O₇ | 4.2 % Al₂ O₃ | 12.6 | 1% of carb on | 5 | 6. 5 | 0. 7 | 13 | - 1. 96 | 144. 9 | 3.7 1 | 2.8 | 925 | 2.4 3 |
| Exa mpl e 1-6 | Li_{0.999}M n_{0.60}Fe_{0.4 0}P_{0.999}S_{0. 001}O₄ | 1.6% Li₂Fe P₂O₇ | 4.8 % Al₂ O₃ | 14.4 | 1% of carb on | 5 | 6. 6 | 0. 6 | 9 | - 1. 96 | 143. 8 | 3.7 0 | 2.4 | 1047 | 2.4 3 |
| Exa mpl e 1-7 | Li_{0.999}M n_{0.60}Fe_{0.4 0}P_{0.999}S_{0. 001}O₄ | 1% Li₂Fe P₂O₇ | 3% Al₂ O₃ | 9 | 2% of carb on | 10 | 6. 5 | 1 | 36 | - 1. 95 | 146. 9 | 3.7 2 | 2.4 | 824 | 2.4 4 |
| Exa mpl e 1-8 | Li_{0.999}M n_{0.60}Fe_{0.4 0}P_{0.999}S_{0. 001}O₄ | 1% Li₂Fe P₂O₇ | 3% Al₂ O₃ | 9 | 4% of carb on | 20 | 6. 5 | 1 | 28 | - 1. 96 | 144. 8 | 3.7 1 | 3.5 | 873 | 2.4 4 |
| Exa mpl e 1-9 | Li_{0.999}M n_{0.60}Fe_{0.4 0}P_{0.999}S_{0. 001}O₄ | 1% Li₂Fe P₂O₇ | 3% Al₂ O₃ | 9 | 5% of carb on | 25 | 6. 4 | 1. 1 | 21 | - 1. 96 | 142. 8 | 3.7 1 | 3.2 | 986 | 2.4 2 |
| Exa mpl e 1-10 | Li_{0.999}M n_{0.60}Fe_{0.4 0}P_{0.999}S_{0. 001}O₄ | 1% Li₂Fe P₂O₇ | 3% Al₂ O₃ | 9 | 6% of carb on | 30 | 6. 4 | 1. 1 | 13 | - 1. 96 | 141. 8 | 3.7 2 | 2.4 | 1079 | 2.3 9 |
| Exa mpl e 1-11 | Li_{0.999}M n_{0.60}Fe_{0.4 0}P_{0.999}S_{0. 001}O₄ | 1.5% Li₂Fe P₂O₇ | 2.5 % Al₂ O₃ | 7.5 | 2% of carb on | 10 | 6. 5 | 1. 1 | 28 | - 1. 95 | 146. 5 | 3.7 2 | 4.8 | 815 | 2.4 2 |
| Exa mpl e 1-12 | Li_{0.999}M n_{0.60}Fe_{0.4 0}P_{0.999}S_{0. 001}O₄ | 2% Li₂Fe P₂O₇ | 2% Al₂ O₃ | 6 | 2% of carb on | 10 | 6. 6 | 1 | 15 | - 1. 94 | 145. 9 | 3.7 3 | 4.6 | 737 | 2.4 5 |
| Exa mpl e 1-13 | Li_{0.999}M n_{0.60}Fe_{0.4 0}P_{0.999}S_{0. 001}O₄ | 2.5% Li₂Fe P₂O₇ | 1.5 % Al₂ O₃ | 4.5 | 2% of carb on | 10 | 6. 7 | 1. 2 | 13 | - 1. 94 | 145. 8 | 3.7 2 | 5.4 | 698 | 2.4 3 |
| Exa mpl e 1-14 | Li_{0.999}M n_{0.60}Fe_{0.4 0}P_{0.999}S_{0. 001}O₄ | 3% Li₂Fe P₂O₇ | 1% Al₂ O₃ | 3 | 2% of carb on | 10 | 6. 7 | 1. 1 | 6 | - 1. 95 | 145. 8 | 3.7 4 | 6.1 | 649 | 2.4 3 |
| Exa mpl e 1-15 | Li_{0.999}M n_{0.60}Zn_{0. 10P0.999}S _{0.001}O₄ | 3% Li₂Fe P₂O₇ | 1% Al₂ O₃ | 3 | 2% of carb on | 10 | 7. 5 | 2. 5 | 14 | - 1. 95 | 136. 9 | 3.8 5 | 7.2 | 697 | 2.4 2 |
| Exa mple 1-16 | Li_{0.933}M n_{0.6}Ni_{0.39 3}Zn_{0.004} Ti_{0.003}P_{0. 999}S_{0.001} O₄ | 1% Li₂Fe P₂O₇ | 3% Al₂ O₃ | 9 | 2% of carb on | 10 | 5. 4 | 0. 8 | 11 | - 1.95 | 137. 7 | 3.8 4 | 3.8 | 826 | 2.4 2 |
| Example 1-17 | Li_{0.999}M n_{0.60}Fe_{0.3 93}V_{0.007}P _{0.999}S_{0.00 1}O₄ | 1% Li₂Fe P₂O₇ | 3% Al₂ O₃ | 9 | 2% of carb on | 10 | 4. 2 | 0. 6 | 7 | - 1. 95 | 151. 8 | 3.7 6 | 2.7 | 1127 | 2.4 3 |
| Example 1-18 | Li_{0.999}M n_{0.60}Fe_{0.3 93}V_{0.004} Mg_{0.003}P _{0.999}S_{0.00 1}O₄ | 1% Li₂Fe P₂O₇ | 3% Al₂ O₃ | 9 | 2% of carb on | 10 | 2. 6 | 0. 5 | 6 | - 1. 95 | 153. 8 | 3.7 9 | 2.2 | 1096 | 2.4 2 |
| Exa mpl e 1-19 | LiMn_{0.60} Fe_{0.393}V _{0.004}Mg_{0. 003}P_{0.999} N_{0.001}O₄ | 1% Li₂Fe P₂O₇ | 3% Al₂ O₃ | 9 | 2% of carb on | 10 | 2. 3 | 0. 5 | 5 | - 1. 96 | 155. 9 | 3.7 8 | 1.7 | 1207 | 2.4 3 |
| Exa mpl e 1-20 | Li_{1.001}M n_{0.60}Fe_{0.3 93}V_{0.004} Mg_{0.003}P _{0.999}Si_{0.00 1}O₄ | 1% Li₂Fe P₂O₇ | 3% Al₂ O₃ | 9 | 2% of carb on | 10 | 2. 4 | 0. 7 | 8 | - 1. 96 | 155. 8 | 3.7 8 | 2.1 | 1218 | 2.4 2 |
| Exa mpl e 1-21 | Li_{1.001}M n_{0.55}Fe_{0.4 0}V_{0.025}M g_{0.025}P_{0.9 99}Si_{0.001} O₄ | 1% Li₂Fe P₂O₇ | 3% Al₂ O₃ | 9 | 2% of carb on | 10 | 2. 2 | 0. 5 | 5 | - 1. 96 | 156. 9 | 3.7 0 | 1.7 | 1328 | 2.4 1 |
| Exa mpl e 1-22 | Li_{1.001}M n_{0.65}Fe_{0.2 5}V_{0.05}M g_{0.05}P_{0.99 9}Si_{0.001}O 4 | 1% Li₂Fe P₂O₇ | 3% Al₂ O₃ | 9 | 2% of carb on | 10 | 2. 5 | 0. 8 | 8 | - 1. 96 | 155. 8 | 3.8 1 | 2.2 | 1142 | 2.4 0 |
| Exa mpl e 1-23 | Li_{1.004}M n_{0.7}Fe_{0.2} V_{0.05}Mg _{0.05}P_{0.998} B_{0.002}O₄ | 1% Li₂Fe P₂O₇ | 3% Al₂ O₃ | 9 | 2% of carb on | 10 | 2. 6 | 0. 8 | 8 | - 1. 96 | 155. 9 | 3.8 1 | 1.7 | 1137 | 2.4 1 |
| Exa mpl e 1-24 | Li_{1.006}M n_{0.75}Fe_{0.1 5}V_{0.05}M g_{0.05}P_{0.99 7}B_{0.003}O 4 | 1% Li₂Fe P₂O₇ | 3% Al₂ O₃ | 9 | 2% of carb on | 10 | 2. 6 | 0. 8 | 7 | - 1. 96 | 156. 8 | 3.8 1 | 1.9 | 1148 | 2.4 2 |
| Exa mpl e 1-25 | Li_{1.002}M n_{0.60}Fe_{0.3 93}V_{0.004} Mg_{0.003}P _{0.998}Si_{0.00 2}O₄ | 1% Li₂Fe P₂O₇ | 3% Al₂ O₃ | 9 | 2% of carb on | 10 | 2. 3 | 0. 7 | 7 | - 1. 96 | 156. 7 | 3.7 5 | 1.8 | 1197 | 2.4 3 |
| Exa mpl e 1-26 | Li_{0.997}M n_{0.80}Fe_{0.1 94}V_{0.003} Mg_{0.003}P _{0.997}S_{0.00 3}O₄ | 1% Li₂Fe P₂O₇ | 3% Al₂ O₃ | 9 | 2% of carb on | 10 | 2. 8 | 0. 9 | 8 | - 1. 96 | 154. 9 | 3.8 3 | 2.7 | 986 | 2.4 3 |
| Exa mpl e 1-27 | Li_{0.996}M n_{0.60}Fe_{0.3 93}V_{0.004} Mg_{0.003}P _{0.996}S_{0.00 4}O₄ | 1% Li₂Fe P₂O₇ | 3% Al₂ O₃ | 9 | 2% of carb on | 10 | 2. 2 | 0. 6 | 8 | - 1. 96 | 156. 7 | 3.7 6 | 2.2 | 1246 | 2.4 4 |
| Exa mpl e 1-28 | Li_{0.995}M n_{0.9}Fe_{0.09 4}V_{0.003}M g_{0.003}P_{0.9 95}S_{0.005}O 4 | 1% Li₂Fe P₂O₇ | 3% Al₂ O₃ | 9 | 2% of carb on | 10 | 3. 2 | 1. 1 | 10 | - 1. 94 | 155. 4 | 3.8 7 | 2.6 | 968 | 2.4 3 |
| Exa mpl e 1-29 | Li_{0.994}M n_{0.90}Fe_{0.0 94}V_{0.003} Mg_{0.003}P _{0.994}S_{0.00 6}O₄ | 1% Li₂Fe P₂O₇ | 3% Al₂ O₃ | 9 | 2% of carb on | 10 | 3 | 1. 2 | 9 | - 1. 93 | 154. 7 | 3.8 7 | 2.7 | 859 | 2.4 2 |
| Exa mpl e 1-30 | Li_{0.993}M n_{0.90}Fe_{0.0 94}V_{0.003} Mg_{0.003}P _{0.993}S_{0.00} 704 | 1% Li₂Fe P₂O₇ | 3% Al₂ O₃ | 9 | 2% of carb on | 10 | 2. 8 | 1. 4 | 12 | - 1. 93 | 154. 3 | 3.8 7 | 2.5 | 798 | 2.4 3 |
| Exa mpl e 1-31 | Li_{0.992}M n_{0.90}Fe_{0.0 94}V_{0.003} Mg_{0.003}P _{0.992}S_{0.00 8}O₄ | 1% Li₂Fe P₂O₇ | 3% Al₂ O₃ | 9 | 2% of carb on | 10 | 2. 6 | 1. 4 | 13 | - 1. 92 | 154. 7 | 3.8 7 | 2.4 | 726 | 2.4 2 |
| Exa mpl e 1-32 | Li_{0.991}M n_{0.90}Fe_{0.0 94}V_{0.003} Mg_{0.003}P _{0.991}S_{0.00 9}O₄ | 1% Li₂Fe P₂O₇ | 3% Al₂ O₃ | 9 | 2% of carb on | 10 | 2. 4 | 1. 2 | 14 | - 1. 92 | 153. 7 | 3.8 8 | 2.2 | 753 | 2.4 3 |
| Exa mpl e 1-33 | Li_{0.9}Mn_{0 .90}Fe_{0.094} V_{0.003}M g_{0.003}P_{0.9} S_{0.1}O₄ | 1% Li₂Fe P₂O₇ | 3% Al₂ O₃ | 9 | 2% of carb on | 10 | 2. 1 | 0. 9 | 12 | - 1. 92 | 152. 8 | 3.8 6 | 2.1 | 738 | 2.4 2 |
| Exa mpl e 1-34 | Same as example 1-1 | Same as examp le 1-1 | 3% Mg O | 7.5 | Sam e as exa mple 1-1 | 10 | 2. 4 | O. 5 | 7 | - 1. 95 | 155. 8 | 3.7 4 | 2.2 | 1142 | 2.4 0 |
| Exa mpl e 1-35 | Same as example 1-1 | Same as examp le 1-1 | 3% ZrO 2 | 12 | Sam e as exa mple 1-1 | 10 | 2. 2 | 0. 4 | 5 | - 1. 97 | 155. 7 | 3.7 3 | 1.7 | 1247 | 2.4 3 |
| Exa mpl e 1-36 | Same as example 1-1 | Same as examp le 1-1 | 3% ZnO | 10 | Sam e as exa mple 1-1 | 10 | 2. 5 | 0. 6 | 8 | - 1. 96 | 154. 8 | 3.7 3 | 2.3 | 978 | 2.4 0 |
| Exa mpl e 1-37 | Same as example 1-1 | Same as examp le 1-1 | 3% SnO ₂ | 15 | Sam e as exa mple 1-1 | 10 | 2. 6 | 0. 5 | 9 | - 1. 95 | 154. 2 | 3.7 2 | 2.9 | 868 | 2.4 1 |
| Exa mpl e 1-38 | Same as example 1-1 | Same as examp le 1-1 | 3% SiO₂ | 12 | Sam e as exa mple 1-1 | 10 | 2. 5 | 0. 6 | 5 | - 1. 97 | 155. 7 | 3.7 3 | 1.2 | 1386 | 2.4 2 |
| Exa mpl e 1-39 | Li_{1.1}Mn_{0 .6}Fe_{0.393} Mg_{0.007}P _{0.9}Si_{0.1}O ₄ | Same as examp le 1-1 | Sam e as exa mpl e 1-1 | 9 | Sam e as exa mple 1-1 | 10 | 2. 7 | 0. 8 | 46 | - 1. 95 | 153. 2 | 3.8 7 | 4.2 | 879 | 2.3 9 |
| Exa mpl e 1-40 | LiMn_{0.99 9}Fe_{0.001}P _{0.995}N_{0.00 5}O₄ | Same as examp le 1-1 | Sam e as exa mpl e 1-1 | 9 | Sam e as exa mple 1-1 | 10 | 2. 6 | 0. 7 | 38 | - 1. 95 | 154. 6 | 3.7 8 | 3.6 | 957 | 2.4 1 |
| Exa mpl e 1-41 | LiMn_{0.50} Fe_{0.50}P_{0. 995}N_{0.005} O₄ | Same as examp le 1-1 | Sam e as exa mpl e 1-1 | 9 | Sam e as exa mple 1-1 | 10 | 2. 5 | 0. 7 | 29 | - 1. 95 | 155. 8 | 3.6 5 | 3.9 | 1123 | 2.4 3 |
| Exa mpl e 1-42 | Same as example 1-1 | 1% ZrP₂O ₇ | Sam e as exa mpl e 1-1 | 9 | Sam e as exa mple 1-1 | 10 | 2. 6 | 0. 6 | 19 | - 1. 95 | 156. 3 | 3.7 5 | 2.7 | 1268 | 2.4 3 |
| Exa mpl e 1-43 | Same as example 1-1 | Same as examp le 1-1 | 3% V₂O 5 | 10 | Sam e as exa mple 1-1 | 10 | 2. 4 | 0. 4 | 9 | - 1. 95 | 156. 4 | 3.7 6 | 2.4 | 1097 | 2.4 1 |
| Exa mpl e 1-44 | Same as example 1-1 | 1% Ag₄P₂ O₇ | Sam e as exa mpl e 1-1 | 8.5 | Sam e as exa mple 1-1 | 10 | 2. 4 | 0. 4 | 11 | - 1. 95 | 156. 7 | 3.7 4 | 2.6 | 1007 | 2.4 2 |
| Exa mpl e 1-45 | LiMn_{0.90 9}Fe_{0.091}P _{0.99}N_{0.01} O₄ | Same as examp le 1-1 | Sam e as exa mpl e 1-1 | 9 | Sam e as exa mple 1-1 | 10 | 3. 6 | 2. 5 | 46 | - 1. 95 | 152. 4 | 3.8 4 | 3.5 | 854 | 2.3 1 |
| Exa mpl e 1-46 | LiMn_{0.09 1}Fe_{0.909}P _{0.995}N_{0.00 5}O₄ | Same as examp le 1-1 | Sam e as exa mpl e 1-1 | 9 | Sam e as exa mple 1-1 | 10 | 2. 1 | 0. 5 | 8 | - 1. 98 | 158. 2 | 3.3 5 | 2.7 | 1324 | 2.4 8 |
| Exa mpl e 1-47 | Same as example 1-1 | 4% Li₂Fe P₂O₇ | 3% Al₂ O₃ | 15 | Sam e as exa mple 1-1 | 10 | 2. 4 | 0. 4 | 5 | - 1. 95 | 153. 4 | 3.7 4 | 2.5 | 1358 | 2.4 1 |
| Exa mpl e 1-48 | Same as example 1-1 | Same as examp le 1-1 | Same as exa mple 1-1 | 9 | 3% of carb on | 15 | 2. 4 | 0. 4 | 8 | - 1. 95 | 155. 3 | 3.7 3 | 2.4 | 1397 | 2.3 8 |
| Exa mpl e 1-49 | LiMn_{0.9} Fe_{0.1}P_{0.9 95}N_{0.005} O₄ | Same as examp le 1-1 | Sam e as exa mpl e 1-1 | 9 | Sam e as exa mple 1-1 | 10 | 5. 8 | 4 | 38 | - 1. 92 | 151. 8 | 3.8 5 | 3.4 | 816 | 2.2 5 |
| Exa mpl e 1-50 | LiMn_{0.95} Fe_{0.05}P_{0. 995}N_{0.005} O₄ | Same as examp le 1-1 | Sam e as exa mpl e 1-1 | 9 | Sam e as exa mple 1-1 | 10 | 6 | 5. 1 | 43 | - 1. 91 | 150. 9 | 3.8 3 | 4.1 | 795 | 2.2 7 |
| Exa mpl e 1-51 | LiMn_{0.7} Fe_{0.3}P_{0.9 95}N_{0.005} O₄ | Same as examp le 1-1 | Sam e as exa mpl e 1-1 | 9 | 3% of carb on | 15 | 3. 2 | 0. 8 | 15 | - 1. 94 | 153. 7 | 3.7 5 | 2.3 | 1121 | 2.0 |
| Exa mpl e 1-52 | LiMn_{0.65} Fe_{0.35}P_{0. 995}N_{0.005} O₄ | Same as examp le 1-1 | Sam e as exa mpl e 1-1 | 9 | 3% of carb on | 15 | 2. 9 | 0. 7 | 13 | - 1. 95 | 154. 3 | 3.7 4 | 2.1 | 1285 | 2.2 |
| Co mpa rativ e exa mpl e 1-1 | LiMnP O₄ | - | - | 0 | 1% of carb on | 5 | 11 .4 | 3. 2 | 206 0 | - 1. 55 | 125. 6 | 4.0 2 | 48. 6 | 185 | 1.8 1 |
| Co mpa rativ e exa mpl e 1-2 | LiMn_{0.60} Fe_{0.40}PO 4 | - | - | 0 | 1% of carb on | 5 | 8. 7 | 2. 8 | 159 7 | - 1. 76 | 134. 8 | 3.7 6 | 42. 5 | 358 | 1.9 2 |
| Co mpa rativ e exa mpl e 1-3 | Li_{0.999}M nP_{0.999}S_{0 .001}O₄ | - | - | 0 | 1% of carb on | 5 | 9. 8 | 2. 5 | 189 5 | - 1. 66 | 128. 6 | 4.0 5 | 45. 5 | 267 | 1.8 8 |
| Co mpa rativ e exa mpl e 1-4 | Li_{0.999}M n_{0.60}Fe_{0.4 0}P_{0.999}S_{0. 001}O₄ | - | - | 0 | 1% of carb on | 5 | 6. 7 | 1. 8 | 127 9 | - 1. 83 | 140. 5 | 3.7 8 | 38. 5 | 417 | 1.8 2 |
| Co mpa rative exa mpl e 1-5 | Li_{0.999}M n_{0.60}Fe_{0.4 0}P_{0.999}S_{0.001}O₄ | 4% of amorp hous Li₂Fe P₂O₇ | - | 10 | 1% of carbon | 5 | 6. 5 | 1. 8 | 208 | - 1. 9 | 140. 3 | 3.7 3 | 12. 5 | 519 | 1.7 9 |
| Co mpa rativ e exa mpl e 1-6 | Li_{0.999}M n_{0.60}Fe_{0.4 0}P_{0.999}S_{0. 001}O₄ | | 4% Al₂ O₃ | 12 | 1% of carb on | 5 | 6. 6 | 1. 8 | 318 | - 1. 91 | 140. 2 | 3.7 4 | 11. 5 | 528 | 1.8 3 |
| Comparative example 1-7 | Li_{0.999}M n_{0.60}Fe_{0.4 0}P_{0.999}S_{0. 001}O₄ | 1% of amorp hous Li₂Fe P₂O₇ | 3% Al₂ O₃ | 13 | 1% of carbon | 5 | 6. 6 | 1. 8 | 174 | - 1. 9 | 140. 1 | 3.7 5 | 8.6 | 682 | 1.8 4 |
| Note: the crystallinity of both pyrophosphates and oxides in examples 1-1 to 1-52 was 100%. | | | | | | | | | | | | | | | |

From the combination of examples 1-1 to 1-52 and comparative examples 1-1 to 1-4, it can be seen that the existence of the first coating layer is beneficial to reducing the Li/Mn antisite defect concentration and the dissolution of Fe and Mn after cycling of the obtained material, increasing the capacity per gram and compacted density of the button battery, and improving the safety performance and cycling performance of the battery. When the Mn site and the phosphorus site are respectively doped with other elements, the lattice change rate, antisite defect concentration, and dissolution of Fe and Mn of the obtained material can be significantly reduced, the capacity per gram and compacted density of the battery can be increased, and the safety performance and cycling performance of the battery can be improved.

From the combination of examples 1-2 to 1-6, it can be seen that as the amount of the first coating layer increases from 3.2% to 6.4%, the Li/Mn antisite defect concentration and the dissolution of Fe and Mn after cycling of the obtained material are gradually reduced, and the safety performance and cycling performance at 45°C of the corresponding battery are also improved, but the capacity per gram of the button battery is reduced slightly. Optionally, when the total amount of the first coating layer is 4-5.6 wt%, the overall performance of the corresponding battery is the best.

It can be seen from a combination of examples 1-3 and 1-7 to 1-10 that as the amount of the second coating layer increases from 1% to 6%, the dissolution of Fe and Mn after cycling of the obtained material is gradually decreased, and the corresponding battery has an improved safety performance and cycling performance at 45°C as well, but the capacity per gram of the button battery is reduced slightly. Optionally, when the total amount of the second coating layer is 3-5 wt%, the overall performance of the corresponding battery is the best.

From the combination of examples 1-11 to 1-15 and comparative examples 1-5 and 1-6, it can be seen that when the first coating layer comprises both Li₂FeP₂O₇ and Al₂O₃, and in particular the weigh ratio of Li₂FeP₂O₇ to Al₂O₃ is 1 : 3 to 3 : 1, especially 1 : 3 to 1 : 1, the performance of the battery is improved more obviously.

**Table 2-1 Performance test results of examples 1-1 and 2-1 to 2-4**

| Exampl e No. | First coating layer | | Cryst allinit y of pyrop hosph ate (%) | Cry stall init y of oxi de (%) | Latt ice cha nge rate (%) | Li/M n antisit e defect conce ntrati on/% | Disso lution of Fe and Mn after cyclin g (ppm) | Surfa ce oxyge n valen cy | Capac ity of button batter y at 0.1C (mAh /g) | Aver age disch arge volta ge of butto n batte ry (V) | Expa nsion of cell upon 30 days of stora ge at 60°C (%) | Cycl ing capa city rete ntio n rate at 45° C |
|---|---|---|---|---|---|---|---|---|---|---|---|---|
| Exampl e 1-1 | 1% Li₂Fe P₂O₇ | 3% Al₂ O₃ | 100 | 100 | 2.4 | 0.4 | 6 | -1.96 | 157.4 | 3.76 | 1.5 | 124 7 |
| Exampl e 2-1 | 1% Li₂Fe P₂O₇ | 3% Al₂ O₃ | 30 | 100 | 6.3 | 1.9 | 113 | -1.86 | 142.1 | 3.68 | 4.3 | 597 |
| Exampl e 2-2 | 1% Li₂Fe P₂O₇ | 3% Al₂ O₃ | 50 | 100 | 4.7 | 1.2 | 59 | -1.87 | 146.3 | 3.71 | 4.1 | 798 |
| Exampl e 2-3 | 1% Li₂Fe P₂O₇ | 3% Al₂ O₃ | 70 | 100 | 3.5 | 0.8 | 18 | -1.89 | 150.7 | 3.72 | 3.1 | 968 |
| Exampl e 2-4 | 1% Li₂Fe P₂O₇ | 3% Al₂ O₃ | 10 | 100 | 6.7 | 2.0 | 141 | -1.83 | 140.9 | 3.65 | 4.8 | 496 |

It can be seen from Table 2-1 that as the crystallinity of the pyrophosphate in the first coating layer gradually increases, the lattice change rate, Li/Mn antisite defect concentration, and dissolution of Fe and Mn of the corresponding material are gradually decreased, the capacity of the button battery is gradually increased, and the safety performance and cycling performance of the battery are also gradually improved.

**Table 3-1 Performance test results of examples 3-1 to 3-12**

| Exam ple No. | Type and amount of doping element | Temp eratur e in reactio n kettle( °C) | Stirr ing time /min | Latti ce chan ge rate (%) | Li/ Mn anti site defe ct con cent rati on/ % | Diss oluti on of Fe and Mn after cycli ng (pp m) | Surf ace oxy gen vale ncy | Capac ity of button batter y at 0.1C (mAh/ 8) | Aver age disch arge volta ge of butto n batter y (V) | Expa nsio n of cell upon 30 days of stora ge at 60°C (%) | Num ber of cycle s for capa city reten tion rate of 80% at 45°C | Co mpa cted dens ity (g/c m³) |
|---|---|---|---|---|---|---|---|---|---|---|---|---|
| Exam ple 3-1 | Li_{0.999}Mn_{0.60}Fe_{0. 393}V_{0.004}Co_{0.003}P _{0.999}S_{0.001}O₄ | 60 | 120 | 5.8 | 2.5 | 53 | -1.98 | 148.9 | 3.65 | 6.1 | 1023 | 2.42 |
| Exam ple 3-2 | Li_{0.999}Mn_{0.60}Fe_{0. 393}V_{0.004}Co_{0.003}P _{0.999}S_{0.001}O₄ | 70 | 120 | 4.9 | 2.2 | 41 | -1.98 | 155.3 | 3.66 | 5.2 | 1124 | 2.41 |
| Exam ple 3-3 | Li_{0.999}Mn_{0.60}Fe_{0. 393}V_{0.004}Co_{0.003}P _{0.999}S_{0.001}O₄ | 80 | 120 | 3.9 | 1.6 | 33 | -1.98 | 155.9 | 3.69 | 4.2 | 1211 | 2.43 |
| Exam ple 3-4 | Li_{0.999}Mn_{0.60}Fe_{0. 393}V_{0.004}Co_{0.003}P _{0.999}S_{0.001}O₄ | 90 | 120 | 3.2 | 1.4 | 20 | -1.98 | 157.4 | 3.69 | 3.6 | 1254 | 2.42 |
| Exam ple 3-5 | Li_{0.999}Mn_{0.60}Fe_{0.} 393V0.004C00.003P _{0.999}S_{0.001}O₄ | 100 | 120 | 2.7 | 0.9 | 13 | -1.98 | 158.1 | 3.75 | 2.9 | 1267 | 2.41 |
| Exam ple 3-6 | Li_{0.999}Mn_{0.60}Fe_{0.} 393V0.004C00.003P _{0.999}S_{0.001}O₄ | 110 | 120 | 2.9 | 1.6 | 24 | -1.98 | 155.8 | 3.71 | 4.1 | 1167 | 2.42 |
| Exam ple 3-7 | Li_{0.999}Mn_{0.60}Fe_{0.} 393V0.004C00.003P _{0.999}S_{0.001}O₄ | 120 | 120 | 3.9 | 2.5 | 43 | -1.98 | 154.1 | 3.66 | 5.2 | 1089 | 2.43 |
| Exam ple 3-8 | Li_{0.999}Mn_{0.60}Fe_{0.} 393V0.004C00.003P _{0.999}S_{0.001}O₄ | 130 | 120 | 4.8 | 3.7 | 49 | -1.98 | 153.2 | 3.6 | 6.7 | 902 | 2.41 |
| Exam ple 3-9 | Li_{0.999}Mn_{0.60}Fe_{0. 393}V_{0.004}Co_{0.003}P _{0.999}S_{0.001}O₄ | 100 | 60 | 5.2 | 3.4 | 41 | -1.98 | 154.8 | 3.72 | 5.3 | 943 | 2.42 |
| Exam ple 3-10 | Li_{0.999}Mn_{0.60}Fe_{0. 393}V_{0.004}Co_{0.003}P _{0.999}S_{0.001}O₄ | 100 | 90 | 4.4 | 2.9 | 30 | -1.98 | 156.3 | 3.71 | 4.5 | 958 | 2.43 |
| Exam ple 3-11 | Li_{0.999}Mn_{0.60}Fe_{0.} 393V0.004C00.003P _{0.999}S_{0.001}O₄ | 100 | 150 | 3.7 | 1.6 | 18 | -1.98 | 157.2 | 3.74 | 3.6 | 1067 | 2.44 |
| Exam ple 3-12 | Li_{0.999}Mn_{0.60}Fe_{0.} 393V0.004C00.003P _{0.999}S_{0.001}O₄ | 100 | 180 | 2.9 | 0.9 | 15 | -1.98 | 157.5 | 3.73 | 3.1 | 1189 | 2.42 |
| The parameters of the temperature and stirring time in the reaction kettle were as those during the preparation of element A doped manganese oxalate (i.e., step (1)). | | | | | | | | | | | | |

It can be seen from Table 3-1 that the performances of the positive electrode material of the present application can be further improved by adjusting the reaction temperature and reaction time in the reaction kettle during the preparation of manganese oxalate particles. For example, when the reaction temperature is gradually increased from 60°C to 130°C, the lattice change rate and Li/Mn antisite defect concentration first decrease and then increase, and the corresponding dissolution of metal after cycling and the safety performance also vary in a similar trend, while the capacity and cycling performance of the button battery are first increased and then reduced with the increase of temperature. Similar varying trends also can be achieved by keeping the reaction temperature constant and adjusting the reaction time.

**Table 4-1 Performance test results of examples 4-1 to 4-7 and comparative examples 1-8 to 1-11**

| Exam ple No. | Li₂Fe P₂O₇ : oxide (weig ht ratio) | Dryin g tempe rature (°C) | Dr yin g tim e (h) | Sinter ing tempe rature (°C) | Sint erin g time (h) | Interpla nar spacing of pyroph osphate in first coating layer (nm) | Include d angle of crystal orientat ion (111) of pyroph osphate in first coating layer (°) | Lat tice cha nge rate (%) | Li/M n antisi te defec t conc entration/ % | Surfa ce oxyg en valen cy | Capa city of butto n batte ry at 0.1C (mA h/g) | Aver age disch arge volta ge of butto n batte ry (V) | Expa nsion of cell upon 30 days of stora ge at 60°C (%) | Num ber of cycle s for capa city retention rate of 80% at 45°C |
|---|---|---|---|---|---|---|---|---|---|---|---|---|---|---|
| Exam ple 4-1 | 1 : 3 | 100 | 4 | 700 | 6 | 0.303 | 29.496 | 3.2 | 0.7 | -1.96 | 154. 9 | 3.68 | 3.6 | 1056 |
| Exam ple 4-2 | 1 : 3 | 150 | 6 | 700 | 6 | 0.303 | 29.496 | 2.8 | 0.8 | -1.96 | 157. 1 | 3.76 | 2.8 | 1287 |
| Exam ple 4-3 | 1 : 3 | 200 | 6 | 700 | 6 | 0.303 | 29.496 | 3 | 0.8 | -1.97 | 155. 8 | 3.71 | 3.5 | 1189 |
| Exam ple 4-4 | 1 : 3 | 200 | 6 | 600 | 6 | 0.303 | 29.496 | 3.2 | 1.4 | -1.96 | 152. 9 | 3.66 | 4.5 | 895 |
| Exam ple 4-5 | 1 : 1 | 150 | 6 | 600 | 4 | 0.303 | 29.496 | 3.1 | 1.5 | -1.92 | 154. 7 | 3.68 | 4.1 | 816 |
| Exam ple 4-6 | 1 : 1 | 150 | 6 | 600 | 6 | 0.303 | 29.496 | 2.9 | 1.1 | -1.93 | 155. 6 | 3.69 | 3.6 | 824 |
| Exam ple 4-7 | 1 : 1 | 150 | 6 | 800 | 8 | 0.303 | 29.496 | 2.7 | 0.7 | -1.94 | 156. 3 | 3.71 | 3.1 | 924 |
| Comp arative examp le 1-8 | 1:3 | 80 | 3 | 400 | 3 | - | - | 3.9 | 1.8 | -1.91 | 148 | 3.67 | 9.4 | 779 |
| Comp arative examp le 1-9 | 1 : 1 | 80 | 3 | 400 | 3 | - | - | 3.6 | 1.6 | -1.93 | 149. 4 | 3.7 | 6.8 | 683 |
| Comp arative examp le 1-10 | Only Li₂Fe P₂O₇ | 80 | 3 | 350 | 2 | - | - | 3.7 | 1.7 | -1.86 | 147. 5 | 3.68 | 11.5 | 385 |
| Comp arative examp le 1-11 | Only Al₂O₃ | 80 | 3 | - | - | - | - | 3.4 | 1.4 | -1.93 | 150. 3 | 3.72 | 4.7 | 526 |

It can be seen from Table 4-1 that the performance of the obtained material can be improved by adjusting the drying temperature/time and the sintering temperature/time during the preparation of lithium iron pyrophosphate by the method of the present application, thereby improving the performance of the battery; and the performance of the obtained material can be improved by adjusting the drying temperature/time and the sintering temperature/time during the coating process, thereby improving the performance of the battery. From comparative examples 1-8 to 1-11, it can be seen that when the drying temperature in the preparation process of lithium iron pyrophosphate is lower than 100°C or the temperature in the sintering step is lower than 400°C, Li₂FeP₂O₇, which is expected to be prepared in the present application, will not be obtained, thereby failing to improve the properties of the material as well as the performance of the secondary battery comprising same.

The preparation and performance tests of examples of the positive electrode active material having an inner core of Li₁₊x-Mn_{1-y}A_{y}P_{1-z}R_{z}O₄ and a shell comprising a first coating layer containing a crystalline pyrophosphate, a second coating layer containing a metal oxide of Q'ₑO_{f}, and a third coating layer containing carbon will be detailed below. Unless otherwise stated, the sources of the involved reagents are the same as examples 1-1 to 1-52.

### Example 1-B

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride were mixed thoroughly for 6 h in a mixer. The resulting mixture was then transferred into a reaction kettle, 5 L of deionized water and 1260.6 g of oxalic acid dihydrate were added, heated to 80°C, then stirred thoroughly for 6 h at a rotation speed of 500 rpm and mixed uniformly until the reaction was completed (no bubble was generated), so as to obtain a Fe, Co, and V co-doped manganese oxalate suspension. Then, the suspension was filtered, dried at 120°C and then sanded, so as to obtain manganese oxalate particles with a particle size of 100 nm.

### Step S2: Preparation of inner core of Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid were added into 20 L of deionized water, fully stirred, and mixed uniformly and reacted at 80°C for 10 h to obtain a slurry. The slurry was transferred into a spray drying apparatus for spray-drying granulation, and dried at a temperature of at 250°C to obtain a powder. In a protective atmosphere (90% of nitrogen and 10% of hydrogen), the powder was sintered in a roller kiln at 700°C for 4 h to obtain an inner core material. The element content of the inner core material was detected using inductively coupled plasma (ICP) emission spectrometry, and the chemical formula of the obtained inner core was as shown above.

### Step S3: Preparation of first coating layer suspension

Preparation of Li₂FeP₂O₇ solution: 7.4 g of lithium carbonate, 11.6 g of ferrous carbonate, 23.0 g of ammonium dihydrogen phosphate and 12.6 g of oxalic acid dihydrate were dissolved in 500 mL of deionized water, with pH being controlled to be 5, the mixture was then stirred and reacted at room temperature for 2 h to obtain a solution, and then the solution was heated to 80°C and held at the temperature for 4 h to obtain a first coating layer suspension.

### Step S4: Coating of first coating layer

1571.9 g of the doped lithium manganese phosphate inner core material obtained in step S2 was added into the first coating layer suspension (with the content of the coating material being 15.7 g) obtained in step S3, fully stirred and mixed for 6 h; and after uniformly mixing, the mixture was transferred in an oven at 120°C and dried for 6 h, and then sintered at 650°C for 6 h to obtain a pyrophosphate coated material.

### Step S5: Preparation of second coating layer suspension

47.1 g of nano-Al₂O₃ (with a particle size of about 20 nm) was dissolved in 1500 mL of deionized water, and stirred for 2 h to obtain a second coating layer suspension.

### Step S6: Coating of second coating layer

1586.8 g of the pyrophosphate coated material obtained in step S4 was added into the second coating layer suspension (with the content of the coating material being 47.1 g) obtained in step S5, fully stirred and mixed for 6 h; and after uniformly mixing, the mixture was transferred in an oven at 120°C and dried for 6 h, and then sintered at 700°C for 8 h to obtain a two-layer coated material.

### Step S7: Preparation of aqueous solution of third coating layer

37.3 g of sucrose was dissolved in 500 g of deionized water, then stirred and fully dissolved to obtain an aqueous solution of sucrose.

### Step S8: Coating of third coating layer

1633.9 g of the two-layer coated material obtained in step S6 was added into the sucrose solution obtained in step S7, stirred and mixed for 6 h; and after uniformly mixing, the mixture was transferred into an oven at 150°C and dried for 6 h, and then sintered at 700°C for 10 h to obtain a three-layer coated material.

### Examples 2-B to 62-B and comparative examples 1-B to 11-B

The positive electrode active materials of examples 2-B to 62-B and comparative examples 1-B to 11-B were prepared by a method similar to example 1-B, and the differences in the preparation of the positive electrode active materials were shown in Tables 1-B to 6-B.

Here, since there was no first coating layer in comparative examples 1-B to 2-B and 4-B to 10-B and example 58-B, steps S3-S4 were omitted; and there was no second coating layer in comparative examples 1-B to 10-B and example 57-B, and therefore steps S5-S6 were not involved.

**Table 1-B: Preparation of Fe, Co, V and S co-doped manganese oxalate and preparation of inner core (steps S1-S2)**

| No. | Chemical formula of inner core* | Raw materials used in step S1 | Raw materials used in step S2 |
|---|---|---|---|
| Comparative examples 1-B and 11-B | LiMnPO₄ | Manganese carbonate, 1149.3 g; water, 5 L; and oxalic acid dihydrate, 1260.6 g; | Manganese oxalate dihydrate obtained in step S1 (in C₂O₄Mn•2H₂O), 1789.6 g; lithium carbonate, 369.4 g; ammonium dihydrogen phosphate, 1150.1 g; and water, 20 L; |
| Comparative example 2-B | LiMn_{0.60}Fe_{0. 40}PO₄ | Manganese carbonate, 689.6 g; ferrous carbonate, 463.4 g; water, 5 L; and oxalic acid dihydrate, 1260.6 g; | Iron manganese oxalate dihydrate obtained in step S1 (in C₂O₄Mn_{0.60}Fe_{0.40}•2H₂O), 1793.2 g; lithium carbonate, 369.4 g; ammonium dihydrogen phosphate, 1150.1 g; and water, 20 L; |
| Comparative example 3-B | LiMn_{0.80}Fe_{0. 20}PO₄ | Manganese carbonate, 919.4 g; ferrous carbonate, 231.7 g; water, 5 L; and oxalic acid dihydrate, 1260.6 g; | Iron manganese oxalate dihydrate obtained in step S1 (in C₂O₄Mn_{0.80}Fe_{0.20}•2H₂O), 1791.4 g; lithium carbonate, 369.4 g; ammonium dihydrogen phosphate, 1150.1 g; and water, 20 L; |
| Comparative example 4-B | LiMn_{0.70}Fe_{0. 295}V_{0.005}PO₄ | Manganese carbonate, 804.5 g; ferrous carbonate, 341.8 g; vanadium dichloride, 6.1 g; water, 5 L; and oxalic acid dihydrate, 1260.6 g; | Vanadium iron manganese oxalate dihydrate obtained in step S1 (in C₂O₄Mn_{0.70}Fe_{0.295}V_{0.005}•2H₂O), 1792.0 g; lithium carbonate, 369.4 g; ammonium dihydrogen phosphate, 1150.1 g; and water, 20 L; |
| Comparative example 5-B and example 60-B | LiMn_{0.60}Fe_{0. 395}Mg_{0.005}P O₄ | Manganese carbonate, 689.6 g; ferrous carbonate, 457.6 g; magnesium carbonate, 4.2 g; water, 5 L; and oxalic acid dihydrate, 1260.6 g; | Magnesium iron manganese oxalate dihydrate obtained in step S1 (in C₂O₄Mn_{0.60}Fe_{0.395}Mg_{0.005}•2H₂O), 1791.6 g; lithium carbonate, 369.4 g; ammonium dihydrogen phosphate, 1150.1 g; and water, 20 L; |
| Comparative example 6-B | LiMn_{0.60}Fe_{0. 35}Ni_{0.05}PO₄ | Manganese carbonate, 689.6 g; ferrous carbonate, 405.4 g; nickel carbonate, 59.3 g; water, 5 L; and oxalic acid dihydrate, 1260.6 g; | Nickel manganese oxalate dihydrate obtained in step S1 (in C₂O₄Mn_{0.60}Fe_{0.35}Ni_{0.05}•2H₂O), 1794.6 g; lithium carbonate, 369.4 g; ammonium dihydrogen phosphate, 1150.1 g; and water, 20 L; |
| Comparative example 7-B and comparative example 9-B | LiMn_{0.60}Fe_{0. 395}V_{0.002}Ni_{0. 003}PO₄ | Manganese carbonate, 689.6 g; ferrous carbonate, 457.6 g; vanadium dichloride, 2.4 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0 60}Fe_{0:395}V_{0.002}Ni_{0.0032}2H₂O), 1793.2 g; lithium carbonate, 369.4 g; ammonium dihydrogen phosphate, 1150.1 g; and water, 20 L; |
| Comparative example 8-B | LiMn_{0.60}Fe_{0. 395}V_{0.002}Mg_{0 .003}PO₄ | Manganese carbonate, 689.6 g; ferrous carbonate, 457.6 g; vanadium dichloride, 2.4 g; magnesium carbonate, 2.53 g; water, 5 L; and oxalic acid dihydrate, 1260.6 g; | Magnesium vanadium iron manganese oxalate dihydrate obtained in step S1 (in C₂O₄Mn_{0.60}Fe_{0.395}V_{0.002}Mg_{0.003}•2H₂O ), 1792.1 g; lithium carbonate, 369.4 g; ammonium dihydrogen phosphate, 1150.1 g; and water, 20 L; |
| Comparative example 10-B, examples 57-B and 58-B, examples 61-B and 62-B, examples 1-B to 10-B and examples 30-B to 42-B, and examples 45-B to 46-B and 50-B to 56-B | Li_{0.997}Mn_{0.60} Fe_{0.393}V_{0.004} Co_{0.003}P_{0.997} S_{0.003}O₄ | Manganese carbonate, 689.6 g; ferrous carbonate, 455.27 g; cobalt sulfate, 4.65 g; vanadium dichloride, 4.87 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 368.3 g; ammonium dihydrogen phosphate, 1146.6 g; dilute sulfuric acid, 4.9 g; and water, 20 L; |
| Example 59-B | Li_{1.2}MnP_{0.8} Si_{0.2}O₄ | Manganese carbonate, 1149.3 g; water, 5 L; and oxalic acid dihydrate, 1260.6 g; | Manganese oxalate dihydrate obtained in step S1 (in C₂O₄Mn•2H₂O), 1789.6 g; lithium carbonate, 443.3 g; ammonium dihydrogen phosphate, 920.1 g; metasilicic acid, 156.2 g; and water, 20 L; |
| Example 11-B | Li_{1.001}Mn_{0.60} Fe_{0.393}V_{0.004} Co_{0.003}P_{0.999} Si_{0.001}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 369.8 g; ammonium dihydrogen phosphate, 1148.9 g; metasilicic acid, 0.8 g; and water, 20 L; |
| Example 12-B | LiMn_{0.60}Fe_{0. 393}V_{0.004}Co_{0. 003}P_{0.998}N_{0.00 2}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 369.4 g; ammonium dihydrogen phosphate, 1147.8 g; dilute nitric acid, 2.7 g; and water, 20 L; |
| Example 13-B | Li_{0.995}Mn_{0.65} Fe_{0.341}V_{0.004} Co_{0.005}P_{0.995} S_{0.005}O₄ | Manganese carbonate, 747.1 g; ferrous carbonate, 395.1 g; cobalt sulfate, 7.8 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.65}Fe_{0.341}V_{0.004}Co_{0.005}•2H₂O) , 1792.7 g; lithium carbonate, 367.6 g; ammonium dihydrogen phosphate, 1144.3 g; dilute sulfuric acid, 8.2 g; and water, 20 L; |
| Example 14-B | Li_{1.002}Mn_{0.70} Fe₀₂₉₃V_{0.004} Co_{0.0003}P_{0.998} Si_{0.002}O₄ | Manganese carbonate, 804.6 g; ferrous carbonate, 339.5 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.70}Fe_{0.293}V_{0.004}Co_{0.003}•2H₂O) , 1792.2 g; lithium carbonate, 370.2 g; 1147.8; metasilicic acid, 1.6 g; and water, 20 L; |
| Examples 15-B and 17-B | LiMn_{0.60}Fe_{0. 393}V_{0.004}Co_{0. 003}P_{0.999}N_{0.00 1}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 369.4 g; ammonium dihydrogen phosphate, 1148.9 g; dilute nitric acid, 1.4 g; and water, 20 L; |
| Example 16-B | Li_{0.997}Mn_{0.60} Fe_{0.393}V_{0.004} Co_{0.003}P_{0.997} S_{0.003}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 368.7 g; ammonium dihydrogen phosphate, 1146.6 g; dilute sulfuric acid, 4.9 g; and water, 20 L; |
| Example 18-B | LiMn_{0.60}Fe_{0. 393}V_{0.004}Mg_{0 .003}P_{0.995}N_{0.0 05}O₄ | Manganese carbonate, 689.6 g; ferrous carbonate, 455.3 g; magnesium carbonate, 2.5 g; vanadium dichloride, 4.9 g; water, 5 L; and oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O ), 1791.1 g; lithium carbonate, 369.4 g; ammonium dihydrogen phosphate, 1144.3 g; dilute nitric acid, 7.0 g; and water, 20 L; |
| Example 19-B | Li_{0.999}Mn_{0.60} Fe_{0.393}V_{0.004} Mg_{0.003}P_{0.999} S_{0.001}O₄ | Manganese carbonate, 689.6 g; ferrous carbonate, 455.3 g; magnesium carbonate, 2.5 g; vanadium dichloride, 4.9 g; water, 5 L; and oxalic acid dihydrate, 1260.6 g; | Magnesium vanadium iron manganese oxalate dihydrate obtained in step S1 (in C₂O₄Mn_{0.0o}Fe_{0.393}V_{0.004}Mg_{0.003}•2H₂O ), 1791.1 g; lithium carbonate, 369.0 g; ammonium dihydrogen phosphate, 1148.9 g; dilute sulfuric acid, 1.6 g; and water, 20 L; |
| Example 20-B | Li_{0 998}Mn_{0.60}Fe_{0.393}V_{0.004} Ni_{0.003}P_{0.998} S_{0.002}O₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1792.2 g; lithium carbonate, 368.7 g; ammonium dihydrogen phosphate, 1147.8 g; dilute sulfuric acid, 3.2 g; and water, 20 L; |
| Examples 21-B to 24-B | Li_{1.001}Mn_{0.60} Fe_{0.393}V_{0.004} Ni_{0.003}P_{0.999} Si_{0.001}O₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.8 g; ammonium dihydrogen phosphate, 1148.9 g; metasilicic acid, 0.8 g; and water, 20 L; |
| Example 25-B | Li_{1.001}Mn_{0.50} Fe_{0.493}V_{0.004} Ni_{0.003}P_{0.999} Si_{0.001}O₄ | Manganese carbonate, 574.7 g; ferrous carbonate, 571.2 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.50}Fe_{0.493}V_{0.004}Ni_{0.003}•2H₂O), 1794.0 g; lithium carbonate, 369.8 g; ammonium dihydrogen phosphate, 1148.9 g; metasilicic acid, 0.8 g; and water, 20 L; |
| Example 26-B | Li_{1.001}Mn_{0.99 9}Fe_{0.001}P_{0.999} Si_{0.001}O₄ | Manganese carbonate, 1148.2 g; ferrous carbonate, 1.2 g; water, 5 L; and oxalic acid dihydrate, 1260.6 g; | Iron manganese oxalate dihydrate obtained in step S1 (in C₂O₄Mn_{0.999}Fe_{0.001}•2H₂O), 1789.6 g; lithium carbonate, 369.8 g; ammonium dihydrogen phosphate, 1148.9 g; metasilicic acid, 0.8 g; and water, 20 L; |
| Example 27-B | LiMn_{0.60}Fe_{0. 393}V_{0.004}Ni_{0. 003}P_{0.9}N_{0.100} O₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.4 g; ammonium dihydrogen phosphate, 1035.1 g; dilute nitric acid, 140.0 g; and water, 20 L; |
| Example 28-B | Li_{1.001}Mn_{0.40} Fe_{0.593}V_{0.004} Ni_{0.003}P_{0.999} Si_{0.001}O₄ | Manganese carbonate, 459.7 g; ferrous carbonate, 686.9 g; vanadium dichloride, 4.8 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.593}V_{0.004}Ni_{0.003}•2H₂O), 1794.9 g; lithium carbonate, 369.8 g; ammonium dihydrogen phosphate, 1148.9 g; metasilicic acid, 0.8 g; and water, 20 L; |
| Example 29-B | Li_{1.001}Mn_{0.40} Fe_{0.393}V_{0.204} Ni_{0.003}P_{0.999} Si_{0.001}O₄ | Manganese carbonate, 459.7 g; ferrous carbonate, 455.2 g; vanadium dichloride, 248.6 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 369.8 g; ammonium dihydrogen phosphate, 1148.9 g; metasilicic acid, 0.8 g; and water, 20 L; |
| Example 43-B | Li_{0.900}Mn_{0.40} Fe_{0.393}V_{0.204} Ni_{0.003}P_{0.900} S_{0.100}O₄ | Manganese carbonate, 459.7 g; ferrous carbonate, 455.2 g; vanadium dichloride, 248.6 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 332.5 g; ammonium dihydrogen phosphate, 1035.0 g; dilute sulfuric acid, 160 g; and water, 20 L; |
| Example 44-B | Li_{1.100}Mn_{0.40} Fe_{0.393}V_{0.204} Ni_{0.003}P_{0.900} Si_{0.100}O₄ | Manganese carbonate, 459.7 g; ferrous carbonate, 455.2 g; vanadium dichloride, 248.6 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 406.4 g; ammonium dihydrogen phosphate, 1035.0 g; metasilicic acid, 80 g; and water, 20 L; |
| Example 47-B | Li_{1.001i}Mn_{0.90 9}Fe_{0.091}P_{0.999} Si_{0.001}O₄ | Manganese carbonate, 1044.8 g; ferrous carbonate, 109.2 g; water, 5 L; and oxalic acid dihydrate, 1260.6 g; | Iorn manganese oxalate dihydrate obtained in step S1 (in C₂O₄Mn_{0.909}Fe_{0.091}•2H₂O), 1790.7 g; lithium carbonate, 369.8 g; ammonium dihydrogen phosphate, 1148.9 g; metasilicic acid, 0.8 g; and water, 20 L; |
| Example 48-B | LiMn_{0.800}Fe_{0. 193}V_{0.004}Co_{0. 003}P_{0.999}N_{0.00 1}O₄ | Manganese carbonate, 919.5 g; ferrous carbonate, 223.6 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.80}Fe_{0.193}V_{0.004}Co_{0.003}•2H₂O) , 1791.6 g; lithium carbonate, 369.4 g; ammonium dihydrogen phosphate, 1148.9 g; dilute nitric acid, 1.4 g; and water, 20 L; |
| Example 49-B | LiMn_{0.60}Fe_{0. 393}V_{0.004}CO_{0, 003}P_{0.996}N_{0.00 4}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O) , 1793.1 g; lithium carbonate, 369.4 g; ammonium dihydrogen phosphate, 1145.4 g; dilute nitric acid, 5.6 g; and water, 20 L; |

**Table 2-B: Preparation of first coating layer suspension (step S3)**

| No. | Coating material of first coating layer* | Preparation of first coating layer suspension |
|---|---|---|
| Comparative example 3-B and example 61-B | Amorphous Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5; |
| Example 57-B, examples 60-B and 62-B, and examples 1-B to 14-B, 19-B, 21-B to 29-B, 37-B to 44-B, and 47-B to 56-B | Crystalline Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5; |
| Examples 15-B and 16-B | Crystalline Al₄(P₂O₇)₃ | 53.3 g of aluminum chloride; 34.5 g of ammonium dihydrogen phosphate; and 18.9 g of oxalic acid dihydrate; controlling the pH to be 4; |
| Examples 17-18 and 20 | Crystalline Li₂NiP₂O₇ | 7.4 g of lithium carbonate; 11.9 g of nickel carbonate; 23.0 g of ammonium dihydrogen phosphate; and 12.6 g of oxalic acid dihydrate; controlling the pH to be 5; |
| Example 30-B | Crystalline Li₂MgP₂O₇ | 7.4 g of lithium carbonate; 8.4 g of magnesium carbonate; 23.0 g of ammonium dihydrogen phosphate; and 12.6 g of oxalic acid dihydrate; |
| Example 31-B | Crystalline Li₂CoP₂O₇ | 7.4 g of lithium carbonate; 15.5 g of cobalt sulfate; 23.0 g of ammonium dihydrogen phosphate; and 12.6 g of oxalic acid dihydrate; |
| Example 32-B | Crystalline Li₂CuP₂O₇ | 7.4 g of lithium carbonate; 16.0 g of copper sulfate; 23.0 g of ammonium dihydrogen phosphate; and 12.6 g of oxalic acid dihydrate; |
| Example 33-B | Crystalline Li₂ZnP₂O₇ | 7.4 g of lithium carbonate; 12.5 g of zinc carbonate; 23.0 g of ammonium dihydrogen phosphate; and 12.6 g of oxalic acid dihydrate; |
| Example 34-B | Crystalline TiP₂O₇ | 24.0 g of titanium sulfate; 23.0 g of ammonium dihydrogen phosphate; and 12.6 g of oxalic acid dihydrate; |
| Example 35-B | Crystalline Ag₄P₂O₇ | 67.9 g of silver nitrate; 23.0 g of ammonium dihydrogen phosphate; and 25.2 g of oxalic acid dihydrate; |
| Example 36-B | Crystalline ZrP₂O₇ | 56.6 g of Zirconium sulfate; 23.0 g of ammonium dihydrogen phosphate; and 25.2 g of oxalic acid dihydrate; |
| Example 45-B | Crystalline LiAlP₂O₇ | 3.7 g of lithium carbonate; 13.3 g of aluminum chloride; 23.0 g of ammonium dihydrogen phosphate; and 12.6 g of oxalic acid dihydrate; |
| Example 46-B | Crystalline Zn₂P₂O₇ | 25.0 g of zinc carbonate; 25.0 g of zinc carbonate; 23.0 g of ammonium dihydrogen phosphate; and 12.6 g of oxalic acid dihydrate; |

**Table 3-B: Coating of first coating layer (step S4)**

| No. | Coating material of first coating layer and amount thereof* (based on weight of inner core) | Amount of inner core added in step S4 | Step S4: Coating of first coating layer | | | | |
|---|---|---|---|---|---|---|---|
| | | | Amount of corresponding coating material in first coating layer suspension | Mixin g time (h) | Drying temperat ure (°C) | Sintering temperat ure (°C) | Sinte ring time (h) |
| Comparative example 3-B | 2% of amorphous Li₂FeP₂O₇ | 1570.4 g | 31.4 g | 6 | 120 | 500 | 4 |
| Example 57-B | 1% of crystalline Li₂FeP₂O₇ | 1571.1 g | 15.7 g | 6 | 120 | 650 | 6 |
| Comparative example 11-B | 2% of crystalline Li₂FeP₂O₇ | 1568.5 g | 31.4 g | 6 | 120 | 650 | 6 |
| Example 59-B | 2% of crystalline Li₂FeP₂O₇ | 1562.8 g | 31.2 g | 6 | 120 | 650 | 6 |
| Example 60-B | 2% of crystalline Li₂FeP₂O₇ | 1570.6 g | 31.4 g | 6 | 120 | 650 | 6 |
| Example 61-B | 2% of amorphous Li₂FeP₂O₇ | 1571.1 g | 31.4 g | 6 | 120 | 500 | 4 |
| Example 62-B | 2% of crystalline Li₂FeP₂O₇ | 1571.1 g | 31.4 g | 6 | 120 | 650 | 6 |
| Examples 1-B to 4-B, 8-B to 10-B, 37-B to 42-B, 47-B to 49-B, and 52-B to 56-B | 1% of crystalline Li₂FeP₂O₇ | 1571.9 g | 15.7 g | 6 | 120 | 650 | 6 |
| Example 5-B | 2% of crystalline Li₂FeP₂O₇ | 1571.9 g | 31.4 g | 6 | 120 | 650 | 6 |
| Example 6-B | 3% of crystalline Li₂FeP₂O₇ | 1571.1 g | 47.1 g | 6 | 120 | 650 | 6 |
| Example 7-B | 5% of crystalline Li₂FeP₂O₇ | 1571.9 g | 78.6 g | 6 | 120 | 650 | 6 |
| Example 11-B | 1% of crystalline Li₂FeP₂O₇ | 1572.1 g | 15.7 g | 6 | 120 | 650 | 6 |
| Example 12-B | 1% of crystalline Li₂FeP₂O₇ | 1571.7 g | 15.7 g | 6 | 120 | 650 | 6 |
| Example 13-B | 2% of crystalline Li₂FeP₂O₇ | 1571.4 g | 31.4 g | 6 | 120 | 650 | 6 |
| Example 14-B | 2.5% of crystalline Li₂FeP₂O₇ | 1571.9 g | 39.3 g | 6 | 120 | 650 | 6 |
| Example 15-B | 2% of crystalline Al₄(P₂O₇)₃ | 1571.9 g | 31.4 g | 6 | 120 | 680 | 8 |
| Example 16-B | 3% of crystalline Al₄(P₂O₇)₃ | 1571.9 g | 47.2 g | 6 | 120 | 680 | 8 |
| Example 17-B | 1.5% of crystalline Li₂NiP₂O₇ | 1571.9 g | 23.6 g | 6 | 120 | 630 | 6 |
| Example 18-B | 1% of crystalline Li₂NiP₂O₇ | 1570.1 g | 15.7 g | 6 | 120 | 630 | 6 |
| Example 19-B | 2% of crystalline Li₂FeP₂O₇ | 1571.0 g | 31.4 g | 6 | 120 | 650 | 6 |
| Example 20-B | 1% of crystalline Li₂NiP₂O₇ | 1571.9 g | 15.7 g | 6 | 120 | 630 | 6 |
| Examples 21-B to 24-B | 2% of crystalline Li₂FeP₂O₇ | 1572.1 g | 31.4 g | 6 | 120 | 650 | 6 |
| Example 25-B | 1% of crystalline Li₂FeP₂O₇ | 1573.0 g | 15.7 g | 6 | 120 | 650 | 6 |
| Example 26-B | 1% of crystalline Li₂FeP₂O₇ | 1568.6 g | 15.7 g | 6 | 120 | 650 | 6 |
| Example 27-B | 1% of crystalline Li₂FeP₂O₇ | 1569.2 g | 15.7 g | 6 | 120 | 650 | 6 |
| Example 28-B | 2% of crystalline Li₂FeP₂O₇ | 1573.9 g | 31.4 g | 6 | 120 | 650 | 6 |
| Example 29-B | 2% of crystalline Li₂FeP₂O₇ | 1564.1 g | 31.2 g | 6 | 120 | 650 | 6 |
| Example 30-B | 1% of crystalline Li₂MgP₂O₇ | 1571.9 g | 15.7 g | 7 | 120 | 660 | 6 |
| Example 31-B | 1% of crystalline Li₂CoP₂O₇ | 1571.9 g | 15.7 g | 6 | 120 | 670 | 6 |
| Example 32-B | 1% crystalline Li₂CuP₂O₇ | 1571.9 g | 15.7 g | 8 | 120 | 640 | 6 |
| Example 33-B | 1% of crystalline Li₂Zn P₂O₇ | 1571.9 g | 15.7 g | 8 | 120 | 650 | 6 |
| Example 34-B | 1% of crystalline TiP₂O₇ | 1571.9 g | 15.7 g | 7 | 120 | 660 | 6 |
| Example 35-B | 1% of crystalline Ag₄P₂O₇ | 1571.9 g | 15.7 g | 9 | 120 | 670 | 6 |
| Example 36-B | 1% crystalline ZrP₂O₇ | 1571.9 g | 15.7 g | 8 | 120 | 680 | 6 |
| Example 43-B | 1% of crystalline Li₂FeP₂O₇ | 1558.2 g | 15.6 g | 6 | 120 | 650 | 6 |
| Example 44-B | 1% of crystalline Li₂FeP₂O₇ | 1568.1 g | 15.7 g | 6 | 120 | 650 | 6 |
| Example 45-B | 1% of crystalline LiAlP₂O₇ | 1571.9 g | 15.7 g | 7 | 120 | 675 | 6 |
| Example 46-B | 1% of crystalline Zn₂P₂O₇ | 1571.9 g | 15.7 g | 7 | 120 | 670 | 6 |
| Example 50-B | 6% of crystalline Li₂FeP₂O₇ | 1571.9 g | 94.3 g | 6 | 120 | 650 | 6 |
| Example 51-B | 5.5% of crystalline Li₂FeP₂O₇ | 1571.9 g | 86.5 g | 6 | 120 | 650 | 6 |

**Table 4-B: Preparation of second coating layer suspension (step S5)**

| No. | Second coating layer material* | Step S5: Preparation of second coating layer suspension |
|---|---|---|
| Example 58-B, and examples 1-B to 7-B, 18-B, 25-B to 27-B, 30-B to 36-B, 45-B to 51-B, and 53-B to 56-B | Crystalline Al₂O₃ | 47.1 g of nano-Al₂O₃ (with a particle size of about 20 nm) was dissolved in 1500 mL of deionized water, and stirred for 2 h to obtain a suspension; |
| Comparative example 2-B | Crystalline Al₂O₃ | 62.7 of nano-Al₂O₃ (with a particle size of about 20 nm) was dissolved in 1500 mL of deionized water, and stirred for 2 h to obtain a suspension; |
| Example 59-B | Crystalline Al₂O₃ | 62.5 g of nano-Al₂O₃ (with a particle size of about 20 nm) was dissolved in 1500 mL of deionized water, and stirred for 2 h to obtain a suspension; |
| Examples 60-B and 61-B | Crystalline Al₂O₃ | 62.8 g of nano-Al₂O₃ (with a particle size of about 20 nm) was dissolved in 1500 mL of deionized water, and stirred for 2 h to obtain a suspension; |
| Example 8-B | Crystalline Al₂O₃ | 15.7 g of nano-Al₂O₃ (with a particle size of about 20 nm) was dissolved in 1500 mL of deionized water, and stirred for 2 h to obtain a suspension; |
| Example 9-B | Crystalline Al₂O₃ | 62.8 g of nano-Al₂O₃ (with a particle size of about 20 nm) was dissolved in 1500 mL of deionized water, and stirred for 2 h to obtain a suspension; |
| Example 10-B | Crystalline Al₂O₃ | 78.6 g of nano-Al₂O₃ (with a particle size of about 20 nm) was dissolved in 1500 mL of deionized water, and stirred for 2 h to obtain a suspension; |
| Example 11-B | Crystalline Al₂O₃ | 39.3 g of nano-Al₂O₃ (with a particle size of about 20 nm) was dissolved in 1500 mL of deionized water, and stirred for 2 h to obtain a suspension; |
| Example 12-B | Crystalline Al₂O₃ | 47.2 g of nano-Al₂O₃ (with a particle size of about 20 nm) was dissolved in 1500 mL of deionized water, and stirred for 2 h to obtain a suspension; |
| Example 13-B | Crystalline Al₂O₃ | 31.4 g of nano-Al₂O₃ (with a particle size of about 20 nm) was dissolved in 1500 mL of deionized water, and stirred for 2 h to obtain a suspension; |
| Example 14-B | Crystalline Al₂O₃ | 55.0 g of nano-Al₂O₃ (with a particle size of about 20 nm) was dissolved in 1500 mL of deionized water, and stirred for 2 h to obtain a suspension; |
| Example 19-B | Crystalline Al₂O₃ | 62.8 g of nano-Al₂O₃ (with a particle size of about 20 nm) was dissolved in 1500 mL of deionized water, and stirred for 2 h to obtain a suspension; |
| Examples 15-B and 17-B | Crystalline ZrO₂ | 39.3 g of nano-ZrO₂ (with a particle size of about 20 nm) was dissolved in 1500 mL of deionized water, and stirred for 2 h to obtain a suspension; |
| Example 20-B | Crystalline ZrO₂ | 47.2 g of nano-ZrO₂ (with a particle size of about 20 nm) was dissolved in 1500 mL of deionized water, and stirred for 2 h to obtain a suspension; |
| Examples 21-B and 24-B | Crystalline ZrO₂ | 62.9 g of nano-ZrO₂ (with a particle size of about 20 nm) was dissolved in 1500 mL of deionized water, and stirred for 2 h to obtain a suspension; |
| Example 22-B | Crystalline ZrO₂ | 70.8 g of nano-ZrO₂ (with a particle size of about 20 nm) was dissolved in 1500 mL of deionized water, and stirred for 2 h to obtain a suspension; |
| Example 23-B | Crystalline ZrO₂ | 86.5 g of nano-ZrO₂ (with a particle size of about 20 nm) was dissolved in 1500 mL of deionized water, and stirred for 2 h to obtain a suspension; |
| Examples 28-B and 29-B | Crystalline ZrO₂ | 63.0 g of nano-ZrO₂ (with a particle size of about 20 nm) was dissolved in 1500 mL of deionized water, and stirred for 2 h to obtain a suspension; |
| Example 62-B | Amorphous LiCoPO₄ | 7.4 g of lithium carbonate, 15.5 g of cobalt sulfate, 23.0 g of ammonium dihydrogen phosphate and 12.6 g of oxalic acid dihydrate were added into 1500 mL of deionized water, stirred and fully reacted for 6 h to obtain a solution, and then the solution was dried at 120°C for 12 h to obtain a suspension; |
| Example 16-B | Crystalline MgO | 47.2 g of nano-MgO (with a particle size of about 20 nm) was dissolved in 1500 mL of deionized water, and stirred for 2 h to obtain a suspension; |
| Example 37-B | Crystalline CuO | 47.1 g of nano-CuO (with a particle size of about 20 nm) was dissolved in 1500 mL of deionized water, and stirred for 2 h to obtain a suspension; |
| Example 38-B | Crystalline SiO₂ | 47.1 g of nano-SiO₂ (with a particle size of about 20 nm) was dissolved in 1500 mL of deionized water, and stirred for 2 h to obtain a suspension; |
| Example 39-B | Crystalline WO₃ | 47.1 g of nano-WO₃ (with a particle size of about 20 nm) was dissolved in 1500 mL of deionized water, and stirred for 2 h to obtain a suspension; |
| Example 40-B | Crystalline TiO₂ | 47.1 g of nano-TiO₂ (with a particle size of about 20 nm) was dissolved in 1500 mL of deionized water, and stirred for 2 h to obtain a suspension; |
| Example 41-B | Crystalline V₂O₅ | 47.1 g of nano-V₂O₅ (with a particle size of about 20 nm) was dissolved in 1500 mL of deionized water, and stirred for 2 h to obtain a suspension; |
| Example 42-B | Crystalline NiO | 47.1 g of nano-NiO (with a particle size of about 20 nm) was dissolved in 1500 mL of deionized water, and stirred for 2 h to obtain a suspension; |
| Example 43-B | Crystalline Al₂O₃ | 47.1 g of nano-Al₂O₃ (with a particle size of about 20 nm) was dissolved in 1500 mL of deionized water, and stirred for 2 h to obtain a suspension; |
| Example 44-B | Crystalline Al₂O₃ | 47.0 g of nano-Al₂O₃ (with a particle size of about 20 nm) was dissolved in 1500 mL of deionized water, and stirred for 2 h to obtain a suspension; |
| Example 52-B | Crystalline Al₂O₃ | 94.2 g of nano-Al₂O₃ (with a particle size of about 20 nm) was dissolved in 1500 mL of deionized water, and stirred for 2 h to obtain a suspension; |

**Table 5-B: Coating of second coating layer (step S6)**

| No. | Second coating layer material and amount thereof (based on weight of inner core)* | Amount of pyrophosphate-coated material added in step S6 (amount of inner core added for comparative example 12) (g) | Step S6: Coating of second coating layer | | | | |
|---|---|---|---|---|---|---|---|
| | | | Amount of correspondi ng coating material in second coating layer suspension (g) | Mixi ng time (h) | Drying temper ature (°C) | Sinteri ng temper ature (°C) | Sinterin g time (h) |
| Example 58-B | 3% of crystalline Al₂O₃ | 1571.1 | 47.1 | 6 | 120 | 700 | 8 |
| Compar ative example 11-B | 4% of crystalline Al₂O₃ | 1599.9 | 62.7 | 6 | 120 | 750 | 8 |
| Example 59-B | 4% of crystalline Al₂O₃ | 1594.0 | 62.5 | 6 | 120 | 750 | 8 |
| Example 60-B | 4% of crystalline Al₂O₃ | 1602.0 | 62.8 | 6 | 120 | 750 | 8 |
| Example 61-B | 4% of crystalline Al₂O₃ | 1602.5 | 62.8 | 6 | 120 | 750 | 8 |
| Example 62-B | 4% of amorphous LiCoPO₄ | 1602.5 | 62.8 | 6 | 120 | 650 | 8 |
| Example s 1-B to 4-B, 45-B to 51-B, and 53-B to 56-B | 3% of crystalline Al₂O₃ | 1586.8 | 47.1 | 6 | 120 | 700 | 8 |
| Example 5-B | 3% of crystalline Al₂O₃ | 1602.5 | 47.1 | 6 | 120 | 700 | 8 |
| Example 6-B | 3% of crystalline Al₂O₃ | 1618.2 | 47.1 | 6 | 120 | 700 | 8 |
| Example 7-B | 3% of crystalline Al₂O₃ | 1649.6 | 47.1 | 6 | 120 | 700 | 8 |
| Example 8-B | 1% of crystalline Al₂O₃ | 1586.8 | 15.7 | 6 | 120 | 700 | 8 |
| Example 9-B | 4% of crystalline Al₂O₃ | 1586.8 | 62.8 | 6 | 120 | 700 | 8 |
| Example 10-B | 5% of crystalline Al₂O₃ | 1586.8 | 78.6 | 6 | 120 | 700 | 8 |
| Example 11-B | 2.50% of crystalline Al₂O₃ | 1587.8 | 39.3 | 6 | 120 | 700 | 8 |
| Example 12-B | 3% of crystalline Al₂O₃ | 1587.4 | 47.2 | 6 | 120 | 700 | 8 |
| Example 13-B | 2% of crystalline Al₂O₃ | 1602.8 | 31.4 | 6 | 120 | 700 | 8 |
| Example 14-B | 3.50% of crystalline Al₂O₃ | 1610.5 | *55.0* | 6 | 120 | 700 | 8 |
| Example 15-B | 2.5% of crystalline ZrO₂ | 1603.3 | 39.3 | 6 | 120 | 750 | 8 |
| Example 16-B | 3% of crystalline MgO | 1619.0 | 47.2 | 6 | 120 | 680 | 8 |
| Example 17-B | 2.5% of crystalline ZrO₂ | 1595.5 | 39.3 | 6 | 120 | 750 | 8 |
| Example 18-B | 3% of crystalline Al₂O₃ | 1585.9 | 47.1 | 6 | 120 | 700 | 8 |
| Example 19-B | 4% of crystalline Al₂O₃ | 1602.4 | 62.8 | 6 | 120 | 700 | 8 |
| Example 20-B | 3% of crystalline ZrO₂ | 1587.7 | 47.2 | 6 | 120 | 750 | 8 |
| Example 21-B | 4% of crystalline ZrO₂ | 1603.5 | 62.9 | 6 | 120 | 750 | 8 |
| Example 22-B | 4.5% of crystalline ZrO₂ | 1658.6 | 70.8 | 6 | 120 | 750 | 8 |
| Example 23-B | 5.50% of crystalline ZrO₂ | 1603.5 | 86.5 | 6 | 120 | 750 | 8 |
| Example 24-B | 4% of crystalline ZrO₂ | 1603.5 | 62.9 | 6 | 120 | 750 | 8 |
| Example 25-B | 3% of crystalline Al₂O₃ | 1588.7 | 47.1 | 6 | 120 | 700 | 8 |
| Example 26-B | 3% of crystalline Al₂O₃ | 1584.3 | 47.1 | 6 | 120 | 700 | 8 |
| Example 27-B | 3% of crystalline Al₂O₃ | 1584.9 | 47.1 | 6 | 120 | 700 | 8 |
| Example 28-B | 4% of crystalline ZrO₂ | 1605.4 | 63.0 | 6 | 120 | 750 | 8 |
| Example 29-B | 4% of crystalline ZrO₂ | 1605.4 | 63.0 | 6 | 120 | 750 | 8 |
| Example 30-B | 3% of crystalline Al₂O₃ | 1587.6 | 47.1 | 6 | 120 | 700 | 8 |
| Example 31-B | 3% of crystalline Al₂O₃ | 1587.6 | 47.1 | 6 | 120 | 700 | 8 |
| Example 32-B | 3% of crystalline Al₂O₃ | 1587.6 | 47.1 | 6 | 120 | 700 | 8 |
| Example 33-B | 3% of crystalline Al₂O₃ | 1587.6 | 47.1 | 6 | 120 | 700 | 8 |
| Example 34-B | 3% of crystalline Al₂O₃ | 1587.6 | 47.1 | 6 | 120 | 700 | 8 |
| Example 35-B | 3% of crystalline Al₂O₃ | 1587.6 | 47.1 | 6 | 120 | 700 | 8 |
| Example 36-B | 3% of crystalline Al₂O₃ | 1587.6 | 47.1 | 6 | 120 | 700 | 8 |
| Example 37-B | 3% of crystalline CuO | 1587.6 | 47.1 | 6 | 120 | 710 | 8 |
| Example 38-B | 3% of crystalline SiO₂ | 1587.6 | 47.1 | 6 | 120 | 750 | 8 |
| Example 39-B | 3% of crystalline WO₃ | 1587.6 | 47.1 | 6 | 120 | 720 | 8 |
| Example 40-B | 3% of crystalline TiO₂ | 1587.6 | 47.1 | 6 | 120 | 730 | 8 |
| Example 41-B | 3% of crystalline V₂O₅ | 1587.6 | 47.1 | 6 | 120 | 730 | 8 |
| Example 42-B | 3% of crystalline NiO | 1587.6 | 47.1 | 6 | 120 | 710 | 8 |
| Example 43-B | 3% of crystalline Al₂O₃ | 1573.8 | 47.1 | 6 | 120 | 700 | 8 |
| Example 44-B | 3% of crystalline Al₂O₃ | 1583.8 | 47.1 | 6 | 120 | 700 | 8 |
| Example 52-B | 6% of crystalline Al₂O₃ | 1586.8 | 94.2 | 6 | 120 | 700 | 8 |

**Table 6-B: Coating of third coating layer (step S8)**

| No. | Third coating layer* | Molar ratio of SP2 to SP3* | Amount of two-layer coated material added in step S8 (amount of inner core added for comparative examples 1-2 and 4-10, amount of first-layer coated material added for comparative examples 3 and 11, and amount of only second-layer coated material added for comparative example 12) (g) | Step S8: Coating of third coating layer | | | | |
|---|---|---|---|---|---|---|---|---|
| | | | | Amo unt of sucro se (g) | Mixing time (h) | Dryin g temp eratur e (°C) | Sinteri ng temper ature (°C) | Sint erin g tim e (h) |
| Compa rative exampl e 1-B | 1% of carbon | 2.5 | 1568.5 | 37.3 | 6 | 150 | 650 | 8 |
| Compa rative exampl e 2-B | 2% of carbon | 2.8 | 1572.2 | 74.7 | 6 | 150 | 680 | 8 |
| Compa rative exampl e 3-B | 2% of carbon | 2.7 | 1601.8 | 74.6 | 6 | 150 | 680 | 7 |
| Compa rative exampl e 4-B | 1% of carbon | 2.4 | 1571.0 | 37.3 | 6 | 150 | 630 | 8 |
| Compa rative exampl e 5-B | 1.5% of carbon | 2.6 | 1570.6 | 56.0 | 6 | 150 | 650 | 7 |
| Compa rative exampl e 6-B | 2.5% of carbon | 2.8 | 1573.6 | 93.4 | 6 | 150 | 680 | 8 |
| Compa rative exampl e 7-B | 1% of carbon | 2.7 | 1572.2 | 37.3 | 6 | 150 | 680 | 7 |
| Compa rative exampl e 8-B | 1.5% of carbon | 2.9 | 1571.1 | 56.0 | 6 | 150 | 680 | 10 |
| Compa rative example 9-B | 1% of carbon | 2.2 | 1572.2 | 37.3 | 6 | 150 | 600 | 8 |
| Compa rative exampl e 10-B | 1% of carbon | 2.4 | 1571.1 | 37.3 | 6 | 150 | 630 | 8 |
| Examp le 57-B | 1% of carbon | 2.3 | 1586.8 | 37.3 | 6 | 150 | 620 | 8 |
| Examp le 58-B | 1% of carbon | 2.1 | 1618.2 | 37.3 | 6 | 150 | 600 | 6 |
| Compa rative exampl e 11-B | 1% of carbon | 2 | 1662.6 | 37.3 | 6 | 120 | 600 | 6 |
| Examp le 59-B | 1% of carbon | 1.8 | 1656.5 | 37.1 | 6 | 120 | 600 | 6 |
| Examp le 60-B | 1% of carbon | 1.7 | 1664.8 | 37.3 | 6 | 100 | 600 | 6 |
| Examp le 61-B | 1% of carbon | 3.1 | 1665.4 | 37.3 | 6 | 150 | 700 | 10 |
| Examp le 62-B | 1% of carbon | 3.5 | 1665.4 | 37.3 | 6 | 150 | 750 | 10 |
| Examp les 1-B, 30-B to 42-B, and 45-B to 52-B | 1% of carbon | 2.2 | 1633.9 | 37.3 | 6 | 150 | 700 | 10 |
| Examp le 2-B | 3% of carbon | 2.3 | 1633.9 | 111.9 | 6 | 150 | 600 | 9 |
| Examp le 3-B | 4% of carbon | 2.1 | 1633.9 | 149.2 | 6 | 150 | 600 | 6 |
| Examp le 4-B | 5% of carbon | 2.4 | 1633.9 | 186.5 | 6 | 150 | 630 | 8 |
| Examp le 5-B | 1% of carbon | 2.5 | 1649.6 | 37.3 | 6 | 150 | 650 | 8 |
| Examp le 6-B | 1% of carbon | 2.5 | 1665.3 | 37.3 | 6 | 150 | 650 | 8 |
| Examp le 7-B | 1% of carbon | 2.4 | 1696.7 | 37.3 | 6 | 150 | 630 | 8 |
| Examp le 8-B | 1% of carbon | 2.3 | 1602.5 | 37.3 | 6 | 150 | 600 | 9 |
| Examp le 9-B | 1% of carbon | 2.2 | 1649.6 | 37.3 | 6 | 150 | 600 | 8 |
| Examp le 10-B | 1% of carbon | 2.2 | 1665.3 | 37.3 | 6 | 150 | 600 | 9 |
| Examp le 11-B | 1.5% of carbon | 2.3 | 1629.0 | 56.1 | 6 | 150 | 600 | 9 |
| Examp le 12-B | 2% of carbon | 2.4 | 1634.6 | 74.7 | 6 | 150 | 630 | 8 |
| Examp le 13-B | 2% of carbon | 2.5 | 1634.2 | 74.6 | 6 | 150 | 650 | 8 |
| Examp le 14-B | 2.5% of carbon | 2.7 | 1665.5 | 93.3 | 6 | 150 | 680 | 7 |
| Examp le 15-B | 2% of carbon | 2.8 | 1642.6 | 74.7 | 6 | 150 | 680 | 8 |
| Examp le 16-B | 1% of carbon | 2.7 | 1666.2 | 37.3 | 6 | 150 | 680 | 7 |
| Examp le 17-B | 1.5% of carbon | 2.3 | 1634.8 | 56.0 | 6 | 150 | 600 | 9 |
| Examp le 18-B | 1% of carbon | 2.6 | 1633.0 | 37.3 | 6 | 150 | 650 | 7 |
| Examp le 19-B | 1.5% of carbon | 2.4 | 1665.2 | 56.0 | 6 | 150 | 630 | 8 |
| Examp le 20-B | 1.5% of carbon | 2.2 | 1634.8 | 56.0 | 6 | 150 | 600 | 9 |
| Examp le 21-B | 1% of carbon | 2.2 | 1666.4 | 37.3 | 6 | 150 | 600 | 9 |
| Examp le 22-B | 1% of carbon | 2.3 | 1721.4 | 37.3 | 6 | 150 | 600 | 9 |
| Examp le 23-B | 1% of carbon | 2.4 | 1690.0 | 37.3 | 6 | 150 | 630 | 8 |
| Examp le 24-B | 5.5% of carbon | 2.6 | 1666.4 | 205.4 | 6 | 150 | 650 | 7 |
| Examp le 25-B | 1% of carbon | 2.4 | 1635.9 | 37.4 | 6 | 150 | 630 | 8 |
| Examp le 26-B | 1% of carbon | 2.3 | 1631.3 | 37.3 | 6 | 150 | 600 | 9 |
| Examp le 27-B | 1.5% of carbon | 2.1 | 1631.9 | 55.9 | 6 | 150 | 600 | 6 |
| Examp le 28-B | 1% of carbon | 0.07 | 1668.3 | 37.4 | 6 | 80 | 600 | 6 |
| Examp le 29-B | 1% of carbon | 13 | 1668.3 | 37.4 | 6 | 150 | 850 | 10 |
| Examp le 43-B | 1% of carbon | 2.2 | 1620.5 | 37.3 | 6 | 150 | 700 | 10 |
| Examp le 44-B | 1% of carbon | 2.2 | 1630.8 | 37.3 | 6 | 150 | 700 | 10 |
| Examp le 53-B | 1% of carbon | 0.1 | 1633.9 | 37.3 | 6 | 85 | 600 | 6 |
| Examp le 54-B | 1% of carbon | 10 | 1633.9 | 37.3 | 6 | 150 | 800 | 9 |
| Examp le 55-B | 1% of carbon | 3 | 1633.9 | 37.3 | 6 | 150 | 680 | 8 |
| Examp le 56-B | 6% of carbon | 2.5 | 1633.9 | 223.8 | 6 | 150 | 640 | 8 |

### Prenaration of nositive electrode plate

The parameters were the same as example 1.

### Preparation of negative electrode plate, separator and electrolyte solution

The parameters were the same as example 1-1.

### Preparation of full battery

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### Preparation of button battery

The positive electrode plate above, a negative electrode and an electrolyte solution were assembled together into a button battery in a button battery box.

The performance test results of the positive electrode active materials of the examples and comparative examples were shown in the Table below.

**Table 7-B: Properties of positive electrode active material powder and performance of battery**

| No. | Properties of positive electrode active material powder | | | | | | Performance of battery | | |
|---|---|---|---|---|---|---|---|---|---|
| | Lattice change rate (%) | Li/Mn antisite defect concent ration (%) | Compact ed density (g/cm³) | Surfa ce oxyge n valen cy | 3C charge consta nt curren t rate (%) | Dissoluti on of Mn and Fe after cycling (ppm) | Capaci ty of button battery at 0.1C (mAh/ g) | Expansi on of cell upon 30 d of storage at 60°C (%) | Number of cycles for capacity retention rate of 80% at 45°C |
| Compara tive example 1-B | 11.4 | 5.2 | 1.5 | -1.55 | 50.1 | 2060 | 125.6 | 48.6 | 185 |
| Compara tive example 2-B | 10.6 | 3.3 | 1.67 | -1.51 | 54.9 | 1810 | 126.4 | 47.3 | 243 |
| Compara tive example 3-B | 10.8 | 3.4 | 1.64 | -1.64 | 52.1 | 1728 | 144.7 | 41.9 | 378 |
| Compara tive example 4-B | 4.3 | 2.8 | 1.69 | -1.82 | 56.3 | 1096 | 151.2 | 8.4 | 551 |
| Compara tive example 5-B | 2.8 | 2.5 | 1.65 | -1.85 | 58.2 | 31 | 148.4 | 7.5 | 668 |
| Compara tive example 6-B | 3.4 | 2.4 | 1.61 | -1.86 | 58.4 | 64 | 149.6 | 8.6 | 673 |
| Compara tive example 7-B | 4.5 | 2.4 | 1.73 | -1.83 | 59.2 | 85 | 148.6 | 8.3 | 669 |
| Compara tive example 8-B | 2.3 | 2.4 | 1.68 | -1.89 | 59.3 | 30 | 152.3 | 7.3 | 653 |
| Compara tive example 9-B | 2.3 | 2.4 | 1.75 | -1.89 | 59.8 | 30 | 152.3 | 7.3 | 672 |
| Compara tive example 10-B | 2.3 | 2.2 | 1.81 | -1.9 | 64.1 | 28 | 154.2 | 7.2 | 685 |
| Example 57-B | 2.3 | 2.2 | 1.92 | -1.92 | 65.4 | 12 | 154.3 | 5.4 | 985 |
| Example 58-B | 2.3 | 2.1 | 1.94 | -1.94 | 63.5 | 28 | 153.6 | 5.2 | 695 |
| Compara tive example 11-B | 11.4 | 5.2 | 1.58 | -1.93 | 51.4 | 64 | 128.2 | 6.4 | 492 |
| Example 59-B | 8.5 | 4.3 | 1.74 | -1.94 | 57.3 | 36 | 133.6 | 5.6 | 574 |
| Example 60-B | 2 | 1.8 | 2.09 | -1.95 | 61.1 | 11 | 153.7 | 4.2 | 1054 |
| Example 61-B | 2 | 1.9 | 1.95 | -1.96 | 60.2 | 22 | 151.7 | 5.2 | 983 |
| Example 62-B | 2 | 1.9 | 1.9 | -1.89 | 60.4 | 24 | 152.4 | 5.1 | 897 |
| Example 1-B | 2.5 | 1.8 | 2.33 | -1.92 | 69.3 | 10 | 156.2 | 5.2 | 1079 |
| Example 2-B | 2.5 | 1.8 | 2.27 | -1.93 | 69.2 | 8 | 155.3 | 4.7 | 1157 |
| Example 3-B | 2.5 | 1.8 | 2.24 | -1.93 | 69.1 | 6 | 154.4 | 4.5 | 1234 |
| Example 4-B | 2.5 | 1.8 | 2.21 | -1.94 | 69.2 | 4 | 152.7 | 3.1 | 1362 |
| Example 5-B | 2.5 | 1.8 | 2.33 | -1.95 | 69.7 | 5 | 156.2 | 3.4 | 1467 |
| Example 6-B | 2.5 | 1.8 | 2.3 | -1.95 | 69.4 | 4 | 155.7 | 3.1 | 1523 |
| Example 7-B | 2.5 | 1.8 | 2.25 | -1.95 | 69 | 3 | 155.2 | 2.8 | 1589 |
| Example 8-B | 2.5 | 1.8 | 2.65 | -1.93 | 68.4 | 15 | 155.8 | 4.1 | 943 |
| Example 9-B | 2.5 | 1.8 | 2.35 | -1.95 | 68.5 | 10 | 155.2 | 3.7 | 1027 |
| Example 10-B | 2.5 | 1.8 | 2.42 | -1.98 | 68.6 | 5 | 154.4 | 3.1 | 1275 |
| Example 11-B | 2.5 | 1.9 | 2.36 | -1.96 | 71.4 | 8 | 156.8 | 3.5 | 1026 |
| Example 12-B | 2.3 | 1.8 | 2.39 | -1.96 | 73.5 | 6 | 155.7 | 2.5 | 1136 |
| Example 13-B | 2.6 | 1.9 | 2.4 | -1.96 | 74.5 | 7 | 155.1 | 3.5 | 1207 |
| Example 14-B | 2.6 | 1.9 | 2.42 | -1.96 | 75.1 | 5 | 153.8 | 4.2 | 1308 |
| Example 15-B | 2.2 | 1.9 | 2.46 | -1.96 | 73.7 | 3 | 153.4 | 3.9 | 1109 |
| Example 16-B | 2.1 | 1.9 | 2.47 | -1.98 | 73.1 | 5 | 153.1 | 4 | 1132 |
| Example 17-B | 2.5 | 1.7 | 2.41 | -1.98 | 75.3 | 4 | 154.7 | 4.1 | 1258 |
| Example 18-B | 2.3 | 1.6 | 2.42 | -1.97 | 76.1 | 4 | 154.3 | 4.7 | 1378 |
| Example 19-B | 2.2 | 1.7 | 2.43 | -1.97 | 76.8 | 4 | 154.3 | 4.7 | 1328 |
| Example 20-B | 2.6 | 1.8 | 2.41 | -1.93 | 74.8 | 4 | 152.8 | 3.5 | 1379 |
| Example 21-B | 2.4 | 1.7 | 2.39 | -1.96 | 75.7 | 4 | 153.7 | 3.7 | 1287 |
| Example 22-B | 2.4 | 1.8 | 2.36 | -1.94 | 74.3 | 2 | 151.4 | 2.9 | 1454 |
| Example 23-B | 2.3 | 1.7 | 2.43 | -1.95 | 75.6 | 3 | 150.7 | 2.7 | 1438 |
| Example 24-B | 2.2 | 1.8 | 2.42 | -1.97 | 75.2 | 3 | 151.3 | 2.8 | 1467 |
| Example 25-B | 2.1 | 1.7 | 2.47 | -1.96 | 77.4 | 4 | 156.7 | 3.2 | 1379 |
| Example 26-B | 3.6 | 2.5 | 2.19 | -1.95 | 55.7 | 10 | 151.2 | 5 | 953 |
| Example 27-B | 2.8 | 2.1 | 2.21 | -1.96 | 73.1 | 8 | 153.8 | 4.1 | 1027 |
| Example 28-B | 2.5 | 1.9 | 1.95 | -1.93 | 53.4 | 11 | 152.7 | 7.1 | 869 |
| Example 29-B | 2.4 | 1.8 | 1.98 | -1.94 | 66.8 | 8 | 153.9 | 5.3 | 957 |
| Example 30-B | 2.4 | 1.9 | 2.35 | -1.96 | 67.7 | 18 | 155.7 | 5.3 | 957 |
| Example 31-B | 2.5 | 1.7 | 2.35 | -1.95 | 68.9 | 16 | 154.3 | 4.9 | 1016 |
| Example 32-B | 2.5 | 1.7 | 2.37 | -1.96 | 68.5 | 16 | 155.1 | 4.9 | 968 |
| Example 33-B | 2.6 | 1.8 | 2.38 | -1.97 | 68.7 | 26 | 155.4 | 5.6 | 927 |
| Example 34-B | 2.6 | 1.9 | 2.32 | -1.94 | 70.8 | 19 | 155.8 | 4.9 | 934 |
| Example 35-B | 2.4 | 1.7 | 2.34 | -1.92 | 70.4 | 14 | 156.8 | 5.5 | 945 |
| Example 36-B | 2.5 | 1.9 | 2.31 | -1.91 | 71.1 | 16 | 155.1 | 5.8 | 967 |
| Example 37-B | 2.5 | 1.7 | 2.31 | -1.9 | 67.5 | 21 | 155.2 | 5.6 | 926 |
| Example 38-B | 2.4 | 1.9 | 2.3 | -1.94 | 68.9 | 30 | 153.4 | 6.4 | 897 |
| Example 39-B | 2.2 | 1.8 | 2.33 | -1.92 | 68.7 | 27 | 155.7 | 6.1 | 957 |
| Example 40-B | 2.4 | 1.9 | 2.34 | -1.89 | 70.8 | 35 | 154.7 | 5.6 | 935 |
| Example 41-B | 2.6 | 1.9 | 2.36 | -1.92 | 69.7 | 31 | 153.9 | 5.5 | 912 |
| Example 42-B | 2.4 | 1.9 | 2.34 | -1.9 | 70.9 | 18 | 155.8 | 4.7 | 1087 |
| Example 43-B | 2.3 | 1.9 | 2.35 | -1.91 | 70.2 | 15 | 153.6 | 4.9 | 997 |
| Example 44-B | 2.4 | 1.8 | 2.34 | -1.94 | 71.3 | 16 | 156.1 | 5.2 | 983 |
| Example 45-B | 2.5 | 1.8 | 2.35 | -1.93 | 68.4 | 12 | 155.3 | 4.8 | 1025 |
| Example 46-B | 2.6 | 1.8 | 2.36 | -1.93 | 67.9 | 11 | 155.5 | 5.4 | 1047 |
| Example 47-B | 2.5 | 1.8 | 2.38 | -1.91 | 68.4 | 19 | 154.2 | 4.8 | 948 |
| Example 48-B | 2.4 | 1.9 | 2.41 | -1.93 | 69.3 | 22 | 151.3 | 5.1 | 953 |
| Example 49-B | 2.3 | 1.7 | 2.34 | -1.92 | 65.2 | 20 | 153.8 | 4.9 | 998 |
| Example 50-B | 2.5 | 1.8 | 2.36 | -1.94 | 68.7 | 16 | 154.1 | 5.2 | 1002 |
| Example 51-B | 2.3 | 1.9 | 2.39 | -1.92 | 68.2 | 25 | 154.9 | 5.3 | 1001 |
| Example 52-B | 2.5 | 1.8 | 2.32 | -1.95 | 68.1 | 18 | 155 | 5.8 | 948 |
| Example 53-B | 2.4 | 1.9 | 2.36 | -1.98 | 69.2 | 17 | 155.1 | 5.4 | 956 |
| Example 54-B | 2.5 | 1.7 | 2.37 | -1.97 | 69.4 | 19 | 155.2 | 5.6 | 992 |
| Example 55-B | 2.4 | 1.8 | 2.35 | -1.94 | 64.1 | 18 | 154.8 | 4.9 | 938 |
| Example 56-B | 2.5 | 1.9 | 2.2 | -1.92 | 65 | 25 | 151.2 | 5.3 | 957 |

**Table 8-B: Interplanar spacing and included angle of crystal orientation (111) of crystalline pyrophosphate in first coating layer**

| | Interplanar spacing of crystalline pyrophosphate (nm) | Included angle of crystal orientation (111) of crystalline pyrophosphate |
|---|---|---|
| Example 1-B | 0.303 | 29.496° |
| Example 30-B-B | 0.451 | 19.668° |
| Example 31 | 0.297 | 30.846° |
| Example 32-B | 0.457 | 19.456° |
| Example 33-B | 0.437 | 20.257° |
| Example 34-B | 0.462 | 19.211° |
| Example 35-B-B | 0.450 | 19.735° |
| Example 36 | 0.372 | 23.893° |

It can be seen from Tables 7-B and 8-B that compared with comparative examples, the examples of the present application achieve a smaller lattice change rate, a smaller Li/Mn antisite defect concentration, a larger compacted density, a surface oxygen valency more closer to -2 valence, less Mn and Fe dissolution after cycling, and better battery performance, such as a higher capacity of a button battery, better high-temperature storage performance, higher safety performance and better cycling performance of button batteries.

**Table 9-B: Thickness of each layer of positive electrode active material and weight ratio of manganese element to phosphorus element**

| No. | Inner core | First coating layer | Second coating layer | Third coating layer | Thick ness of first coatin g layer (nm) | Thick ness of secon d coatin g layer (nm) | Thick ness of third coatin g layer (nm) | Cont ent of Mn elem ent (wt %) | Cont ent of P elem ent (wt %) | Weigh t ratio of Mn eleme nt to P eleme nt |
|---|---|---|---|---|---|---|---|---|---|---|
| Compar ative example 3-B | LiMn_{0.80}Fe_{0.20}P O₄ | 2% of amorphou s Li₂FeP₂O₇ | - | 2% of carbon | 4 | - | 10 | 26.1 | 18.9 | 1.383 |
| Compar ative example 4-B | LiMn_{0.70}Fe_{0.295}V _{0.005}PO₄ | - | - | 1% of carbon | - | - | 5 | 24.3 | 19.6 | 1.241 |
| Exampl e 58-B | Li_{0.999}Mn_{0.60}Fe_{0. 393}V_{0.004}Co_{0.003}P _{0.999}S_{0.001}O₄ | - | 3% of crystalli ne Al₂O₃ | 1% of carbon | - | 9 | 5 | 19.6 | 19.0 | 1.034 |
| Exampl e 1-B | Li_{0.997}Mn_{0.60}Fe_{0. 393}V_{0.004}Co_{0.003}P _{0.997}S_{0.003}O₄ | 1% of crystalline Li₂FeP₂O₇ | 3% of crystalli ne Al₂O₃ | 1% of carbon | 2 | 9 | 5 | 19 | 18.0 | 1.053 |
| Exampl e 2-B | Same as example 1-B | 1% of crystalline Li₂FeP₂O₇ | 3% of crystalli ne Al₂O₃ | 3% of carbon | 2 | 9 | 15 | 18.3 | 17.4 | 1.053 |
| Exampl e 3-B | Same as example 1-B | 1% of crystalline Li₂FeP₂O₇ | 3% of crystalli ne Al₂O₃ | 4% of carbon | 2 | 9 | 20 | 18 | 17.1 | 1.053 |
| Exampl e 4-B | Same as example 1-B | 1% of crystalline Li₂FeP₂O₇ | 3% of crystalli ne Al₂O₃ | 5% of carbon | 2 | 9 | 25 | 17.9 | 17.0 | 1.052 |
| Exampl e 5-B | Same as example 1-B | 2% of crystalline Li₂FeP₂O₇ | 3% of crystalli ne Al₂O₃ | 1% of carbon | 4 | 9 | 5 | 18.7 | 18.5 | 1.011 |
| Exampl e 6 | Same as example 1-B | 3% of crystalline Li₂FeP₂O₇ | 3% of crystalli ne Al₂O₃ | 1% of carbon | 6 | 9 | 5 | 18.3 | 18.3 | 0.999 |
| Exampl e 7-B | Same as example 1-B | 5% of crystalline Li₂FeP₂O₇ | 3% of crystalli ne Al₂O₃ | 1% of carbon | 10 | 9 | 5 | 17.6 | 18.1 | 0.975 |
| Example 8-B | Same as example 1-B | 1% of crystalline Li₂FeP₂O₇ | 1% of crystalli ne Al₂O₃ | 1% of carbon | 2 | 3 | 5 | 19.8 | 19.0 | 1.043 |
| Exampl e 9-B | Same as example 1-B | 1% of crystalline Li₂FeP₂O₇ | 4% of crystalli ne Al₂O₃ | 1% of carbon | 2 | 12 | 5 | 18.7 | 18.4 | 1.014 |
| Exampl e 10-B | Same as example 1-B | 1% of crystalline Li₂FeP₂O₇ | 5% of crystalli ne Al₂O₃ | 1% of carbon | 2 | 15 | 5 | 18.4 | 17.5 | 1.053 |
| Exampl e 11-B | Li_{1.001}Mn_{0.60}Fe_{0. 393}V_{0.004}Co_{0.003}P _{0.999}Si_{0.001}O₄ | 1% of crystalline Li₂FeP₂O₇ | 2.50% of crystalli ne Al₂O₃ | 1.5% of carbon | 2 | 7.5 | 7.5 | 19 | 18.5 | 1.026 |
| Exampl e 13-B | Li_{0.995}Mn_{0.65}Fe_{0. 341}V_{0.004}Co_{0.005}P _{0.995}S_{0.005}O₄ | 2% of crystalline Li₂FeP₂O₇ | 2% of crystalli ne Al₂O₃ | 2% of carbon | 4 | 6 | 10 | 18.7 | 16.9 | 1.108 |
| Exampl e 14-B | Li_{1.002}Mn_{0.70}Fe_{0. 293}V_{0.004}Co_{0.003}P _{0.998}Si_{0.002}O₄ | 2.5% of crystalline Li₂FeP₂O₇ | 3.50% of crystalli ne Al₂O₃ | 2.5% of carbon | 5 | 10.5 | 12.5 | 17.8 | 15.3 | 1.166 |

It can be seen from Table 9-B that the content of manganese element and the weight content ratio of manganese element to phosphorus element in the positive electrode active material are obviously reduced by means of doping at the manganese and phosphorus sites of lithium manganese iron phosphate (containing 35% of manganese and about 20% of phosphorus) and three-layer coating, and in addition, by comparing examples 1-B to 14-B with comparative example 3-B, comparative example 4-B and example 58-B, in combination with Table 7-B, it can be seen that the decrease of the elements manganese and phosphorus in the positive electrode active material will result in less dissolution of manganese and iron and an improvement in the performance of the secondary battery prepared therefrom.

### II. Investigation of influence of coating layer sintering method on properties of positive electrode active material

The batteries of the examples and comparative examples in the Table below were manufactured similarly to example 1-B, except that the method parameters in the Table below were used. The results were shown in Table 10-B below.

**Table 10-B: Influence of steps S4, S6 and S8 on properties of positive electrode active material**

| No. | Sinterin g tem pera ture in S4 (°C) | Sinterin g tim e in S4 (h) | Sintering temp eratu re in S6 (°C) | Sinterin g tim e in S6 (h) | Sintering temp eratu re in S8 (°C) | Sinterin g tim e in S8 (h) | Latti ce ch an ge rat e (% ) | Li/Mn antisit e defect conce ntratio n | Compacte d densi ty | 3C cha rge con sta nt cur ren t rat e (% ) | Dissoluti on of Mn and Fe after cycli ng (ppm ) | Surfa ce ox yg en val en cy | Capac ity of butt on batt ery at 0.1 C (m Ah/ 8) | Expansi on of cell whe n store d at 60° C for 30 d (%) | Numb er of cyc les for cap acit y rete ntio n rate of 80 % at 45° C |
|---|---|---|---|---|---|---|---|---|---|---|---|---|---|---|---|
| Exa mpl e 1-B | 650 | 6 | 600 | 8 | 700 | 10 | 2. 5 | 1.8 | 2.33 | 69. 5 | 8 | - 1.9 1 | 156 .7 | 4.8 | 108 7 |
| Exa mpl e II-1 | 750 | 4 | 500 | 6 | 700 | 6 | 3 | 2.4 | 2.22 | 63. 8 | 13 | - 1.9 4 | 153 .6 | 6.8 | 815 |
| Exa mpl e II-2 | 800 | 4 | 500 | 6 | 700 | 6 | 3. 1 | 2.4 | 2.19 | 66. 8 | 14 | - 1.9 4 | 152 .8 | 7.3 | 826 |
| Exa mpl e II-3 | 700 | 2 | 500 | 6 | 700 | 6 | 2. 9 | 2.3 | 2.18 | 61. 7 | 16 | - 1.9 5 | 150 .7 | 6.5 | 764 |
| Exa mpl e II-4 | 700 | 3 | 500 | 6 | 700 | 6 | 2. 7 | 2.1 | 2.21 | 63. 8 | 16 | - 1.9 5 | 151 .7 | 6.1 | 835 |
| Exa mpl e II-5 | 700 | 4 | 400 | 6 | 700 | 6 | 2. 5 | 1.8 | 2.29 | 61. 9 | 31 | - 1.9 4 | 152 .6 | 5.2 | 716 |
| Exa mpl e II-6 | 700 | 4 | 600 | 6 | 700 | 6 | 2. 5 | 1.8 | 2.32 | 62. 8 | 15 | - 1.9 5 | 153 .8 | 5.6 | 795 |
| Exa mpl e II-7 | 700 | 4 | 500 | 8 | 700 | 6 | 2. 5 | 1.8 | 2.29 | 66. 8 | 13 | - 1.9 4 | 155 .9 | 5.2 | 896 |
| Exa mpl e II-8 | 700 | 4 | 500 | 10 | 700 | 6 | 2. 5 | 1.8 | 2.32 | 68. 1 | 12 | - 1.9 5 | 155 .4 | 5.1 | 984 |
| Exa mpl e II-9 | 700 | 4 | 500 | 6 | 750 | 6 | 2. 5 | 1.8 | 2.33 | 69. 8 | 10 | - 1.9 2 | 156 .4 | 4.8 | 106 7 |
| Exa mpl e II-10 | 700 | 4 | 500 | 6 | 800 | 6 | 2. 5 | 1.8 | 2.33 | 69. 6 | 10 | - 1.9 2 | 155 .7 | 5.2 | 103 7 |
| Exa mpl e II-11 | 700 | 4 | 500 | 6 | 700 | 8 | 2. 5 | 1.8 | 2.33 | 67. 8 | 11 | - 1.9 | 154 .9 | 5.3 | 897 |
| Exa mpl e II-12 | 700 | 4 | 500 | 6 | 700 | 10 | 2. 5 | 1.8 | 2.33 | 66. 2 | 13 | - 1.9 4 | 153 .8 | 5.3 | 816 |
| Exa mpl e II-13 | 600 | 3 | 500 | 8 | 750 | 8 | 4. 8 | 5.3 | 2.26 | 53. 6 | 97 | - 1.8 9 | 138 .6 | 11.2 | 563 |
| Exa mpl e II-14 | 850 | 3 | 500 | 8 | 750 | 8 | 5. 3 | 4.7 | 2.36 | 56. 7 | 90 | - 1.9 | 144 .7 | 9.8 | 627 |
| Exa mpl e II-15 | 750 | 1.5 | 500 | 8 | 750 | 8 | 4. 7 | 4.5 | 2.23 | 52. 6 | 91 | - 1.9 | 140 .6 | 9.3 | 618 |
| Exa mpl e II-16 | 750 | 4.5 | 500 | 8 | 750 | 8 | 4. 1 | 4 | 2.29 | 57. 5 | 83 | - 1.9 1 | 139 .5 | 8.7 | 628 |
| Exa mpl e II-17 | 750 | 3 | 350 | 8 | 750 | 8 | 4. 8 | 4.6 | 2.26 | 51. 6 | 81 | - 1.8 9 | 140 .5 | 9.3 | 534 |
| Exa mple II-18 | 750 | 3 | 650 | 8 | 750 | 8 | 3. 9 | 4.8 | 2.33 | 48. 7 | 82 | - 1.94 | 141 .5 | 9.4 | 529 |
| Exa mpl e II-19 | 750 | 3 | 500 | 5.5 | 750 | 8 | 4. 4 | 4.2 | 2.22 | 44. 8 | 84 | - 1.9 2 | 143 .2 | 9.5 | 547 |
| Exa mpl e II-20 | 750 | 3 | 500 | 10. 5 | 750 | 8 | 4. 1 | 3.9 | 2.32 | 48. 6 | 81 | - 1.9 1 | 140 .7 | 8.5 | 617 |
| Exa mpl e II-21 | 750 | 3 | 500 | 8 | 650 | 8 | 5. 2 | 4.1 | 2.29 | 47. 9 | 85 | - 1.9 2 | 140 .7 | 10.9 | 507 |
| Exa mpl e II-22 | 750 | 3 | 500 | 8 | 850 | 8 | 5 | 4 | 2.22 | 48. 6 | 82 | - 1.9 4 | 140 .6 | 9.3 | 614 |
| Exa mpl e II-23 | 750 | 3 | 500 | 8 | 750 | 5.5 | 4. 3 | 4.2 | 2.25 | 47. 3 | 86 | - 1.9 | 141 .7 | 10.2 | 476 |
| Exa mpl e II-24 | 750 | 3 | 500 | 8 | 750 | 10. 5 | 50 | 4.9 | 2.33 | 49. 4 | 83 | - 1.9 3 | 140 .8 | 10.3 | 594 |

It can be seen from the above that when the sintering temperature in step S4 is in a range of 650-800°C and the sintering time is 2-6 h, the sintering temperature in step S6 is 400-600°C and the sintering time is 6-10 h, and the sintering temperature in step S8 is 700-800°C and the sintering time is 6-10 h, smaller lattice change rate, lower Li/Mn antisite defect concentration, less dissolution of manganese and iron elements, better 3 C charge constant current rate, larger battery capacity, better battery cycling performance, and better high-temperature storage stability can be achieved.

In addition, compared with example II-16 (with the sintering temperature in step S4 being 750°C and the sintering time being 4.5 h), example II-1 (with the sintering temperature in step S4 being 750°C and the sintering time being 4 h) achieves better properties of the positive electrode active material and battery performance, which indicates that when the sintering temperature of step S4 is 750°C or higher than 750°C, it is necessary to control the sintering time to be less than 4.5 h.

### III. Investigation of influence of reaction temperature and reaction time during nrenaration of inner core on nronerties of nositive electrode active material

The positive electrode active materials and batteries of examples in the Table below were prepared similarly to example 1-B, and reference could be made to the method parameters shown in the Table below for the differences in the preparation of the positive electrode active materials. The results were also shown in the Table below.

**Table 11-B: Influence of reaction temperature and reaction time during preparation of inner core on properties of positive electrode active material**

| No. | Step S1 | | Step S2 | | Latt ice cha nge rate (%) | Li/Mn antisite defect concent ration (%) | Comp acted densit y (g/cm ³) | 3C char ge cons tant curr ent rate (%) | Dissol ution of Mn and Fe after cyclin g (ppm) | Surf ace oxy gen vale ncy | Cap acity of butt on batte ry at 0.1C (mA h/g) | Expa nsion of cell upon 30 d of stora ge at 60°C (%) | Num ber of cycl es for capa city reten tion rate of 80% at 45° C |
|---|---|---|---|---|---|---|---|---|---|---|---|---|---|
| | Reacti on tempe rature (°C) | Reac tion time (h) | Reacti on tempe rature (°C) | Reac tion time (h) | | | | | | | | | |
| Exa mple 1-B | 80 | 6 | 80 | 10 | 2.5 | 1.8 | 2.35 | 70.3 | 7 | -1.93 | 157. 2 | 4.2 | 1128 |
| Exa mple III-1 | 70 | 6 | 80 | 10 | 2.8 | 3.4 | 2.3 | 60.1 | 34 | -1.93 | 155. 4 | 5.8 | 876 |
| Exa mple III-2 | 60 | 6 | 80 | 10 | 3.1 | 3.1 | 2.33 | 64.2 | 18 | -1.92 | 156. 2 | 5.1 | 997 |
| Exa mple III-4 | 100 | 6 | 80 | 10 | 2.3 | 2.4 | 2.37 | 71.3 | 7 | -1.94 | 156. 8 | 4.1 | 1137 |
| Exa mple III-5 | 120 | 6 | 80 | 10 | 2.1 | 2.2 | 2.38 | 72.1 | 5 | -1.92 | 155. 4 | 4 | 1158 |
| Exa mple III-6 | 80 | 2 | 80 | 10 | 2.8 | 3.2 | 2.27 | 68.4 | 24 | -1.9 | 154. 9 | 5.1 | 895 |
| Exa mple III-7 | 80 | 3 | 80 | 10 | 2.6 | 2.7 | 2.29 | 69.7 | 17 | -1.92 | 156. 1 | 4.7 | 967 |
| Exa mple III-8 | 80 | 5 | 80 | 10 | 2.4 | 1.9 | 2.34 | 70.6 | 8 | -1.94 | 156. 8 | 4.3 | 1137 |
| Exa mple III-9 | 80 | 7 | 80 | 10 | 2.5 | 1.8 | 2.35 | 68.3 | 11 | -1.94 | 156. 4 | 4.8 | 987 |
| Exa mple III-10 | 80 | 9 | 80 | 10 | 2.6 | 1.8 | 2.36 | 67.2 | 15 | - 1.93 | 155. 9 | 5.2 | 921 |
| Exa mple III-11 | 80 | 6 | 40 | 10 | 3.2 | 3.4 | 2.28 | 67.8 | 35 | - 1.94 | 156. 8 | 5.4 | 894 |
| Exa mple III-12 | 80 | 6 | 60 | 10 | 2.8 | 2.9 | 2.31 | 68.7 | 18 | -1.95 | 157 | 4.9 | 927 |
| Exa mple III-13 | 80 | 6 | 80 | 10 | 2.5 | 2.7 | 2.35 | 70.3 | 7 | - 1.93 | 157. 2 | 4.2 | 1128 |
| Exa mple III-14 | 80 | 6 | 100 | 10 | 2.7 | 2.8 | 2.33 | 69.4 | 15 | - 1.93 | 156. 7 | 4.6 | 957 |
| Exa mple III-15 | 80 | 6 | 120 | 10 | 2.8 | 3.1 | 2.32 | 68.1 | 24 | - 1.94 | 156. 2 | 4.8 | 914 |
| Exa mple III-16 | 80 | 6 | 90 | 1 | 3.7 | 3.8 | 2.26 | 67.9 | 38 | - 1.93 | 155. 8 | 5.2 | 885 |
| Exa mple III-17 | 80 | 6 | 90 | 3 | 3.4 | 3.4 | 2.31 | 68.2 | 32 | - 1.94 | 156. 1 | 4.8 | 915 |
| Exa mple III-18 | 80 | 6 | 90 | 5 | 3.1 | 3.1 | 2.33 | 69.1 | 27 | - 1.92 | 156. 4 | 4.6 | 934 |
| Exa mple III-19 | 80 | 6 | 90 | 7 | 2.8 | 2.9 | 2.34 | 69.4 | 15 | - 1.93 | 156. 8 | 4.5 | 971 |
| Exa mple III-20 | 80 | 6 | 90 | 9 | 2.5 | 2.7 | 2.35 | 70.3 | 7 | - 1.93 | 157. 2 | 4.2 | 1128 |

It can be seen from Table 11-B that when the reaction temperature is in a range of 60-120°C and the reaction time is 2-9 hours in step S1, and the reaction temperature is in a range of 40-120°C and the reaction time is 1-10 hours in step S2, the properties of the positive electrode active material powder (lattice change rate, Li/Mn antisite defect concentration, surface oxygen valency, and compacted density) and the performance of the prepared battery (electric capacity, high-temperature cycling performance, and high-temperature storage performance) are all excellent.

The preparation and performance tests of the positive electrode active materials having an inner core of Li₁₊ₓCₘMn_{1-y}A_{y}P_{1-z}R_{z}O₄₋ₙDₙ and a shell comprising a first coating layer containing a crystalline pyrophosphate and a metal oxide of Q'ₑO_{f} and a second coating layer containing carbon will be detailed below:

### Example 1C-1

### Step S1: Preparation of doped manganese oxalate

The parameters for preparing the doped manganese oxalate were the same as those in example 1.

### Step S2: Preparation of inner core comprising Li_{0.994}Mo_{0.001}Mn_{0.65}Fe_{0.35}P_{0.999}Si_{0.001}O_{3.999}F_{0.001}

1 mol of Fe-doped manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose were added into 20 L of deionized water, and the mixture was transferred into a sander and thoroughly ground and stirred for 10 hours to obtain a slurry; the slurry was transferred into a spray drying apparatus for spray-drying granulation, where the drying temperature was set at 250°C and the drying time was 4 h, so as to obtain particles; the particles were sintered at 700°C for 10 hours in a protective atmosphere of nitrogen (90% v/v) + hydrogen (10% v/v) to obtain an inner core material. The element content of the inner core material was detected using inductively coupled plasma (ICP) emission spectrometry, and the chemical formula of the obtained inner core was as shown above.

### Step S3: Preparation of lithium iron pyrophosphate powder

4.77 g of lithium carbonate, 7.47 g of ferrous carbonate, 14.84 g of ammonium dihydrogen phosphate, and 1.3 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. The powder was sintered at 650°C in a nitrogen atmosphere for 8 hours, naturally cooled to room temperature, and then ground to obtain a Li₂FeP₂O₇ powder.

### Step S4: Preparation of suspension comprising aluminum oxide and sucrose

4.71 g of nano-Al₂O₃ (with a particle size of about 20 nm) and 3.73 g of sucrose (in C₁₂H₂₂O₁₁, the same below) were added into 150 ml of deionized water, and stirred for 6 hours until the mixture was fully mixed. The mixture was then heated to 120°C and held at the temperature for 6 hours to obtain a suspension comprising aluminum oxide and sucrose.

### Step S5: Preparation of two-layer coatings

157.21 g of the above inner core and 1.57 g of the above lithium iron pyrophosphate (Li₂FeP₂O₇) powder were added into the suspension comprising aluminum oxide and sucrose prepared in the previous step, stirred and mixed uniformly, then transferred into a vacuum oven and dried at 150°C for 6 h, then the resulting product was dispersed by sanding; and after dispersion, the product was sintered at 700°C for 6 hours in a nitrogen atmosphere to obtain two-layer coated lithium manganese phosphate.

### Examples 1C-2 to 1C-59 and comparative examples 1C to 12C

The positive electrode active materials of examples 1C-2 to 1C-59 and comparative examples 1C to 12C were prepared by a method similar to that of example 1C-1, and the differences in the preparation of the positive electrode active materials were shown in Tables 1C to 4C.

In examples 1C to 9C, there was no steps S3-S5; step S4 was not involved in comparative example 10C; and step S3 was not involved in comparative example 11C.

**Table 1C: Preparation of doped manganese oxalate and preparation of inner core (steps S1-S2)**

| No. | Chemical formula of inner core* | Raw materials used in Step S1 | Raw materials used in Step S2 |
|---|---|---|---|
| Comparativ e example 1C | LiMnPO₄ | MnSO₄·H₂O, 1.0 mol; water, 10 L; and oxalic acid dihydrate, 1 mol; | Manganese oxalate particles obtained in step S1, 1 mol; lithium carbonate, 0.5 mol; 85% aqueous phosphoric acid solution containing 1 mol of phosphoric acid; sucrose, 0.005 mol; and water, 20 L; |
| Comparativ e example 2C | LiMn_{0.85}Fe_{0.15}PO₄ | MnSO₄·H₂O, 0.85 mol; FeSO₄· H₂O, 0.15 mol; water, 10 L; and oxalic acid dihydrate, 1 mol; | Doped manganese oxalate particles obtained in step S1, 1 mol; lithium carbonate, 0.5 mol; 85% aqueous phosphoric acid solution containing 1 mol of phosphoric acid; sucrose, 0.005 mol; and water, 20 L; |
| Comparative example 3C | Li_{0.990}Mg_{0.005}Mn_{0.95}Zn_{0.05}PO₄ | MnSO₄·H₂O, 1.9 mol; ZnSO₄, 0.1 mol; water, 10 L; and oxalic acid dihydrate, 2 mol; | Doped manganese oxalate particles obtained in step S1, 1 mol; lithium carbonate, 0.495 mol; MgSO₄, 0.005 mol; 85% aqueous phosphoric acid solution containing 1 mol of phosphoric acid; sucrose, 0.005 mol; and water, 20 L; |
| Comparativ e example 4C | Li_{0.90}Nb_{0.01}Mn_{0.6}Fe_{0.4}P O_{3.95}F_{0.05} | MnSO₄·H₂O, 1.2 mol; FeSO₄·H₂O, 0.8 mol; water, 10 L; and oxalic acid dihydrate, 2 mol; | Fe doped manganese oxalate particles obtained in step S1, 1 mol; lithium carbonate, 0.45 mol; Nb₂(SO₄)₅, 0.005 mol; 85% aqueous phosphoric acid solution containing 1 mol of phosphoric acid; NH₄HF₂, 0.025 mol; sucrose, 0.005 mol; and water, 20 L; |
| Comparativ e example 5C | Li_{0.76}Mg_{0.12}Mn_{0.7}Fe_{0.3}P_{0. 999}Si_{0.001}O_{3.999}F_{0.001} | MnSO₄·H₂O, 1.4 mol; FeSO₄·H₂O, 0.6 mol; water, 10 L; and oxalic acid dihydrate, 2 mol; | Fe doped manganese oxalate particles obtained in step S1, 1 mol; lithium carbonate, 0.38 mol; MgSO₄, 0.12 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Comparativ e example 6C | Li_{0.998}Mg_{0.001}Mn_{0.4}Zn_{0.6} P_{0.999}Si_{0.001}O_{3.999}F_{0.001} | MnSO₄·H₂O, 0.8 mol; ZnSO₄, 1.2 mol; water, 10 L; and oxalic acid dihydrate, 2 mol; | Doped manganese oxalate particles obtained in step S1, 1 mol; lithium carbonate, 0.499 mol; MgSO₄, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Comparativ e example 7C | Li_{1.068}Mg_{0.001}Mn_{0.7}Fe_{0.3} P_{0.88}Si_{0.12}O_{3.95}F_{0.05} | MnSO₄·H₂O, 1.4 mol; FeSO₄·H₂O, 0.6 mol; water, 10 L; and oxalic acid dihydrate, 2 mol; | Fe doped manganese oxalate particles obtained in step S1, 1 mol; lithium carbonate, 0.534 mol; MgSO₄, 0.001 mol; 85% aqueous phosphoric acid solution containing 0.88 mol of phosphoric acid; H₄SiO₄, 0.12 mol; NH₄HF₂, 0.025 mol; sucrose, 0.005 mol; and water, 20 L; |
| Comparativ e example 8C | Li_{0.948}Mg_{0.001}Mn_{0.6}Fe_{0.4} P_{0.93}Si_{0.07}O_{3.88}F_{0.12} | MnSO₄·H₂O, 1.2 mol; FeSO₄·H₂O, 0.8 mol; water, 10 L; and oxalic acid dihydrate, 2 mol; | Fe doped manganese oxalate particles obtained in step S1, 1 mol; lithium carbonate, 0.474 mol; MgSO₄, 0.001 mol; 85% aqueous phosphoric acid solution containing 0.93 mol of phosphoric acid; H₄SiO₄, 0.07 mol; NH₄HF₂, 0.06 mol; sucrose, 0.005 mol; and water, 20 L; |
| Comparativ e examples 9C to 12C, example 1C-1, examples 1C-12 to 1C-16, examples 1C-33 to 1C-44, 1C-49, 1C-51 to 1C-52 and 1C-59 | Li_{0.994}Mo_{0.001}Mn_{0.65}Fe_{0.3 5}P_{0.999}Si_{0.001}O_{3.999}F_{0.001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.497 mol; Mo(SO₄)₃, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Example 1C-2 | Li_{0.977}Mg_{0.001}Mn_{0.65}Fe_{0.3 4}Ti_{0.01}P_{0.999}N_{0.001}O_{3.999}F 0.001 | MnSO₄·H₂O, 1.3 mol; FeSO₄·H₂O, 0.68 mol; water, 10 L; oxalic acid dihydrate, 2 mol; and Ti(SO₄)₂, 0.02 mol; | Doped manganese oxalate particles obtained in step S1, 1 mol; lithium carbonate, 0.4885 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 1C-3 | Li_{0.992}W_{0.001}Mn_{0.65}Fe_{0.35} P_{0.999}S_{0.001}O_{3.999}F_{0.001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.496 mol; W(SO₄)₃, 0.001 mol; 85% aqueous phosphoric acid solution containing 0.999 mol of phosphoric acid; H₂SO₄, 0.001 mol; NH₄HF₂, 0.0005 mol; sucrose, 0.005mol; and water, 20 L; |
| Example 1C-4 | Li_{0.997}Al_{0.001}Mn_{0.65}Fe_{0.35} P_{0.999}Si_{0.001}O_{3.999}Cl_{0.001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.4985 mol; Al₂(SO₄)₃, 0.0005 mol; 85% aqueous phosphoric acid solution containing 0.999 mol of phosphoric acid; H₄SiO₄, 0.001 mol; NH₄HCl₂, 0.0005 mol; sucrose, 0.005 mol; and water, 20 L; |
| Example 1C-5 | Li_{0.993}Nb_{0.001}Mn_{0.65}Fe_{0.3 45}V_{0.005}P_{0.999}S_{0.001}O_{3.999} F_{0.001} | MnSO₄·H₂O, 1.3 mol; FeSO₄·H₂O, 0.69 mol; water, 10 L; oxalic acid dihydrate, 2 mol; and VCl₂, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 1C-6 | Li_{0.993}Nb_{0.001}Mn_{0.65}Fe_{0.3 4}V_{0.005}Mg_{0.005}P_{0.999}S_{0.001} O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and MgSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 1C-7 | Li_{0.993}Nb_{0.001}Mn_{0.65}Fe_{0.3 4}V_{0.005}Co_{0.005}P_{0.999}S_{0.001} O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and CoSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 1C-8 | Li_{0.993}Nb_{0.001}Mn_{0.65}Fe_{0.3 4}V_{0.005}Ni_{0.005}P_{0.999}S_{0.001} O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and NiSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 1C-9 | Li_{0.991}Nb_{0.001}Mn_{0.65}Fe_{0.3 49}Ti_{0.001}P_{0.999}S_{0.001}O_{3.999} Cl_{0.001} | MnSO₄·H₂O, 1.3 mol; FeSO₄·H₂O, 0.698 mol; water, 10 L; oxalic acid dihydrate, 2 mol; and Ti(SO₄)₂, 0.002 mol; | Doped manganese oxalate particles obtained in step S1, 1 mol; lithium carbonate, 0.4955 mol; Nb₂(SO₄)₅, 0.0005 mol; 85% aqueous phosphoric acid solution containing 0.999 mol of phosphoric acid; H₂SO₄, 0.001 mol; NH₄HCl₂, 0.0005 mol; sucrose, 0.005 mol; and water, 20 L; |
| Example 1C-10 | Li_{0.995}Nb_{0.001}Mn_{0.65}Fe_{0.3 4}V_{0.005}Mg_{0.005}P_{0.999}Si_{0.00 1}O_{3.999}Br_{0.001} | MnSO₄·H₂O, 1.3 mol; FeSO₄·H₂O, 0.68 mol; water, 10 L; oxalic acid dihydrate, 2 mol; VCl₂, 0.01 mol; and MgSO₄, 0.01 mol; | Doped manganese oxalate particles obtained in step S1, 1 mol; lithium carbonate, 0.4975 mol; Nb₂(SO₄)₅, 0.0005 mol; 85% aqueous phosphoric acid solution containing 0.999 mol of phosphoric acid; H₄SiO₄, 0.001 mol; NH₄HBr₂, 0.0005 mol; sucrose, 0.005 mol; and water, 20 L; |
| Example 1C-11 | Li_{0.998}Mg_{0.001}Mn_{0.65}Fe_{0.3 45}V_{0.005}P_{0.999}Si_{0.001}O_{3.999} Br_{0.001} | MnSO₄·H₂O, 1.3 mol; FeSO₄·H₂O, 0.69 mol; water, 10 L; oxalic acid dihydrate, 2 mol; and VCl₂, 0.01 mol; | Doped manganese oxalate particles obtained in step S1, 1 mol; lithium carbonate, 0.499 mol; MgSO₄, 0.001 mol; 85% aqueous phosphoric acid solution containing 0.999 mol of phosphoric acid; H₄SiO₄, 0.001 mol; NH₄HBr₂, 0.0005 mol; sucrose, 0.005 mol; and water, 20 L; |
| Example 1C-17 | Li_{0.997}Mg_{0.001}Mn_{0.68}Fe_{0.3} V_{0.02}P_{0.999}N_{0.001}O_{3.999}F_{0. 001} | MnSO₄·H₂O, 1.36 mol; FeSO₄·H₂O, 0.6 mol; water, 10 L; oxalic acid dihydrate, 2 mol; and VCl₂, 0.04 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 1C-18 | Li_{0.997}Mg_{0.001}Mn_{0.58}Fe_{0.4} V_{0.02}P_{0.999}N_{0.001}O_{3.999} F_{0. 001} | MnSO₄·H₂O, 1.16 mol; FeSO₄·H₂O, 0.8 mol; water, 10 L; oxalic acid dihydrate, 2 mol; and VCl₂, 0.04 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 1C-19 | Li_{0.997}Mg_{0.001}Mn_{0.65}Fe_{0.3} V_{0.05}P_{0.999}N_{0.001}O_{3.999}F_{0. 001} | MnSO₄·H₂O, 1.3 mol; FeSO₄·H₂O, 0.6 mol; water, 10 L; oxalic acid dihydrate, 2 mol; and VCl₂, 0.1 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005mol; sucrose, 0.005 mol; and water, 20 L; |
| Example 1C-20 | Li_{0.988}Mg_{0.005}Mn_{0.6}Fe_{0.35} V_{0.05}P_{0.999}S_{0.001}O_{3.999}F_{0.0 01} | MnSO₄·H₂O, 1.2 mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.494 mol; MgSO₄, 0.005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 1C-21 | Li_{0.984}Mg_{0.005}Mn_{0.6}Fe_{0.35} V_{0.05}P_{0.995}S_{0.005}O_{3.999}F_{0.0 01} | MnSO₄·H₂O, 1.2mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.467 mol; MgSO₄, 0.005 mol; 85% aqueous phosphoric acid solution containing 0.171 mol of phosphoric acid; H₂SO₄, 0.005 mol; NH₄HF₂, 0.0005 mol; sucrose, 0.005 mol; and water, 20 L; |
| Example 1C-22 | Li_{0.984}Mg_{0.005}Mn_{0.6}Fe_{0.35} V_{0.05}P_{0.999}S_{0.001}O_{3.995}F_{0.0 05} | MnSO₄·H₂O, 1.2mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-23 | Li_{0.984}Mg_{0.005}Mn_{0.65}Fe_{0.2 5}V_{0.05}Co_{0.05}P_{0.999}S_{0.001}O_{3 .995}F_{0.005} | MnSO₄·H₂O, 1.3 mol; FeSO₄·H₂O, 0.5 mol; water, 10 L; oxalic acid dihydrate, 2 mol; VCl₂, 0.1 mol; and CoSO₄, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-24 | Li_{0.984}Mg_{0.005}Mn_{0.65}Fe_{0.2 0}V_{0.05}Co_{0.10}P_{0.999}S_{0.001}O_{3 .995}F_{0.005} | MnSO₄·H₂O, 1.3 mol; FeSO₄·H₂O, 0.4 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-25 | Li_{0.984}Mg_{0.005}Mn_{0.75}Fe_{0.0 5}V_{0.05}Co_{0.15}P_{0.999}S_{0.001}O_{3 .995}F_{0.005} | MnSO₄·H₂O, 1.5 mol; FeSO₄·H₂O, 0.1 mol; water, 10 L; oxalic acid dihydrate, 2 mol; VCl₂, 0.1 mol; and CoSO₄, 0.3 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025mol; sucrose, 0.005 mol; and water, 20 L; |
| Example 1C-26 | Li_{0.984}Mg_{0.005}Mn_{0.65}Fe_{0.2 5}V_{0.05}Ni_{0.05}P_{0.999}S_{0.001}O_{3. 995}F_{0.005} | MnSO₄·H₂O, 1.3 mol; FeSO₄·H₂O, 0.5 mol; water, 10 L; oxalic acid dihydrate, 2 mol; VCl₂, 0.1 mol; and NiSO₄, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-27 | Li_{0.984}Mg_{0.005}Mn_{0.75}Fe_{0.1 0}V_{0.05}Ni_{0.10}P_{0.999}S_{0.001}O_{3. 995}F_{0.005} | MnSO₄·H₂O, 1.5 mol; FeSO₄·H₂O, 0.2 mol; water, 10 L; oxalic acid dihydrate, 2 mol; VCl₂, 0.1 mol; and NiSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-28 | Li_{0.984}Mg_{0.005}Mn_{0.7}Fe_{0.15} V_{0.05}Co_{0.10}P_{0. 999}S_{0.001}O_{3. 995}F_{0.005} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-29 | Li_{0.984}Mg_{0.005}Mn_{0.6}Fe_{0.25} V_{0.05}Co_{0.10}P_{0.999}S_{0.001}O_{3. 995}F_{0.005} | MnSO₄·H₂O, 1.2 mol; FeSO₄·H₂O, 0.5 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.497 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-30 | Li_{0.984}Mg_{0.005}Mn_{0.5}Fe_{0.35} V_{0.05}Co_{0.10}P_{0. 999}S_{0.001}O_{3. 995}F_{0.005} | MnSO₄·H₂O, 1.0 mol; FeSO₄·H₂O, 0.7 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 1C-31 | Li_{1.01}Mg_{0.005}Mn_{0.7}Fe_{0.15} V_{0.05}Co_{0.10}P_{0.9}Si_{0.1}O_{3.92}F _{0.08} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.4825 mol; MgSO₄, 0.005 mol; 85% aqueous phosphoric acid solution containing 0.9 mol of phosphoric acid; H₄SiO₄, 0.1 mol; NH₄HF₂, 0.04 mol; sucrose, 0.005 mol; and water, 20 L; |
| Example 1C-32 | Li_{0.97}Mg_{0.005}Mn_{0.7}Fe_{0.15} V_{0.05}Co_{0.10}P_{0.92}Si_{0.08}O_{3.9} F_{0.1} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.485 mol; MgSO₄, 0.005 mol; 85% aqueous phosphoric acid solution containing 0.92 mol of phosphoric acid; H₄SiO₄, 0.08 mol; NH₄HF₂, 0.05 mol; sucrose, 0.005 mol; and water, 20 L; |
| Example 1C-45 | Li_{0.9}Mg_{0.05}NM_{0.6}Fe_{0.395}V _{0.005}P_{0.9}Si_{0.1}O_{3.9}F_{0.1} | MnSO₄·H₂O, 1.2 mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.45 mol; MgSO₄, 0.05 mol; 85% aqueous phosphoric acid solution containing 0.9 mol of phosphoric acid; H₄SiO₄, 0.1 mol; NH₄HF₂, 0.05 mol; sucrose, 0.005 mol; and water, 20 L; |
| Example 1C-46 | Li_{1.1}Mg_{0.001}Mn_{0.6}Fe_{0.395} V_{0.005}P_{0.9}Si_{0.1}O_{3.998}F_{0.002} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.55 mol; MgSO₄, 0.001 mol; 85% aqueous phosphoric acid solution containing 0.9 mol of phosphoric acid; H₄SiO₄, 0.1 mol; NH₄HF₂, 0.001 mol; sucrose, 0.005 mol; and water, 20 L; |
| Example 1C-47 | Li_{0.9}Mg_{0.1}Mn_{0.6}Fe_{0.395}V_{0 .005}P_{.95}Si_{0.05}O_{3.95}F_{0.05} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.45 mol; MgSO₄, 0. 1 mol; 85% aqueous phosphoric acid solution containing 0.95 mol of phosphoric acid; H₄SiO₄, 0.05 mol; NH₄HF₂, 0.025 mol; sucrose, 0.005 mol; and water, 20 L; |
| Example 1C-48 | Li_{0.95}Mg_{0.05}Mn_{0.999}Fe_{0.00 1}P_{0.96}Si_{0.04}O_{3.99}F_{0.01} | MnSO₄·H₂O, 1.998 mol; FeSO₄·H₂O, 0.002 mol; water, 10 L; and oxalic acid dihydrate, 2 mol; | Doped manganese oxalate particles obtained in step S1, 1 mol; lithium carbonate, 0.475 mol; MgSO₄, 0. 05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 1C-50 | Li_{0.95}Mg_{0.05}Mn_{0.99}Fe_{0.01} P_{0.963}Si_{0.04}O_{3.99}F_{0.01} | MnSO₄·H₂O, 1.98 mol; FeSO₄·H₂O, 0.02 mol; water, 10 L; and oxalic acid dihydrate, 2 mol; | Doped manganese oxalate particles obtained in step S1, 1 mol; lithium carbonate, 0.475 mol; MgSO₄, 0. 05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 1C-53 | Li_{0.95}Mg_{0.05}Mn_{0.8}Fe_{0.2}P_{0. 96}Si_{0.04}O_{3.99}F_{0.01} | MnSO₄·H₂O, 1.6 mol; FeSO₄·H₂O, 0.4 mol; water, 10 L; and oxalic acid dihydrate, 2 mol; | Doped manganese oxalate particles obtained in step S1, 1 mol; lithium carbonate, 0.475 mol; MgSO₄, 0. 05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 1C-54 | Li_{0.5}Mg_{0.5}Mn_{0.5}Fe_{0.5}P_{0.96} Si_{0.04}O_{3.5}F_{0.5} | MnSO₄·H₂O, 1 mol; FeSO₄·H₂O, 1 mol; water, 10 L; and oxalic acid dihydrate, 2 mol; | Doped manganese oxalate particles obtained in step S1, 1 mol; lithium carbonate, 0.25 mol; MgSO₄, 0. 5 mol; 85% aqueous phosphoric acid solution containing 0.96 mol of phosphoric acid; H₄SiO₄, 0.04 mol; NH₄HF₂, 0.5 mol; sucrose, 0.005 mol; and water, 20 L; |
| Example 1C-55 | Li_{1.2}Mg_{0.001}Mn_{0.5}Fe_{0.5}P_{0. 8}Si_{0.2}O_{3.999}F_{0.001} | MnSO₄·H₂O, 1 mol; FeSO₄·H₂O, 1 mol; water, 10 L; and oxalic acid dihydrate, 2 mol; | Doped manganese oxalate particles obtained in step S1, 1 mol; lithium carbonate, 0.6 mol; MgSO₄, 0. 001 mol; 85% aqueous phosphoric acid solution containing 0.8 mol of phosphoric acid; H₄SiO₄, 0.2 mol; NH₄HF₂, 0.001 mol; sucrose, 0.005 mol; and water, 20 L; |
| Example 1C-56 | Li_{0.95}Mg_{0.005}Mn_{0.5}Fe_{0.5}P _{0.96}Si_{0.04}O_{3.95}F_{0.05} | MnSO₄·H₂O, 1 mol; FeSO₄·H₂O, 1 mol; water, 10 L; and oxalic acid dihydrate, 2 mol; | Doped manganese oxalate particles obtained in step S1, 1 mol; lithium carbonate, 0.475 mol; MgSO₄, 0. 005 mol; 85% aqueous phosphoric acid solution containing 0.96 mol of phosphoric acid; H₄SiO₄, 0.04 mol; NH₄HF₂, 0.05 mol; sucrose, 0.005 mol; and water, 20 L; |
| Example 1C-57 | Li_{0.95}Mg_{0.05}Mn_{0.7}Fe_{0.3}P_{0. 96}Si_{0.04}O_{3.99}F_{0.01} | MnSO₄·H₂O, 1.4 mol; FeSO₄·H₂O, 0.6 mol; water, 10 L; and oxalic acid dihydrate, 2 mol; | Doped manganese oxalate particles obtained in step S1, 1 mol; lithium carbonate, 0.475 mol; MgSO₄, 0. 05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 1C-58 | Li_{0.95}Mg_{0.05}Mn_{0.6}Fe_{0.4}P_{0. 96}Si_{0.04}O_{3.99}F_{0.01} | MnSO₄·H₂O, 1.2mol; FeSO₄·H₂O, 0.8 mol; water, 10 L; and oxalic acid dihydrate, 2 mol; | Doped manganese oxalate particles obtained in step S1, 1 mol; lithium carbonate, 0.475 mol; MgSO₄, 0. 05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |

**Table 2C: Preparation of pyrophosphate powder only (step S3)**

| No. | Pyrophosphate powder | Step S3 |
|---|---|---|
| Examples 1C-1 to 1C- 59 | Crystalline Li₂FeP₂O₇ | 4.77 g of lithium carbonate, 7.47 g of ferrous carbonate, 14.84 g of ammonium dihydrogen phosphate, and 1.3 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li2FeP207, and the suspension was filtered, washed with deionized water, and dried at 120°C for 4 hours to obtain a powder. The powder was sintered at 650°C in a nitrogen atmosphere for 8 hours, naturally cooled to room temperature, and then ground to obtain a Li2FeP207 powder. |
| Comparative examples 10 C and 12C | Amorphous Li₂FeP₂O₇- | 9.52 g of lithium carbonate, 29.9 g of ferrous carbonate, 29.6 g of ammonium dihydrogen phosphate, and 32.5 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. The powder was sintered at 500°C in a nitrogen atmosphere for 4 hours, naturally cooled to room temperature, and then ground to control the crystallinity of Li₂FeP₂O₇ to be 5%. |

**Table 3C: Preparation of suspension containing oxide and sucrose (step S4)**

| No. | First coating layer | | Second coating layer | Raw materials used in Step S4 |
|---|---|---|---|---|
| Comparative example 11C | - | 3% Al₂O₃ | 1% of carbon | Al₂O₃, 4.71 g; sucrose, 3.73 g; and water, 150 ml; |
| Comparative example 12C | Amorphous Li₂FeP₂O₇ | 3% Al₂O₃ | 1% of carbon | |
| Examples 1C-1 to 1C-11, examples 1C-17 to 1C-32, examples 1C-45 to 1C-48, and examples 1C-50 to 1C-51 | Crystalline Li₂FeP₂O₇ | 3% Al₂O₃ | 1% of carbon | |
| Example 1C-12 | Crystalline Li₂FeP₂O₇ | 3% ZnO | 1% of carbon | ZnO, 4.71 g and sucrose, 3.73 g; and water, 150 ml; |
| Example 1C-13 | Crystalline Li₂FeP₂O₇ | 3% ZrO₂ | 1% of carbon | ZrO₂, 4.71 g; sucrose, 3.73 g; and water, 150 ml; |
| Example 1C-14 | Crystalline Li₂FeP₂O₇ | 3% MgO | 1% of carbon | MgO, 4.71 g; sucrose, 3.73 g; and water, 150 ml; |
| Example 1C-15 | Crystalline Li₂FeP₂O₇ | 3% WO₃ | 1% of carbon | WO₃, 4.71 g; sucrose, 3.73 g; and water, 150 ml; |
| Example 1C-16 | Crystalline Li₂FeP₂O₇ | 3% CuO | 1% of carbon | CuO, 4.71 g; sucrose, 3.73 g; and water, 150 ml; |
| Example 1C-33 | Crystalline Li₂FeP₂O₇ | 2.4% Al₂O₃ | 1% of carbon | Al₂O₃, 3.77 g; sucrose, 3.73 g; and water, 150 ml; |
| Example 1C-34 | Crystalline Li₂FeP₂O₇ | 3.6% Al₂O₃ | 1% of carbon | Al₂O₃, 5.65 g; sucrose, 3.73 g; and water, 150 ml; |
| Example 1C-35 | Crystalline Li₂FeP₂O₇ | 4.2% Al₂O₃ | 1% of carbon | Al₂O₃, 6.59 g; sucrose, 3.73 g; and water, 150 ml; |
| Example 1C-36 | Crystalline Li₂FeP₂O₇ | 4.8% Al₂O₃ | 1% of carbon | Al₂O₃, 7.54 g; sucrose, 3.73 g; and water, 150 ml; |
| Example 1C-37 | Crystalline Li₂FeP₂O₇ | 3% Al₂O₃ | 2% of carbon | Al₂O₃, 4.71 g; sucrose, 7.46 g; and water, 150 ml; |
| Example 1C-38 | Crystalline Li₂FeP₂O₇ | 3% Al₂O₃ | 4% of carbon | Al₂O₃, 4.71 g; sucrose, 14.92 g; and water, 150 ml; |
| Example 1C-39 | Crystalline Li₂FeP₂O₇ | 3% Al₂O₃ | 5% of carbon | Al₂O₃, 4.71 g; sucrose, 18.65 g; and water, 150 ml; |
| Example 1C-40 | Crystalline Li₂FeP₂O₇ | 3% Al₂O₃ | 6% of carbon | Al₂O₃, 4.71 g; sucrose, 22.38 g; and water, 150 ml; |
| Example 1C-41 | Crystalline Li₂FeP₂O₇ | 2.5% Al₂O₃ | 2% of carbon | Al₂O₃, 3.93 g; sucrose, 7.46 g; and water, 150 ml; |
| Example 1C-42 | Crystalline Li₂FeP₂O₇ | 2% Al₂O₃ | 2% of carbon | Al₂O₃, 3.14 g; sucrose, 7.46 g; and water, 150 ml; |
| Example 1C-43 | Crystalline Li₂FeP₂O₇ | 1.5% Al₂O₃ | 2% of carbon | Al₂O₃, 2.36 g; sucrose, 7.46 g; and water, 150 ml; |
| Example 1C-44 | Crystalline Li₂FeP₂O₇ | 1% Al₂O₃ | 2% of carbon | Al₂O₃, 1.57 g; sucrose, 7.46 g; and water, 150 ml; |
| Example 1C-49 | Crystalline Li₂FeP₂O₇ | 3% V₂O₅ | 1% of carbon | V₂O₅, 4.71 g; sucrose, 3.73 g; and water, 150 ml; |
| Example 1C-52 | Crystalline Li₂FeP₂O₇ | 3% Al₂O₃ | 3% of carbon | Al₂O₃, 4.71 g; sucrose, 11.19 g; and water, 150 ml; |
| Examples 1C-53 to 1C-59 | Crystalline Li₂FeP₂O₇ | 1% Al₂O₃ | 1% of carbon | Al₂O₃, 1.57 g; sucrose, 3.73 g; and water, 150 ml; |

**Table 4C: Preparation of two-layer coatings (step S5)**

| No. | Chemical formula of inner core | First coating layer | | Second coating layer | Amoun t of added inner core | Amoun t of added lithium iron pyroph osphate powder | Amo unt of oxide in suspe nsion in step S4 | Dryi ng temp eratu re (°C) | Dr yi ng ti me (h) | Sinte ring temp eratu re (°C) | Sint erin g tim e (h) |
|---|---|---|---|---|---|---|---|---|---|---|---|
| Com parati ve exam ple 10C | Same as example 1C-1 | 4% of amor phous Li₂Fe P₂O₇ | - | 1% of carbon | 157.2 g | 6.28 g | - | 120 | 6 | 700 | 8 |
| Comparati ve exam ple 11C | Same as example 1C-1 | - | 3% Al₂O₃ | 1% of carbon | 157.2 g | - | 4.71g | 120 | 6 | 700 | 8 |
| Com parati ve exam ple 12C | Same as example 1C-1 | 1% of amor phous Li₂Fe P₂O₇ | 3% Al₂O₃ | 1% of carbon | 157.2 g | 1.57 g | 4.71 g | 120 | 6 | 680 | 8 |
| Exam ple 1C-1 | Li_{0.994}Mo_{0.0 01}Mn_{0.65}Fe_{0 35}P_{0.999}Si_{0.0 01}O_{3.999}F_{0.00 1} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-2 | Li_{0.977}Mg_{0.0 01}Mn_{0.65}Fe_{0 34}Ti_{0.01}P_{0.99 9}N_{0.001}O_{3.99 9}F_{0.001} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-3 | Li_{0.992}W_{0.00 1}Mn_{0.65}Fe_{0. 35}P_{0.999}S_{0.00 1}O_{3.999}F_{0.001} | 1% of crysta lline Li₂Fe P₂O₇ | 3% Al₂O₃ | 1% of carbon | 157.3 g | 1.57 g | 4.71 g | 120 | 6 | 750 | 8 |
| Exam ple 1C-4 | Li_{0.997}Al_{0.00 1}Mn_{0.65}Fe_{0. 35}P_{0.999}Si_{0.0 01}O_{3.999}Cl_{0.0 01} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-5 | Li_{0.993}Nb_{0.0 01}Mn_{0.65}Fe_{0 .345}V_{0.005}P_{0. 999}S_{0.001}O_{3.9 99}F_{0.001} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-6 | Li_{0.993}Nb_{0.0 01}Mn_{0.65}Fe_{0 34}Y_{0.005}Mg _{0.005}P_{0.999}S_{0. 001}O_{3.999}F_{0.0 01} | 1% of crysta lline Li₂Fe P₂O₇ | 3% Al₂O₃ | 1% of carbon | 157.0 g | 1.57 g | 4.71 g | 120 | 6 | 750 | 8 |
| Exam ple 1C-7 | Li_{0.993}Nb_{0.0 01}Mn_{0.65}Fe_{0 34}V_{0.005}Co_{0 .005}P_{0.999}S_{0.0 01}O_{3.999}F_{0.00 1} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-8 | Li_{0.993}Nb_{0.0 01}Mn_{0.65}Fe_{0 .34}V_{0.005}Ni_{0. 005}P_{0.999}S_{0.0 01}O_{3.999}F_{0.00 1} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-9 | Li_{0.991}Nb_{0.0 01}Mn_{0.65}Fe_{0 .349}Ti_{0.001}P_{0. 999}S_{0.001}O_{3.9 99}Cl_{0.001} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-10 | Li_{0.995}Nb_{0.0 01}Mn_{0.65}Fe_{0 .34}V_{0.005}Mg _{0.005}P_{0.999}Si _{0.001}O_{3.999}B r_{0.001} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-11 | Li_{0.998}Mg_{0.0 01}Mn_{0.63}Fe_{0 .345}V_{0.003}P_{0. 999}Si_{0.001}O_{3. 999}Br_{0.001} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-12 | Same as example 1C-1 | 1% of crystalline Li₂Fe P₂O₇ | 3% ZnO | 1% of carbon | 157.2 g | 1.57 g | 4.71 g | 120 | 6 | 720 | 8 |
| Exam ple 1C-13 | Same as example 1C-1 | 1% of crysta lline Li₂Fe P₂O₇ | 3% ZrO₂ | 1% of carbon | 157.2 g | 1.57 g | 4.71 g | 120 | 6 | 780 | 8 |
| Exam ple 1C-14 | Same as example 1C-1 | 1% of crysta lline Li₂Fe P₂O₇ | 3% MgO | 1% of carbon | 157.2 g | 1.57 g | 4.71 g | 120 | 6 | 700 | 8 |
| Exam ple 1C-15 | Same as example 1C-1 | 1% of crysta lline Li₂Fe P₂O₇ | 3% WO₃ | 1% of carbon | 157.2 g | 1.57 g | 4.71 g | 120 | 6 | 790 | 8 |
| Exam ple 1C-16 | Same as example 1C-1 | 1% of crysta lline Li₂Fe P₂O₇ | 3% CuO | 1% of carbon | 157.2 g | 1.57 g | 4.71 g | 120 | 6 | 740 | 8 |
| Exam ple 1C-17 | Li_{0.997}Mg_{0.0 01}Nn_{0.68}Fe_{0 .3}V_{0.02}P_{0.999} N_{0.001}O_{3.999} F_{0.001} | 1% of crysta lline Li₂Fe P₂O₇ | 3% Al₂O₃ | 1% of carbon | 157.0 g | 1.57 g | 4.71 g | 120 | 6 | 750 | 8 |
| Exam ple 1C-18 | Li_{0.997}Mg_{0.0 01}Mn_{0.58}Fe_{0 .4}V_{0.02}P_{0.999} N_{0.001}O_{3.999} F_{0.001} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-19 | Li_{0.997}Mg_{0.0 01}Nn_{0.65}Fe_{0 .3}V_{0.05}P_{0.999} N_{0.001}O_{3.999} F_{0.001} | 1% of crysta lline Li₂Fe P₂O₇ | 3% Al₂O₃ | 1% of carbon | 156.9 g | 1.57 g | 4.71 g | 120 | 6 | 750 | 8 |
| Exam ple 1C-20 | Li_{0.998}Mg_{0.0 05}Mn_{0.6}Fe_{0. 35}V_{0.05}P_{0.999} S_{0.001}O_{3.999} F_{0.001} | 1% of crysta lline Li₂Fe P₂O₇ | 3% Al₂O₃ | 1% of carbon | 157.0 g | 1.57 g | 4.71 g | 120 | 6 | 750 | 8 |
| Exam ple 1C-21 | Li_{0.984}Mg_{0.0 05}Mn_{0.6}Fe_{0. 35}V_{0.05}P_{0.995} S_{0.005}O_{3.999} F_{0.001} | 1% of crysta lline Li₂Fe P₂O₇ | 3% Al₂O₃ | 1% of carbon | 157.0 g | 1.57 g | 4.71 g | 120 | 6 | 750 | 8 |
| Exam ple 1C-22 | Li_{0.984}Mg_{0.0 05}Mn_{0.6}Fe_{0. 35}V_{0.05}P_{0.999} S_{0.001}O_{3.995} F_{0.005} | 1% of crysta lline Li₂Fe P₂O₇ | 3% Al₂O₃ | 1% of carbon | 157.0 g | 1.57 g | 4.71 g | 120 | 6 | 750 | 8 |
| Exam ple 1C-23 | Li_{0.984}Mg_{0.0 05}Mn_{0.65}Fe_{0 .25}V_{0.05}CO_{0. 05}P_{0.999}S_{0.00 1}O_{3.995}F_{0.005} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-24 | Li_{0.984}Mg_{0.0 05}Mn_{0.65}Fe_{0 .20}V_{0.05}Co_{0. 10}P_{0.999}S_{0.00 1}O_{3.995}F_{0.005} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-25 | Li_{0.984}Mg_{0.0 05}Mn_{0.75}Fe_{0 .05}V_{0.05}CO_{0. 15}P_{0.999}S_{0.00 1}O_{3.995}F_{0.005} | 1% of crysta lline Li₂Fe P₂O₇ | 3% Al₂O₃ | 1% of carbon | 157.3 g | 1.57 g | 4.71 g | 120 | 6 | 750 | 8 |
| Exam ple 1C-26 | Li_{0.984}Mg_{0.0 05}Mn_{0.65}Fe_{0 .25}V_{0.05}Ni_{0.0 5}P_{0.999}S_{0.001} O_{3.995}F_{0.005} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-27 | Li_{0.984}Mg_{0.0 05}Mn_{0.75}Fe_{0 .10}V_{0.05}Ni_{0.1 0}P_{0.999}S_{0.001} O_{3.995}F_{0.005} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-28 | Li_{0.984}Mg_{0.0 05}Mn_{0.7}Fe_{0. 15}V_{0.05}Co_{0.1 0}P_{0.999}S_{0.001} O_{3.995}F_{0.005} | 1% of crysta lline Li₂Fe P₂O₇ | 3% Al₂O₃ | 1% of carbon | 157.1 g | 1.57 g | 4.71 g | 120 | 6 | 750 | 8 |
| Exam ple 1C-29 | Li_{0.984}Mg_{0.0 05}Mn_{0.6}Fe_{0. 25}V_{0.05}Co_{0.1 0}P_{0.999}S_{0.001} O_{3.995}F_{0.005} | 1% of crysta lline Li₂Fe P₂O₇ | 3% Al₂O₃ | 1% of carbon | 157.3 g | 1.57 g | 4.71 g | 120 | 6 | 750 | 8 |
| Exam ple 1C-30 | Li_{0.984}Mg_{0.0 05}Mn_{0.5}Fe_{0. 35}V_{0.05}Co_{0.1 0}P_{0.999}S_{0.001} O_{3.995}F_{0.005} | 1% of crysta lline Li₂Fe P₂O₇ | 3% Al₂O₃ | 1% of carbon | 157.4 g | 1.57 g | 4.71 g | 120 | 6 | 750 | 8 |
| Exam ple 1C-31 | Li_{1.01}Mg_{0.00 5}Mn_{0.7}Fe_{0.1 5}V_{0.05}Co_{0.10} P_{0.9}Si_{0.1}O_{3.9 2}F_{0.08} | 1% of crysta lline Li₂Fe P₂O₇ | 3% Al₂O₃ | 1% of carbon | 157.4 g | 1.57 g | 4.71 g | 120 | 6 | 750 | 8 |
| Exam ple 1C-32 | Li_{0.97}Mg_{0.00 5}Mn_{0.7}Fe_{0.1 5}V_{0.05}Co_{0.10} P_{0.92}Si_{O.08}O _{3.9}F_{0.1} | 1% of crysta lline Li₂Fe P₂O₇ | 3% Al₂O₃ | 1% of carbon | 157.2 g | 1.57 g | 4.71 g | 120 | 6 | 750 | 8 |
| Exam ple 1C-33 | Same as example 1C-1 | 0.8% of _{crysta} lline Li₂Fe P₂O₇ | 2.4% Al₂O₃ | 1% of carbon | 157.2 g | 1.26 g | 3.77 g | 120 | 6 | 750 | 8 |
| Exam ple 1C-34 | Same as example 1C-1 | 1.2% of _{crysta} lline Li₂Fe P₂O₇ | 3.6% Al₂O₃ | 1% of carbon | 157.2 g | 1.89 g | 5.66 g | 120 | 6 | 750 | 8 |
| Exam ple 1C-35 | Same as example 1C-1 | 1.4% of crysta lline Li₂Fe P₂O₇ | 4.2% Al₂O₃ | 1% of carbon | 157.2 g | 2.20 g | 6.60 g | 120 | 6 | 750 | 8 |
| Exam ple 1C-36 | Same as example 1C-1 | 1.6% of crysta lline Li₂Fe P₂O₇ | 4.8% Al₂O₃ | 1% of carbon | 157.2 g | 2.52 g | 7.55 g | 120 | 6 | 750 | 8 |
| Exam ple 1C-37 | Same as example 1C-1 | 1% of crysta lline Li₂Fe P₂O₇ | 3% Al₂O₃ | 2% of carbon | 157.2 g | 1.57 g | 4.71 g | 120 | 6 | 750 | 8 |
| Exam ple 1C-38 | Same as example 1C-1 | 1% of crysta lline Li₂Fe P₂O₇ | 3% Al₂O₃ | 4% of carbon | 157.2 g | 1.57 g | 4.71 g | 120 | 6 | 750 | 8 |
| Exam ple 1C-39 | Same as example 1C-1 | 1% of crysta lline Li₂Fe P₂O₇ | 3% Al₂O₃ | 5% of carbon | 157.2 g | 1.57 g | 4.71 g | 120 | 6 | 750 | 8 |
| Exam ple 1C-40 | Same as example 1C-1 | 1% of crystalline Li₂Fe P₂O₇ | 3% Al₂O₃ | 6% of carbon | 157.2 g | 1.57 g | 4.71 g | 120 | 6 | 750 | 8 |
| Exam ple 1C-41 | Same as example 1C-1 | 1.5% of crysta lline Li₂Fe P₂O₇ | 2.5% Al₂O₃ | 2% of carbon | 157.2 g | 1.57 g | 3.93 g | 120 | 6 | 750 | 8 |
| Exam ple 1C-42 | Same as example 1C-1 | 2% of crysta lline Li₂Fe P₂O₇ | 2% Al₂O₃ | 2% of carbon | 157.2 g | 1.57 g | 3.14 g | 120 | 6 | 750 | 8 |
| Exam ple 1C-43 | Same as example 1C-1 | 2.5% of crysta lline Li₂Fe P₂O₇ | 1.5% Al₂O₃ | 2% of carbon | 157.2 g | 1.57 g | 2.36 g | 120 | 6 | 750 | 8 |
| Exam ple 1C-44 | Same as example 1C-1 | 3% of crysta lline Li₂Fe P₂O₇ | 1% Al₂O₃ | 2% of carbon | 157.2 g | 1.57 g | 1.57 g | 120 | 6 | 750 | 8 |
| Exam ple 1C-45 | Li_{0.9}Mg_{0.05} Nn_{0.6}Fe_{0.39 5}V_{0.005}P_{0.9}S i_{0.1}O_{3.9}F_{0.1} | 1% of crysta lline Li₂Fe P₂O₇ | 3% Al₂O₃ | 1% of carbon | 155.8 g | 1.56 g | 4.67 g | 120 | 6 | 750 | 8 |
| Exam ple 1C-46 | Li_{1.1}Mg_{0.001} Mn_{0.6}Fe_{0.39 5}V_{0.005}P_{0.9}S i_{0.1}O_{3.998}F_{0. 002} | 1% of crysta lline Li₂Fe P₂O₇ | 3% Al₂O₃ | 1% of carbon | 156.8 g | 1.57 g | 4.70 g | 120 | 6 | 750 | 8 |
| Example 1C-47 | Li_{0.9}Mg_{0.1}Mn_{0.6}Fe_{0.39 5}V_{0.005}P_{0.95} Si_{0.05}O_{3.05}F _{0.05} | 1% of crysta lline Li₂Fe P₂O₇ | 3% Al₂O₃ | 1% of carbon | 158.9 g | 1.59 g | 4.78g | 120 | 6 | 750 | 8 |
| Exam ple 1C-48 | Li_{0.95}Mg_{0.05 0.999}Fe_{0. 001}P_{0.96}Si_{0.0 4}O_{3.99}F_{0.01} | 1% of crysta lline Li₂Fe P₂O₇ | 3% Al₂O₃ | 1% of carbon | 157.6 g | 1.58 g | 4.73 g | 120 | 6 | 750 | 8 |
| Exam ple 1C-49 | Same as example 1C-1 | 1% of crysta lline Li₂Fe P₂O₇ | 3% V₂O₅ | 1% of carbon | 157.2 g | 1.57 g | 4.71 g | 120 | 6 | 750 | 8 |
| Exam ple 1C-50 | Li_{0.95}Mg_{0.05} Mn_{0.99}Fe_{0.0 1}P_{0.96}Si_{0.04} O_{3.99}F_{0.01} | 1% of crysta lline Li₂Fe P₂O₇ | 3% Al₂O₃ | 1% of carbon | 157.6 g | 1.57 g | 4.71 g | 120 | 6 | 750 | 8 |
| Exam ples 1C-51 | Same as example 1C-1 | 4% of crysta lline Li₂Fe P₂O₇ | 3% Al₂O₃ | 1% of carbon | 154.6 | 6.28 g | 4.73 g | 120 | 6 | 750 | 8 |
| Exam ple 1C-52 | Same as example 1C-1 | 1% of crysta lline Li₂Fe P₂O₇ | 3% Al₂O₃ | 3% of carbon | 155.2 | 1.57 g | 4.71 | 120 | 6 | 750 | 8 |
| Exam ple 1C-53 | Li_{0.95}Mg_{0.05} Mn_{0.8}Fe_{0.2}P _{0.96}Si_{0.04}O_{3. 99}F_{0.01} | 3% of crysta lline Li₂Fe P₂O₇ | 1% Al₂O₃ | 1% of carbon | 157.3 | 4.73 | 1.57 | 120 | 6 | 750 | 8 |
| Exam ple 1C-54 | Li_{0.5}Mg_{0.5} Mn_{0.5}Fe_{0.5}P _{0.96}Si_{0.04}O_{3. 5}F_{0.5} | 3% of crystalline Li₂Fe P₂O₇ | 1% Al₂O₃ | 1% of carbon | 166 | 4.73 | 1.57 | 120 | 6 | 750 | 8 |
| Exam ple 1C-55 | Li_{1.2}Mg_{0.001} Mn_{0.3}Fe_{0.5}P _{0.8}Si_{0.2}O_{3.99 9}F_{0.001} | 3% of crysta lline Li₂Fe P₂O₇ | 1% Al₂O₃ | 1% of carbon | 157.8 | 4.73 | 1.57 | 120 | 6 | 750 | 8 |
| Exam ple 1C-56 | Li_{0.95}Mg_{0.00 5}Mn_{0.5}Fe_{0.5} P_{0.96}Si_{0.04}O _{3.95}F_{0.05} | 3% of crysta lline Li₂Fe P₂O₇ | 1% Al₂O₃ | 1% of carbon | 155.68 | 4.73 | 1.57 | 120 | 6 | 750 | 8 |
| Exam ple 1C-57 | Li_{0.95}Mg_{0.05} Mn_{0.7}Fe_{0.3}P _{0.96}Si_{0.04}O_{3. 99}F_{0.01} | 3% of crysta lline Li₂Fe P₂O₇ | 1% Al₂O₃ | 1% of carbon | 156.7 | 4.73 | 1.57 | 120 | 6 | 750 | 8 |
| Exam ple 1C-58 | Li_{0.95}Mg_{0.05} Mn_{0.6}Fe_{0.4}P _{0.96}Si_{0.04}O_{3. 99}F_{0.01} | 3% of crysta lline Li₂Fe P₂O₇ | 1% Al₂O₃ | 1% of carbon | 156.7 | 4.73 | 1.57 | 120 | 6 | 750 | 8 |
| Exam ple 1C-59 | Same as example 1C-1 | 3% of crysta lline Li₂Fe P₂O₇ | 1% Al₂O₃ | 1% of carbon | 156.7 | 4.73 | 1.57 | 120 | 6 | 600 | 8 |

### Example 2C-1

Except that in the preparation of lithium iron pyrophosphate (Li₂FeP₂O₇) powder in step S3, in the powder sintering step, the sintering temperature was 550°C and the sintering time was 1 h to control the crystallinity of Li₂FeP₂O₇ to be 30%, the other conditions were the same as example 1C-1.

### Example 2C-2

Except that in the preparation of lithium iron pyrophosphate (Li₂FeP₂O₇) powder of step S3, in the powder sintering step, the sintering temperature was 550°C and the sintering time was 2 h to control the crystallinity of Li₂FeP₂O₇ to be 50%, the other conditions were the same as example 1C-1.

### Example 2C-3

Except that in the preparation of lithium iron pyrophosphate (Li₂FeP₂O₇) powder of step S3, in the powder sintering step, the sintering temperature was 600°C and the sintering time was 3 h to control the crystallinity of Li₂FeP₂O₇ to be 70%, the other conditions were the same as example 1C-1.

### Example 2C-4

Except that in the preparation of lithium iron pyrophosphate (Li₂FeP₂O₇) powder of step S3, in the powder sintering step, the sintering temperature was 500°C to control the crystallinity of Li₂FeP₂O₇ to be 10%, the other conditions were the same as example 1C-1.

### Preparation of positive electrode plate

The two-layer coated lithium manganese phosphate positive electrode active material prepared above, a conductive agent of acetylene black and a binder of polyvinylidene fluoride (PVDF) were added into N-methylpyrrolidone (NMP) in a weight ratio of 92 : 2.5 : 5.5, followed by stirring and uniformly mixing to obtain a positive electrode slurry. The positive electrode slurry was then uniformly applied to an aluminum foil at 0.280 g/1540.25 mm², followed by drying, cold pressing and slitting to obtain a positive electrode plate.

### Preparation of negative electrode plate

A negative electrode active material of synthetic graphite, a conductive agent of superconducting carbon black (Super-P), a binder of styrene butadiene rubber (SBR) and a thickener of sodium carboxymethylcellulose (CMC-Na) were dissolved in deionized water in a mass ratio of 95% : 1.5% : 1.8% : 1.7%, followed by fully stirring and mixing until uniform to obtain a negative electrode slurry with a viscosity of 3000 mPa.s and a solid content of 52%; and the negative electrode slurry was coated onto a negative electrode current collector of a copper foil having a thickness of 6 µm, and then baked at 100°C for 4 hours for drying, followed by roll pressing to obtain a negative electrode plate with a compacted density of 1.75 g/cm³.

### Senarator

a polypropylene film was used.

### Preparation of electrolyte solution

Ethylene carbonate, dimethyl carbonate and 1,2-propylene glycol carbonate were mixed in a volume ratio of 1 : 1 : 1, and then LiPF₆ was evenly dissolved in the above solution to obtain an electrolyte solution. In the electrolyte solution, the concentration of LiPF₆ was 1 mol/L.

### Preparation of full battery

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### Preparation of button battery

The positive electrode active material prepared above, PVDF and acetylene black at a weight ratio of 90 : 5 : 5 were added into NMP, and stirred in a drying room to prepare a slurry. An aluminum foil was coated with the slurry above, followed by drying and cold pressing to obtain a positive electrode plate. The coating amount was 0.2 g/cm², and the compacted density was 2.0 g/cm³.

A lithium plate as a negative electrode, a solution of 1 mol/L LiPF₆ in ethylene carbonate (EC) + diethyl carbonate (DEC) + dimethyl carbonate (DMC) in a volume ratio of 1 : 1 : 1 as an electrolyte solution, and the positive electrode plate prepared above were assembled into a button battery in a button battery box.

**Table 5C: Performance test results of examples 1C-1 to 1C-59 and comparative examples 1C to 12C**

| No. | Inner core | (1-y) : y | m : x | First coating layer | | Thickness first coating la ye r | Second coating layer | Thickness of secon d c o at in g la y er | Lattic echangera te ( % ) | Li/ Mn antis ite defe ct conc entr atio n/% | Di sso luti on of Fe an d M n after cy cli ng (pp m) | S ur fa ce o x y g e n val e n c y | C ap ac it y pe r gr a m of bu tt on ba tte ry at 0. 1 C ( m A h/ g) | A ve ra ge di sc ha rg e vo ltage of bu tto n ba tte ry (V ) | Ex pa nsi on of cel l up on 30 days of sto ra ge at 60 °C (% ) | Nu mb er of cycl es corr esp ond ing to 80 % cap acit y rete ntio n rate at 45° C | Co mp act ed de nsi ty (g/ cm ³) |
|---|---|---|---|---|---|---|---|---|---|---|---|---|---|---|---|---|---|
| Co mp arat ive exa mp le 1C | LiMnPO₄ | 0 | / | - | - | 0 | 1 % of ca rb on | 5 | 1 1. 4 | 3.2 | 20 60 | -1. 5 5 | 12 5. 6 | 4. 02 | 48 .6 | 185 | 1.8 1 |
| Co mp arat ive exa mp le 2C | LiMn_{0.85} Fe_{0.15}PO₄ | 0 | / | - | - | 0 | 1 % of ca rb on | 5 | 1 0. 6 | 4.3 | 15 10 | - 1. 5 1 | 12 6. 4 | 3. 85 | 37 .3 | 129 | 1.8 7 |
| Co mp arat ive exa mp le 3C | Li_{0.990}Mg _{0.005}Mn_{0.9 5}Zn_{0.05}PO 4 | 19 | / | - | - | 0 | 1 % of ca rb on | 5 | 1 0. 8 | 3.6 | 10 28 | - 1. 6 4 | 13 4. 7 | 4. 05 | 31 .9 | 134 | 1.8 8 |
| Co mp arat ive exa mp le 4C | Li_{0.90}Nb_{0. 01}Mn_{0.6}Fe _{0.}4PO_{3.95}F _{0.05} | 1.5 | 900 | - | - | 0 | 1 % of ca rb on | 5 | 9. 7 | 2.4 | 98 0 | - 1. 7 1 | 14 1. 3 | 3. 69 | 30 .8 | 148 | 1.9 3 |
| Co mp arat ive exa mp le 5C | Li_{0.76}Mg_{0 .12}Mn_{0.7}F e_{0.3}P_{0.999}S i_{0.001}O_{3.99 9}F_{0.001} | 2.33 | 6.33 | - | - | 0 | 1 % of ca rb on | 5 | 5. 6 | 1.8 | 87 3 | -1. 8 1 | 11 0. 8 | 3. 75 | 21 .4 | 387 | 1.9 8 |
| Co mp arat ive exa mple 6C | Li_{0.998}Mg _{0.001}Mn_{0.4} Zn_{0.6}P_{0.99 9}Si_{0.001}O_{3. 999}F_{0.001} | 0.67 | 998 | - | - | 0 | 1 % of ca rb on | 5 | 3. 7 | 1.5 | 57 4 | -1. 8 | 74 .3 | 3. 56 | 15 .8 | 469 | 2.0 1 |
| Co mp arat ive exa mp le 7C | Li_{1.068}Mg _{0.001}Mn_{0.7} Fe_{0.3}P_{0.88} Si_{0.12}O_{3.95} F_{0.05} | 2.33 | 106 8 | - | - | 0 | 1 % of ca rb on | 5 | 7. 8 | 1.5 | 44 7 | -1. 7 5 | 13 9. 4 | 3. 75 | 18 .3 | 396 | 2.0 5 |
| Co mp arat ive exa mp le 8C | Li_{0.948}Mg _{0.001}Mn_{0.6} Fe_{0.4}P_{0.93} Si_{0.07}O_{3.88} F_{0.12} | 1.5 | 948 | - | - | 0 | 1 % of ca rb on | 5 | 8. 4 | 1.4 | 26 3 | -1. 7 9 | 14 1. 7 | 3. 7 | 22 .7 | 407 | 2.1 6 |
| Co mp arat ive exa mp le 9C | Same as example 1C-1 | 1.86 | 994 | - | - | 0 | 1 % of ca rb on | 5 | 6. 3 | 1.6 | 19 2 | -1. 8 2 | 14 3. 2 | 3. 72 | 18 .4 | 552 | 2.2 1 |
| Co mp arat ive exa mp le 10 C | Same as example 1C-1 | 1.86 | 994 | 4% of amor phous Li₂Fe P₂O₇ | - | 10 .5 | 1 % of ca rb on | 5 | 5. 8 | 1.3 | 15 0 | -1. 9 7 | 14 9. 8 | 3. 73 | 6. 7 | 802 | 2.2 5 |
| Co mp arat ive exa mp le 11 C | Same as example 1C-1 | 1.86 | 994 | - | 3 % A l₂ O 3 | 6 | 1 % of ca rb on | 5 | 5. 6 | 1.2 | 19 8 | -1. 9 8 | 15 0. 8 | 3. 74 | 6. 4 | 860 | 2.2 6 |
| Co mp arat ive exa mp le 12 C | Same as example 1C-1 | 1.86 | 994 | 1% of amor phous Li₂Fe P₂O₇ | 3 % A l₂ O 3 | 9. 4 | 1 % of ca rb on | 5 | 5. 5 | 1.2 | 14 8 | -1. 9 6 | 15 1. 5 | 3. 72 | 4. 2 | 950 | 2.2 1 |
| Ex am ple 1C-1 | Li_{0.994}Mo _{0.001}Mn_{0.6 5}Fe_{0.35}P_{0.9 99}Si_{0.001}O _{3.999}F_{0.001} | 1.86 | 994 | 1% of crysta lline Li₂Fe P₂O₇ | 3 % A l₂ O ₃ | 9 | 1 % of ca rb on | 5 | 5. 2 | 0.7 | 91 | -1. 9 6 | 15 7. 1 | 3. 72 | 3. 2 | 119 7 | 2.2 |
| Ex ample 1C-2 | Li_{0.977}M _{0.001}Mn_{0.65}Fe_{0.34}Ti_{0. 01}P_{0.999}N_{0 .001}O_{3.999} F_{0.001} | 1.86 | 977 | 1% of crystalline Li₂Fe P₂O₇ | 3 % A l₂ O ₃ | 9 | 1 % of ca rb on | 5 | 1. 5 | 0.5 | 57 | -1.9 7 | 15 6.7 | 3. 74 | 2. 7 | 138 9 | 2.3 8 |
| Ex am ple C1-3 | Li_{0.992}W_{0. 001}Mn_{0.65} Fe_{0.35}P_{0.99 9}S_{0.001}O_{3. 999}F_{0.001} | 1.86 | 992 | 1% of crysta lline Li₂Fe P₂O₇ | 3 % A l₂ O ₃ | 9 | 1 % of ca rb on | 5 | 4. 9 | 0.6 | 82 | -1. 9 6 | 15 4. 7 | 3. 74 | 3. 5 | 121 5 | 2.2 |
| Ex am ple 1C-4 | Li_{0.997}Al_{0. 001}Mn_{0.65} Fe_{0.35}P_{0.99 9}Si_{0.001}O_{3. 999}Cl_{0.001} | 1.86 | 997 | 1% of crysta lline Li₂Fe P₂O₇ | 3 % A l₂ O ₃ | 9 | 1 % of ca rb on | 5 | 5. 1 | 0.7 | 91 | -1. 9 6 | 15 2. 6 | 3. 72 | 3. 7 | 108 9 | 2.1 8 |
| Ex am ple 1C-5 | Li_{0.993}Nb_{0 .001}Mn_{0.65} Fe_{0.345}V_{0. 005}P_{0.999}S _{0.001}O_{3.999} F_{0.001} | 1.86 | 993 | 1% of crysta lline Li₂Fe P₂O₇ | 3 % A l₂ O 3 | 9 | 1 % of ca rb on | 5 | 1. 5 | 0.4 | 48 | -1. 9 7 | 15 5. 8 | 3. 74 | 3. 2 | 138 4 | 2.3 7 |
| Ex am ple 1C-6 | Li_{0.993}Nb_{0 .001}Mn_{0.65} Fe_{0.34}V_{0.0 05}Mg_{0.005} P_{0.999}S_{0.00 1}O_{3.999}F_{0. 001} | 1.86 | 993 | 1% of crysta lline Li₂Fe P₂O₇ | 3 % A l₂ O 3 | 9 | 1 % of ca rb on | 5 | 1. 4 | 0.3 | 57 | -1. 9 8 | 15 8. 4 | 3. 74 | 3. 2 | 130 5 | 2.4 2 |
| Ex am ple 1C-7 | Li_{0.993}Nb_{0 .001}Mn_{0.65} Fe_{0.34}V_{0.0 05}Co_{0.005}P _{0.999}S_{0.001} O_{3.999}F_{0.0 01} | 1.86 | 993 | 1% of crysta lline Li₂Fe P₂O₇ | 3 % A l₂ O 3 | 9 | 1 % of ca rb on | 5 | 1. 4 | 0.3 | 61 | -1. 9 8 | 15 8. 9 | 3. 74 | 3. 2 | 139 2 | 2.4 3 |
| Ex am ple 1C-8 | Li_{0.993}Nb_{0 .001}Mn_{0.65} Fe_{0.34}V_{0.0 05}Ni_{0.005}P _{0.999}S_{0.001} O_{3.999}F_{0.0 01} | 1.86 | 993 | 1% of crysta lline Li₂Fe P₂O₇ | 3 % A l₂ O ₃ | 9 | 1 % of ca rb on | 5 | 1. 4 | 0.3 | 67 | -1. 9 8 | 15 8. 8 | 3. 74 | 3. 1 | 128 6 | 2.4 6 |
| Ex am ple 1C-9 | Li_{0.991}Nb_{0 .001}Mn_{0.65} Fe_{0.349}Ti_{0. 001}P_{0.999}S _{0.001}O_{3.999} Cl_{0.001} | 1.86 | 991 | 1% of crysta lline Li₂Fe P₂O₇ | 3 % A l₂ O ₃ | 9 | 1 % of ca rb on | 5 | 1. 5 | 0.4 | 48 | -1. 9 7 | 15 7. 3 | 3. 73 | 3. 4 | 138 7 | 2.4 1 |
| Ex am ple 1C-10 | Li_{0.995}Nb_{0 .001}Mn_{0.65} Fe_{0.34}V_{0.0 05}Mg_{0.005} P_{0.999}Si_{0.0 01}O_{3.999}Br _{0.001} | 1.86 | 995 | 1% of crysta lline Li₂Fe P₂O₇ | 3 % A l₂ O ₃ | 9 | 1 % of ca rb on | 5 | 1. 4 | 0.3 | 68 | -1. 9 8 | 15 6. 8 | 3. 74 | 3. 1 | 146 9 | 2.4 4 |
| Ex am ple 1C-11 | Li_{0.998}Mg _{0.001}Mn_{0.6 5}Fe_{0.345}V_{0 .005}P_{0.999}S i_{0.001}O_{3.99 9}Br_{0.001} | 1.86 | 998 | 1% of crysta lline Li₂Fe P₂O₇ | 3 % A l₂ O₃ | 9 | 1 % of ca rbon | 5 | 1. 5 | 0.4 | 61 | -1. 9 7 | 15 8. 2 | 3. 73 | 3. 4 | 136 7 | 2.3 8 |
| Ex am ple 1C-12 | Same as example 1C-1 | 1.86 | 994 | 1% of crysta lline Li₂Fe P₂O₇ | 3 % Z n O | 8. 2 | 1 % of ca rb on | 5 | 5. 2 | 0.7 | 96 | -1. 9 4 | 15 6. 4 | 3. 71 | 3. 6 | 114 6 | 2.1 8 |
| Ex am ple 1C-13 | Same as example 1C-1 | 1.86 | 994 | 1% of crysta lline Li₂Fe P₂O₇ | 3 % Z r O ₂ | 8. 5 | 1 % of ca rb on | 5 | 5. 2 | 0.7 | 10 2 | -1. 9 6 | 15 5. 7 | 3. 72 | 4. 2 | 987 | 2.2 |
| Ex am ple 1C-14 | Same as example 1C-1 | 1.86 | 994 | 1% of crysta lline Li₂Fe P₂O₇ | 3 % M g O | 9. 3 | 1 % of ca rb on | 5 | 5. 2 | 0.7 | 87 | -1. 9 7 | 15 4. 9 | 3. 73 | 3. 1 | 123 5 | 2.2 3 |
| Ex am ple 1C-15 | Same as example 1C-1 | 1.86 | 994 | 1% of crysta lline Li₂Fe P207 | 3 % W O ₃ | 8. 6 | 1 % of ca rb on | 5 | 5. 2 | 0.7 | 76 | -1. 9 8 | 15 5. 8 | 3. 73 | 2. 7 | 135 9 | 2.2 1 |
| Ex am ple 1C-16 | Same as example 1C-1 | 1.86 | 994 | 1% of crysta lline Li₂Fe P₂O₇ | 3 % C u O | 8. 8 | 1 % of ca rb on | 5 | 5. 2 | 0.7 | 11 5 | -1. 9 5 | 15 6. 3 | 3. 71 | 4. 1 | 792 | 2.2 5 |
| Ex am ple 1C-17 | Li_{0.997}Mg _{0.001}Mn_{0.6 8}Fe_{0.3}V_{0.0 2}P_{0.999}N_{0. 001}O_{3.999}F _{0.001} | 2.13 | 997 | 1% of crysta lline Li₂Fe P₂O₇ | 3 % A l₂ O ₃ | 9 | 1 % of ca rb on | 5 | 6. 4 | 0.4 | 45 | -1. 9 7 | 15 2. 4 | 3. 77 | 1. 9 | 138 7 | 2.4 3 |
| Ex am ple 1C-18 | Li_{0.997}Mg _{0.001}Mn_{0.5 8}Fe_{0.4}V_{0.0 2}P_{0.999}N_{0. 001}O_{3.999}F _{0.001} | 1.38 | 997 | 1% of crysta lline Li₂Fe P₂O₇ | 3 % A l₂ O ₃ | 9 | 1 % of ca rb on | 5 | 6. 6 | 0.3 | 47 | -1. 9 9 | 15 6. 3 | 3. 71 | 2. 1 | 137 9 | 2.4 5 |
| Ex am ple 1C-19 | Li_{0.997}Mg _{0.001}Mn_{0.6 5}Fe_{0.3}V_{0.0 5}P_{0.999}N_{0. 001}O_{3.999}F _{0.001} | 1.86 | 997 | 1% of crysta lline Li₂Fe P₂O₇ | 3 % A l₂ O ₃ | 9 | 1 % of ca rb on | 5 | 6. 8 | 0.5 | 50 | -1. 9 6 | 15 4. 7 | 3. 75 | 2. 2 | 149 7 | 2.4 3 |
| Ex am ple 1C-20 | Li_{0.988}Mg _{0.005}Mn_{0.6} Fe_{0.35}V_{0.0 5}P_{0.999}S_{0.0 01}O_{3.999}F_{0 .001} | 1.5 | 197. 6 | 1% of crysta lline Li₂Fe P₂O₇ | 3 % A l₂ O ₃ | 9 | 1 % of ca rb on | 5 | 5. 4 | 0.4 | 59 | -1. 9 8 | 15 5. 3 | 3. 68 | 1. 8 | 138 9 | 2.4 6 |
| Ex am ple 1C-21 | Li_{0.984}Mg _{0.005}Mn_{0.6} Fe_{0.35}V_{0.0 5}P_{0.995}S_{0.0 05}O_{3.999}F_{0 .001} | 1.5 | 196. 8 | 1% of crysta lline Li₂Fe P₂O₇ | 3 % A l₂ O ₃ | 9 | 1 % of ca rb on | 5 | 4. 4 | 0.6 | 50 | -1. 9 5 | 15 5. 4 | 3. 69 | 2. 1 | 134 6 | 2.4 1 |
| Ex am ple 1C-22 | Li_{0.984}Mg _{0.005}Mn_{0.6} Fe_{0.35}V_{0.0 5}P_{0.999}S_{0.0 01}O_{3.995}F_{0 .005} | 1.5 | 196. 8 | 1% of crysta lline Li₂Fe P₂O₇ | 3 % A l₂ O ₃ | 9 | 1 % of ca rb on | 5 | 3. 2 | 0.5 | 52 | -1. 9 9 | 15 6. 4 | 3. 68 | 1. 9 | 132 6 | 2.3 9 |
| Ex am ple 1C-23 | Li_{0.984}Mg _{0.005}Mn_{0.6 5}Fe_{0.25}V_{0. 05}Co_{0.05}P_{0 .999}S_{0.001} O_{3.995}F_{0.0 05} | 1.86 | 196. 8 | 1% of crysta lline Li₂Fe P₂O₇ | 3 % A l₂ O ₃ | 9 | 1 % of ca rb on | 5 | 1. 5 | 0.3 | 48 | -1. 9 7 | 15 6. 7 | 3. 73 | 2. 2 | 148 6 | 2.4 3 |
| Ex am ple 1C-24 | Li_{0.984}Mg _{0.005}Mn_{0.6 5}Fe_{0.20}V_{0. 05}Co_{0.10}P_{0 .999}S_{0.001} O_{3.995}F_{0.0 05} | 1.86 | 196. 8 | 1% of crysta lline Li₂Fe P₂O₇ | 3 % A l₂ O ₃ | 9 | 1 % of ca rb on | 5 | 1. 4 | 0.3 | 58 | -1. 9 8 | 15 5. 7 | 3. 76 | 2. 3 | 149 2 | 2.4 4 |
| Ex am ple 1C-25 | Li_{0.984}Mg _{0.005}Mn_{0.7 5}Fe_{0.05}V_{0. 05}Co_{0.15}P_{0 .999}S_{0.001} O_{3.995}F_{0.0 05} | 3 | 196. 8 | 1% of crysta lline Li₂Fe P₂O₇ | 3 % A l₂ O ₃ | 9 | 1 % of ca rb on | 5 | 1. 6 | 0.3 | 51 | -1. 9 6 | 15 3. 7 | 3. 84 | 2. 7 | 138 9 | 2.4 2 |
| Ex am ple 1C-26 | Li_{0.984}Mg _{0.005}Mn_{0.6 5}Fe_{0.25}V_{0. 05}Ni_{0.05}P_{0. 999}S_{0.001}O _{3.995}F_{0.005} | 2.33 | 196. 8 | 1% of crysta lline Li₂Fe P₂O₇ | 3 % A l₂ O ₃ | 9 | 1 % of ca rb on | 5 | 2. 3 | 0.4 | 57 | -1. 9 4 | 15 4. 8 | 3. 83 | 2. 5 | 141 6 | 2.4 3 |
| Ex am ple 1C-27 | Li_{0.984}Mg _{0.005}Mn_{0.7 5}Fe_{0.10}V_{0. 05}Ni_{0.10}P_{0. 999}S_{0.001}O _{3.995}F_{0.005} | 3 | 196. 8 | 1% of crysta lline Li₂Fe P₂O₇ | 3 % A l₂ O ₃ | 9 | 1 % of ca rb on | 5 | 2. 1 | 0.4 | 60 | -1. 9 6 | 15 6. 8 | 3. 81 | 2. 2 | 139 7 | 2.4 3 |
| Ex am ple 1C-28 | Li_{0.984}Mg _{0.005}Mn_{0.7} Fe_{0.15}V_{0.0 5}Co_{0.10}P_{0. 999}S_{0.001}O _{3.995}F_{0.005} | 2.33 | 196. 8 | 1% of crysta lline Li₂Fe P₂O₇ | 3 % A l₂ O ₃ | 9 | 1 % of ca rb on | 5 | 1. 8 | 0.5 | 52 | -1. 9 7 | 15 0. 9 | 3. 78 | 2. 3 | 128 6 | 2.4 2 |
| Ex am ple 1C-29 | Li_{0.984}Mg _{0.005}Mn_{0.6} Fe_{0.25}V_{0.0 5}Co_{0.10}P_{0. 999}S_{0.001}O _{3.995}F_{0.005} | 1.5 | 196. 8 | 1% of crysta lline Li₂Fe P₂O₇ | 3 % A l₂ O ₃ | 9 | 1 % of ca rb on | 5 | 1. 5 | 0.4 | 51 | -1. 9 8 | 15 1. 7 | 3. 69 | 1. 9 | 138 9 | 2.4 2 |
| Ex am ple 1C-30 | Li_{0.984}Mg _{0.005}Mn_{0.5} Fe_{0.35}V_{0.0 5}Co_{0.10}P_{0. 999}S_{0.001}O _{3.995}F_{0.005} | 1 | 196. 8 | 1% of crysta lline Li₂Fe P₂O₇ | 3 % A l₂ O ₃ | 9 | 1 % of ca rb on | 5 | 1. 2 | 0.3 | 43 | -1. 9 9 | 15 2. 6 | 3. 65 | 2. 5 | 140 5 | 2.4 3 |
| Ex am ple 1C-31 | Li_{1.01}Mg_{0 .005}Mn_{0.7} Fe_{0.15}V_{0.0 5}Co_{0.10}P_{0. 9}Si_{0.1}O_{3.92} F_{0.08} | 2.33 | 202 | 1% of crysta lline Li₂Fe P₂O₇ | 3 % A l₂O ₃ | 9 | 1 % of carb on | 5 | 2. 4 | 0.5 | 31 | -1. 9 6 | 14 6. 5 | 3. 79 | 2. 2 | 139 8 | 2.2 1 |
| Ex am ple 1C-32 | Li_{0.97}Mg_{0 .005}Mn_{0.7} Fe_{0.15}V_{0.0 5}Co_{0.10}P_{0. 92}S_{0.08}O_{3. 9}F_{0.1} | 2.33 | 194 | 1% of crysta lline Li₂Fe P₂O₇ | 3 % A l₂ O ₃ | 9 | 1 % of ca rb on | 5 | 1. 7 | 0.4 | 27 | -1. 9 9 | 14 4. 9 | 3. 78 | 1. 8 | 136 7 | 2.2 6 |
| Ex am ple 1C-33 | Same as example 1C-1 | 1.86 | 994 | 0.8% of crysta lline Li₂Fe P₂O₇ | 2 . 4 % A l₂ O ₃ | 7. 2 | 1 % of ca rb on | 5 | 5. 2 | 0.8 | 11 2 | -1. 9 8 | 15 8. 1 | 3. 76 | 2. 7 | 987 | 2.2 5 |
| Ex am ple 1C-34 | Same as example 1C-1 | 1.86 | 994 | 1.2% of crysta lline Li₂Fe P₂O₇ | 3 . 6 % A l₂ O ₃ | 10 .8 | 1 % of ca rb on | 5 | 5. 2 | 0.8 | 67 | -1. 9 8 | 15 1. 9 | 3. 75 | 1. 9 | 126 9 | 2.2 4 |
| Ex am ple 1C-35 | Same as example 1C-1 | 1.86 | 994 | 1.4% of crysta lline Li₂Fe P₂O₇ | 4 . 2 % A l₂ O ₃ | 12 .6 | 1 % of ca rb on | 5 | 5. 2 | 0.8 | 43 | -1. 9 9 | 14 7. 4 | 3. 75 | 1. 6 | 138 7 | 2.2 4 |
| Ex am ple 1C-36 | Same as example 1C-1 | 1.86 | 994 | 1.6% of crysta lline Li₂Fe P₂O₇ | 4 . 8 % A l₂ O ₃ | 9 | 1 % of ca rb on | 5 | 5. 2 | 0.8 | 25 | -1. 9 9 | 14 4. 3 | 3. 75 | 1. 2 | 152 3 | 2.2 3 |
| Ex am ple 1C-37 | Same as example 1C-1 | 1.86 | 994 | 1% of crysta lline Li₂Fe P₂O₇ | 3 % A l₂ O ₃ | 9 | 2 % of ca rb on | 1 0 | 5. 2 | 0.8 | 67 | -1. 9 7 | 15 2. 9 | 3. 77 | 2. 5 | 116 7 | 2.1 8 |
| Ex am ple 1C-38 | Same as example 1C-1 | 1.86 | 994 | 1% of crysta lline Li₂Fe P₂O₇ | 3 % A l₂ O ₃ | 9 | 4 % of ca rb on | 2 0 | 5. 2 | 0.8 | 56 | -1. 9 8 | 14 8. 7 | 3. 78 | 1. 8 | 125 8 | 2.1 5 |
| Ex am ple 1C-39 | Same as example 1C-1 | 1.86 | 994 | 1% of crysta lline Li₂Fe P₂O₇ | 3 % A l₂ O ₃ | 9 | 5 % of ca rb on | 2 5 | 5. 2 | 0.8 | 45 | -1. 9 9 | 14 7. 2 | 3. 79 | 1. 7 | 136 8 | 2.0 9 |
| Ex am ple 1C-40 | Same as example 1C-1 | 1.86 | 994 | 1% of crysta lline Li₂Fe P₂O₇ | 3 % Al₂ O ₃ | 9 | 6 % of ca rb on | 3 0 | 5. 2 | 0.8 | 34 | -1. 98 | 14 3. 7 | 3. 79 | 1. 3 | 157 6 | 2.0 5 |
| Ex am ple 1C-41 | Same as example 1C-1 | 1.86 | 994 | 1.5% of crysta lline Li₂Fe P₂O₇ | 2 5 % A l₂ O ₃ | 9 | 2 % of ca rb on | 1 0 | 5. 2 | 0.8 | 69 | -1. 9 9 | 15 1. 8 | 3. 76 | 2. 5 | 119 8 | 2.1 8 |
| Ex am ple 1C-42 | Same as example 1C-1 | 1.86 | 994 | 2% of crysta lline Li₂Fe P₂O₇ | 2 % A l₂ O ₃ | 9 | 2 % of ca rb on | 1 0 | 5. 2 | 0.8 | 59 | -1. 9 7 | 15 2. 8 | 3. 75 | 2. 3 | 123 5 | 2.1 7 |
| Ex am ple 1C-43 | Same as example 1C-1 | 1.86 | 994 | 2.5% of crysta lline Li₂Fe P₂O₇ | 1 . 5 % A l₂ O ₃ | 9 | 2 % of ca rb on | 1 0 | 5. 2 | 0.8 | 48 | -1. 9 6 | 15 3. 4 | 3. 75 | 2. 2 | 130 8 | 2.1 6 |
| Ex am ple 1C-44 | Same as example 1C-1 | 1.86 | 994 | 3% of crysta lline Li₂Fe P₂O₇ | 1 % A l₂ O ₃ | 9 | 2 % of ca rb on | 1 0 | 5. 2 | 0.8 | 36 | -1. 9 4 | 15 4. 3 | 3. 74 | 1. 9 | 138 6 | 2.1 6 |
| Ex am ple 1C-45 | Li_{0.9}Mg_{0. 05}Mn_{0.6}Fe _{0.395}V_{0.005} P_{0.9}Si_{0.1}O _{3.9}F_{0.1} | 1.5 | 18 | 1% of crysta lline Li₂Fe P₂O₇ | 3 % A l₂ O ₃ | 9 | 1 % of ca rb on | 5 | 4. 8 | 0.9 | 38 | -1. 9 5 | 15 3. 8 | 3. 74 | 1. 9 | 126 9 | 2.3 8 |
| Ex am ple 1C-46 | Li_{1.1}Mg_{0. 001}Mn_{0.6}F e_{0.395}V_{0.00 5}P_{0.9}Si_{0.1} O_{3.998}F_{0.0 02} | 1.5 | 110 0 | 1% of crysta lline Li₂Fe P₂O₇ | 3 % A l₂ O ₃ | 9 | 1 % of ca rb on | 5 | 5. 5 | 0.9 | 42 | -1. 9 6 | 15 4. 2 | 3. 73 | 2. 0 | 121 3 | 3.4 1 |
| Ex am ple 1C-47 | Li_{0.9}Mg_{0. 1}Mn_{0.6}Fe_{0 .395}V_{0.005} P_{0.95}Si_{0.05} O_{3.95}F_{0.05} | 1.5 | 9 | 1% of crysta lline Li₂Fe P₂O₇ | 3 % A l₂ O ₃ | 9 | 1 % of ca rb on | 5 | 4. 9 | 0.8 | 46 | -1. 9 5 | 15 5. 3 | 3. 74 | 2. 2 | 115 4 | 2.4 5 |
| Ex am ple 1C-48 | Li_{0.95}Mg_{0 .05}Mn_{0.999} Fe_{0.001}P_{0.9 6}Si_{0.04}O_{3.9 9}F_{0.01} | 999 | 19 | 1% of crysta lline Li₂Fe P₂O₇ | 3 % A l₂ O ₃ | 9 | 1 % of ca rb on | 5 | 5. 3 | 1.0 | 53 | -1. 9 6 | 15 6. 2 | 3. 85 | 2. 4 | 103 9 | 2.3 7 |
| Ex am ple 1C-49 | Same as example 1C-1 | Sam e as exa mpl e 1C-1 | Sam e as exa mpl e 1C-1 | 1% of crysta lline Li₂Fe P₂O₇ | 3 % V ₂ O ₅ | 9 | 1 % of ca rb on | 5 | 5. 4 | 0.8 | 85 | -1. 9 7 | 15 6. 9 | 3. 73 | 3. 6 | 120 5 | 2.2 2 |
| Ex am ple 1C-50 | Li_{0.95}Mg_{0 .05}Mn_{0.99} Fe_{0.01}P_{0.96} Si_{0.04}O_{3.99} F_{0.01} | 99 | 19 | 1% of crysta lline Li₂Fe P₂O₇ | 3 % A l₂ O ₃ | 9 | 1 % of ca rb on | 5 | 9. 8 | 2.9 | 18 54 | -1. 5 5 | 13 5. 6 | 4. 01 | 15 .3 | 201 | 1.8 9 |
| Ex am ple s 1C-51 | Same as example 1C-1 | 1.86 | 994 | 4% of crysta lline Li₂Fe P₂O₇ | 3 % A l₂ O ₃ | 16 .5 | 1 % of ca rb on | 5 | 5. 1 | 0.8 | 79 | -1. 9 6 | 15 3. 6 | 3. 74 | 2. 9 | 126 4 | 2.3 5 |
| Ex am ple 1C-52 | Same as example 1C-1 | 1.86 | 994 | 1% of crysta lline Li₂Fe P₂O₇ | 3 % A l₂ O ₃ | 9 | 3 % of ca rb on | 1 5 | 5 | 0.7 | 81 | -1. 9 6 | 15 3. 2 | 3. 74 | 3 | 125 1 | 2.3 5 |
| Ex am ple 1C-53 | Li_{0.95}Mg_{0 .05}Mn_{0.8}F e_{0.2}P_{0.96}Si _{0.04}O_{3.99}F _{0.01} | 4 | 19 | 3% of crysta lline Li₂Fe P207 | 1 % A l₂ O ₃ | 9 | 1 % of ca rb on | 5 | 3. 8 | 0.9 | 52 | -1. 9 8 | 15 6. 5 | 3. 78 | 3. 1 | 102 1 | 2.3 8 |
| Ex am ple 1C-54 | Li_{0.5}Mg_{0. 5}Mn_{0.5}Fe_{0 .5}P_{0.96}Si_{0.0 4}O_{3.5}F_{0.5} | 1 | 1 | 3% of crysta lline Li₂Fe P₂O₇ | 1 % A l₂ O ₃ | 9 | 1 % of ca rb on | 5 | 2. 2 | 0.7 | 49 | -1. 9 7 | 15 7. 2 | 3. 72 | 2. 7 | 107 6 | 2.4 1 |
| Ex am ple 1C-55 | Li_{1.2}Mg_{0. 001}Mn_{0.5}F e_{0.5}P_{0.8}Si_{0 .2}O_{3.999}F_{0. 001} | 1 | 120 0 | 3% of crysta lline Li₂Fe P₂O₇ | 1 % A l₂ O ₃ | 9 | 1 % of ca rb on | 5 | 3. 8 | 2.1 | 39 | -1. 7 6 | 15 8. 3 | 3. 7 | 2. 6 | 112 6 | 2.3 5 |
| Ex am ple 1C-56 | Li_{0.95}Mg_{0 .005}Mn_{0.5} Fe_{0.5}P_{0.96} Si_{0.04}O_{3.95} F_{0.05} | 1 | 190 | 3% of crysta lline Li₂Fe P₂O₇ | 1 % A l₂ O ₃ | 9 | 1 % of ca rb on | 5 | 5. 1 | 1.2 | 42 | -1. 9 7 | 15 7. 1 | 3. 71 | 2. 4 | 108 7 | 2.3 8 |
| Ex am ple 1C-57 | Li_{0.95}Mg_{0 .05}Mn_{0.7}F e_{0.3}P_{0.96}Si _{0.04}O_{3.99}F _{0.01} | 2.3 | 19 | 3% of crysta lline Li₂Fe P₂O₇ | 1 % A l₂ O ₃ | 9 | 1 % of ca rb on | 5 | 4. 2 | 4 | 37 | -1. 9 6 | 15 7. 2 | 3. 75 | 2. 5 | 109 8 | 2.4 |
| Ex am ple 1C-58 | Li_{0.95}Mg_{0 .05}Mn_{0.6}F e_{0.4}P_{0.96}Si _{0.04}O_{3.99}F _{0.01} | 1.5 | 19 | 3% of crysta lline Li₂Fe P₂O₇ | 1 % A l₂ O ₃ | 9 | 1 % of ca rb on | 5 | 4. 8 | 2 | 35 | -1. 9 6 | 15 7. 5 | 3. 73 | 2. 9 | 113 4 | 2.3 9 |
| Ex am ple 1C-59 | Same as example 1C-1 | Sam e as exa mpl e 1C-1 | Sam e as exa mpl e 1C-1 | 3% of crysta lline Li₂Fe P₂O₇ | 1 % A l₂ O ₃ | 9 | 1 % of ca rb on | 5 | 4. 3 | 0.9 | 36 | -1. 8 8 | 15 7. 3 | 3. 74 | 3. 2 | 112 6 | 2.3 7 |

From the combination of examples 1C-1 to 1C-59 and comparative examples 1C to 9C, it can be seen that the existence of the first coating layer is beneficial to reducing the Li/Mn antisite defect concentration and the dissolution of Fe and Mn after cycling of the obtained material, increasing the capacity per gram of the button battery, and improving the high-temperature storage performance, safety performance and cycling performance of the battery. When the Li site, Mn site, phosphorus site and oxygen site are respectively doped with other elements, the lattice change rate, antisite defect concentration, and dissolution of Fe and Mn of the obtained material can be significantly reduced, such that the capacity per gram and compacted density of the battery are increased, and the high-temperature storage performance, safety performance and cycling performance of the battery are improved.

From the combination of examples 1C-33 to 1C-36, it can be seen that as the amount of the first coating layer increases from 3.2% to 6.4%, the dissolution of Fe and Mn after cycling of the obtained material is gradually reduced, the corresponding battery has an improved high-temperature storage performance, safety performance and cycling performance at 45°C as well, but the capacity per gram of the button battery was slightly reduced. Optionally, when the total amount of the first coating layer is 4-6.4 wt%, the overall performance of the corresponding battery is the best.

It can be seen from a combination of examples 1C-1 and examples 1C-37 to IC-40 that as the amount of the second coating layer increases from 1% to 6%, the dissolution of Fe and Mn after cycling of the obtained material is gradually reduced, the corresponding battery has an improved high-temperature storage performance, safety performance and cycling performance at 45°C as well, but the capacity per gram of the button battery is slightly reduced. Optionally, when the total amount of the second coating layer is 3-5 wt%, the overall performance of the corresponding battery is the best.

From the combination of examples 1C-1 and examples 1C-41 to 1C-44, it can be seen that when the first coating layer comprises both Li₂FeP₂O₇ and Al₂O₃, and in particular the weigh ratio of Li₂FeP₂O₇ to Al₂O₃ is 1 : 3 to 3 : 1, the performance of the battery is improved obviously.

**Table 6C: Performance test results of example 1C-1 and examples 2C-1 to 2C-4**

| Example No. | Inner core | First coating layer | | Crystalli nity of pyro phos phat e | Lattice chan ge rate (%) | Li/Mn antis ite defe ct conc entr atio n/% | Dissoluti on of Fe and Mn after cycli ng (pp m) | Surfa ce ox yg en val en cy | Capac ity per gra m of but ton batt ery at 0.1 C (m Ah/ g) | Avera ge disc har ge volt age of butt on batt ery (V) | Expansi on of cell upo n 30 day s of stor age at 60° C (%) | Number of cycle s corres pondi ng to 80% capac ity retent ion rate at 45°C | Compact ed dens ity (g/c m³) |
|---|---|---|---|---|---|---|---|---|---|---|---|---|---|
| Exam ple 1C-1 | Li_{0.994}M o_{0.001}Mn _{0.65}Fe_{0.35} P_{0.999}Si_{0. 001}O_{3.999} F_{0.001} | 1% of crystalli ne Li₂FeP₂ O₇ | 3% Al₂O₃ | 100 % | 5.2 | 0.7 | 91 | - 1.9 6 | 157 .1 | 3.7 4 | 3.2 | 1197 | 2.2 |
| Exam ple 2C-1 | Same as example 1C-1 | Same as example 1C-1 | Same as example 1C-1 | 30% | 5.3 | 1 | 143 | - 1.9 5 | 151 .8 | 3.7 3 | 6.1 | 879 | 2.2 |
| Exam ple 2C-2 | Same as example 1C-1 | Same as example 1C-1 | Same as example 1C-1 | 50% | 5.3 | 0.9 | 121 | - 1.9 6 | 153 .9 | 3.7 4 | 4.5 | 986 | 2.23 |
| Exam ple 2C-3 | Same as example 1C-1 | Same as example 1C-1 | Same as example 1C-1 | 70% | 5.3 | 0.8 | 102 | - 1.9 7 | 154 .6 | 3.7 5 | 3.3 | 1078 | 2.26 |
| Exam ple 2C-4 | Same as example 1C-1 | Same as example 1C-1 | Same as example 1C-1 | 10% | 5.3 | 0.9 | 184 | - 1.9 6 | 148 .9 | 3.6 9 | 6.7 | 696 | 2.18 |

It can be seen from Table 6C that as the crystallinity of pyrophosphate in the first coating layer gradually increases, the lattice change rate, Li/Mn antisite defect concentration, and dissolution of Fe and Mn of the corresponding material are gradually reduced, the capacity of the button battery is gradually increased, and the safety performance and cycling performance of the battery are also gradually improved.

**Table 7C: Performance test results when different parameters are used in steps S1-S2**

| Exa mpl e No. | Step S1 | | | Step S2 | | Lat tice cha nge rate (%) | Li/Mn antisite defect concentr ation/% | Disso lution of Fe and Mn after cyclin g (ppm) | Surf ace oxy gen vale ncy | Cap acity per gra m of butt on batte ry at 0.1 C (mA h/g) | Aver age disch arge volta ge of butto n batte ry (V) | Expa nsion of cell upon 30 days of stora ge at 60°C (%) | Numbe r of cycles corresp onding to 80% capacit y retentio n rate at 45°C | Comp acted densit y (g/cm ³) |
|---|---|---|---|---|---|---|---|---|---|---|---|---|---|---|
| | Stir ring rota tion spe ed (rp m) | Stirrin g tempe rature (°C) | Grin ding time (h) | Sinter ing tempe rature (°C) | Sint erin g time (h) | | | | | | | | | |
| Exa mpl e 1C-1 | 600 | 80 | 10 | 700 | 10 | 5.2 | 0.7 | 91 | - 1.9 6 | 157. 1 | 3.74 | 3.2 | 1197 | 2.2 |
| Exa mpl e 3C-1 | 200 | 50 | 12 | 700 | 10 | 4.9 | 0.8 | 93 | - 1.9 7 | 156. 8 | 3.74 | 2.2 | 1187 | 2.21 |
| Exa mpl e 3C-2 | 300 | 50 | 12 | 700 | 10 | 5.1 | 0.6 | 84 | - 1.9 8 | 156. 1 | 3.75 | 2.4 | 1114 | 2.2 |
| Exa mpl e 3C-3 | 400 | 50 | 12 | 700 | 10 | 5 | 0.7 | 87 | - 1.9 7 | 156. 2 | 7.76 | 2.5 | 1123 | 2.18 |
| Exa mpl e 3C-4 | 500 | 50 | 12 | 700 | 10 | 5.2 | 0.7 | 85 | - 1.9 8 | 155. 3 | 3.74 | 2.5 | 1134 | 2.2 |
| Exa mpl e 3C-5 | 600 | 50 | 10 | 700 | 10 | 4.8 | 0.6 | 103 | - 1.9 7 | 157. 3 | 3.75 | 2.3 | 1203 | 2.2 |
| Exampl e 3C-6 | 700 | 50 | 11 | 700 | 10 | 5.6 | 0.8 | 87 | - 1.9 9 | 157.4 | 3.76 | 2.4 | 1243 | 2.2 |
| Exa mpl e 3C-7 | 800 | 50 | 12 | 700 | 10 | 5.3 | 0.6 | 85 | - 1.9 7 | 156. 2 | 3.75 | 2.4 | 1187 | 2.22 |
| Exa mpl e 3C-8 | 600 | 60 | 12 | 700 | 10 | 5.5 | 0.6 | 85 | - 1.9 8 | 156. 9 | 3.74 | 2.3 | 1103 | 2.2 |
| Exa mpl e 3C-9 | 600 | 70 | 12 | 700 | 10 | 6 | 0.7 | 87 | - 1.9 6 | 157. 2 | 3.76 | 2.3 | 1156 | 2.42 |
| Exa mpl e 3C-10 | 600 | 80 | 12 | 700 | 10 | 4.8 | 0.8 | 86 | - 1.9 7 | 156. 4 | 3.75 | 2.4 | 1187 | 2.18 |
| Exa mpl e 3C-11 | 600 | 90 | 12 | 600 | 10 | 4 | 0.8 | 85 | - 1.9 9 | 155. 8 | 3.76 | 2.5 | 1205 | 2.18 |
| Exa mpl e 3C-12 | 600 | 100 | 12 | 800 | 10 | 4.8 | 0.8 | 94 | - 1.9 8 | 156. 3 | 3.74 | 2.3 | 1186 | 2.2 |
| Exa mpl e 3C-13 | 600 | 110 | 12 | 700 | 8 | 5.9 | 0.7 | 86 | - 1.9 7 | 156. 3 | 3.74 | 2.3 | 1135 | 2.19 |
| Exa mpl e 3C-14 | 600 | 120 | 12 | 700 | 12 | 5 | 0.5 | 91 | - 1.9 9 | 157 | 3.76 | 2.5 | 1236 | 2.18 |

It can be seen from Table 7C that the properties of the positive electrode material of the present application can be further improved by adjusting the stirring rotation speed and reaction temperature in the reaction kettle, the grinding time, and the sintering temperature and time during the preparation of the inner core.

**Table 8C: Performance test results when different parameters are used in step S3**

| Ex am ple No. | Li₂F eP₂ O₇: Al₂ O₃ (we ight rati o) | Ste S3 | | | | Interp lanar spaci ng of pyrop hosph ate (nm) | Inclu ded angle of crysta l orient ation (111) of pyrop hosph ate (°) | La tti ce ch an ge rat e (% ) | Li/Mn antisit e defect conce ntratio n/% | Diss oluti on of Fe and Mn after cycli ng (pp m) | Su rfa ce ox yg en val en cy | Ca pac ity per gra m of but ton batt ery at 0.1 C (m Ah/ a) | Av era ge disc har ge volt age of butt on batt ery (V) | Exp ansi on of cell upo n 30 day s of stor age at 60° C (%) | Num ber of cycle s corres pondi ng to 80% capac ity retent ion rate at 45°C | Com pact ed dens ity (g/c m³) |
|---|---|---|---|---|---|---|---|---|---|---|---|---|---|---|---|---|
| | | Dryi ng temp eratu re (°C) | Dr yi ng ti m e (h) | Sint erin g temp eratu re (°C) | Sin teri ng tim e (h) | | | | | | | | | | | |
| Ex am ple 1C-1 | 1 : 3 | 120 | 4 | 650 | 8 | 0.303 | 29.49 6 | 5. 2 | 0.7 | 91 | - 1.9 6 | 157 .1 | 3.7 4 | 3.2 | 1197 | 2.2 |
| Ex am ple 4C-1 | 1 : 3 | 100 | 4 | 700 | 6 | 0.303 | 29.49 6 | 5. 2 | 0.7 | 85 | - 1.9 8 | 156 .2 | 3.7 2 | 3.4 | 1126 | 2.21 |
| Ex am ple 4C-2 | 1 : 3 | 150 | 6 | 700 | 6 | 0.303 | 29.49 6 | 5. 2 | 0.7 | 81 | - 1.9 7 | 157 .3 | 3.7 4 | 3.6 | 1107 | 2.22 |
| Ex am ple 4C-3 | 1 : 3 | 200 | 6 | 700 | 6 | 0.303 | 29.49 6 | 5. 2 | 0.7 | 83 | - 1.9 8 | 158 .7 | 3.7 2 | 3.5 | 1185 | 2.23 |
| Ex am ple 4C-4 | 1 : 3 | 200 | 6 | 600 | 6 | 0.303 | 29.49 6 | 5. 2 | 0.7 | 102 | - 1.9 6 | 154 .2 | 3.7 1 | 3.7 | 1085 | 2.22 |

**Table 9C: Performance test results when different parameters are used in step S5**

| Ex am ple No . | Li₂ FeP ₂O₇ : Al₂ O₃ (we ight rati o) | Ste S5 | | | | Inter plana r spaci ng of pyro phos phate (nm) | Inclu ded angle of cryst al orien tatio n (111) of pyro phos phate (°) | La tti ce ch an ge rat e ( % ) | Li/M n antisit e defect conce ntrati on/% | Dis solu tion of Fe and Mn afte r cycl ing (pp m) | Su rfa ce ox yg en va le nc y | Ca pa cit y per gra m of but ton bat ter y at 0.1 C (m Ah /g) | Av era ge dis cha rge vol tag e of but ton batter y (V) | Ex pan sio n of cell upo n 30 day s of stor age at 60° C (%) | Num ber of cycle s corre spon ding to 80% capa city retention rate at 45°C | Co mpa cted den sity (g/c m³) |
|---|---|---|---|---|---|---|---|---|---|---|---|---|---|---|---|---|
| | | Dry ing tem pera ture (°C) | Dr yi ng ti m e (h ) | Sint erin g tem pera ture (°C) | Sin teri ng tim e (h) | | | | | | | | | | | |
| Ex am ple 1C -1 | 1 : 3 | 150 | 6 | 700 | 6 | 0.30 3 | 29.4 96 | 5. 2 | 0.7 | 91 | - 1. 96 | 15 7.1 | 3.7 4 | 3.2 | 1197 | 2.2 |
| Ex am ple 5C -1 | 1 : 3 | 150 | 6 | 600 | 4 | 0.30 3 | 29.4 96 | 5. 2 | 0.7 | 95 | - 1. 98 | 15 4.7 | 3.7 4 | 3.3 | 1105 | 2.2 2 |
| Ex am ple 5C -2 | 1 : 3 | 150 | 6 | 600 | 6 | 0.30 3 | 29.4 96 | 5. 2 | 0.7 | 90 | - 1. 96 | 15 8.8 | 3.7 5 | 3.5 | 1234 | 2.2 4 |
| Ex am ple 5C -3 | 1 : 3 | 150 | 6 | 800 | 8 | 0.30 3 | 29.4 96 | 5. 2 | 0.7 | 80 | - 1. 97 | 15 7.3 | 3.7 4 | 3.1 | 1167 | 2.2 4 |

It can be seen from Tables 8C and 9C that the properties of the obtained material can be improved by adjusting the drying temperature/time and the sintering temperature/time in the process of preparing lithium iron pyrophosphate by the method of the present application, thereby improving the performance of the battery; and the performance of the obtained material can be improved by adjusting the drying temperature/time and the sintering temperature/time during the coating process, thereby improving the performance of the battery.

The preparation and performance tests of the positive electrode active materials having an inner core of Li₁₊ₓCₘMn_{1-y}A_{y}P_{1-z}R_{z}O₄₋ₙDₙ and a shell comprising a first coating layer (a crystalline pyrophosphate), a second coating layer (a metal oxide of Q'ₑO_{f}), and a third coating layer (carbon) will be detailed below:

### Example 1D

### Step S1: Preparation of doped manganese oxalate

The operations were the same as example 1.

### Step S2: Preparation of inner core comprising Li_{0.994}Mo_{0.001}Mn_{0.65}Fe_{0.35}P_{0.999}Si_{0.001}O_{3.999}F_{0.001}

The operations were the same as those in step S2 of example 1C-1.

### Step S3: Preparation of first coating layer suspension

Preparation of Li₂FeP₂O₇ solution: 7.4 g of lithium carbonate, 11.6 g of ferrous carbonate, 23.0 g of ammonium dihydrogen phosphate and 12.6 g of oxalic acid dihydrate were dissolved in 500 mL of deionized water, with pH being controlled to be 5, the mixture was then stirred and reacted at room temperature for 2 h to obtain a solution, and then the solution was heated to 80°C and held at the temperature for 4 h to obtain a first coating layer suspension.

### Step S4: Coating of first coating layer

157.2 g of doped lithium manganese phosphate inner core material obtained in step S2 was added into the first coating layer suspension (the content of the coating material was 1.572 g) obtained in step S3, fully stirred and mixed for 6 h; and after uniformly mixing, the mixture was transferred into an oven at 120°C and dried for 6 h, and then sintered at 650°C for 6 h to obtain a pyrophosphate coated material.

### Step S5: Preparation of second coating layer suspension

4.71 g of nano-Al₂O₃ (with a particle size of about 20 nm) was dissolved in 1500 mL of deionized water, and stirred for 2 h to obtain a second coating layer suspension.

### Step S6: Coating of second coating layer

158.772 g of the pyrophosphate coated material obtained in step S4 was added into the second coating layer suspension (the content of the coating material was 4.71 g) obtained in step S5, fully stirred and mixed for 6 h; and after uniformly mixing, the mixture was transferred into an oven at 120°C and dried for 6 h, and then sintered at 700°C for 8 h to obtain a two-layer coated material.

### Step S7: Preparation of aqueous solution of third coating layer

37.3 g of sucrose was dissolved in 500 g of deionized water, then stirred and fully dissolved to obtain an aqueous solution of sucrose.

### Step S8: Coating of third coating layer

1633.9 g of the two-layer coated material obtained in step S6 was added into the sucrose solution obtained in step S7, stirred and mixed for 6 h; and after uniformly mixing, the mixture was transferred into an oven at 150°C and dried for 6 h, and then sintered at 700°C for 10 h to obtain a three-layer coated material.

### Examples 2D to 89D and comparative examples 1D to 12D

The positive electrode active materials of examples 2D to 89D and comparative examples 1D to 12D were prepared by a method similar to example 1D, and the differences in the preparation of the positive electrode active materials were shown in Tables 1D to 6D.

There was no first coating layer in comparative examples 1D - 9D and comparative example 11D, and therefore steps S3-S4 were not involved; and there was no second coating layer in comparative examples 1D - 10D, and therefore steps S5-S6 were not involved.

**Table 1D: Preparation of doped manganese oxalate and preparation of inner core (steps S1-S2)**

| No. | Chemical formula of inner core* | Raw materials used in Step S1 | Raw materials used in Step S2 |
|---|---|---|---|
| Comparativ e example 1D | LiMnPO₄ | MnSO₄·H₂O, 1.0 mol; water, 10 L; and oxalic acid dihydrate, 1 mol; | Manganese oxalate particles obtained in step S1, 1 mol; lithium carbonate, 0.5 mol; 85% aqueous phosphoric acid solution containing 1 mol of phosphoric acid; sucrose, 0.005 mol; and water, 20 L; |
| Comparativ e example 2D | LiMn_{0. 85}Fe_{0.15}PO₄ | MnSO₄·H₂O, 0.85 mol; FeSO₄· H₂O, 0.15 mol; water, 10 L; and oxalic acid dihydrate, 1 mol; | Doped manganese oxalate particles obtained in step S1, 1 mol; lithium carbonate, 0.5 mol; 85% aqueous phosphoric acid solution containing 1 mol of phosphoric acid; sucrose, 0.005 mol; and water, 20 L; |
| Comparativ e example 3D | Li_{0.990}Mg_{0.005}Mn_{0.95}Zn ₀.₀₅PO₄ | MnSO₄·H₂O, 1.9 mol; ZnSO₄, 0.1mol; water, 10 L; and oxalic acid dihydrate, 2 mol; | Doped manganese oxalate particles obtained in step S1, 1 mol; lithium carbonate, 0.495 mol; MgSO₄₃, 0.005 mol; 85% aqueous phosphoric acid solution containing 1 mol of phosphoric acid; sucrose, 0.005 mol; and water, 20 L; |
| Comparativ e example 4D | Li_{0.90}Nb_{0.01}Mn_{0.6}Fe_{0.4}P O_{3.95}F_{0.05} | MnSO₄·H₂O, 1.2 mol; FeSO₄·H₂O, 0.8 mol; water, 10 L; and oxalic acid dihydrate, 2 mol; | Fe doped manganese oxalate particles obtained in step S1, 1 mol; lithium carbonate, 0.45 mol; Nb₂(SO₄)₅, 0.005 mol; 85% aqueous phosphoric acid solution containing 1 mol of phosphoric acid; NH₄HF₂, 0.025 mol; sucrose, 0.005 mol; and water, 20 L; |
| Comparativ e example 5D | Li_{0.76}Mg_{0.12}Mn_{0.7}Fe_{0.3} P_{0.999}Si_{0.001}O_{3.999}F_{0.001} | MnSO₄·H₂O, 1.4 mol; FeSO₄·H₂O, 0.6 mol; water, 10 L; and oxalic acid dihydrate, 2 mol; | Fe doped manganese oxalate particles obtained in step S1, 1 mol; lithium carbonate, 0.38 mol; MgSO₄, 0.12 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Comparativ e example 6D | Li_{0.998}Mg_{0.001} Mn_{0.4}Zn_{0. 6}P_{0.999}Si_{0.001}O_{3.999}F_{0.001} | MnSO₄·H₂O, 0.8 mol; ZnSO₄, 1.2 mol; water, 10 L; and oxalic acid dihydrate, 2 mol; | Doped manganese oxalate particles obtained in step S1, 1 mol; lithium carbonate, 0.499 mol; MgSO₄, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Comparativ e example 7D | Li_{1.068}Mg_{0.001}Mn_{0.7}Fe_{0. 3}P_{0.88}Si_{0.12}O_{3.95}F_{0.05} | MnSO₄·H₂O, 1.4 mol; FeSO₄·H₂O, 0.6 mol; water, 10 L; and oxalic acid dihydrate, 2 mol; | Fe doped manganese oxalate particles obtained in step S1, 1 mol; lithium carbonate, 0.534 mol; MgSO₄, 0.001 mol; 85% aqueous phosphoric acid solution containing 0.88 mol of phosphoric acid; H₄SiO₄, 0.12 mol; NH₄HF₂, 0.025 mol; sucrose, 0.005 mol; and water, 20 L; |
| Comparativ e example 8D | Li_{0.948}Mg_{0.001}Mn_{0.6}Fe_{0. 4}P_{0.93}Si_{0.07}O_{3.88}F_{0.12} | MnSO₄·H₂O, 1.2mol; FeSO₄·H₂O, 0.8 mol; water, 10 L; and oxalic acid dihydrate, 2 mol; | Fe doped manganese oxalate particles obtained in step S1, 1 mol; lithium carbonate, 0.474 mol; MgSO₄, 0.001 mol; 85% aqueous phosphoric acid solution containing 0.93 mol of phosphoric acid; H₄SiO₄, 0.07 mol; NH₄HF₂, 0.06 mol; sucrose, 0.005 mol; and water, 20 L; |
| Comparativ e examples 9D and 10D, and examples 1D, 90D and 91D | Li_{0.994}Mo_{0.001}Mn_{0.65}Fe _{0.35}P_{0.999}Si_{0.001}O_{3.999}F_{0. 001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.497 mol; Mo(SO₄)₃, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Example 12D - 28D | Li_{0.994}Mo_{0.001}Mn_{0.65}Fe _{0.35}P_{0.999}Si_{0.001}O_{3.999}F_{0. 001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.497 mol; M_{O}(SO₄)₃, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Examples 45D - 62D, examples 67D - 72D, and examples 84D - 89D | Li_{0.994}Mo_{0.001}Mn_{0.65}Fe _{0.35}P_{0.999}Si_{0.001}O_{3.999}F_{0. 001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.497 mol; Mo(SO₄)₃, 0.001 mol; 85% aqueous phosphoric acid solution containing 0.999 mol of phosphoric acid; H₄SiO₄, 0.001 mol; NH₄HF₂, 0.0005 mol; sucrose, 0.005 mol; and water, 20 L; |
| Example 2D | Li_{0.977}Mg_{0.001}Mn_{0.65}Fe _{0.34}Ti_{0.01}P_{0.999}N_{0.001}O_{3.9 99}F_{0.001} | MnSO₄·H₂O, 1.3 mol; FeSO₄·H₂O, 0.68 mol; water, 10 L; oxalic acid dihydrate, 2 mol; and Ti(SO₄)₂, 0.02 mol; | Doped manganese oxalate particles obtained in step S1, 1 mol; lithium carbonate, 0.4885 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 3D | Li_{0.992}W_{0.001}Mn_{0.65}Fe_{0. 35}P_{0.999}S_{0.001}O_{3.999}F_{0.001} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.496 mol; W(SO₄)₃, 0.001 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 4D | Li_{0.997}Al_{0.001}Mn_{0.65}Fe_{0. 35}P_{0.999}Si_{0.001}O_{3.999}Cl_{0.0 01} | MnSO₄·H₂O, 1.3 mol; FeSO₄·H₂O, 0.7 mol; water, 10 L; and oxalic acid dihydrate, 2 mol; | Fe doped manganese oxalate particles obtained in step S1, 1 mol; lithium carbonate, 0.4985 mol; Al₂(SO₄)₃, 0.0005 mol; 85% aqueous phosphoric acid solution containing 0.999 mol of phosphoric acid; H₄SiO₄, 0.001 mol; NH₄HCl₂, 0.0005 mol; sucrose, 0.005 mol; and water, 20 L; |
| Example 5D | Li_{0.993}Nb_{0.001}Mn_{0.65}Fe_{0 .345}V_{0.005}P_{0.999}S_{0.001}O_{3.9 99}F_{0.001} | MnSO₄·H₂O, 1.3 mol; FeSO₄·H₂O, 0.69 mol; water, 10 L; oxalic acid dihydrate, 2 mol; and VCl₂, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 6D | Li_{0.993}Nb_{0.001}Mn_{0.65}Fe_{0 .34}V_{0.005}Mg_{0.005}P_{0.999}S_{0. 001}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and MgSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 7D | Li_{0.993}Nb_{0.001}Mn_{0.65}Fe_{0 .34}V_{0.005}Co_{0.005}P_{0.999}S_{0. 001}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and CoSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 8D | Li_{0.993}Nb_{0.001}Mn_{0.65}Fe_{0 .34}V_{0.005}Ni_{0.005}P_{0.999}S_{0.0 01}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; and NiSO₄, 0.01 mol; | Doped manganese oxalate particles obtained in step S1, 1 mol; lithium carbonate, 0.4965 mol; Nb₂(SO₄)₅, 0.0005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 9D | Li_{0.991}Nb_{0.001}Mn_{0.65}Fe_{0 .349}Ti_{0.001}P_{0.999}S_{0.001}O_{3. 999}Cl_{0.001} | MnSO₄·H₂O, 1.3 mol; FeSO₄·H₂O, 0.698 mol; water, 10 L; oxalic acid dihydrate, 2 mol; and Ti(SO₄)₂, 0.002 mol; | Doped manganese oxalate particles obtained in step S1, 1 mol; lithium carbonate, 0.4955 mol; Nb₂(SO₄)₅, 0.0005 mol; 85% aqueous phosphoric acid solution containing 0.999 mol of phosphoric acid; H₂SO₄, 0.001 mol; NH₄HCl₂, 0.0005 mol; sucrose, 0.005 mol; and water, 20 L; |
| Example 10D | Li_{0.995}Nb_{0.001}Mn_{0.65}Fe_{0 .34}V_{0.005}Mg_{0.005}P_{0.999}Si _{0.001}O_{3.999}Br_{0.001} | MnSO₄·H₂O, 1.3 mol; FeSO₄·H₂O, 0.68 mol; water, 10 L; oxalic acid dihydrate, 2 mol; VCl₂, 0.01 mol; and MgSO₄, 0.01 mol; | Doped manganese oxalate particles obtained in step S1, 1 mol; lithium carbonate, 0.4975 mol; Nb₂(SO₄)₅, 0.0005 mol; 85% aqueous phosphoric acid solution containing 0.999 mol of phosphoric acid; H₄SiO₄, 0.001 mol; NH₄HBr₂, 0.0005 mol; sucrose, 0.005 mol; and water, 20 L; |
| Example 11D | Li_{0.998}Mg_{0.001}Mn_{0.65}Fe _{0.345} V_{0.005}P_{0.999}Si_{0.001}O _{3.999}Br_{0.001} | MnSO₄·H₂O, 1.3 mol; FeSO₄·H₂O, 0.69 mol; water, 10 L; oxalic acid dihydrate, 2 mol; and VCl₂, 0.01 mol; | Doped manganese oxalate particles obtained in step S1, 1 mol; lithium carbonate, 0.499 mol; MgSO₄, 0.001 mol; 85% aqueous phosphoric acid solution containing 0.999 mol of phosphoric acid; H₄SiO₄, 0.001 mol; NH₄HBr₂, 0.0005 mol; sucrose, 0.005 mol; and water, 20 L; |
| Example 29D | Li_{0.997}Mg_{0.001}Mn_{0.68}Fe_{0.3}V_{0.02}P_{0.999}N_{0.001}O_{3.99 9}F_{0.001} | MnSO₄·H₂O, 1.36mol; FeSO₄·H₂O, 0.6 mol; water, 10 L; oxalic acid dihydrate, 2 mol; and VCl₂, 0.04 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 30D | Li_{0.997}Mg_{0.001}Mn_{0.58}Fe _{0.4}V_{0.02}P_{0.999}N_{0.001}O_{3.99 9}F_{0.001} | MnSO₄·H₂O, 1.16 mol; FeSO₄·H₂O, 0.8 mol; water, 10 L; oxalic acid dihydrate, 2 mol; and VCl₂, 0.04 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 31D | Li_{0.997}Mg_{0.001}Mn_{0.65}Fe _{0.3}Y_{0.05}P_{0.999}N_{0.001}O_{3.99 9}F_{0.001} | MnSO₄·H₂O, 1.3 mol; FeSO₄·H₂O, 0.6 mol; water, 10 L; oxalic acid dihydrate, 2 mol; and VCl₂, 0.1 mol; | Doped manganese oxalate particles obtained in step S1, 1 mol; lithium carbonate, 0.4985 mol; MgSO₄, 0.001 mol; 85% aqueous phosphoric acid solution containing 0.999 mol of phosphoric acid; HNO₃, 0.001 mol; NH₄HF₂, 0.0005 mol; sucrose, 0.005 mol; and water, 20 L; |
| Example 32D | Li_{0.988}Mg_{0.005}Mn_{0.6}Fe_{0. 35}V_{0.05}P_{0.999}S_{0.001}O_{3.999} F_{0.001} | MnSO₄·H₂O, 1.2mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.494 mol; MgSO₄, 0.005 mol; 85% aqueous phosphoric acid solution containing 0.999 mol of phosphoric acid; H₂SO₄, 0.001 mol; NH₄HF₂, 0.0005 mol; sucrose, 0.005 mol; and water, 20 L; |
| Example 33D | Li_{0.984}Mg_{0.005}Mn_{0.6}Fe_{0. 35}V_{0.05}P_{0.995}S_{0.005}O_{3.999} F_{0.001} | MnSO₄·H₂O, 1.2mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.467 mol; MgSO₄, 0.005 mol; 85% aqueous phosphoric acid solution containing 0.171 mol of phosphoric acid; H₂SO₄, 0.005 mol; NH₄HF₂, 0.0005 mol; sucrose, 0.005 mol; and water, 20 L; |
| Example 34D | Li_{0.984}Mg_{0.005}Mn_{0.6}Fe_{0. 35}V_{0.05}P_{0.999}S_{0.001}O_{3.995} F_{0.005} | MnSO₄·H₂O, 1.2mol; FeSO₄·H₂O, 0.7 mol; water, 10 L; oxalic acid dihydrate, 2 mol; and VCl₂, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 35D | Li_{0.984}Mg_{0.005}Mn_{0.65}Fe _{0.25}V_{0.05}Co_{0.05}P_{0.999}S_{0.0 01}O_{3.995}F_{0.005} | MnSO₄·H₂O, 1.3 mol; FeSO₄·H₂O, 0.5 mol; water, 10 L; oxalic acid dihydrate, 2 mol; VCl₂, 0.1 mol; and CoSO₄, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 36D | Li_{0.984}Mg_{0.005}Mn_{0.65}Fe _{0.20}V_{0.05}Co_{0.10}P_{0.999}S_{0.0 01}O_{3.995}F_{0.005} | MnSO₄·H₂O, 1.3 mol; FeSO₄·H₂O, 0.4 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 37D | Li_{0.984}Mg_{0.005}Mn_{0.75}Fe _{0.05}V_{0.05}Co_{0.15}P_{0.999}S_{0.0 01}O_{3.995}F_{0.005} | MnSO₄·H₂O, 1.5 mol; FeSO₄·H₂O, 0.1 mol; water, 10 L; oxalic acid dihydrate, 2 mol; VCl₂, 0.1 mol; and CoSO₄, 0.3 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 38D | Li_{0.984}Mg_{0.005}Mn_{0.65}Fe _{0.25}V_{0.05}Ni_{0.05}P_{0.999}S_{0.00 1}O_{3.995}F_{0.005} | MnSO₄·H₂O, 1.3 mol; FeSO₄·H₂O, 0.5 mol; water, 10 L; oxalic acid dihydrate, 2 mol; VCl₂, 0.1 mol; and NiSO₄, 0.1 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 39D | Li_{0.984}Mg_{0.005}Mg_{0.75}Fe ₀.₁₀V_{0.05}Ni_{0.10}P_{0.999}S_{0.00 1}O_{3.995}F_{0.005} | MnSO₄·H₂O, 1.5 mol; FeSO₄·H₂O, 0.2 mol; water, 10 L; oxalic acid dihydrate, 2 mol; VCl₂, 0.1 mol; and NiSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 40D | Li_{0.984}Mg_{0.005}Mn_{0.7}Fe_{0. 15}V_{0.05}Co_{0.10}P_{0.999}S_{0.001} O_{3.995}F_{0.005} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 41D | Li_{0.984}Mg_{0.005}Mn_{0.6}Fe_{0. 25}V_{0.05}Co_{0.10}P_{0.999}S_{0.001} O_{3.995}F_{0.005} | MnSO₄·H₂O, 1.2mol; FeSO₄·H₂O, 0.5 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.497 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 42D | Li_{0.984}Mg_{0.005}Mn_{0.5}Fe_{0. 35}V_{0.05}Co_{0.10}P_{0.999}S_{0.001} O_{3.995}F_{0.005} | MnSO₄·H₂O, 1.0 mol; FeSO₄·H₂O, 0.7 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.492 mol; MgSO₄, 0.005 mol; 85% aqueous phosphoric acid solution containing 0.999 mol of phosphoric acid; H₂SO₄, 0.001 mol; NH₄HF₂, 0.0025 mol; sucrose, 0.005 mol; and water, 20 L; |
| Example 43D | Li_{1.01}Mg_{0.005}Mn_{0.7}Fe_{0.1 5}V_{0.05}Co_{0.10}P_{0.9}Si_{0.1}O₃. ₉₂F_{0.08} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.4825 mol; MgSO₄, 0.005 mol; 85% aqueous phosphoric acid solution containing 0.9 mol of phosphoric acid; H₄SiO₄, 0.1 mol; NH₄HF₂, 0.04 mol; sucrose, 0.005 mol; and water, 20 L; |
| Example 44D | Li_{0.97}Mg_{0.005}Mn_{0.7}Fe_{0.1 5}V_{0.05}Co_{0.10}P_{0.92}Si_{0.08}O _{3.9}F_{0.1} | MnSO₄·H₂O, 1.4 mol; FeSO₄·H₂O, 0.3 mol; water, 10 L; oxalic acid dihydrate, 2 mol; VCl₂, 0.1 mol; and CoSO₄, 0.2 mol; | Doped manganese oxalate particles obtained in step S1, 1 mol; lithium carbonate, 0.485 mol; MgSO₄, 0.005 mol; 85% aqueous phosphoric acid solution containing 0.92 mol of phosphoric acid; H₄SiO₄, 0.08 mol; NH₄HF₂, 0.05 mol; sucrose, 0.005 mol; and water, 20 L; |
| Example 63D | Li_{0.9}Mg_{0.05}Mn_{0.6}Fe_{0.395} V_{0.005}P_{0.9}Si_{0.1}O_{3.9}F_{0.1} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.45 mol; MgSO₄, 0.05 mol; 85% aqueous phosphoric acid solution containing 0.9 mol of phosphoric acid; H₄SiO₄, 0.1 mol; NH₄HF₂, 0.05 mol; sucrose, 0.005 mol; and water, 20 L; |
| Example 64D | Li_{1.1}Mg_{0.001}Mn_{0.6}Fe_{0.39 5}V_{0.005}P_{0.9}Si_{0.1}O_{3.998}F_{0. 002} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.55 mol; MgSO₄, 0.001 mol; 85% aqueous phosphoric acid solution containing 0.9 mol of phosphoric acid; H₄SiO₄, 0.1 mol; NH₄HF₂, 0.001 mol; sucrose, 0.005 mol; and water, 20 L; |
| Example 65D | Li_{0.9}Mg_{0.1}Mn_{0.6}Fe_{0.395} V_{0.005}P_{0.95}Si_{0.05}O_{3.95}F_{0. 05} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.45 mol; MgSO₄, 0. 1 mol; 85% aqueous phosphoric acid solution containing 0.95 mol of phosphoric acid; H₄SiO₄, 0.05 mol; NH₄HF₂, 0.025 mol; sucrose, 0.005 mol; and water, 20 L; |
| Example 66D | Li_{0.95}Mg_{0.05}Mn_{0.999}Fe_{0. 001}P_{0.96}Si_{0.04}O_{3.99}F_{0.01} | MnSO₄·H₂O, 1.2mol; FeSO₄·H₂O, 0.79 mol; water, 10 L; oxalic acid dihydrate, 2 mol; and VCl₂, 0.01 mol; | Doped manganese oxalate particles obtained in step S1, 1 mol; lithium carbonate, 0.475 mol; MgSO₄, 0.05 mol; 85% aqueous phosphoric acid solution containing 0.96 mol of phosphoric acid; H₄SiO₄, 0.04 mol; NH₄HF₂, 0.005 mol; sucrose, 0.005 mol; and water, 20 L; |
| Example 73D | Li_{0.95}Mg_{0.05}Mn_{0.99}Fe_{0.0 1}P_{0.96}Si_{0.04}O_{3.99}F_{0.01} | MnSO₄·H₂O, 1.98 mol; FeSO₄·H₂O, 0.02 mol; water, 10 L; and oxalic acid dihydrate, 2 mol; | Fe doped manganese oxalate particles obtained in step S1, 1 mol; lithium carbonate, 0.475 mol; MgSO4, 0.05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 74D | Li_{0.95}Mg_{0.05}Mn_{0.5}Fe_{0.5} P_{0.96}Si_{0.04}O_{3.99}F_{0.01} | MnSO₄·H₂O, 1 mol; FeSO₄·H₂O, 1 mol; water, 10 L; and oxalic acid dihydrate, 2 mol; | Fe doped manganese oxalate particles obtained in step S1, 1 mol; lithium carbonate, 0.475 mol; MgSO4, 0.05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 75D | Li_{0.95}Mg_{0.05}Mn_{0.8}Fe_{0.2} P_{0.06}Si_{0.04}O_{3.99}F_{0.01} | MnSO₄·H₂O, 1.6 mol; FeSO₄·H₂O, 0.4 mol; water, 10 L; and oxalic acid dihydrate, 2 mol; | Fe doped manganese oxalate particles obtained in step S1, 1 mol; lithium carbonate, 0.475 mol; MgSO4, 0.05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Example 76D | Li_{0.95}Mg_{0.05}Mn_{0.75}Fe_{0.2 5}P_{0.96}Si_{0.04}O_{3.99}F_{0.01} | MnSO₄·H₂O, 1.5 mol; FeSO₄·H₂O, 0.25 mol; water, 10 L; and oxalic acid dihydrate, 2 mol; | Fe doped manganese oxalate particles obtained in step S1, 1 mol; lithium carbonate, 0.475 mol; MgSO4, 0.05 mol; 85% aqueous phosphoric acid solution containing 0.96 mol of phosphoric acid; H₄SiO₄, 0.04 mol; NH₄HF₂, 0.01 mol; sucrose, 0.005 mol; and water, 20 L; |
| Examples 77D and 83D | Li_{0.998}Mg_{0.001}Mn_{0.60}Fe _{0.35}V_{0.05}P_{0.999}Si_{0.001}O_{3.9 99}F_{0.001} | MnSO₄·H₂O, 1.2 mol; FeSO₄·H₂O, 0.7 mol; VCl₂, 0.1 mol; water, 10 L; and oxalic acid dihydrate, 2 mol; | Fe doped manganese oxalate particles obtained in step S1, 1 mol; lithium carbonate, 0.499 mol; MgSO4, 0.001 mol; 85% aqueous phosphoric acid solution containing 0.999 mol of phosphoric acid; H₄SiO₄, 0.001 mol; NH₄HF₂, 0.001 mol; sucrose, 0.005 mol; and water, 20 L; |
| Examples 78D and 80D | Li_{0.996}Mg_{0.002}Mn_{0.55}Fe _{0.40}V_{0.05}P_{0.999}Si_{0.001}O_{3.9 99}F_{0.001} | MnSO₄·H₂O, 1.1 mol; FeSO₄·H₂O, 0.8 mol; VCl₂, 0.1 mol; water, 10 L; and oxalic acid dihydrate, 2 mol; | Fe doped manganese oxalate particles obtained in step S1, 1 mol; lithium carbonate, 0.498 mol; MgSO4, 0.002 mol; 85% aqueous phosphoric acid solution containing 0.999 mol of phosphoric acid; H₄SiO₄, 0.001 mol; NH₄HF₂, 0.001 mol; sucrose, 0.005 mol; and water, 20 L; |
| Example 79D | Li_{0.996}Mg_{0.002}Mn_{0.60}Fe _{0.35}V_{0.05}P_{0.999}Si_{0.001}O_{3.9 99}F_{0.001} | MnSO₄·H₂O, 1.3 mol; FeSO₄·H₂O, 0.7 mol; water, 10L; and oxalic acid dihydrate, 2 mol; | Fe doped manganese oxalate particles obtained in step S1, 1 mol; lithium carbonate, 0.498 mol; MgSO4, 0.002 mol; 85% aqueous phosphoric acid solution containing 0.999 mol of phosphoric acid; H₄SiO₄, 0.001 mol; NH₄HF₂, 0.001 mol; sucrose, 0.005 mol; and water, 20 L; |
| Example 81D | Li_{0.994}Mg_{0.003}Mn_{0.55}Fe _{0.40}V_{0.05}P_{0.999}Si_{0.001}O_{3.9 99}F_{0.001} | MnSO₄·H₂O, 1.1 mol; FeS0₄·H₂O, 0.8 mol; VCl₂, 0.1 mol; water, 10 L; and oxalic acid dihydrate, 2 mol; | Fe doped manganese oxalate particles obtained in step S1, 1 mol; lithium carbonate, 0.497 mol; MgSO4, 0.003 mol; 85% aqueous phosphoric acid solution containing 0.999 mol of phosphoric acid; H₄SiO₄, 0.001 mol; NH₄HF₂, 0.001 mol; sucrose, 0.005 mol; and water, 20 L; |
| Example 82D | Li_{0.998}Mg_{0.001}Mn_{0.4}Fe_{0. 55}V_{0.05}P_{0.999}Si_{0.001}O_{3.99 9}F_{0.001} | MnSO₄·H₂O, 0.8 mol; FeS0₄·H₂O, 1.1 mol; VCl₂, 0.1 mol; water, 10 L; and oxalic acid dihydrate, 2 mol; | Fe doped manganese oxalate particles obtained in step S1, 1 mol; lithium carbonate, 0.499 mol; MgSO4, 0.001 mol; 85% aqueous phosphoric acid solution containing 0.999 mol of phosphoric acid; H₄SiO₄, 0.001 mol; NH₄HF₂, 0.001 mol; sucrose, 0.005 mol; and water, 20 L; |

**Table 2D: Preparation of first coating layer suspension (step S3)**

| No. | Coating material of first coating layer* | Preparation of first coating layer suspension** |
|---|---|---|
| Comparative example 10D and example 91D | Amorphous Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5 |
| Examples 1D - 11D, 21D - 66D, and 69D - 89D | Crystalline Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5 |
| Example 12D | Crystalline Al₄(P₂O₇)₃ | 53.3 g of aluminum chloride; 34.5 g of ammonium dihydrogen phosphate; and 18.9 g of oxalic acid dihydrate; controlling the pH to be 4 |
| Example 13D | Crystalline Li₂NiP₂O₇ | 7.4 g of lithium carbonate; 11.9 g of nickel carbonate; 23.0 g of ammonium dihydrogen phosphate; and 12.6 g of oxalic acid dihydrate; controlling the pH to be 5 |
| Example 14D | Crystalline Li₂MgP₂O₇ | 7.4 g of lithium carbonate; 8.4 g of magnesium carbonate; 23.0 g of ammonium dihydrogen phosphate; and 12.6 g of oxalic acid dihydrate |
| Example 15D | Crystalline Li₂COP₂O₇ | 7.4 g of lithium carbonate, 15.5 g of cobalt sulfate; 23.0 g of ammonium dihydrogen phosphate; and 12.6 g of oxalic acid dihydrate |
| Example 16D | Crystalline Li₂CuP₂O₇ | 7.4 g of lithium carbonate, 16.0 g of copper sulfate; 23.0 g of ammonium dihydrogen phosphate; and 12.6 g of oxalic acid dihydrate |
| Example 17D | Crystalline Li₂ZnP₂O₇ | 7.4 g of lithium carbonate, 12.5 g of zinc carbonate; 23.0 g of ammonium dihydrogen phosphate; and 12.6 g of oxalic acid dihydrate |
| Example 18D | Crystalline TiP₂O₇ | 24.0 g of titanium sulfate, 23.0 g of ammonium dihydrogen phosphate; and 12.6 g of oxalic acid dihydrate |
| Example 19D | Crystalline Ag₄P₂O₇ | 67.9 g of silver nitrate, 23.0 g of ammonium dihydrogen phosphate, and 25.2 g of oxalic acid dihydrate |
| Example 20D | Crystalline ZrP₂O₇ | 56.6 g of zirconium sulfate, 23.0 g of ammonium dihydrogen phosphate, and 25.2 g of oxalic acid dihydrate |
| Example 67D | Crystalline LiAlP₂O₇ | 3.7 g of lithium carbonate; 13.3 g of aluminum chloride; 23.0 g of ammonium dihydrogen phosphate; and 12.6 g of oxalic acid dihydrate; |
| Example 68D | Crystalline Zn₂P₂O₇ | 25.0 g of zinc carbonate; 25.0 g of zinc carbonate; 23.0 g of ammonium dihydrogen phosphate; and 12.6 g of oxalic acid dihydrate; |

| | | |
|---|---|---|
| *When the amount of the coating material of the first coating layer increases or decreases by several times, the amount of the raw materials of the first coating layer suspension correspondingly increases or decreases by the same multiple. | | |

**Table 3D: Coating of first coating layer (step S4)**

| No. | Coating material of first coating layer and amount thereof* (based on weight of inner core) | Amount of inner core added in step S4 | Step S4: Coating of first coating layer | | | | |
|---|---|---|---|---|---|---|---|
| | | | Amount of corresponding coating material in first coating layer suspension | Mixin g time (h) | Drying temperat ure (°C) | Sintering temperat ure (°C) | Sinte ring time (h) |
| Compara tive example 10D | 4% of amorphous Li₂FeP₂O₇ | 157.2 g | 6.288 g | 6 | 120 | 500 | 4 |
| Example 91D | 1% of amorphous Li₂FeP₂O₇ | 157.2 g | 1.572 g | 6 | 120 | 500 | 4 |
| Example s 1D, 21D - 28D, 50D - 62D, 69D - 83D, and 86D - 89D | 1% of crystalline Li₂FeP₂O₇ | 157.20 g | 1.572 g | 6 | 120 | 650 | 6 |
| Example 2D | 1% of crystalline Li₂FeP₂O₇ | 157.05 g | 1.571 g | 6 | 120 | 650 | 6 |
| Example 3D | 1% of crystalline Li₂FeP₂O₇ | 157.28 g | 1.573 g | 6 | 120 | 650 | 6 |
| Example 4D | 1% of crystalline Li₂FeP₂O₇ | 157.18 g | 1.572 g | 6 | 120 | 650 | 6 |
| Example 5D | 1% of crystalline Li₂FeP₂O₇ | 157.17 g | 1.572 g | 6 | 120 | 650 | 6 |
| Example 6D | 1% of crystalline Li₂FeP₂O₇ | 157.02 g | 1.570 g | 6 | 120 | 650 | 6 |
| Example 7D | 1% of crystalline Li₂FeP₂O₇ | 157.19 g | 1.572 g | 6 | 120 | 650 | 6 |
| Example 8D | 1% of crystalline Li₂FeP₂O₇ | 157.19 g | 1.572 g | 6 | 120 | 650 | 6 |
| Example 9D | 1% of crystalline Li₂FeP₂O₇ | 157.21 g | 1.572 g | 6 | 120 | 650 | 6 |
| Example 10D | 1% of crystalline Li₂FeP₂O₇ | 157.09 g | 1.571 g | 6 | 120 | 650 | 6 |
| Example 11D | 1% of crystalline Li₂FeP₂O₇ | 157.20 g | 1.572 g | 6 | 120 | 650 | 6 |
| Example 12D | 1% of crystalline Al₄(P₂O₇)₃ | 157.20 g | 1.572 g | 6 | 120 | 680 | 8 |
| Example 13D | 1% of crystalline Li₂NiP₂O₇ | 157.20 g | 1.572 g | 6 | 120 | 630 | 6 |
| Example 14D | 1% of crystalline Li₂MgP₂O₇ | 157.20 g | 1.572 g | 7 | 120 | 660 | 6 |
| Example 15D | 1% of crystalline Li₂CoP₂O₇ | 157.20 g | 1.572 g | 6 | 120 | 670 | 6 |
| Example 16D | 1% crystalline Li₂CuP₂O₇ | 157.20 g | 1.572 g | 8 | 120 | 640 | 6 |
| Example 17D | 1% of crystalline Li₂ZnP₂O₇ | 157.20 g | 1.572 g | 8 | 120 | 650 | 6 |
| Example 18D | 1% of crystalline TiP₂O₇ | 157.20 g | 1.572 g | 7 | 120 | 660 | 6 |
| Example 19D | 1% of crystalline Ag₄P₂O₇ | 157.20 g | 1.572 g | 9 | 120 | 670 | 6 |
| Example 20D | 1% crystalline ZrP₂O₇ | 157.20 g | 1.572 g | 8 | 120 | 680 | 6 |
| Example 29D | 1% of crystalline Li₂FeP₂O₇ | 157.01 g | 1.570 g | 6 | 120 | 650 | 6 |
| Example 30D | 1% of crystalline Li₂FeP₂O₇ | 157.10 g | 1.571 g | 6 | 120 | 650 | 6 |
| Example 31D | 1% of crystalline Li₂FeP₂O₇ | 156.85 g | 1.569 g | 6 | 120 | 650 | 6 |
| Example 32D | 1% of crystalline Li₂FeP₂O₇ | 156.97 g | 1.570 g | 6 | 120 | 650 | 6 |
| Example 33D | 1% of crystalline Li₂FeP₂O₇ | 156.97 g | 1.570 g | 6 | 120 | 650 | 6 |
| Example 34D | 1% of crystalline Li₂FeP₂O₇ | 156.96 g | 1.570 g | 6 | 120 | 650 | 6 |
| Example 35D | 1% of crystalline Li₂FeP₂O₇ | 157.09 g | 1.571 g | 6 | 120 | 650 | 6 |
| Example 36D | 1% of crystalline Li₂FeP₂O₇ | 157.24 g | 1.572 g | 6 | 120 | 650 | 6 |
| Example 37D | 1% of crystalline Li₂FeP₂O₇ | 157.30 g | 1.573 g | 6 | 120 | 650 | 6 |
| Example 38D | 1% of crystalline Li₂FeP₂O₇ | 157.07 g | 1.571 g | 6 | 120 | 650 | 6 |
| Example 39D | 1% of crystalline Li₂FeP₂O₇ | 157.13 g | 1.571 g | 6 | 120 | 650 | 6 |
| Example 40D | 1% of crystalline Li₂FeP₂O₇ | 157.15 g | 1.572 g | 6 | 120 | 650 | 6 |
| Example 41D | 1% of crystalline Li₂FeP₂O₇ | 157.29 g | 1.573 g | 6 | 120 | 650 | 6 |
| Example 42D | 1% of crystalline Li₂FeP₂O₇ | 157.38 g | 1.574 g | 6 | 120 | 650 | 6 |
| Example 43D | 1% of crystalline Li₂FeP₂O₇ | 157.37 g | 1.574 g | 6 | 120 | 650 | 6 |
| Example 44D | 1% of crystalline Li₂FeP₂O₇ | 157.15 g | 1.572 g | 6 | 120 | 650 | 6 |
| Example 45D | 2% of crystalline Li₂FeP₂O₇ | 157.20 g | 3.14 g | 6 | 120 | 650 | 6 |
| Example 46D | 3% of crystalline Li₂FeP₂O₇ | 157.20 g | 4.71 g | 6 | 120 | 650 | 6 |
| Example 47D | 4% of crystalline Li₂FeP₂O₇ | 157.20 g | 6.28 g | 6 | 120 | 650 | 6 |
| Example 48D | 5.5% of crystalline Li₂FeP₂O₇ | 157.20 g | 8.635 g | 6 | 120 | 650 | 6 |
| Example 49D | 6% of crystalline Li₂FeP₂O₇ | 157.20 g | 9.42 g | 6 | 120 | 650 | 6 |
| Example 63D | 1% of crystalline Li₂FeP₂O₇ | 157.70 g | 1.577 g | 6 | 120 | 650 | 6 |
| Example 64D | 1% of crystalline Li₂FeP₂O₇ | 157.61 g | 1.576 g | 6 | 120 | 650 | 6 |
| Example 65D | 1% of crystalline Li₂FeP₂O₇ | 158.91 g | 1.589 g | 6 | 120 | 650 | 6 |
| Example 66D | 1% of crystalline Li₂FeP₂O₇ | 157.62 g | 1.576 g | 6 | 120 | 650 | 6 |
| Example 67D | 1% of crystalline LiAlP₂O₇ | 157.20 g | 1.572 g | 8 | 120 | 690 | 6 |
| Example 68D | 1% of crystalline Zn₂P₂O₇ | 157.20 g | 1.572 g | 8 | 120 | 700 | 6 |
| Example 84D | 0.33% of crystalline Li₂FeP₂O₇ | 157.20 g | 0.524 | 6 | 120 | 650 | 6 |
| Example 85D | 3.3% of crystalline Li₂FeP₂O₇ | 157.20 g | 5.24 | 6 | 120 | 650 | 6 |

**Table 4D: Preparation of second coating layer suspension (step S5)**

| No. | Second coating layer material* | Step S5: Preparation of second coating layer suspension** |
|---|---|---|
| Examples 1D - 20D, 29D - 71D and 73D - 91D | Crystalline Al₂O₃ | 4.71 g of nano-Al₂O₃ (with a particle size of about 20 nm) was dissolved in 1500 mL of deionized water, and stirred for 2 h to obtain a suspension; |
| Example 21D | Crystalline CoO | 4.71 g of nano-CoO (with a particle size of about 20 nm) was dissolved in 1500 mL of deionized water, and stirred for 2 h to obtain a suspension; |
| Example 22D | Crystalline NiO | 4.71 g of nano-NiO (with a particle size of about 20 nm) was dissolved in 1500 mL of deionized water, and stirred for 2 h to obtain a suspension; |
| Example 23D | Crystalline CuO | 4.71 g of nano-CuO (with a particle size of about 20 nm) was dissolved in 1500 mL of deionized water, and stirred for 2 h to obtain a suspension; |
| Example 24D | Crystalline ZnO | 4.71 g of nano-ZnO (with a particle size of about 20 nm) was dissolved in 1500 mL of deionized water, and stirred for 2 h to obtain a suspension; |
| Example 25D | Crystalline TiO2 | 4.71 g of nano-TiO₂ (with a particle size of about 20 nm) was dissolved in 1500 mL of deionized water, and stirred for 2 h to obtain a suspension; |
| Example 26D | Crystalline MgO | 4.71 g of nano-MgO (with a particle size of about 20 nm) was dissolved in 1500 mL of deionized water, and stirred for 2 h to obtain a suspension; |
| Example 27D | Crystalline ZrO2 | 4.71 g of nano-ZrO₂ (with a particle size of about 20 nm) was dissolved in 1500 mL of deionized water, and stirred for 2 h to obtain a suspension; |
| Example 28D | Crystalline CaO | 4.71 g of nano-CaO (with a particle size of about 20 nm) was dissolved in 1500 mL of deionized water, and stirred for 2 h to obtain a suspension; |
| Example 72D | Crystalline V₂O₅ | 4.71 g of nano-V₂O₅ (with a particle size of about 20 nm) was dissolved in 1500 mL of deionized water, and stirred for 2 h to obtain a suspension; |

| | | |
|---|---|---|
| *When the amount of the coating material of the second coating layer increases or decreases by several times, the amount of the raw materials of the second coating layer suspension correspondingly increases or decreases by the same multiple (except that the amount of deionized water remains unchanged). | | |

**Table 5D: Coating of second coating layer (step S6)**

| No. | Second coating layer material and amount thereof (based on weight of inner core)* | Amount of pyrophosph ate-coated material (or inner core) added in step S6 (g) | Step S6: Coating of second coating layer | | | | |
|---|---|---|---|---|---|---|---|
| | | | Amount of corresponding coating material in second coating layer suspension (g) | Mixi ng time (h) | Drying temper ature (°C) | Sinteri ng temper ature (°C) | Sint erin g time (h) |
| Example 90D | 4% of crystalline Al₂O₃ | 157.2 | 6.288 | 6 | 120 | 750 | 8 |
| Examples 29D - 49D, 55D- 68D and 91D | 3% of crystalline Al₂O₃ | 158.772 | 4.71 | 6 | 120 | 700 | 8 |
| Examples 1D and 88D - 89D | 3% of crystalline Al₂O₃ | 158.772 | 4.71 | 6 | 120 | 700 | 8 |
| Example 2D | 3% of crystalline Al₂O₃ | 158.621 | 4.72 | 6 | 120 | 700 | 8 |
| Example 3D | 3% of crystalline Al₂O₃ | 158.853 | 4.72 | 6 | 120 | 700 | 8 |
| Example 4D | 3% of crystalline Al₂O₃ | 158.752 | 4.72 | 6 | 120 | 700 | 8 |
| Example 5D | 3% of crystalline Al₂O₃ | 158.742 | 4.72 | 6 | 120 | 700 | 8 |
| Example 6D | 3% of crystalline Al₂O₃ | 158.590 | 4.71 | 6 | 120 | 700 | 8 |
| Example 7D | 3% of crystalline Al₂O₃ | 158.762 | 4.72 | 6 | 120 | 700 | 8 |
| Example 8D | 3% of crystalline Al₂O₃ | 158.762 | 4.72 | 6 | 120 | 700 | 8 |
| Example 9D | 3% of crystalline Al₂O₃ | 158.782 | 4.72 | 6 | 120 | 700 | 8 |
| Example 10D | 3% of crystalline Al₂O₃ | 158.661 | 4.71 | 6 | 120 | 700 | 8 |
| Examples 11D-20D | 3% of crystalline Al₂O₃ | 158.772 | 4.71 | 6 | 120 | 700 | 8 |
| Example 21D | 3% of crystalline CoO | 158.772 | 4.71 | 6 | 120 | 700 | 8 |
| Example 22D | 3% of crystalline NiO | 158.772 | 4.71 | 6 | 120 | 710 | 8 |
| Example 23D | 3% of crystalline CuO | 158.772 | 4.71 | 6 | 120 | 710 | 8 |
| Example 24D | 3% of crystalline ZnO | 158.772 | 4.71 | 6 | 120 | 730 | 8 |
| Example 25D | 3% of crystalline TiO₂ | 158.772 | 4.71 | 6 | 120 | 730 | 8 |
| Example 26D | 3% of crystalline MgO | 158.772 | 4.71 | 6 | 120 | 680 | 8 |
| Example 27D | 3% of crystalline ZrO₂ | 158.772 | 4.71 | 6 | 120 | 750 | 8 |
| Example 28D | 3% of crystalline CaO | 158.772 | 4.71 | 6 | 120 | 700 | 8 |
| Example 50D | 1% of crystalline Al₂O₃ | 158.772 | 15.71.57 | 6 | 120 | 700 | 8 |
| Example 51D | 2% of crystalline Al₂O₃ | 158.772 | 3.14 | 6 | 120 | 700 | 8 |
| Example 52D | 4% of crystalline Al₂O₃ | 158.772 | 6.28 | 6 | 120 | 700 | 8 |
| Example 53D | 5.5% of crystalline Al₂O₃ | 158.772 | 8.64 | 6 | 120 | 700 | 8 |
| Example 54D | 6% of crystalline Al₂O₃ | 158.772 | 9.42 | 6 | 120 | 700 | 8 |
| Example 69D | 3% of crystalline Al₂O₃ | 158.772 | 4.71 | 6 | 120 | 700 | 8 |
| Example 70D | 3% of crystalline Al₂O₃ | 158.772 | 4.71 | 6 | 120 | 700 | 8 |
| Example 71D | 3% of crystalline Al₂O₃ | 158.772 | 4.71 | 6 | 120 | 700 | 8 |
| Example 72D | 3% of crystalline V₂O₅ | 158.772 | 4.71 | 6 | 120 | 700 | 8 |
| Example 73D | 3% of crystalline Al₂O₃ | 159 | 4.71 | 6 | 120 | 700 | 8 |
| Example 74D | 3% of crystalline Al₂O₃ | 158.772 | 4.71 | 6 | 120 | 700 | 8 |
| Example 75D | 3% of crystalline Al₂O₃ | 158.772 | 4.71 | 6 | 120 | 700 | 8 |
| Example 76D | 3% of crystalline Al₂O₃ | 158.772 | 4.71 | 6 | 120 | 700 | 8 |
| Example 77D | 3% of crystalline Al₂O₃ | 158.772 | 4.71 | 6 | 120 | 700 | 8 |
| Example 78D | 3% of crystalline Al₂O₃ | 158.772 | 4.71 | 6 | 120 | 700 | 8 |
| Example 79D | 3% of crystalline Al₂O₃ | 158.772 | 4.71 | 6 | 120 | 700 | 8 |
| Example 80D | 3% of crystalline Al₂O₃ | 158.772 | 4.71 | 6 | 120 | 700 | 8 |
| Example 81D | 3% of crystalline Al₂O₃ | 158.772 | 4.71 | 6 | 120 | 700 | 8 |
| Example 82D | 3% of crystalline Al₂O₃ | 158.772 | 4.71 | 6 | 120 | 700 | 8 |
| Example 83D | 1% of crystalline Al₂O₃ | 158.772 | 1.57 | 6 | 120 | 700 | 8 |
| Example 84D | Same as example 1D | 157.71 | 4.71 | 6 | 120 | 700 | 8 |
| Example 85D | Same as example ID | 162.38 | 4.71 | 6 | 120 | 700 | 8 |
| Example 86D | 0.33% of crystalline Al₂O₃ | 158.772 | 0.51 | 6 | 120 | 700 | 8 |
| Example 87D | 6% of crystalline Al₂O₃ | 158.772 | 9.42 | 6 | 120 | 720 | 12 |

**Table 6D: Coating of third coating layer (step S8)**

| No. | Third coating layer* | Molar ratio of SP2 to SP3* | Amount of two-layer coated material added in step S8 (or amount of inner core of first-layer coated material or amount of inner core) (g) | Step S8: Coating of third coating layer | | | | |
|---|---|---|---|---|---|---|---|---|
| | | | | Amou nt of sucros e (g) | Mix ing tim e (h) | Dryin g tempe rature (°C) | Sinteri ng temper ature (°C) | Sint erin g time (h) |
| Comparative example 1D | 1% of carbon | 2.5 | 1568.5 | 37.3 | 6 | 150 | 650 | 8 |
| Comparative example 2D | 1% of carbon | 2.4 | 1571.0 | 37.3 | 6 | 150 | 630 | 8 |
| Comparative example 3D | 1% of carbon | 2.7 | 1572.2 | 37.3 | 6 | 150 | 680 | 7 |
| Comparative example 4D | 1% of carbon | 2.2 | 1572.2 | 37.3 | 6 | 150 | 600 | 8 |
| Comparative example 5D | 1% of carbon | 2.4 | 1571.1 | 37.3 | 6 | 150 | 630 | 8 |
| Comparative example 6D | 1% of carbon | 2.3 | 1586.8 | 37.3 | 6 | 150 | 620 | 8 |
| Comparative example 7D | 1% of carbon | 2.1 | 1618.2 | 37.3 | 6 | 150 | 600 | 6 |
| Comparative example 8D | 1% of carbon | 2 | 1662.6 | 37.3 | 6 | 120 | 600 | 6 |
| Comparative example 9D | 1% of carbon | 1.8 | 1656.5 | 37.1 | 6 | 120 | 600 | 6 |
| Comparative example 10D | 1% of carbon | 1.7 | 1664.8 | 37.3 | 6 | 100 | 600 | 6 |
| Example 90D | 1% of carbon | 3.1 | 1665.4 | 37.3 | 6 | 150 | 700 | 10 |
| Example 91D | 1% of carbon | 3.5 | 1665.4 | 37.3 | 6 | 150 | 750 | 10 |
| Examples 1D, 12D - 44D, 60D - 68D, and 84D - 87D | 1% of carbon | 2.2 | 1633.9 | 37.3 | 6 | 150 | 700 | 10 |
| Example 2D | 1% of carbon | 2.5 | 1649.6 | 37.3 | 6 | 150 | 650 | 8 |
| Example 3D | 1% of carbon | 2.5 | 1665.3 | 37.3 | 6 | 150 | 650 | 8 |
| Example 4D | 1% of carbon | 2.4 | 1696.7 | 37.3 | 6 | 150 | 630 | 8 |
| Example 5D | 1% of carbon | 2.3 | 1602.5 | 37.3 | 6 | 150 | 600 | 9 |
| Example 6D | 1% of carbon | 2.2 | 1649.6 | 37.3 | 6 | 150 | 600 | 8 |
| Example 7D | 1% of carbon | 2.2 | 1665.3 | 37.3 | 6 | 150 | 600 | 9 |
| Example 8D | 1% of carbon | 2.7 | 1666.2 | 37.3 | 6 | 150 | 680 | 7 |
| Example 9D | 1% of carbon | 2.6 | 1633.0 | 37.3 | 6 | 150 | 650 | 7 |
| Example 10D | 1% of carbon | 2.2 | 1666.4 | 37.3 | 6 | 150 | 600 | 9 |
| Example 11D | 1% of carbon | 2.3 | 1721.4 | 37.3 | 6 | 150 | 600 | 9 |
| Example 45D | 1% of carbon | 2.4 | 1690.0 | 37.3 | 6 | 150 | 630 | 8 |
| Example 46D | 1% of carbon | 2.4 | 1635.9 | 37.4 | 6 | 150 | 630 | 8 |
| Example 47D | 1% of carbon | 2.3 | 1631.3 | 37.3 | 6 | 150 | 600 | 9 |
| Example 48D | 1% of carbon | 0.07 | 1668.3 | 37.4 | 6 | 80 | 600 | 6 |
| Example 49D | 1% of carbon | 13 | 1668.3 | 37.4 | 6 | 150 | 850 | 10 |
| Example 50D | 1% of carbon | 2.3 | 1721.4 | 37.3 | 6 | 150 | 600 | 9 |
| Example 51D | 1% of carbon | 2.4 | 1690.0 | 37.3 | 6 | 150 | 630 | 8 |
| Example 52D | 1% of carbon | 2.4 | 1635.9 | 37.4 | 6 | 150 | 630 | 8 |
| Example 53D | 1% of carbon | 2.4 | 1634.6 | 37.4 | 6 | 150 | 630 | 8 |
| Example 54D | 1% of carbon | 2.3 | 1633.9 | 37.4 | 6 | 150 | 600 | 9 |
| Example 55D | 2% of carbon | 2.1 | 1633.9 | 74.7 | 6 | 150 | 600 | 6 |
| Example 56D | 3% of carbon | 2.6 | 1666.4 | 111.9 | 6 | 150 | 650 | 7 |
| Example 57D | 4% of carbon | 2.6 | 1633.9 | 149.2 | 6 | 150 | 650 | 7 |
| Example 58D | 5.5% of carbon | 2.8 | 1642.6 | 205.4 | 6 | 150 | 680 | 8 |
| Example 59D | 6% of carbon | 2.3 | 1633.9 | 224.4 | 6 | 150 | 600 | 9 |
| Example 69D | 1% of carbon | 0.1 | 1633.9 | 37.3 | 6 | 85 | 400 | 2 |
| Example 70D | 1% of carbon | 10 | 1633.9 | 37.3 | 6 | 150 | 800 | 20 |
| Example 71D | 1% of carbon | 3 | 1633.9 | 37.3 | 6 | 150 | 680 | 8 |
| Example 72D | 1% of carbon | 2.5 | 1633.9 | 37.3 | 6 | 150 | 680 | 8 |
| Example 73D | 1% of carbon | 2.3 | 1633.9 | 37.3 | 6 | 150 | 700 | 10 |
| Example 74D | 1% of carbon | 2.6 | 1633.9 | 37.3 | 6 | 150 | 700 | 10 |
| Example 75D | 1% of carbon | 2.5 | 1633.9 | 37.3 | 6 | 150 | 700 | 10 |
| Example 76D | 1% of carbon | 2.4 | 1633.9 | 37.3 | 6 | 150 | 700 | 10 |
| Example 77D | 1% of carbon | 2.6 | 1633.9 | 37.3 | 6 | 150 | 700 | 10 |
| Example 78D | 1% of carbon | 2.5 | 1633.9 | 37.3 | 6 | 150 | 700 | 10 |
| Example 79D | 1% of carbon | 2.3 | 1633.9 | 37.3 | 6 | 150 | 700 | 10 |
| Example 80D | 1% of carbon | 2.6 | 1633.9 | 37.3 | 6 | 150 | 700 | 10 |
| Example 81D | 1% of carbon | 2.5 | 1633.9 | 37.3 | 6 | 150 | 700 | 10 |
| Example 82D | 1% of carbon | 2.4 | 1633.9 | 37.3 | 6 | 150 | 700 | 10 |
| Example 83D | 1% of carbon | 2.4 | 1633.9 | 37.3 | 6 | 150 | 700 | 10 |
| Example 88D | 0.4% of carbon | 2.2 | 1633.9 | 14.92 | 6 | 150 | 700 | 10 |
| Example 89D | 5% of carbon | 2.2 | 1633.9 | 186.5 | 6 | 150 | 700 | 10 |

### Preparation of positive electrode plate

The three-layer coated positive electrode active material prepared above, a conductive agent of acetylene black and a binder of polyvinylidene fluoride (PVDF) were added into N-methylpyrrolidone (NMP) in a weight ratio of 97.0 : 1.2 : 1.8, followed by stirring until uniform to obtain a positive electrode slurry. The positive electrode slurry was then uniformly applied to an aluminum foil at 0.280 g/1540.25 mm², followed by drying, cold pressing and slitting to obtain a positive electrode plate.

### Preparation of negative electrode plate

A negative electrode active material of synthetic graphite, a conductive agent of superconducting carbon black (Super-P), a binder of styrene butadiene rubber (SBR) and a thickener of sodium carboxymethylcellulose (CMC-Na) were dissolved in deionized water in a mass ratio of 95% : 1.5% : 1.8% : 1.7%, followed by fully stirring and mixing until uniform to obtain a negative electrode slurry with a viscosity of 3000 mPa.s and a solid content of 52%; and the negative electrode slurry was coated onto a negative electrode current collector of a copper foil having a thickness of 6 µm, and then baked at 100°C for 4 hours for drying, followed by roll pressing to obtain a negative electrode plate with a compacted density of 1.75 g/cm3.

### Separator

a polypropylene film was used.

### Preparation of electrolyte solution

Ethylene carbonate, dimethyl carbonate and 1,2-propylene glycol carbonate were mixed in a volume ratio of 1 : 1 : 1, and then LiPF₆ was evenly dissolved in the above solution to obtain an electrolyte solution. In the electrolyte solution, the concentration of LiPF₆ was 1 mol/L.

### Preparation of full battery

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### Preparation of button battery

The positive electrode plate above, a negative electrode and an electrolyte solution were assembled together into a button battery in a button battery box.

**Table 7D: Properties of positive electrode active material powder and performance of battery**

| No. | Inner core | First coati ng layer | Seco nd coati ng layer | Thi rd coa ting lay er | ( 1 - y ) : y | m x | Properties of positive electrode active material powder | | | | | | | | | Performance of battery | | |
|---|---|---|---|---|---|---|---|---|---|---|---|---|---|---|---|---|---|---|
| | | | | | | | L at ti ce c h a n g e ra te ( % ) | Li/ Mn anti site def ect con cent rati on (%) | Co mp act ed de nsi ty (g/ cm ³) | S ur fa ce o x y ge n va le nc y | Co nte nt of ma ng ane se ele me nt (% ) | Co nte nt of ph osp hor us ele me nt (% ) | w ei gh t ra ti o of M n el e m en t to P el e m en t | 3 C ch ar ge co ns ta nt cu rr en t ra te ( % ) | Dis sol uti on of Mn an d Fe aft er cyc lin g (pp m) | Ca pa cit y of bu tto n ba tte ry at 0. 1 C (m A h/ g) | Ex pa nsi on of cel I up on 30 d of sto rag e at 60 °C (% ) | N u m be r of cy cl es fo r ca pa cit y ret en tio n rat e of 80 % at 45 °C |
| Compa rative exampl e 1D | LiMnPO₄ | - | - | 1% of car bon | - | - | 1 1. 4 | 5.2 | 1.7 | -1. 5 5 | 34. 7 | 19. 6 | 1. 77 | 50 .1 | 20 60 | 12 5. 6 | 48. 6 | 12 1 |
| Compa rative exampl e 2D | LiMn_{0.83}F e_{0.15}PO₄ | - | - | 1% of car bon | 5 6 7 | - | 1 0. 6 | 4.3 | 1.8 7 | -1. 5 1 | 29. 5 | 19. 5 | 1. 51 | 50 .4 | 15 10 | 12 6. 4 | 37. 3 | 12 9 |
| Compa rative exampl e 3D | Li_{0.990}Mg _{0.005}Mn_{0.95} Zn_{0.05}PO₄ | - | - | 1% of car bon | 1 9 | 1 9 8 | 1 0. 8 | 3.6 | 1.8 8 | -1. 6 4 | 31. 4 | 19. 7 | 1. 60 | 51 .7 | 10 28 | 13 4. 7 | 31. 9 | 13 4 |
| Compa rative exampl e4D | Li_{0.90}Nb_{0. 01}Mn_{0.6}Fe _{0.4}PO_{3.95}F **_{0.05}** | - | - | 1% of car bon | 1 5 | 9 0 | 9. 7 | 2.4 | 1.9 3 | -1. 7 1 | 20. 7 | 19. 5 | 1. 06 | 62 .3 | 98 0 | 14 1. 3 | 30. 8 | 14 8 |
| Compa rative exampl e 5D | Li_{0.76}Mg_{0. 12}Mn_{0.7}Fe _{0.3}P_{0.999}Si_{0 .001}O_{3.999}F _{0.001} | - | - | 1% of car bon | 2 3 3 | 6 3 3 | 5. 6 | 1.8 | 1.9 8 | - 1. 8 1 | 24. 0 | 19. 3 | 1. 24 | 50 .2 | 87 3 | 11 0. 8 | 21. 4 | 38 7 |
| Compa rative exampl e 6D | Li_{0.998}Mg _{0.001}Mn_{0.4} Zn_{0.6}P_{0.999} Si_{0.001}O_{3.9 99}F_{0.001} | - | - | 1% of car bon | 0 6 7 | 9 9 8 | 3. 7 | 1.5 | 2.0 1 | - 1. 8 0 | 13. 3 | 18. 8 | 0. 71 | 65 .8 | 57 4 | 74 .3 | 15. 8 | 46 9 |
| Compa rative exampl e 7D | Li_{1.068}Mg _{0.001}Mn_{0.7}Fe_{0.3}P_{0.88} Si_{0.12}O_{3.95} F_{0.05} | - | - | 1% of car bon | 23 3 | 1 0 6 8 | 7. 8 | 1.5 | 2.0 5 | 1.7 5 | 24. 2 | 17. 1 | 1. 41 | 64 .3 | 44 7 | 13 9.4 | 18. 3 | 39 6 |
| Compa rative exampl e 8D | Li_{0.948}Mg _{0.001}Mn_{0.6} Fe_{0.4}P_{0.93} Si_{0.07}O_{3.88} F_{0.12} | - | - | 1% of car bon | 1 5 | 9 4 8 | 8. 4 | 1.4 | 2.1 6 | -1. 7 9 | 20. 3 | 17. 7 | 1. 14 | 63 .9 | 26 3 | 14 1. 7 | 22. 7 | 40 7 |
| Compa rative exampl e 9D | Same as example 1 | - | - | 1% of car bon | 1 8 6 | 9 9 4 | 6. 3 | 1.6 | 2.2 1 | -1. 8 2 | 20. 8 | 18. 2 | 1. 14 | 64 .2 | 19 2 | 14 3. 2 | 18. 4 | 55 2 |
| Compa rative exampl e 10D | Same as example 1 | 4% of amor phou s Li₂F eP₂O ₇ | - | 1% of car bon | 1 8 6 | 9 9 4 | 5. 7 | 1.2 | 2.2 2 | - 1. 9 8 | 21. 7 | 18. 8 | 1. 15 | 63 .7 | 15 6 | 15 0. 2 | 6.7 | 80 2 |
| Examp le 90D | Same as example 1 | - | 4% of cryst allin e Al₂O 3 | 1% of car bon | 1 8 6 | 9 9 4 | 5. 5 | 1.3 | 2.2 1 | - 1. 9 7 | 21. 7 | 18. 8 | 1. 15 | 62 .5 | 16 4 | 14 9. 9 | 6.4 | 86 0 |
| Examp le 91D | Same as example 1 | 1% of amor phou s Li₂F eP₂O ₇ | 3% of cryst allin e Al₂O 3 | 1% of car bon | 1 8 6 | 9 9 4 | 5. 8 | 1.3 | 2.2 | -1. 9 6 | 21. 7 | 18. 8 | 1. 15 | 67 .1 | 14 3 | 15 1. 2 | 4.2 | 10 13 |
| Examp le 1D | Li_{0.994}Mo _{0.001}Mn_{0.65} Fe_{0.35}P_{0.99 9}Si_{0.001}O_{3. 999}F_{0.001} | 1% of cryst allin e Li₂F eP₂O ₇ | 3% of cryst allin e Al₂O 3 | 1% of car bon | 1 8 6 | 9 9 4 | 5. 2 | 0.9 | 2.2 6 | -1. 9 7 | 22. 5 | 19. 5 | 1. 15 | 68 .1 | 21 | 15 7. 3 | 2.2 | 12 68 |
| Examp le 2D | Li_{0.977}Mg _{0.001}Mn_{0.65} Fe_{0.34}Ti_{0.0 1}P_{0.999}N_{0.0 01}O_{3.999}F_{0. 001} | 1% of cryst allin e Li₂F eP₂O ₇ | 3% of cryst allin e Al₂O 3 | 1% of car bon | 1 8 6 | 9 7 7 | 1. 4 | 0.4 | 2.4 1 | - 1. 9 8 | 21. 7 | 18. 8 | 1. 15 | 77 .6 | 9 | 15 7. 6 | 2.2 | 14 62 |
| Examp le 3D | Li_{0.992}W_{0. 001}Mn_{0.65} Fe_{0.35}P_{0.99 9}S_{0.001}O_{3.9 99}F_{0.001} | 1% of cryst allin e Li₂F eP₂O ₇ | 3% of cryst allin e Al₂O₃ | 1% of car bon | 1 8 6 | 9 9 2 | 5 | 0.8 | 2.2 2 | -1. 9 7 | 21. 6 | 18. 7 | 1. 15 | 65 .8 | 23 | 15 5 | 2.6 | 12 87 |
| Examp le 4D | Li_{0.997}Al_{0. 001}Mn_{0.65} Fe_{0.35}P_{0.99 9}Si_{0.001}O_{3. 999}Cl_{0.001} | 1% of cryst allin e Li₂F eP₂O ₇ | 3% of cryst allin e Al₂O 3 | 1% of car bon | 1 8 6 | 9 9 7 | 4. 9 | 0.6 | 2.2 | -1. 9 7 | 21. 6 | 18. 7 | 1. 15 | 65 .7 | 26 | 15 3. 1 | 2.5 | 11 84 |
| Examp le 5D | Li_{0.993}Nb_{0 .001}Mn_{0.65} Fe_{0.345}V_{0.0 05}P_{0.999}S_{0.0 01}O_{3.999}F_{0. 001} | 1% of cryst allin e Li₂F eP₂O ₇ | 3% of cryst allin e Al₂O 3 | 1% of car bon | 1 8 6 | 9 9 3 | 1. 3 | 0.4 | 2.3 9 | - 1. 9 8 | 21. 6 | 18. 7 | 1. 15 | 78 .6 | 18 | 15 7. 2 | 2.1 | 14 69 |
| Examp le 6D | Li_{0.993}Nb_{0 .001}Mn_{0.65} Fe_{0.34}V_{0.00 5}Mg_{0.005}P _{0.999}S_{0.001} O_{3.999}F_{0.00} 1 | 1% of cryst allin e Li₂F eP₂O ₇ | 3% of cryst allin e Al₂O 3 | 1% of car bon | 1 8 6 | 9 9 3 | 1. 5 | 0.3 | 2.4 5 | -1. 9 9 | 21. 7 | 18. 8 | 1. 15 | 79 .5 | 22 | 15 8. 4 | 2.3 | 14 63 |
| Examp le 7D | Li_{0.993}Nb_{0 .001}Mn_{0.65} Fe_{0.34}V_{0.00 5}Co_{0.005}P_{0. 999}S_{0.001}O_{3 .999}F_{0.001} | 1% of cryst allin e Li₂F eP₂O ₇ | 3% of cryst allin e Al₂O 3 | 1% of car bon | 1 8 6 | 9 9 3 | 1. 4 | 0.3 | 2.4 6 | -1. 9 9 | 21. 6 | 18. 7 | 1. 15 | 77 .6 | 20 | 15 9. 1 | 2.2 | 14 16 |
| Examp le 8D | Li_{0.993}Nb_{0 .001}Mn_{0.65} Fe_{0.34}V_{0.00 5}Ni_{0.005}P_{0. 999}S_{0.001}O_{3 .999}F_{0.001} | 1% of cryst allin e Li₂F eP₂O ₇ | 3% of cryst allin e Al₂O 3 | 1% of car bon | 1 8 6 | 9 9 3 | 1. 3 | 0.3 | 2.4 9 | -1. 9 9 | 21. 6 | 18. 7 | 1. 15 | 76 .8 | 20 | 15 8. 6 | 2.2 | 14 62 |
| Examp le 9D | Li_{0.991}Nb_{0 .001}Mn_{0.65} Fe_{0.349}Ti_{0. 001}P_{0.999}S_{0. 001}O_{3.999}C l_{0.001} | 1% of cryst allin e Li₂F eP₂O ₇ | 3% of cryst allin e Al₂O 3 | 1% of car bon | 1 8 6 | 9 9 1 | 1. 5 | 0.4 | 2.4 4 | - 1. 9 8 | 21. 6 | 18. 7 | 1. 15 | 77 .9 | 22 | 15 7. 6 | 2.3 | 15 37 |
| Examp le 10D | Li_{0.995}Nb_{0 .001}Mn_{0.65} Fe_{0.34}V_{0.00 5}Mg_{0.005}P _{0.999}Si_{0.001} O_{3.999}Br_{0.0 01} | 1% of cryst allin e Li₂F eP₂O₇ | 3% of cryst allin e Al₂O 3 | 1% of car bon | 1 8 6 | 9 9 5 | 1. 4 | 0.3 | 2.4 8 | -1. 9 9 | 21. 7 | 18. 8 | 1. 15 | 80 .1 | 19 | 15 8. 8 | 2.3 | 15 08 |
| Examp le 11D | Li_{0.998}Mg _{0.001}Mn_{0.65} Fe_{0.345}V_{0.0 05}P_{0.999}Si_{0. 001}O_{3.999}B r_{0.001} | 1% of cryst allin e Li₂F eP₂O ₇ | 3% of cryst allin e Al₂O 3 | 1% of car bon | 1 8 6 | 9 9 8 | 1. 6 | 0.4 | 2.4 2 | -1. 9 8 | 21. 6 | 18. 7 | 1. 15 | 77 .6 | 18 | 15 7. 3 | 2.2 | 15 26 |
| Examp le 12D | Same as example 1D | 1% of cryst allin e Al₄( P₂O₇ )₃ | 3% of cryst allin e Al₂O 3 | Sa me as exa mpl e 1D | 1 8 6 | 9 9 4 | 5. 5 | 0.9 | 2.4 5 | - 1. 9 8 | 21. 7 | 18. 8 | 1. 15 | 81 .6 | 40 | 15 8. 1 | 2.5 | 15 24 |
| Examp le 13D | Same as example 1D | 1% of cryst allin e Li₂N iP₂O₇ | 3% of cryst allin e Al₂O 3 | Sa me as exa mpl e 1D | 1 8 6 | 9 9 4 | 5. 3 | 0.8 | 2.2 2 | -1. 9 8 | 21. 7 | 18. 8 | 1. 15 | 64 .8 | 40 | 15 2. 4 | 2.6 | 11 79 |
| Examp le 14D | Same as example 1D | 1% of cryst allin e Li₂M gP₂O ₇ | 3% of cryst allin e Al₂O 3 | Sa me as exa mpl e 1D | 1 8 6 | 9 9 4 | 5. 6 | 0.7 | 2.2 8 | - 1. 9 8 | 21. 7 | 18. 8 | 1. 15 | 63 .1 | 42 | 15 4. 9 | 2.8 | 12 03 |
| Examp le 15D | Same as example 1D | 1% of cryst allin e Li₂C oP₂O ₇ | 3% of cryst allin e Al₂O 3 | Sa me as exa mpl e 1D | 1 8 6 | 9 9 4 | 5. 4 | 0.7 | 2.2 5 | - 1. 9 8 | 21. 7 | 18. 8 | 1. 15 | 62 .7 | 39 | 15 3. 7 | 2.7 | 12 46 |
| Examp le 16D | Same as example 1D | 1% cryst allin e Li₂C uP₂O ₇ | 3% of cryst allin e Al₂O ₃ | Sa me as exa mpl e 1D | 1 8 6 | 9 9 4 | 5. 5 | 0.8 | 2.2 7 | - 1. 9 7 | 21. 7 | 18. 8 | 1. 15 | 65 .3 | 41 | 15 3. 7 | 2.6 | 12 07 |
| Examp le 17D | Same as example 1D | 1% of cryst allin e Li₂Z nP₂O ₇ | 3% of cryst allin e Al₂O 3 | Sa me as exa mpl e 1D | 1 8 6 | 9 9 4 | 5. 5 | 0.9 | 2.2 4 | - 1. 9 8 | 21. 7 | 18. 8 | 1. 15 | 65 .7 | 40 | 15 2. 6 | 2.7 | 12 85 |
| Examp le 18D | Same as example 1D | 1% of cryst allin e TiP₂ O₇cryst allin e Al₂O ₃ | 3% of | Sa me as exa mpl e 1D | 1 8 6 | 9 9 4 | 5. 4 | 0.9 | 2.2 6 | -1. 9 8 | 21. 7 | 18. 8 | 1. 15 | 62 .7 | 40 | 15 3. 8 | 2.8 | 12 86 |
| Examp le 19D | Same as example 1D | 1% of cryst allin e Ag₄P ₂O₇ | 3% of cryst allin e Al₂O 3 | Sa me as exa mpl e 1D | 1 8 6 | 9 9 4 | 5. 6 | 0.8 | 2.2 7 | -1. 9 8 | 21. 7 | 18. 8 | 1. 15 | 63 .7 | 41 | 15 4. 6 | 2.8 | 13 08 |
| Examp le 20D | Same as example 1D | 1% cryst allin e ZrP₂ O₇ | 3% of cryst allin e Al₂O 3 | Sa me as exa mpl e 1D | 1 8 6 | 9 9 4 | 5. 3 | 0.7 | 2.2 5 | - 1. 9 7 | 21. 7 | 18. 8 | 1. 15 | 64 .2 | 39 | 15 2. 1 | 2.6 | 12 54 |
| Examp le 21D | Same as example 1D | Sam e as exam ple 1 | 3% of cryst allin e CoO | Sa me as exa mpl e 1D | 1 8 6 | 9 9 4 | 5. 5 | 0.7 | 2.2 5 | -1. 9 7 | 21. 7 | 18. 8 | 1. 15 | 65 .3 | 40 | 15 2. 8 | 2.7 | 12 06 |
| Examp le 22D | Same as example 1D | Sam e as exam ple 1 | 3% of cryst allin e NiO | Sa me as exa mpl e 1D | 1 8 6 | 9 9 4 | 5. 4 | 0.8 | 2.2 | -1. 9 8 | 21. 7 | 18. 8 | 1. 15 | 65 .2 | 39 | 15 3. 4 | 2.8 | 11 89 |
| Examp le 23D | Same as example 1D | Sam e as exam ple 1 | 3% of cryst allin e CuO | Sa me as exa mpl e 1D | 1 8 6 | 9 9 4 | 5. 3 | 0.9 | 2.2 4 | -1. 9 8 | 21. 7 | 18. 8 | 1. 15 | 63 .1 | 40 | 15 2. 1 | 2.6 | 11 69 |
| Examp le 24D | Same as example 1D | Sam e as exam ple 1 | 3% of cryst allin e ZnO | Sa me as exa mpl e 1D | 1 8 6 | 9 9 4 | 5. 4 | 0.9 | 2.2 4 | -1. 9 7 | 21. 7 | 18. 8 | 1. 15 | 63 .7 | 40 | 15 3. 3 | 2.6 | 12 08 |
| Examp le 25D | Same as example 1D | Sam e as exam ple 1 | 3% of cryst allin e TiO₂ | Sa me as exa mpl e 1D | 1 8 6 | 9 9 4 | 5. 6 | 0.8 | 2.2 7 | -1. 9 8 | 21. 7 | 18. 8 | 1. 15 | 62 .1 | 41 | 15 2. 8 | 2.7 | 12 18 |
| Examp le 26D | Same as example 1D | Sam e as example 1 | 3% of crystallin e MgO | Sa me as exa mpl e 1D | 1 86 | 9 9 4 | 5. 6 | 0.7 | 2.2 7 | -1. 98 | 21. 7 | 18. 8 | 1. 15 | 65 .8 | 38 | 15 3. 4 | 2.7 | 12 64 |
| Examp le 27D | Same as example 1D | Sam e as exam ple 1 | 3% of cryst allin e ZrO₂ | Sa me as exa mpl e 1D | 1 8 6 | 9 9 4 | 5. 5 | 0.7 | 2.2 5 | -1. 9 8 | 21. 7 | 18. 8 | 1. 15 | 61 .8 | 37 | 15 4. 6 | 2.8 | 12 27 |
| Examp le 28D | Same as example 1D | Sam e as exam ple 1 | 3% of cryst allin e CaO | Sa me as exa mpl e 1D | 1 8 6 | 9 9 4 | 5. 4 | 0.8 | 2.2 6 | -1. 9 7 | 21. 7 | 18. 8 | 1. 15 | 62 .1 | 42 | 15 3. 8 | 2.9 | 12 54 |
| Examp le 45D | Same as example 1D | 2% of cryst allin e Li₂F eP₂O ₇ | 3% of cryst allin e Al₂O 3 | 1% of car bon | 1 8 6 | 9 9 4 | 5. 2 | 0.9 | 2.2 7 | -1. 9 8 | 21. 5 | 18. 6 | 1. 15 | 65 .8 | 18 | 15 2. 7 | 2.2 | 14 03 |
| Examp le 46D | Same as example 1D | 3% of cryst allin e Li₂F eP₂O ₇ | 3% of cryst allin e Al₂O 3 | 1% of car bon | 1 8 6 | 9 9 4 | 5. 2 | 0.9 | 2.2 5 | -1. 9 9 | 21. 3 | 18. 4 | 1. 15 | 63 .7 | 15 | 15 0. 7 | 2 | 14 97 |
| Examp le 47D | Same as example 1D | 4% of cryst allin e Li₂F eP₂O ₇ | 3% of cryst allin e Al₂O 3 | 1% of car bon | 1 8 6 | 9 9 4 | 5. 2 | 0.9 | 2.2 7 | - 1. 9 8 | 21. 1 | 18. 3 | 1. 15 | 61 .9 | 13 | 14 7. 2 | 1.8 | 16 11 |
| Examp le 48D | Same as example 1D | 5.5% of cryst allin e Li₂F eP₂O ₇ | 3% of cryst allin e Al₂O 3 | 1% of car bon | 1 8 6 | 9 9 4 | 5. 2 | 0.9 | 2.2 4 | -1. 9 7 | 20. 8 | 18. 0 | 1. 15 | 60 .8 | 8 | 14 5. 1 | 1.6 | 17 08 |
| Examp le 49D | Same as example 1D | 6% of cryst allin e Li₂F eP₂O₇ | 3% of cryst allin e Al₂O 3 | 1% of car bon | 1 8 6 | 9 9 4 | 5. 2 | 0.9 | 2.2 3 | -1. 9 7 | 20. 7 | 17. 9 | 1. 15 | 59 .7 | 8 | 14 3. 6 | 1.5 | 18 64 |
| Examp le 50D | Same as example 1D | 1% of cryst allin e Li₂F eP₂O ₇ | 1% of cryst allin e Al₂O 3 | 1% of car bon | 1 8 6 | 9 9 4 | 5. 2 | 0.9 | 2.2 4 | -1. 9 8 | 22. 1 | 19. 2 | 1. 15 | 64 .1 | 21 | 15 3. 1 | 3.3 | 10 45 |
| Examp le 51D | Same as example 1D | 1% of cryst allin e Li₂F eP₂O ₇ | 2% of cryst allin e Al₂O 3 | 1% of car bon | 1 8 6 | 9 9 4 | 5. 2 | 0.9 | 2.2 5 | -1. 9 6 | 21. 9 | 19. 0 | 1. 15 | 66 .1 | 27 | 15 5. 7 | 2.8 | 13 62 |
| Examp le 52D | Same as example 1D | 1% of cryst allin e Li₂F eP₂O ₇ | 4% of cryst allin e Al₂O 3 | 1% of car bon | 1 8 6 | 9 9 4 | 5. 2 | 0.9 | 2.2 4 | -1. 9 9 | 21. 5 | 18. 6 | 1. 15 | 69 .8 | 22 | 15 3. 8 | 2.1 | 14 62 |
| Examp le 53D | Same as example 1D | 1% of cryst allin e Li₂F eP₂O ₇ | 5.5% of cryst allin e Al₂O 3 | 1% of car bon | 1 8 6 | 9 9 4 | 5. 2 | 0.9 | 2.2 3 | - 1. 9 7 | 21. 2 | 18. 4 | 1. 15 | 71 .8 | 24 | 15 2. 1 | 1.8 | 15 98 |
| Examp le 54D | Same as example 1D | 1% of cryst allin e Li₂F eP₂O ₇ | 6% of cryst allin e Al₂O 3 | 1% of car bon | 1 8 6 | 9 9 4 | 5. 2 | 0.9 | 2.2 6 | -1. 9 8 | 21. 1 | 18. 3 | 1. 15 | 75 .9 | 19 | 14 8. 6 | 1.6 | 17 06 |
| Examp le 55D | Same as example 1D | 1% of cryst allin e Li₂F eP₂O ₇ | 3% of cryst allin e Al₂O 3 | 2% of car bon | 1 8 6 | 9 9 4 | 5. 2 | 0.9 | 2.1 8 | - 1. 9 8 | 21. 5 | 18. 6 | 1. 15 | 69 .8 | 26 | 15 7. 8 | 2.2 | 12 24 |
| Examp le 56D | Same as example 1D | 1% of cryst allin e Li₂F eP₂O ₇ | 3% of cryst allin e Al₂O 3 | 3% of car bon | 1 8 6 | 9 9 4 | 5. 2 | 0.9 | 2.1 6 | -1. 9 6 | 21. 3 | 18. 4 | 1. 15 | 73 .8 | 25 | 15 9. 4 | 2.3 | 12 13 |
| Examp le 57D | Same as example 1D | 1% of cryst allin e Li₂F eP₂O ₇ | 3% of cryst allin e Al₂O 3 | 4% of car bon | 1 8 6 | 9 9 4 | 5. 2 | 0.9 | 2.1 4 | - 1. 9 8 | 21. 1 | 18. 3 | 1. 15 | 78 .6 | 23 | 15 7. 8 | 2.4 | 12 57 |
| Examp le 58D | Same as example 1D | 1% of cryst allin e Li₂F eP₂O ₇ | 3% of cryst allin e Al₂O 3 | 5.5 % of car bon | 1 8 6 | 9 9 4 | 5. 2 | 0.9 | 2.0 8 | -1. 9 7 | 20. 8 | 18. 0 | 1. 15 | 82 .9 | 27 | 15 3. 1 | 2.3 | 12 68 |
| Examp le 59D | Same as example 1D | 1% of cryst allin e Li₂F eP₂O ₇ | 3% of cryst allin e Al₂O 3 | 6% of car bon | 1 8 6 | 9 9 4 | 5. 2 | 0.9 | 1.9 8 | -1. 9 8 | 20. 7 | 17. 9 | 1. 15 | 84 .6 | 29 | 14 8. 6 | 2.1 | 11 97 |
| Examp le 63D | Li_{0.9}Mg_{0.0 5}Mn_{0.6}Fe_{0. 395}V_{0.005}P_{0 .9}Si_{0.1}O_{3.9} F_{0.1} | 1% of cryst allin e Li₂F eP₂O ₇ | 3% of cryst allin e Al₂O 3 | 1% of car bon | 1 5 | 1 8 | 5. 3 | 1.1 | 2.2 1 | -1. 9 7 | 19. 9 | 16. 8 | 1. 15 | 85 .9 | 31 | 15 3. 7 | 2.2 | 12 08 |
| Examp le 64D | Li_{1.1}Mg_{0.0 01}Mn_{0.6}Fe _{0.395}V_{0.005} P_{0.9}Si_{0.1}O _{3.998}F_{0.002} | 1% of cryst allin e Li₂F eP₂O ₇ | 3% of cryst allin e Al₂O 3 | 1% of car bon | 1 5 | 1 1 0 0 | 5. 2 | 0.9 | 2.2 5 | - 1. 9 8 | 19. 9 | 16. 8 | 1. 18 | 84 .3 | 29 | 15 4. 1 | 2.1 | 11 97 |
| Examp le 65D | Li_{0.9}Mg_{0.1} Mn_{0.6}Fe_{0.3 95}V_{0.005}P_{0. 95}Si_{0.05}O_{3. 95}F_{0.05} | 1% of cryst allin e Li₂F eP₂O ₇ | 3% of cryst allin e Al₂O 3 | 1% of car bon | 1 5 | 9 | 5. 1 | 1.0 | 2.2 3 | -1. 9 7 | 19. 8 | 17. 6 | 1. 12 | 83 .6 | 35 | 15 5. 2 | 2.0 | 11 03 |
| Examp le 66D | Li_{0.95}Mg_{0. 05}Mn_{0.999} Fe_{0.001}P_{0.9 6}Si_{0.04}O_{3.9 9}F_{0.01} | 1% of cryst allin e Li₂F eP₂O ₇ | 3% of cryst allin e Al₂O 3 | 1% of car bon | 9 9 9 | 1 9 | 4. 9 | 1.0 | 2.3 7 | - 1. 9 8 | 33. 2 | 18. 0 | 1. 85 | 84 .1 | 38 | 15 4. 8 | 2.1 | 10 86 |
| Example 67D | Same as example 1D | 1% of cryst allin e LiAl P₂O₇ | 3% of cryst allin e Al₂O ₃ | 1% of car bon | 1. 8 6 | 99 4 | 4.6 | 1.1 | 2.35 | --1. 9 7 | 21.7 | 18.8 | 1.15 | 83.7 | 36 | 155.2 | 2.2 | 1124 |
| Examp le 68D | Same as example 1D | 1% of cryst allin e Zn₂P ₂O₇ | 3% of cryst allin e Al₂O 3 | 1% of car bon | 1 8 6 | 9 9 4 | 4. 8 | 1.0 | 2.3 7 | -1. 9 7 | 21. 7 | 18. 8 | 1. 15 | 84 .1 | 38 | 15 6. 3 | 2.1 | 10 76 |
| Examp le 69D | Same as example 1D | Sam e as exam ple 1D | Sam e as exam ple 1D | Sa me as exa mpl e 1D | 1 8 6 | 9 9 4 | 5. 3 | 1.1 | 2.0 2 | - 1. 9 | 22. 5 | 19. 5 | 1. 15 | 50 .2 | 40 | 14 8. 6 | 4.8 | 85 3 |
| Examp le 70D | Same as example 1D | Sam e as exam ple 1D | Sam e as exam ple 1D | Sa me as exa mpl e 1D | 1 8 6 | 9 9 4 | 5. 2 | 0.9 | 2.2 8 | -1. 9 8 | 22. 5 | 19. 5 | 1. 15 | 70 .1 | 25 | 15 5. 6 | 2.3 | 11 23 |
| Examp le 71D | Same as example 1D | Sam e as exam ple 1D | Sam e as exam ple 1D | Sa me as exa mpl e 1D | 1 8 6 | 9 9 4 | 5. 1 | 1.2 | 2.3 | -1. 9 7 | 22. 5 | 19. 5 | 1. 15 | 72 .8 | 20 | 15 6. 1 | 2.1 | 13 05 |
| Examp le 72D | Same as example 1D | Sam e as exam ple 1D | 3% of cryst allin e V₂O₅ | Sa me as exa mpl e 1D | 1 8 6 | 9 9 4 | 5. 1 | 1.2 | 2.4 2 | -1. 9 7 | 21. 7 | 18. 8 | 1. 15 | 85 .3 | 45 | 15 4. 8 | 2.5 | 11 35 |
| Examp le 73D | Li_{0.95}Mg_{0. 05}Mn_{0.99}F e_{0.01}P_{0.96}S i_{0.04}O_{3.99}F _{0.01} | Sam e as exam ple 1D | Sam e as exam ple 1D | Sa me as exa mpl e 1D | 9 9 | 1 9 | 8. 1 | 3.9 | 2.5 1 | -1. 9 6 | 33. 2 | 18 | 1. 85 | 53 .7 | 70 0 | 13 1. 7 | 31 | 54 6 |
| Examp le 74D | Li_{0.95}Mg_{0. 05}Mn_{0.5}Fe _{0.5}P_{0.96}Si_{0. 04}O_{3.99}F_{0.0} 1 | Sam e as exam ple 1D | Sam e as exam ple 1D | Sa me as exa mpl e 1D | 1 | 1 9 | 5 | 1.3 | 2.6 1 | -1. 9 7 | 33. 2 | 18 | 1. 85 | 84 .2 | 46 | 15 4. 9 | 3.2 | 12 08 |
| Examp le 75D | Li_{0.95}Mg_{0. 05}Mn_{0.8}Fe _{0.2}P_{0.96}Si_{0. 04}O_{3.99}F_{0.0 1} | Sam e as exam ple 1D | Sam e as exam ple 1D | Sa me as exa mpl e 1D | 4 | 1 9 | 4. 7 | 1.1 | 2.6 3 | -1.9 8 | 33. 2 | 18 | 1. 85 | 82 .9 | 49 | 15 6. 1 | 3 | 11 76 |
| Examp le 76D | Li_{0.95}Mg_{0. 05}Mn_{0.75}F e_{0.25}P_{0.96}S i_{0.04}O_{3.99}F _{0.01} | Sam e as exam ple 1D | Sam e as exam ple 1D | Sa me as exa mpl e 1D | 3 | 1 9 | 4. 4 | 0.9 | 2.7 1 | -1. 9 6 | 33. 2 | 18 | 1. 85 | 83 .1 | 54 | 15 4. 3 | 2.8 | 11 05 |
| Examp le 77D | Li_{0.998}Mg _{0.001}Mn_{0.60} Fe_{0.35}V_{0.05} P_{0.999}Si_{0.00 1}O_{3.999}F_{0.0 01} | Sam e as exam ple 1D | Sam e as exam ple 1D | Sa me as exa mpl e 1D | 1 5 | 9 9 8 | 4 | 1 | 2.6 8 | - 1. 9 8 | 20 | 18. 8 | 1. 07 | 85 .5 | 55 | 15 5. 8 | 3.2 | 10 64 |
| Examp le 78D | Li_{0.996}Mg _{0.002}Mn_{0.55} Fe_{0.40}V_{0.05} P₀₉₉₉Si_{0.00 1}O_{3.999}F_{0.0 01} | Sam e as exam ple 1D | Sam e as exam ple 1D | Sa me as exa mpl e 1D | 1 2 | 4 9 8 | 3. 8 | 0.9 | 2.5 7 | -1. 9 7 | 18. 3 | 18. 8 | 0. 98 | 84 .9 | 58 | 15 6. 2 | 2.9 | 10 18 |
| Examp le 79D | Li_{0.996}Mg _{0.002}Mn_{0.60} Fe_{0.35}V_{0.05} P_{0.999}Si_{0.00 1}O_{3.999}F_{0.0 01} | Sam e as exam ple 1D | Sam e as exam ple 1D | Sa me as exa mpl e 1D | 1 5 | 4 9 8 | 4. 3 | 4 | 2.6 5 | -1. 9 7 | 20 | 18. 8 | 1. 07 | 84 .5 | 49 | 15 6. 7 | 3.2 | 11 47 |
| Examp le 80D | Li_{0.996}Mg _{0.002}Mn_{0.55} Fe_{0.40}V_{0.05} P_{0.999}Si_{0.00 1}O_{3.999}F_{0.0 01} | Sam e as exam ple 1D | Sam e as exam ple 1D | Sa me as exa mpl e 1D | 1 2 | 4 9 8 | 4. 8 | 2.2 | 2.6 6 | -1. 9 8 | 18. 3 | 18. 8 | 0. 98 | 84 .1 | 47 | 15 5. 9 | 3.4 | 10 95 |
| Examp le 81D | Li_{0.994}Mg _{0.003}Mn_{0.55} Fe_{0.40}V_{0.05} P_{0.999}Si_{0.00 1}O_{3.999}F_{0.0 01} | Sam e as exam ple 1D | Sam e as exam ple 1D | Sa me as exa mpl e 1D | 1 2 | 3 3 1 3 | 4. 4 | 1.5 | 2.6 5 | - 1. 9 7 | 18. 3 | 18. 8 | 0. 98 | 83 .4 | 34 | 15 6. 1 | 3.1 | 10 34 |
| Examp le 82D | Li_{0.998}Mg _{0.001}Mn_{0.4} Fe_{0.55}V_{0.05} P_{0.999}Si_{0.00 1}O_{3.999}F_{0.0 01} | Sam e as exam ple 1D | Sam e as exam ple 1D | Sa me as exa mpl e 1D | 0 6 7 | 9 9 8 | 5. 1 | 2.3 | 2.8 | -1. 9 8 | 13. 3 | 18. 8 | 0. 71 | 82 .9 | 38 | 15 7. 2 | 2.9 | 11 27 |
| Examp le 83D | Li_{0.998}Mg _{0.001}Mn_{0.60} Fe_{0.35}V_{0.05} P_{0.999}Si_{0.00 1}O_{3.999}F_{0.0 01 (same as inner core of example 77)} | Sam e as example 1D | 1% of crystallin e Al₂O ₃ | Sa me as exa mpl e 1D | 1 5 | 9 9 8 | 5. 2 | 2.1 | 2.5 9 | -1. 9 | 20 | 18. 8 | 1. 07 | 83 .1 | 29 | 15 5. 4 | 2.7 | 10 94 |

**Table 8D: Parameters of interplanar spacing and crystal-orientation included angle of pyrophosphate in first coating layer**

| No. | Inner core | First coating layer | Second coating layer | Third coating layer | Interplanar spacing of pyrophosp hate (nm) | Included angle of crystal orientation (111) of pyrophosphate (°) |
|---|---|---|---|---|---|---|
| Example 1D | Li_{0.994}Mo_{0.001}Mn_{0.6 5}Fe_{0.35}P_{0.999}Si_{0.001} O_{3.999}F_{0.001} | 1% of crystalline Li₂FeP₂O₇ | 3% of crystalline Al₂O₃ | 1% of carbon | 0.303 | 29.496 |
| Example 2D | Li_{0.977}Mg_{0.001}Mn_{0.6 5}Fe_{0.34}Ti_{0.01}P_{0.999}N _{0.001}O_{3.999}F_{0.001} | 1% of crystalline Li₂FeP₂O₇ | 3% of crystalline Al₂O₃ | 1% of carbon | 0.303 | 29.496 |
| Example 3D | Li_{0.992}W_{0.001}Mn_{0.65} Fe_{0.35}P_{0.999}S_{0.001}O_{3. 999}F_{0.001} | 1% of crystalline Li₂FeP₂O₇ | 3% of crystalline Al₂O₃ | 1% of carbon | 0.303 | 29.496 |
| Example 4D | Li_{0.997}Al_{0.001}Mn_{0.65} Fe_{0.35}P_{0.999}Si_{0.001}O _{3.999}Cl_{0.001} | 1% of crystalline Li₂FeP₂O₇ | 3% of crystalline Al₂O₃ | 1% of carbon | 0.303 | 29.496 |
| Example 5D | Li_{0.993}Nb_{0.001}Mn_{0.6 5}Fe_{0.345}V_{0.005}P_{0.999} S_{0.001}O_{3.999}F_{0.001} | 1% of crystalline Li₂FeP₂O₇ | 3% of crystalline Al₂O₃ | 1% of carbon | 0.303 | 29.496 |
| Example 6D | Li_{0.993}Nb_{0.001}Mn_{0.6 5}Fe_{0.34}V_{0.005}Mg_{0.00 5}P_{0.999}S_{0.001}O_{3.999}F_{0 .001} | 1% of crystalline Li₂FeP₂O₇ | 3% of crystalline Al₂O₃ | 1% of carbon | 0.303 | 29.496 |
| Example 7D | Li_{0.993}Nb_{0.001}Mn_{0.6 5}Fe_{0.34}V_{0.005}Co_{0.005} P_{0.999}S_{0.001}O_{3.999}F_{0. 001} | 1% of crystalline Li₂FeP₂O₇ | 3% of crystalline Al₂O₃ | 1% of carbon | 0.303 | 29.496 |
| Example 8D | Li_{0.993}Nb_{0.oo1}Mn_{0.6 5}Fe_{0.34}V_{0.005}Ni_{0.005} P_{0.999}S_{0.001}O_{3.999}F_{0.001} | 1% of crystalline Li₂FeP₂O₇ | 3% of crystalline Al₂O₃ | 1% of carbon | 0.303 | 29.496 |
| Example 9D | Li_{0.991}Nb_{0.001}Mn_{0.6 5}Fe_{0.349}Ti_{0.001}P_{0.999} S_{0.001}O_{3.999}Cl_{0.001} | 1% of crystalline Li₂FeP₂O₇ | 3% of crystalline Al₂O₃ | 1% of carbon | 0.303 | 29.496 |
| Example 10D | Li_{0.995}Nb_{0.001}Mn_{0.6 5}Fe_{0.34}V_{0.005}Mg_{0.00 5}P_{0.999}Si_{0.001}O_{3.999} Br_{0.001} | 1% of crystalline Li₂FeP₂O₇ | 3% of crystalline Al₂O₃ | 1% of carbon | 0.303 | 29.496 |
| Example 11D | Li_{0.998}Mg_{0.001}Mn_{0.6 5}Fe_{0.345}V_{0.005}P_{0.999} Si_{0.001}O_{3.999}Br_{0.001} | 1% of crystalline Li₂FeP₂O₇ | 3% of crystalline Al₂O₃ | 1% of carbon | 0.303 | 29.496 |
| Example 21D | Same as example 1D | Same as example 1D | 3% of crystalline CoO | Same as Example 1 | 0.303 | 29.496 |
| Example 22D | Same as example 1D | Same as example 1D | 3% of cry stalline NiO | Same as example 1D | 0.303 | 29.496 |
| Example 23D | Same as example 1D | Same as example 1D | 3% of crystalline CuO | Same as example 1D | 0.303 | 29.496 |
| Example 24D | Same as example 1D | Same as Example 1 | 3% of crystalline ZnO | Same as example 1D | 0.303 | 29.496 |
| Example 25D | Same as example 1D | Same as example 1D | 3% of crystalline TiO₂ | Same as example 1D | 0.303 | 29.496 |
| Example 26D | Same as example 1D | Same as example 1D | 3% of crystalline MgO | Same as example 1D | 0.303 | 29.496 |
| Example 27D | Same as example 1D | Same as example 1D | 3% of crystalline ZrO₂ | Same as example 1D | 0.303 | 29.496 |
| Example 28D | Same as example 1D | Same as Example 1 | 3% of crystalline CaO | Same as example 1D | 0.303 | 29.496 |
| Example 45D | Same as example 1D | 2% of crystalline Li₂FeP₂O₇ | 3% of crystalline Al₂O₃ | 1% of carbon | 0.303 | 29.496 |
| Example 46D | Same as example 1D | 3% of crystalline Li₂FeP₂O₇ | 3% of cry stalline Al₂O₃ | 1% of carbon | 0.303 | 29.496 |
| Example 47D | Same as example 1D | 4% of crystalline Li₂FeP₂O₇ | 3% of crystalline Al₂O₃ | 1% of carbon | 0.303 | 29.496 |
| Example 48D | Same as example 1D | 5.5% of crystalline Li₂FeP₂O₇ | 3% of crystalline Al₂O₃ | 1% of carbon | 0.303 | 29.496 |
| Example 49D | Same as example 1D | 6% of crystalline Li₂FeP₂O₇ | 3% of crystalline Al₂O₃ | 1% of carbon | 0.303 | 29.496 |
| Example 50D | Same as example 1D | 1% of crystalline Li₂FeP₂O₇ | 1% of crystalline Al₂O₃ | 1% of carbon | 0.303 | 29.496 |
| Example 51D | Same as example 1D | 1% of crystalline Li₂FeP₂O₇ | 2% of crystalline Al₂O₃ | 1% of carbon | 0.303 | 29.496 |
| Example 52D | Same as example 1D | 1% of crystalline Li₂FeP₂O₇ | 4% of crystalline Al₂O₃ | 1% of carbon | 0.303 | 29.496 |
| Example 53D | Same as example 1D | 1% of crystalline Li₂FeP₂O₇ | 5.5% of crystalline Al₂O₃ | 1% of carbon | 0.303 | 29.496 |
| Example 54D | Same as example 1D | 1% of crystalline Li₂FeP₂O₇ | 6% of crystalline Al₂O₃ | 1% of carbon | 0.303 | 29.496 |
| Example 55D | Same as example 1D | 1% of crystalline Li₂FeP₂O₇ | 3% of crystalline Al₂O₃ | 2% of carbon | 0.303 | 29.496 |
| Example 56D | Same as example 1D | 1% of crystalline Li₂FeP₂O₇ | 3% of crystalline Al₂O₃ | 3% of carbon | 0.303 | 29.496 |
| Example 57D | Same as example 1D | 1% of crystalline Li₂FeP₂O₇ | 3% of crystalline Al₂O₃ | 4% of carbon | 0.303 | 29.496 |
| Example 58D | Same as example 1D | 1% of crystalline Li₂FeP₂O₇ | 3% of crystalline Al₂O₃ | 5.5% of carbon | 0.303 | 29.496 |
| Example 59D | Same as example 1D | 1% of crystalline Li₂FeP₂O₇ | 3% of crystalline Al₂O₃ | 6% of carbon | 0.303 | 29.496 |
| Example 63D | Li_{0.9}Mg_{0.05}Mn_{0.6}Fe _{0.395}V_{0.005}P_{0.9}Si_{0.1}O _{3.9}F_{0.1} | 1% of crystalline Li₂FeP₂O₇ | 3% of crystalline Al₂O₃ | 1% of carbon | *0.303* | 29.496 |
| Example 64D | Li_{1.1}Mg_{0.001}Mn_{0.6}F e_{0.395}V_{0.005}P_{0.9}Si_{0.1} O_{3.998}F_{0.002} | 1% of crystalline Li₂FeP₂O₇ | 3% of crystalline Al₂O₃ | 1% of carbon | *0.303* | 29.496 |
| Example 65D | Li_{0.9}Mg_{0.1}Mn_{0.6}Fe_{0 .395}V_{0.005}P_{0.95}Si_{0.05} O_{3.95}F_{0.05} | 1% of crystalline Li₂FeP₂O₇ | 3% of crystalline Al₂O₃ | 1% of carbon | *0.303* | 29.496 |
| Example 66D | Li_{0.95}Mg_{0.05}Mn_{0.999} Fe_{0.001}P_{0.96}Si_{0.04}O_{3. 99}F_{0.01} | 1% of crystalline Li₂FeP₂O₇ | 3% of crystalline Al₂O₃ | 1% of carbon | 0.303 | 29.496 |
| Example 69D | Same as example 1D | Same as example 1D | Same as example 1D | Same as example 1D | 0.303 | 29.496 |
| Example 70D | Same as example 1D | Same as example 1D | Same as example 1D | Same as example 1D | 0.303 | 29.496 |
| Example 71D | Same as example 1D | Same as example 1D | Same as example 1D | Same as example 1D | 0.303 | 29.496 |
| Example 72D | Same as example 1D | Same as example 1D | 3% of crystalline V₂O₅ | Same as example 1D | 0.303 | 29.496 |
| Example 73D | Li_{0.95}Mg_{0.05}Mn_{0.99} Fe_{0.01}P_{0.96}Si_{0.04}O_{3.9 9}F_{0.01} | Same as example 1D | Same as example 1D | Same as example 1D | 0.303 | 29.496 |
| Example 74D | Li_{0.95}Mg_{0.05}Mn_{0.5}F e_{0.5}P_{0.96}Si_{0.04}O_{3.99}F _{0.01} | Same as example 1D | Same as example 1D | Same as example 1D | 0.303 | 29.496 |
| Example 75D | Li_{0.95}Mg_{0.05}Mn_{0.8}F e_{0.2}P_{0.96}Si_{0.04}O_{3.99}F _{0.01} | Same as example 1D | Same as example 1D | Same as example 1D | 0.303 | 29.496 |
| Example 76D | Li_{0.95}Mg_{0.05}Mn_{0.75} Fe_{0.25}P_{0.96}Si_{0.04}O_{3.9 9}F_{0.01} | Same as example 1D | Same as example 1D | Same as example 1D | 0.303 | 29.496 |
| Example 77D | Li_{0.998}Mg_{0.001}Mn_{0.6 0}Fe_{0.35}V_{0.05}P_{0.999}Si _{0.001}O_{3.999}F_{0.001} | Same as example 1D | Same as example 1D | Same as example 1D | 0.303 | 29.496 |
| Example 78D | Li_{0.996}Mg_{0.002}Mn_{0.5 5}Fe_{0.40}V_{0.05}P_{0.999}Si _{0.001}O_{3.999}F_{0.001} | Same as example 1D | Same as example 1D | Same as example 1D | 0.303 | 29.496 |
| Example 79D | Li_{0.996}Mg_{0.002}Mn_{0.6 0}Fe_{0.35}V_{0.05}P_{0.999}Si _{0.001}O_{3.999}F_{0.001} | Same as example 1D | Same as example 1D | Same as example 1D | 0.303 | 29.496 |
| Example 80D | Li_{0.996}Mg_{0.002}Mn_{0.5 5}Fe_{0.40}V_{0.05}P_{0.999}Si _{0.001}O_{3.999}F_{0.001} | Same as example 1D | Same as example 1D | Same as example 1D | 0.303 | 29.496 |
| Example 81D | Li_{0.994}Mg_{0.003}Mn_{0.5 5}Fe_{0.40}V_{0.05}P_{0.999}Si _{0.001}O_{3.999}F_{0.001} | Same as example 1D | Same as example 1D | Same as example 1D | 0.303 | 29.496 |
| Example 82D | Li_{0.998}Mg_{0.001}Mn_{0.4} Fe_{0.55}V_{0.05}P_{0.999}Si_{0. 001}O_{3.999}F_{0.001} | Same as example 1D | Same as example 1D | Same as example 1D | 0.303 | 29.496 |
| Example 83D | Li_{0.998}Mg_{0.001}Mn_{0.6 0}Fe_{0.35}V_{0.05}P_{0.999}Si _{0.001}O_{3.999}F_{0.001} | Same as example 1D | 1% of crystalline Al₂O₃ | Same as example 1D | 0.303 | 29.496 |

It can be seen from Tables 7D - 8D that compared with comparative examples, the positive electrode active materials of the examples achieve a smaller lattice change rate, a smaller Li/Mn antisite defect concentration, a larger compacted density, a surface oxygen valency more closer to -2 valence, less Mn and Fe dissolution after cycling, and better battery performance, such as a higher capacity of a button battery, better high-temperature storage performance, higher safety performance and better cycling performance.

**Table 9D: Performance test results of positive electrode active materials (with the first coating layer, second coating layer and third coating layer in examples 29D - 44D being same as those in example 1D)**

| No. | Inner core | (1-y) : y | m : x | Thi ckn ess of firs t coa ting lay er (n m) | Thi ckn ess of sec ond coa ting lay er (n m) | Thi ckn ess of thir d coa ting lay er (n m) | La tti ce ch an ge rat e( % ) | Li/M n antis ite defe ct conc entration (%) | Co mpa cted den sity (g/c m³) | Su rfa ce ox yg en va lenc y | 3C ch ar ge co nst ant curre nt rat e (% ) | Dis solu tion of Mn and Fe after cycl ing (pp m) | Ca pa cit y of but ton batter y at 0.1 C (m Ah /g) | Ex pan sio n of cell upo n 30d of stor age at 60° C (%) | Num ber of cycle s for capa city retention rate of 80% at 45°C |
|---|---|---|---|---|---|---|---|---|---|---|---|---|---|---|---|
| Exa mpl e 29D | Li_{0.997}Mg_{0. 001}Mn_{0.68}F e_{0.3}V_{0.02}P_{0. 999}N_{0.001}O_{3 .999}F_{0.001} | 2.26 | 997 | 3 | 6 | 5 | 6. 3 | 0.4 | 2.4 4 | - 1. 98 | 75. 8 | 9 | 15 1.3 | 2.3 | 1356 |
| Exa mpl e 30D | Li_{0.997}Mg_{0. 001}Mn_{0.58}F e_{0.4}V_{0.02}P_{0. 999}N_{0.001}O_{3 .999}F_{0.001} | 1.45 | 997 | 3 | 6 | 5 | 6. 5 | 0.3 | 2.4 3 | - 1. 99 | 73. 5 | 11 | 15 6.4 | 2.1 | 1389 |
| Exa mpl e 31D | Li_{0.997}Mg_{0. 001}Mn_{0.65}F e_{0.3}V_{0.05}P_{0. 999}N_{0.001}O_{3 .999}F_{0.001} | 2.17 | 997 | 3 | 6 | 5 | 6. 9 | 0.5 | 2.5 1 | - 1. 95 | 75. 6 | 12 | 15 3.6 | 2.2 | 1462 |
| Exa mpl e 32D | Li_{0.988}Mg_{0. 005}Mn_{0.6}Fe _{0.35}V_{0.05}P_{0. 999}S_{0.001}O_{3. 999}F_{0.001} | 1.71 | 197 .6 | 3 | 6 | 5 | 5. 5 | 0.4 | 2.1 5 | - 1. 97 | 80. 6 | 9 | 15 5.8 | 1.7 | 1381 |
| Exa mpl e 33D | Li_{0.984}Mg_{0. 005}Mn_{0.6}Fe _{0.35}V_{0.05}P_{0. 995}S_{0.005}O_{3. 999}F_{0.001} | 1.71 | 196 .8 | 3 | 6 | 5 | 4. 3 | 0.6 | 2.3 9 | - 1. 96 | 80. 8 | 9 | 15 7.3 | 2 | 1356 |
| Exa mpl e 34D | Li_{0.984}Mg_{0. 005}Mn_{0.6}Fe _{0.35}V_{0.05}P_{0. 999}S_{0.001}O_{3. 995}F_{0.005} | 1.71 | 196 .8 | 3 | 6 | 5 | 3. 3 | 0.5 | 2.3 7 | - 1. 99 | 81. 6 | 12 | 15 5.3 | 2.1 | 1246 |
| Exa mpl e 35D | Li_{0.984}Mg_{0. 005}Mn_{0.65}F e_{0.25}V_{0.05}C o_{0.05}P_{0.999}S _{0.001}O_{3.995}F_{0.005} | 2.60 | 196 .8 | 3 | 6 | 5 | 1. 4 | 0.3 | 2.4 2 | - 1. 98 | 81. 3 | 8 | 15 7.8 | 2.2 | 1426 |
| Exa mpl e 36D | Li_{0.984}Mg_{0. 005}Mn_{0.65}F e_{0.20}V_{0.05}C o_{0.10}P_{0.999}S _{0.001}O_{3.995}F _{0.005} | 3.25 | 196 .8 | 3 | 6 | 5 | 1. 3 | 0.3 | 2.4 1 | -1. 98 | 78. 6 | 13 | 15 6.2 | 2.2 | 1483 |
| Exa mpl e 37D | Li_{0.984}Mg_{0. 005}Mn_{0.75}F e_{0.05}V_{0.05}C o_{0.15}P_{0.999}S _{0.001}O_{3.995}F _{0.005} | 15.0 | 196 .8 | 3 | 6 | 5 | 1. 7 | 0.3 | 2.3 9 | -1. 95 | 81. 4 | 9 | 15 3.9 | 2.6 | 1367 |
| Exa mpl e 38D | Li_{0.984}Mg_{0. 005}Mn_{0.65}F e_{0.25}V_{0.05}N i_{0.05}P_{0.999}S _{0.001}O_{3.995}F _{0.005} | 2.60 | 196 .8 | 3 | 6 | 5 | 2. 4 | 0.4 | 2.4 1 | -1. 94 | 79. 8 | 10 | 15 2.8 | 2.6 | 1352 |
| Exa mpl e 39D | Li_{0.984}Mg_{0. 005}Mn_{0.75}F e_{0.10}V_{0.05}N i_{0.10}P_{0.999}S _{0.001}O_{3.995}F _{0.005} | 7.50 | 196 .8 | 3 | 6 | 5 | 2 | 0.4 | 2.4 2 | -1. 96 | 80. 5 | 7 | 15 6.7 | 2.8 | 1359 |
| Exa mpl e 40D | Li_{0.984}Mg_{0. 005}Mn_{0.7}Fe _{0.15}V_{0.05}Co ₀₀₁O_{3.995}F_{0. 005} | 4.67 | 196 .8 | 3 | 6 | 5 | 1. 9 | 0.5 | 2.3 9 | -1. 99 | 83. 4 | 8 | 15 0.8 | 2.2 | 1276 |
| Exa mpl e 41D | Li_{0.984}Mg_{0. 005}Mn_{0.6}Fe _{0.25}V_{0.05}Co ₀₀₁O_{3.995}F_{0. 005} | 2.40 | 196 .8 | 3 | 6 | 5 | 1. 6 | 0.4 | 2.4 | -1. 97 | 77. 9 | 9 | 15 1.9 | 2.1 | 1364 |
| Exa mpl e 42D | Li_{0.984}Mg_{0. 005}Mn_{0.5}Fe _{0.35}V_{0.05}Co ₀₀₁O_{3.995}F_{0. 005} | 1.43 | 196 .8 | 3 | 6 | 5 | 1. 2 | 0.3 | 2.4 1 | -1. 99 | 80. 3 | 11 | 15 1.8 | 2.5 | 1362 |
| Exa mpl e 43D | Li_{1.01}Mg_{0.0 05}Mn_{0.7}Fe_{0 .15}V_{0.05}Co_{0 .10}P_{0.9}Si_{0.1} O_{3.92}F_{0.08} | 4.67 | 202 | 3 | 6 | 5 | 2. 3 | 0.5 | 2.1 8 | - 1. 97 | 81. 4 | 8 | **14** 6.9 | 2.3 | 1358 |
| Exa mpl e 44D | Li_{0.97}Mg_{0.0 05}Mn_{0.7}Fe_{0 .15}V_{0.05}Co_{0 .10}P_{0.92}Si_{0.0 8}O_{3.9}F_{0.1} | 4.67 | 194 | 3 | 6 | 5 | 1. 8 | 0.4 | 2.2 5 | - 1. 98 | 80. 5 | 7 | 14 3.2 | 1.8 | 1365 |
| Exa mpl e 84D | Same as example 1D | 1.86 | 994 | 1 | 6 | 5 | 5. 1 | 0.9 | 2.3 5 | - 1. 97 | 68. 4 | 32 | 15 7.3 | 2.8 | 1002 |
| Exa mpl e 85D | Same as example 1D | 1.86 | 994 | 10 | 6 | 5 | 5. 2 | 1 | 2.1 5 | - 1. 97 | 68. 3 | 18 | 15 1.2 | 2.2 | 1345 |
| Exa mpl e 86D | Same as example 1D | 1.86 | 994 | 3 | 2 | 5 | 5. 1 | 0.9 | 2.3 4 | - 1. 98 | 67. 9 | 31 | 15 7.3 | 2.7 | 1315 |
| Exa mpl e 87D | Same as example 1D | 1.86 | 994 | 3 | 25 | 5 | 5 | 1.1 | 2.1 6 | - 1. 97 | 68. 5 | 17 | 15 0.1 | 2.2 | 1214 |
| Exa mpl e 88D | Same as example 1D | 1.86 | 994 | 3 | 6 | 2 | 5. 1 | 0.9 | 2.3 8 | - 1. 98 | 60. 2 | 21 | 14 5.6 | 2.1 | 1385 |
| Exa mpl e 89D | Same as example 1D | 1.86 | 994 | 3 | 6 | 25 | 5. 2 | 1 | 2.1 | - 1. 97 | 72. 5 | 21 | 15 2.1 | 2.5 | 1102 |

It can be seen from Table 9D that by doping lithium manganese iron phosphatea at all the Li site, manganese site, phosphorus site and O site thereof and three-layer coating, the present application achieves a smaller lattice change rate, a smaller Li/Mn antisite defect concentration, a larger compacted density, a surface oxygen valency more closer to -2 valence, less Mn and Fe dissolution after cycling, and better battery performance, such as a higher capacity of a button battery, better high-temperature storage performance, higher safety performance and better cycling performance.

**Table 10D: Performance test results of prepared positive electrode active materials**

| Exa mpl e No. | Inner core | First coatin g layer | Secon d coatin g layer | Thir d coati ng layer | Cry stall init y of pyr oph osp hate (%) | Latt ice cha nge rate (%) | Li/M n antisi te defec t conc entra tion (%) | Co mpa cted dens ity (g/c m³) | Su rfa ce ox yg en val en cy | 3C ch arg e co nst ant cur ren t rat e (% ) | Diss oluti on of Mn and Fe after cycl ing (pp m) | Ca pac ity of but ton bat ter y at 0.1 C (m Ah /g) | Exp ansi on of cell upo n 30 d of stor age at 60° C (%) | Num ber of cycle s for capac ity retent ion rate of 80% at 45°C |
|---|---|---|---|---|---|---|---|---|---|---|---|---|---|---|
| Exa mpl e 1D | Li_{0.994}M o_{0.001}Mn _{0.65}Fe_{0.35} P_{0.999}Si_{0. 001}O_{3.999} F_{0.001} | 1% of crystal line Li₂Fe P₂O₇ | 3% of crystal line Al₂O₃ | 1% of carb on | 100 | 5.2 | 0.9 | 2.26 | -1.9 7 | 68. 1 | 21 | 15 7.3 | 2.2 | 1268 |
| Exa mpl e 60D | Same as example 1D | Same as examp le 1D | Same as examp le 1D | Sam e as exam ple 1D | 30 | 5.1 | 0.8 | 2.18 | -1.9 7 | 64. 8 | 84 | 15 1.2 | 3.3 | 1137 |
| Exa mpl e 61D | Same as example 1D | Same as examp le 1D | Same as examp le 1D | Sam e as exam ple 1D | 50 | 5.1 | 0.8 | 2.22 | -1.9 7 | 65. 7 | 61 | 15 3.7 | 2.7 | 1204 |
| Exa mpl e 62D | Same as example 1D | Same as examp le 1D | Same as examp le 1D | Sam e as exam ple 1D | 70 | 5.1 | 0.8 | 2.23 | -1.9 8 | 66. 9 | 37 | 15 5.8 | 2.9 | 1246 |

It can be seen from Table 10D that as the crystallinity of pyrophosphate in the positive electrode active material increases, the positive electrode active material has a gradually increased compacted density, increased 3C charge constant current rate, less dissolution of Mn and Fe after cycling, an increased capacity of a button battery, and improved high-temperature storage performance, safety performance and cycling performance.

The above provides a detailed description of preferred embodiments of the present application. However, the present application is not limited to the specific details of the above embodiments and the scope of protection is defined by the appended claims.

In the description of the present application, it should be understood that the orientation or positional relationships indicated by terms "upper", "lower", "front", "rear", "top", "bottom", "inner", and "outer", etc., is based on the orientation or positional relationships shown in the accompanying drawings and is merely for ease of description of the present application and simplification of the description, rather than indicating or implying that the devices or elements referred to must have a specific orientation or be constructed and operated in a described orientation, and therefore cannot be construed as limiting the present application.

## Claims

1. A positive electrode active material having an inner core (11) and a shell coating the inner core (11),
wherein the inner core (11) comprises at least one of a ternary material, _{d}Li₂MnO₃·(1-d)LiMO₂ and LiMPO₄, where 0 < d < 1, and M includes one or more selected from Fe, Ni, Co, and Mn; and
the shell comprises a crystalline inorganic substance, the full width at half maximum of the main peak measured by means of X-ray diffraction of the crystalline inorganic substance having a full width at half maximum of the main peak of 0-3° as measured by means of X-ray diffraction, and the crystalline inorganic substance includes one or more selected from a metal oxide and an inorganic salt, wherein
the crystalline inorganic substance includes a pyrophosphate of QP₂O₇ and a phosphate of XPO₄, and the metal oxide includes Q'ₑO_{f},
where Q and X are each independently selected from one or more of Li, Fe, Ni, Mg, Co, Cu, Zn, Ti, Ag, Zr, Nb or Al; Q' is selected from one or more elements of Li, Fe, Ni, Mg, Co, Cu, Zn, Ti, Ag, Zr, Nb and Al; e is greater than 0 and less than or equal to 2; and f is greater than 0 and less than or equal to 5.

2. The positive electrode active material according to claim 1, wherein the shell comprises at least one of the metal oxide and the inorganic salt, and carbon.

3. The positive electrode active material according to claim 1 or 2, wherein the inner core (11) comprises LiMPO₄, and M includes Mn and a non-Mn element, wherein the non-Mn element satisfies at least one of the following conditions:
the ionic radius of the non-Mn element being denoted as a, and the ionic radius of manganese element being denoted as b, |a-b|/b is not greater than 10%;
the valence alternation voltage of the non-Mn element being denoted as U, 2 V < U < 5.5 V;
the chemical activity of a chemical bond formed by the non-Mn element and O is not less than that of a P-O bond; and
the highest valence of the non-Mn element is not greater than 6.

4. The positive electrode active material according to claim 3, wherein the non-Mn element includes one or two of a first doping element and a second doping element, the first doping element is doped at the manganese site, and the second doping element is doped at the phosphorus site.

5. The positive electrode active material according to claim 4, wherein the first doping element satisfies at least one of the following conditions:
the ionic radius of the first doping element being denoted as a, and the ionic radius of manganese element being denoted as b, |a-b|/b is not greater than 10%; and the valence alternation voltage of the first doping element being denoted as U, 2 V < U < 5.5 V, wherein the second doping element satisfies at least one of the following conditions:
the chemical activity of a chemical bond formed by the second doping element and oxygen is not less than that of a P-O bond; and the highest valence of the second doping element is not greater than 6, wherein the positive electrode active material contains at least two of the first doping elements, wherein the first doping element includes one or more elements selected from Zn, Al, Na, K, Mg, Mo, W, Ti, V, Zr, Fe, Ni, Co, Ga, Sn, Sb, Nb and Ge.

6. The positive electrode active material according to claim 5, wherein the first doping element includes at least two selected from Fe, Ti, V, Ni, Co, and Mg, wherein the second doping element includes one or more elements selected from B (boron), S, Si and N, wherein the inner core (11) has a compound with a chemical formula of Li₁₊xMn_{1-y}A_{y}P_{1-z}R_{z}O₄, where x is any numerical value in a range of 0. 100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and
R includes one or more elements selected from B (boron), S, Si and N.

7. The positive electrode active material according to any one of claims 1-6, wherein the inner core (11) has a compound with a chemical formula of Li₁₊ₓCₘMn_{1-y}A_{y}P_{1-z}R_{z}O₄₋ₙDₙ,
where C includes one or more elements selected from Zn, Al, Na, K, Mg, Nb, Mo and W,
A includes one or more elements selected from Zn, Al, Na, K, Mg, Mo, W, Ti, V, Zr, Fe, Ni, Mg, Co, Ga, Sn, Sb, Nb and Ge,
R includes one or more elements selected from B (boron), S, Si and N,
D includes one or more elements selected from S, F, Cl and Br,
x is any numerical value in a range of 0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1.

8. The positive electrode active material according to claim 6 or 7, wherein the ratio of y to 1-y is 1 : 10 to 1 : 1, optionally 1 : 4 to 1 : 1, wherein the ratio of z to 1-z is 1: 9 to 1 : 999, optionally 1 : 499 to 1 : 249, wherein C, R and D are each independently any element within the respective ranges above, and A is at least two elements within the range thereof;
C is selected from any element of Mg and Nb,
A is at least two elements selected from Fe, Ti, V, Co and Mg, and optionally is Fe and one or more elements selected from Ti, V, Co and Mg,
Ris S,
D is F, wherein x is selected from a range of 0.001 to 0.005; y is selected from a range of 0.01 to 0.5, and optionally from a range of 0.25 to 0.5; z is selected from a range of 0.001 to 0.005; n is selected from a range of 0.001 to 0.005, wherein the lattice change rate of the positive electrode active material is 8% or less, optionally 4% or less, optionally 3.8% or less, more optionally 2.0-3.8%, wherein the lattice change rate is measured in accordance with the method referred to at paragraph [0137] of the English translation of the application as filed; wherein the Li/Mn antisite defect concentration of the positive electrode active material is 4% or less, optionally 2.2% or less, more optionally 1.5-2.2%, more optionally 2% or less, more optionally 0.5% or less, wherein the Li/Mn antisite defect concentration is measured according to the method described at paragraph [0274] of the English translation of the application as filed; wherein the surface oxygen valency of the positive electrode active material is -1.89 to -1.98, optionally -1.90 to -1.98, more optionally -1.90 or less, more optionally -1.82 or less, wherein the surface oxygen valence state is measured according to the method described at paragraph [0275] of the English translation of the application as filed; wherein the positive electrode active material has a compacted density under 3T of 2.0 g/cm³ or more, optionally 2.2 g/cm³ or more, optionally 2.2 g/cm³ or more and 2.8 g/cm³ or less, wherein the compacted density is measured according to the method described at paragraph [0276] of the English translation of the application as filed.

9. The positive electrode active material according to any one of claims 1-8,
where Q includes Li and one or more selected from Fe, Ni, Mg, Co, Cu, Zn, Ti, Ag, Zr, Nb or Al;
Q' is selected from one or more elements of Li, Fe and Zr; M' is selected from one or more elements of an alkali metal, an alkaline earth metal, a transition metal, a group IIIA element, a group IVA element, a lanthanide and Sb, optionally from one or more elements of Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, more optionally from one or more elements of Mg, Al, Si, Zn, Zr and Sn; wherein the pyrophosphate includes LiₐQP₂O₇ and/or Q_{b}(P₂O₇)_{c}, where 0 ≤ a ≤ 2, 1 ≤ b ≤ 4, 1 ≤ c ≤ 6, the values of a, b, and c satisfy the condition of keeping the LiₐQP₂O₇ or Q_{b}(P₂O₇)_{c} electrically neutral, and Q in the LiₐQP₂O₇ and Q_{b}(P₂O₇)_{c} is each independently selected from one or more elements of Fe, Ni, Mg, Co, Cu, Zn, Ti, Ag, Zr, Nb, or Al, wherein the phosphate has an interplanar spacing of 0.244-0.425 nm, optionally 0.345-0.358 nm, and an included angle of crystal orientation (111) of 20.00° - 37.00°, optionally 24.25° - 26.45°; and the pyrophosphate has an interplanar spacing of 0.293-0.470 nm, optionally 0.293-0.326 nm, and an included angle of crystal orientation (111) of 18-32.57°, optionally 19.211° - 30.846°, more optionally 26.41° - 32.57°, wherein
the pyrophosphate and the phosphate each independently have a crystallinity of 10% to 100%, optionally 50% to 100%, wherein the shell comprises a carbon coating layer, the crystalline inorganic substance is between the inner core (11) and the carbon coating layer, and the carbon for the carbon coating layer is a mixture of SP2-form carbon and SP3-form carbon, and optionally, the molar ratio of the SP2-form carbon to the SP3-form carbon is any numerical value in a range of 0.07-13, optionally any numerical value in a range of 0.1-10, optionally any numerical value in a range of 2.0-3.0, wherein the shell comprises a first coating layer (12) coating the inner core (11) and a second coating layer (13) coating the first coating layer (12), wherein the SP2 and SP3 hybridised carbon is measured according to the method described at paragraph [0290] of the English translation of the application as filed,
wherein the first coating layer (12) comprises a pyrophosphate of QP₂O₇ and a phosphate of XPO₄, and the second coating layer (13) is a carbon coating layer, wherein the coating amount of the first coating layer (12) is greater than 0 wt% and less than or equal to 7 wt%, optionally 4-5.6 wt%, based on the weight of the inner core (11), wherein the weight ratio of the pyrophosphate to the phosphate in the first coating layer (12) is 1 : 3 to 3 : 1, optionally 1 : 3 to 1 : 1, wherein
the coating amount of the second coating layer (13) is greater than 0 wt% and less than or equal to 6 wt%, optionally 3-5 wt%, based on the weight of the inner core (11).

10. The positive electrode active material according to claim 9, wherein the shell comprises a first coating layer (12) coating the inner core (11) and a second coating layer (13) coating the first coating layer (12),
wherein the first coating layer (12) comprises a crystalline pyrophosphate of QP₂O₇ and a metal oxide of Q'ₑO_{f}, and the second coating layer (13) is a carbon coating layer, wherein the coating amount of the first coating layer (12) is greater than 0 wt% and less than or equal to 7 wt%, optionally 4-5.6 wt%, based on the weight of the inner core (11), wherein the weight ratio of the pyrophosphate to the oxide in the first coating layer (12) is 1 : 3 to 3 : 1, optionally 1 : 3 to 1 : 1, wherein the coating amount of the second coating layer (13) is greater than 0 wt% and less than or equal to 6 wt%, optionally 3-5 wt%, based on the weight of the inner core (11), **characterized in that** the shell comprises a first coating layer (12) coating the inner core (11), a second coating layer (13) coating the first coating layer (12), and a third coating layer (14) coating the second coating layer (13);
wherein the first coating layer (12) comprises a crystalline pyrophosphate;
the second coating layer (13) comprises a metal oxide of Q'ₑO_{f};
the crystalline pyrophosphate includes LiₐQP₂O₇ and/or Q_{b}(P₂O₇)_{c}, where a is greater than 0 and less than or equal to 2, b is any numerical value in a range of 1-4, and c is any numerical value in a range of 1-3; and
the third coating layer (14) comprises carbon, wherein the coating amount of the first coating layer (12) is greater than 0 and less than or equal to 6 wt%, optionally greater than 0 and less than or equal to 5.5 wt%, more optionally greater than 0 and less than or equal to 2 wt%, based on the weight of the inner core (11); and/or
the coating amount of the second coating layer (13) is greater than 0 and less than or equal to 6 wt%, optionally greater than 0 and less than or equal to 5.5 wt%, more optionally 2 wt% - 4 wt%, based on the weight of the inner core (11); and/or
the coating amount of the third coating layer (14) is greater than 0 and less than or equal to 6 wt%, optionally greater than 0 and less than or equal to 5.5 wt%, more optionally greater than 0 and less than or equal to 2 wt%, based on the weight of the inner core (11).

11. The positive electrode active material according to claim 10, wherein
the first coating layer (12) has a thickness of 2-10 nm;
the second coating layer (13) has a thickness of 3-15 nm;
the third coating layer (14) has a thickness of 5-25 nm, wherein based on the weight of the positive electrode active material,
the content of manganese element is in a range of 10 wt% - 35 wt%, optionally in a range of 15 wt% - 30 wt%, more optionally in a range of 17 wt% - 20 wt%; and
the content of phosphorus element is in a range of 12 wt% - 25 wt%, optionally in a range of 15 wt% - 20 wt%; and
the weight ratio of manganese element to phosphorus element is in a range of 0.90-1.25, more optionally in a range of 0.95-1.20.

12. The positive electrode active material according to claim 9, wherein the positive electrode active material comprises a first coating layer (12) coating the inner core (11), a second coating layer (13) coating the first coating layer (12), and a third coating layer (14) coating the second coating layer (13), wherein
the first coating layer (12) comprises a crystalline pyrophosphate of LiₐQP₂O₇ or Q_{b}(P₂O₇)_{c},
the second coating layer (13) comprises a crystalline phosphate of XPO₄, and the third coating layer (14) is carbon, wherein the coating amount of the first coating layer (12) is greater than 0 and less than or equal to 6 wt%, optionally greater than 0 and less than or equal to 5.5 wt%, more optionally greater than 0 and less than or equal to 2 wt%, based on the weight of the inner core (11);
the coating amount of the second coating layer (13) is greater than 0 and less than or equal to 6 wt%, optionally greater than 0 and less than or equal to 5.5 wt%, more optionally 2-4 wt%, based on the weight of the inner core (11); the coating amount of the third coating layer (14) is greater than 0 and less than or equal to 6 wt%, optionally greater than 0 and less than or equal to 5.5 wt%, more optionally greater than 0 and less than or equal to 2 wt%, based on the weight of the inner core (11), wherein the first coating layer (12) has a thickness of 1-10 nm;
the second coating layer (13) has a thickness of 2-15 nm;
the third coating layer (14) has a thickness of 2-25 nm, wherein
based on the weight of the positive electrode active material, the content of manganese element is in a range of 10 wt% - 35 wt%, optionally in a range of 15 wt% - 30 wt%, more optionally in a range of 17 wt% - 20 wt%, the content of phosphorus element is in a range of 12 wt % - 25 wt %, optionally in a range of 15 wt % - 20 wt %, and the weight ratio of manganese element to phosphorus element is in a range of 0.90-1.25, optionally 0.95-1.20.

13. A positive electrode plate, comprising a positive electrode current collector and a positive electrode film layer provided on at least one surface of the positive electrode current collector, wherein the positive electrode film layer comprises a positive electrode active material according to any one of claims 1-12, wherein the content of the positive electrode active material in the positive electrode film layer is 10 wt% or more, optionally 95-99.5 wt%, based on the total weight of the positive electrode film layer.

14. A secondary battery (5), comprising the positive electrode active material according to any one of claims 1-12.

15. A battery module (4), comprising the secondary battery (5) according to claim 14.

## Patentansprüche

1. Aktives positives Elektrodenmaterial, das einen inneren Kern (11) und eine Ummantelung, die den inneren Kern (11) beschichtet, aufweist,
wobei der innere Kern (11) mindestens eines von einem ternären Material, _{d}Li₂MnO₃·(1-d)LiMO₂ und LiMPO₄ umfasst, worin 0 < d < 1 ist und M eines oder mehrere einschließt, die aus Fe, Ni, Co und Mn ausgewählt sind; und
die Ummantelung eine kristalline anorganische Substanz umfasst, wobei die gesamte Breite bei halbem Maximum der Hauptspitze, die mithilfe von Röntgendiffraktion gemessen wird, der kristallinen anorganischen Substanz eine gesamte Breite bei halbem Maximum der Hauptspitze von 0-3 ° aufweist, die mithilfe von Röntgendiffraktion gemessen wird, und die kristalline anorganische Substanz eines oder mehrere einschließt, die aus einem Metalloxid und einem anorganischen Salz ausgewählt sind, wobei
die kristalline anorganische Substanz ein Pyrophosphat von QP₂O₇ und ein Phosphat von XPO₄ einschließt und das Metalloxid Q'ₑO_{f} einschließt,
worin Q und X jeweils unabhängig aus einem oder mehreren von Folgenden ausgewählt sind: Li, Fe, Ni, Mg, Co, Cu, Zn, Ti, Ag, Zr, Nb oder Al; Q' aus einem oder mehreren Elementen von Folgenden ausgewählt ist: Li, Fe, Ni, Mg, Co, Cu, Zn, Ti, Ag, Zr, Nb und Al; e größer als 0 und kleiner als oder gleich 2 ist; und f größer als 0 und kleiner als oder gleich 5 ist.

2. Aktives positives Elektrodenmaterial nach Anspruch 1, wobei die Ummantelung mindestens eines des Metalloxids und des anorganischen Salzes und Kohlenstoff umfasst.

3. Aktives positives Elektrodenmaterial nach Anspruch 1 oder 2, wobei der innere Kern (11) LiMPO₄ umfasst und M Mn- und ein Nicht-Mn-Element einschließt, wobei das Nicht-Mn-Element mindestens eine der folgenden Bedingungen erfüllt:
der Ionenradius des Nicht-Mn-Elements als a bezeichnet ist und der Ionenradius vom Manganelement als b bezeichnet ist, dann |a-b|/b nicht größer als 10 % ist;
die Valenzwechselspannung des Nicht-Mn-Elements als U bezeichnet ist, dann 2 V < U < 5,5 V ist;
die chemische Aktivität einer chemischen Bindung, die durch das Nicht-Mn-Element und O ausgebildet wird, nicht kleiner als die einer P-O-Bindung ist; und
die höchste Valenz des Nicht-Mn-Elements nicht größer als 6 ist.

4. Aktives positives Elektrodenmaterial nach Anspruch 3, wobei das Nicht-Mn-Element ein oder zwei eines ersten Dotierungselements und eines zweiten Dotierungselements einschließt, wobei das erste Dotierungselement an der Manganstelle dotiert ist und das zweite Dotierungselement an der Phosphorstelle dotiert ist.

5. Aktives positives Elektrodenmaterial nach Anspruch 4, wobei das erste Dotierungselement mindestens eine der folgenden Bedingungen erfüllt:
der Ionenradius des ersten Dotierungselements als a bezeichnet ist und der Ionenradius vom Manganelement als b bezeichnet ist, dann |a-b|/b nicht größer als 10 % ist; und die Valenzwechselspannung des ersten Dotierungselements als U bezeichnet ist, dann 2 V < U < 5,5 V ist, wobei das zweite Dotierungselement mindestens eine der folgenden Bedingungen erfüllt:
die chemische Aktivität einer chemischen Bindung, die durch das zweite Dotierungselement und Sauerstoff ausgebildet wird, nicht kleiner als die einer P-O-Bindung ist; und
die höchste Valenz des zweiten Dotierungselements nicht größer als 6 ist, wobei das aktive positive Elektrodenmaterial mindestens zwei der ersten Dotierungselemente enthält, wobei das erste Dotierungselement ein oder mehrere Elemente einschließt, die aus Folgenden ausgewählt sind: Zn, Al, Na, K, Mg, Mo, W, Ti, V, Zr, Fe, Ni, Co, Ga, Sn, Sb, Nb und Ge.

6. Aktives positives Elektrodenmaterial nach Anspruch 5, wobei das erste Dotierungselement mindestens zwei einschließt, die aus Fe, Ti, V, Ni, Co und Mg ausgewählt sind, wobei das zweite Dotierungselement ein oder mehrere Elemente einschließt, die aus B (Bor), S, Si und N ausgewählt sind, wobei der innere Kern (11) eine Verbindung mit einer chemischen Formel von Li₁₊xMn_{1-y}A_{y}P_{1-z}R_{z}O₄ aufweist, worin x jedweder numerische Wert in einem Bereich von 0,100-0,100 ist, y jedweder numerische Wert in einem Bereich von 0,001-0,500 ist, z jedweder numerische Wert in einem Bereich von 0,001-0,100 ist, A ein oder mehrere Elemente einschließt, die aus Folgenden ausgewählt sind: Zn, Al, Na, K, Mg, Mo, W, Ti, V, Zr, Fe, Ni, Co, Ga, Sn, Sb, Nb und Ge, und
R ein oder mehrere Elemente einschließt, die aus B (Bor), S, Si und N ausgewählt sind.

7. Aktives positives Elektrodenmaterial nach einem der Ansprüche 1-6, wobei der innere Kern (11) eine Verbindung mit einer chemischen Formel von Li₁₊ₓCₘMn_{1-y}A_{y}P_{1-z}R_{z}O₄₋ₙDₙ aufweist,
worin C ein oder mehrere Elemente einschließt, die aus Zn, Al, Na, K, Mg, Nb, Mo und W ausgewählt sind,
A ein oder mehrere Elemente einschließt, die aus Folgenden ausgewählt sind: Zn, Al, Na, K, Mg, Mo, W, Ti, V, Zr, Fe, Ni, Mg, Co, Ga, Sn, Sb, Nb und Ge,
R ein oder mehrere Elemente einschließt, die aus B (Bor), S, Si und N ausgewählt sind,
D ein oder mehrere Elemente einschließt, die aus S, F, Cl und Br ausgewählt sind,
x jedweder numerische Wert in einem Bereich von 0,100-0,100 ist, y jedweder numerische Wert in einem Bereich von 0,001-0,500 ist, z jedweder numerische Wert in einem Bereich von 0,001-0,100 ist, n jedweder numerische Wert in einem Bereich von 0,001 bis 0,1 ist und m jedweder numerische Wert in einem Bereich von 0,9 bis 1,1 ist.

8. Aktives positives Elektrodenmaterial nach Anspruch 6 oder 7, wobei das Verhältnis von y zu 1-y 1 : 10 bis 1 : 1, optional 1 : 4 bis 1 : 1 beträgt, wobei das Verhältnis von z zu 1-z 1 : 9 bis 1 : 999, optional 1 : 499 bis 1 : 249 beträgt, wobei C, R und D jeweils unabhängig jedwedes Element innerhalb der entsprechenden vorstehenden Bereiche sind und A mindestens zwei Elemente innerhalb des Bereiches davon ist;
C aus jedwedem Element von Mg und Nb ausgewählt ist,
A mindestens zwei Elemente ist, die aus Fe, Ti, V, Co und Mg ausgewählt sind, und optional Fe und ein oder mehrere Elemente, die aus Ti, V, Co und Mg ausgewählt sind, ist,
R S ist,
D F ist, wobei x aus einem Bereich von 0,001 bis 0,005 ausgewählt ist; y aus einem Bereich von 0,01 bis 0,5 und optional aus einem Bereich von 0,25 bis 0,5 ausgewählt ist; z aus einem Bereich von 0,001 bis 0,005 ausgewählt ist; n aus einem Bereich von 0,001 bis 0,005 ausgewählt ist, wobei die Gitteränderungsrate des aktiven positiven Elektrodenmaterials 8 % oder weniger, optional 4 % oder weniger, optional 3,8 % oder weniger, optionaler 2,0-3,8 % beträgt, wobei die Gitteränderungsrate gemäß dem Verfahren gemessen wird, auf das sich in Absatz [0137] der englischen Übersetzung der eingereichten Anmeldung bezogen wird; wobei die Konzentration des Li/Mn-Antistrukturdefekts des aktiven positiven Elektrodenmaterials 4 % oder weniger, optional 2,2 % oder weniger, optionaler 1,5-2,2 %, optionaler 2 % oder weniger, optionaler 0,5 % oder weniger beträgt, wobei die Konzentration des Li/Mn-Antistrukturdefekts gemäß dem Verfahren gemessen wird, das im Absatz [0274] der englischen Übersetzung der eingereichten Anmeldung beschrieben ist; wobei die Valenz des Oberflächensauerstoffs des aktiven positiven Elektrodenmaterials -1,89 bis -1,98, optional -1,90 bis -1,98, optionaler -1,90 oder weniger, optionaler -1,82 oder weniger beträgt, wobei der Valenzzustand des Oberflächensauerstoffs gemäß dem Verfahren gemessen wird, das im Absatz [0275] der englischen Übersetzung der eingereichten Anmeldung beschrieben ist; wobei das aktive positive Elektrodenmaterial eine Verdichtungsdichte unter 3 t von 2,0 g/cm³ oder mehr, optional 2,2 g/cm³ oder mehr, optional 2,2 g/cm³ oder mehr und 2,8 g/cm³ oder weniger aufweist, wobei die Verdichtungsdichte gemäß dem Verfahren gemessen wird, das im Absatz [0276] der englischen Übersetzung der eingereichten Anmeldung beschrieben ist.

9. Aktives positives Elektrodenmaterial nach einem der Ansprüche 1-8,
worin Q Li und eines oder mehrere einschließt, die aus Folgenden ausgewählt sind: Fe, Ni, Mg, Co, Cu, Zn, Ti, Ag, Zr, Nb oder Al;
Q' aus einem oder mehreren Elementen von Li, Fe und Zr ausgewählt ist; M' aus Folgenden ausgewählt ist: einem oder mehreren Elementen eines Alkalimetalls, eines Erdalkalimetalls, eines Übergangsmetalls, eines Elements der Gruppe IIIA, eines Elements der Gruppe IVA, eines Lanthanoids und Sb, optional aus einem oder mehreren Elementen von Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La und Ce, optionaler aus einem oder mehreren Elementen von Mg, Al, Si, Zn, Zr und Sn; wobei das Pyrophosphat LiₐQP₂O₇ und/oder Q_{b}(P₂O₇)_{c} einschließt, worin 0 ≤ a ≤ 2, 1 ≤ b ≤ 4, 1 ≤ c ≤ 6 ist, die Werte von a, b und c die Bedingung erfüllen, dass LiₐQP₂O₇ oder Q_{b}(P₂O₇)_{c} elektrisch neutral bleiben, und Q in LiₐQP₂O₇ und Q_{b}(P₂O₇)_{c} jeweils unabhängig aus einem oder mehreren Elementen von Fe, Ni, Mg, Co, Cu, Zn, Ti, Ag, Zr, Nb oder Al ausgewählt sind, wobei das Phosphat einen interplanaren Abstand von 0,244-0,425 nm, optional 0,345-0,358 nm und einen eingeschlossenen Winkel der Kristallorientierung (111) von 20,00 ° - 37,00 °, optional 24,25 ° - 26,45 ° aufweist; und das Pyrophosphat einen interplanaren Abstand von 0,293-0,470 nm, optional 0,293-0,326 nm und einen eingeschlossenen Winkel der Kristallorientierung (111) von 18-32,57 °, optional 19,211 ° - 30,846 °, optionaler 26,41 °-32,57 ° aufweist, wobei
das Pyrophosphat und das Phosphat jeweils unabhängig eine Kristallinität von 10 % bis 100 %, optional 50 % bis 100 % aufweisen, wobei die Ummantelung eine Kohlenstoffbeschichtungsschicht umfasst, die kristalline anorganische Substanz zwischen dem inneren Kern (11) und der Kohlenstoffbeschichtungsschicht vorliegt und der Kohlenstoff für die Kohlenstoffbeschichtungsschicht eine Mischung aus Kohlenstoff in der SP2-Form und Kohlenstoff in der SP3-Form ist und optional das Molverhältnis des Kohlenstoffs in der SP2-Form zu dem Kohlenstoff in der SP3-Form jedweder numerische Wert in einem Bereich von 0,07-13, optional jedweder numerische Wert in einem Bereich von 0,1-10, optional jedweder numerische Wert in einem Bereich von 2,0-3,0 ist, wobei die Ummantelung eine erste Beschichtungsschicht (12) umfasst, die den inneren Kern (11) beschichtet, und eine zweite Beschichtungsschicht (13) umfasst, die die erste Beschichtungsschicht (12) beschichtet, wobei der SP2- und SP3-hybridisierte Kohlenstoff gemäß dem Verfahren gemessen wird, das im Absatz [0290] der englischen Übersetzung der eingereichten Anmeldung beschrieben ist;
wobei die erste Beschichtungsschicht (12) ein Pyrophosphat von QP₂O₇ und ein Phosphat von XPO₄ umfasst und die zweite Beschichtungsschicht (13) eine Kohlenstoffbeschichtungsschicht ist, wobei die Beschichtungsmenge der ersten Beschichtungsschicht (12) größer als 0 Gew.-% und kleiner als oder gleich 7 Gew.-%, optional 4-5,6 Gew.-% ist, bezogen auf das Gewicht des inneren Kerns (11), wobei das Gewichtsverhältnis des Pyrophosphats zu dem Phosphat in der ersten Beschichtungsschicht (12) 1 : 3 bis 3 : 1, optional 1 : 3 bis 1 : 1 beträgt, wobei
die Beschichtungsmenge der zweiten Beschichtungsschicht (13) größer als 0 Gew.-% und kleiner als oder gleich 6 Gew.-%, optional 3-5 Gew.-% ist, bezogen auf das Gewicht des inneren Kerns (11).

10. Aktives positives Elektrodenmaterial nach Anspruch 9, wobei die Ummantelung eine erste Beschichtungsschicht (12) umfasst, die den inneren Kern (11) beschichtet, und eine zweite Beschichtungsschicht (13) umfasst, die die erste Beschichtungsschicht (12) beschichtet,
wobei die erste Beschichtungsschicht (12) ein kristallines Pyrophosphat von QP₂O₇ und ein Metalloxid von Q'ₑO_{f} umfasst und die zweite Beschichtungsschicht (13) eine Kohlenstoffbeschichtungsschicht ist, wobei die Beschichtungsmenge der ersten Beschichtungsschicht (12) größer als 0 Gew.-% und kleiner als oder gleich 7 Gew.-%, optional 4-5,6 Gew.-% ist, bezogen auf das Gewicht des inneren Kerns (11), wobei das Gewichtsverhältnis des Pyrophosphats zu dem Oxid in der ersten Beschichtungsschicht (12) 1 : 3 bis 3 : 1, optional 1 : 3 bis 1 : 1 beträgt, wobei die Beschichtungsmenge der zweiten Beschichtungsschicht (13) größer als 0 Gew.-% und kleiner als oder gleich 6 Gew.-%, optional 3-5 Gew.-% ist, bezogen auf das Gewicht des inneren Kerns (11), **dadurch gekennzeichnet, dass** die Ummantelung Folgendes umfasst: eine erste Beschichtungsschicht (12), die den inneren Kern (11) beschichtet, eine zweite Beschichtungsschicht (13), die die erste Beschichtungsschicht (12) beschichtet, und eine dritte Beschichtungsschicht (14), die die zweite Beschichtungsschicht (13) beschichtet;
wobei die erste Beschichtungsschicht (12) ein kristallines Pyrophosphat umfasst;
die zweite Beschichtungsschicht (13) ein Metalloxid von Q'ₑO_{f} umfasst;
das kristalline Pyrophosphat LiₐQP₂O₇ und/oder Q_{b}(P₂O₇)_{c} einschließt, worin a größer als 0 und kleiner als oder gleich 2 ist, b jedweder numerische Wert in einem Bereich von 1-4 ist und c jedweder numerische Wert in einem Bereich von 1-3 ist; und
die dritte Beschichtungsschicht (14) Kohlenstoff umfasst, wobei die Beschichtungsmenge der ersten Beschichtungsschicht (12) größer als 0 und kleiner als oder gleich 6 Gew.-%, optional größer als 0 und kleiner als oder gleich 5,5 Gew.-%, optionaler größer als 0 und kleiner als oder gleich 2 Gew.-% ist, bezogen auf das Gewicht des inneren Kerns (11); und/oder
die Beschichtungsmenge der zweiten Beschichtungsschicht (13) größer als 0 und kleiner als oder gleich 6 Gew.-%, optional größer als 0 und kleiner als oder gleich 5,5 Gew.- %, optionaler 2 Gew.-% - 4 Gew.-% ist, bezogen auf das Gewicht des inneren Kerns (11); und/oder
die Beschichtungsmenge der dritten Beschichtungsschicht (14) größer als 0 und kleiner als oder gleich 6 Gew.-%, optional größer als 0 und kleiner als oder gleich 5,5 Gew.-%, optionaler größer als 0 und kleiner als oder gleich 2 Gew.-% ist, bezogen auf das Gewicht des inneren Kerns (11).

11. Aktives positives Elektrodenmaterial nach Anspruch 10, wobei
die erste Beschichtungsschicht (12) eine Dicke von 2-10 nm aufweist;
die zweite Beschichtungsschicht (13) eine Dicke von 3-15 nm aufweist;
die dritte Beschichtungsschicht (14) eine Dicke von 5-25 nm aufweist, wobei, bezogen auf das Gewicht des aktiven positiven Elektrodenmaterials,
der Gehalt an Manganelement in einem Bereich von 10 Gew.-% - 35 Gew.-% optional in einem Bereich von 15 Gew.-% - 30 Gew.-%, optionaler in einem Bereich von 17 Gew.-% - 20 Gew.-% liegt; und
der Gehalt an Phosphorelement in einem Bereich von 12 Gew.-% - 25 Gew.-%, optional in einem Bereich von 15 Gew.-% - 20 Gew.-% liegt; und
das Gewichtsverhältnis von Manganelement zu Phosphorelement in einem Bereich von 0,90-1,25, optionaler in einem Bereich von 0,95-1,20 liegt.

12. Aktives positives Elektrodenmaterial nach Anspruch 9, wobei das aktive positive Elektrodenmaterial Folgendes umfasst: eine erste Beschichtungsschicht (12), die den inneren Kern (11) beschichtet, eine zweite Beschichtungsschicht (13), die die erste Beschichtungsschicht (12) beschichtet, und eine dritte Beschichtungsschicht (14), die die zweite Beschichtungsschicht (13) beschichtet, wobei
die erste Beschichtungsschicht (12) ein kristallines Pyrophosphat von LiₐQP₂O₇ oder Q_{b}(P₂O₇)_{c} umfasst,
die zweite Beschichtungsschicht (13) ein kristallines Phosphat von XPO₄ umfasst und die dritte Beschichtungsschicht (14) Kohlenstoff ist, wobei die Beschichtungsmenge der ersten Beschichtungsschicht (12) größer als 0 und kleiner als oder gleich 6 Gew.-%, optional größer als 0 und kleiner als oder gleich 5,5 Gew.-%, optionaler größer als 0 und kleiner als oder gleich 2 Gew.-% ist, bezogen auf das Gewicht des inneren Kerns (11);
die Beschichtungsmenge der zweiten Beschichtungsschicht (13) größer als 0 und kleiner als oder gleich 6 Gew.-%, optional größer als 0 und kleiner als oder gleich 5,5 Gew.- %, optionaler 2-4 Gew.-% ist, bezogen auf das Gewicht des inneren Kerns (11); die Beschichtungsmenge der dritten Beschichtungsschicht (14) größer als 0 und kleiner als oder gleich 6 Gew.-%, optional größer als 0 und kleiner als oder gleich 5,5 Gew.-%, optionaler größer als 0 und kleiner als oder gleich 2 Gew.-% ist, bezogen auf das Gewicht des inneren Kerns (11), wobei die erste Beschichtungsschicht (12) eine Dicke von 1-10 nm aufweist;
die zweite Beschichtungsschicht (13) eine Dicke von 2-15 nm aufweist;
die dritte Beschichtungsschicht (14) eine Dicke von 2-25 nm aufweist, wobei,
bezogen auf das Gewicht des aktiven positiven Elektrodenmaterials, der Gehalt an Manganelement in einem Bereich von 10 Gew.-% - 35 Gew.-%, optional in einem Bereich von 15 Gew.-% - 30 Gew.-%, optionaler in einem Bereich von 17 Gew.-% - 20 Gew.-% liegt, der Gehalt an Phosphorelement in einem Bereich von 12 Gew.-% - 25 Gew.-%, optional in einem Bereich von 15 Gew.-% - 20 Gew.-% liegt und das Gewichtsverhältnis von Manganelement zu Phosphorelement in einem Bereich von 0,90-1,25, optional 0,95-1,20 liegt.

13. Positive Elektrodenplatte, die Folgendes umfasst: einen Stromkollektor der positiven Elektrode und eine Filmschicht der positiven Elektrode, die auf mindestens einer Oberfläche des Stromkollektors der positiven Elektrode bereitgestellt ist, wobei die Filmschicht der positiven Elektrode ein aktives positives Elektrodenmaterial nach einem der Ansprüche 1-12 umfasst, wobei der Gehalt des aktiven positiven Elektrodenmaterials in der Filmschicht der positiven Elektrode 10 Gew.-% oder mehr, optional 95-99,5 Gew.-% beträgt, bezogen auf das Gesamtgewicht der Filmschicht der positiven Elektrode.

14. Sekundärbatterie (5), die das aktive positive Elektrodenmaterial nach einem der Ansprüche 1-12 umfasst.

15. Batteriemodul (4), das die Sekundärbatterie (5) nach Anspruch 14 umfasst.

## Revendications

1. Matériau actif d'électrode positive comportant un noyau interne (11) et une enveloppe revêtant le noyau interne (11),
dans lequel le noyau interne (11) comprend au moins l'un parmi un matériau ternaire _{d}Li₂MnO₃·(1-d)LiMO₂ et LiMPO₄, où 0 < d < 1, et M comprend un ou plusieurs choisis parmi Fe, Ni, Co et Mn ; et
l'enveloppe comprend une substance inorganique cristalline, la largeur à mi-hauteur du pic principal mesurée par diffraction des rayons X de la substance inorganique cristalline ayant une largeur à mi-hauteur du pic principal de 0-3° telle que mesurée par diffraction des rayons X, et la substance inorganique cristalline comprend un ou plusieurs parmi un oxyde métallique et un sel inorganique, où
la substance inorganique cristalline comporte un pyrophosphate de QP₂O₇ et un phosphate de XPO₄, et l'oxyde métallique comporte Q'ₑO_{f},
où Q et X sont chacun choisis indépendamment parmi un ou plusieurs parmi Li, Fe, Ni, Mg, Co, Cu, Zn, Ti, Ag, Zr, Nb ou Al ; Q' est choisi parmi un ou plusieurs éléments parmi Li, Fe, Ni, Mg, Co, Cu, Zn, Ti, Ag, Zr, Nb et Al ; e est supérieur à 0 et inférieur ou égal à 2 ; et f est supérieur à 0 et inférieur ou égal à 5.

2. Matériau actif d'électrode positive selon la revendication 1, dans lequel l'enveloppe comprend au moins l'un parmi l'oxyde métallique et le sel inorganique, et du carbone.

3. Matériau actif d'électrode positive selon la revendication 1 ou 2, dans lequel le noyau interne (11) comprend LiMPO₄, et M comporte Mn et un élément autre que Mn, l'élément autre que Mn satisfaisant au moins l'une parmi les conditions suivantes :
le rayon ionique de l'élément autre que Mn étant désigné par a, et le rayon ionique de l'élément manganèse étant désigné par b, |a-b|/b n'est pas supérieur à 10% ;
la tension d'alternance de valence de l'élément autre que Mn étant désignée par U, 2 V < U < 5,5 V ;
l'activité chimique d'une liaison chimique formée par l'élément autre que Mn et O n'est pas inférieure à celle d'une liaison P-O ; et
la valence la plus élevée de l'élément autre que Mn n'est pas supérieure à 6.

4. Matériau actif d'électrode positive selon la revendication 3, dans lequel l'élément autre que Mn comporte un ou deux parmi un premier élément dopant et un deuxième élément dopant, le premier élément dopant étant dopé au niveau du site du manganèse, et le deuxième élément dopant étant dopé au niveau du site du phosphore.

5. Matériau actif d'électrode positive selon la revendication 4, dans lequel le premier élément dopant satisfait au moins l'une parmi les conditions suivantes :
le rayon ionique du premier élément dopant étant désigné par a, et le rayon ionique de l'élément manganèse étant désigné par b, |a-b|/b n'est pas supérieur à 10% ; et la tension d'alternance de valence du premier élément dopant étant désignée par U, 2 V < U < 5,5 V, où le deuxième élément dopant satisfait au moins l'une parmi les conditions suivantes :
l'activité chimique d'une liaison chimique formée par le deuxième élément dopant et l'oxygène n'est pas inférieure à celle d'une liaison P-O ; et la valence la plus élevée du deuxième élément dopant n'est pas supérieure à 6, où le matériau actif d'électrode positive contient au moins deux parmi les premiers éléments dopants, où le premier élément dopant comporte un ou plusieurs éléments choisis parmi Zn, Al, Na, K, Mg, Mo, W, Ti, V, Zr, Fe, Ni, Co, Ga, Sn, Sb, Nb et Ge.

6. Matériau actif d'électrode positive selon la revendication 5, dans lequel le premier élément dopant comporte au moins deux éléments choisis parmi Fe, Ti, V, Ni, Co et Mg, où le deuxième élément dopant comporte un ou plusieurs éléments choisis parmi B (bore), S, Si et N, où le noyau interne (11) comporte un composé répondant à la formule chimique Li₁₊ₓMn_{1-y}A_{y}P_{1-z}R_{z}O₄, où x est une valeur numérique quelconque dans une plage de 0,100-0,100, y est une valeur numérique quelconque dans une plage de 0,001-0,500, z est une valeur numérique quelconque dans une plage de 0,001-0,100, A comporte un ou plusieurs éléments choisis parmi Zn, Al, Na, K, Mg, Mo, W, Ti, V, Zr, Fe, Ni, Co, Ga, Sn, Sb, Nb et Ge, et R comporte un ou plusieurs éléments choisis parmi B (bore), S, Si et N.

7. Matériau actif d'électrode positive selon l'une quelconque des revendications 1-6, dans lequel le noyau interne (11) comprend un composé répondant à la formule chimique Li₁₊ₓCₘMn_{1-y}A_{y}P_{1-z}R_{z}O₄₋ₙDₙ,
où C comporte un ou plusieurs éléments choisis parmi Zn, Al, Na, K, Mg, Nb, Mo et W,
A comporte un ou plusieurs éléments choisis parmi Zn, Al, Na, K, Mg, Mo, W, Ti, V, Zr, Fe, Ni, Mg, Co, Ga, Sn, Sb, Nb et Ge,
R comporte un ou plusieurs éléments choisis parmi B (bore), S, Si et N,
D comporte un ou plusieurs éléments choisis parmi S, F, Cl et Br,
x est une valeur numérique quelconque dans une plage de 0,100-0,100, y est une valeur numérique quelconque dans une plage de 0,001-0,500, z est une valeur numérique quelconque dans une plage de 0,001-0,100, n est une valeur numérique quelconque dans une plage de 0,001 à 0,1, et m est une valeur numérique quelconque dans une plage de 0,9 à 1,1.

8. Matériau actif d'électrode positive selon la revendication 6 ou 7, dans lequel le rapport de y à 1-y va de 1:10 à 1:1, éventuellement de 1:4 à 1:1, où le rapport de z à 1-z va de 1:9 à 1:999, éventuellement de 1:499 à 1:249, où C, R et D représentent chacun indépendamment un élément quelconque au sein des plages respectives ci-dessus, et A représente au moins deux éléments dans sa plage ;
C est choisi parmi un élément quelconque parmi Mg et Nb,
A représente au moins deux éléments choisis parmi Fe, Ti, V, Co et Mg, et est éventuellement Fe et un ou plusieurs éléments choisis parmi Ti, V, Co et Mg,
R est S,
D est F, où x est choisi dans une plage de 0,001 à 0,005 ; y est choisi dans une plage de 0,01 à 0,5, et éventuellement dans une plage de 0,25 à 0,5 ; z est choisi dans une plage de 0,001 à 0,005 ; n est choisi dans une plage de 0,001 à 0,005, où le taux de changement de réseau du matériau actif d'électrode positive est de 8% ou moins, éventuellement de 4% ou moins, éventuellement de 3,8% ou moins, éventuellement encore de 2,0-3,8%, le taux de changement de réseau étant mesuré conformément à la méthode mentionnée au paragraphe [0137] de la traduction anglaise de la demande telle que déposée ; où la concentration en défaut antisite Li/Mn du matériau actif d'électrode positive est de 4% ou moins, éventuellement de 2,2% ou moins, éventuellement encore de 1,5-2,2%, éventuellement encore de 2% ou moins, éventuellement encore de 0,5% ou moins, la concentration en défaut antisite Li/Mn étant mesurée selon la méthode décrite au paragraphe [0274] de la traduction anglaise de la demande telle que déposée ; où la valence de l'oxygène de surface du matériau actif d'électrode positive va de -1,89 à -1,98, éventuellement de -1,90 à -1,98, éventuellement encore de -1,90 ou moins, éventuellement encore de -1,82 ou moins, l'état de valence de l'oxygène de surface étant mesuré selon la méthode décrite au paragraphe [0275] de la traduction anglaise de la demande telle que déposée ; où le matériau actif d'électrode positive présente une densité compactée sous 3T de 2,0 g/cm³ ou plus, éventuellement de 2,2 g/cm³ ou plus, éventuellement de 2,2 g/cm³ ou plus et de 2,8 g/cm³ ou moins, la densité compactée étant mesurée selon la méthode décrite au paragraphe [0276] de la traduction anglaise de la demande telle que déposée.

9. Matériau actif d'électrode positive selon l'une quelconque des revendications 1-8, dans lequel Q comporte Li et un ou plusieurs choisis parmi Fe, Ni, Mg, Co, Cu, Zn, Ti, Ag, Zr, Nb ou Al ;
Q' est choisi parmi un ou plusieurs éléments parmi Li, Fe et Zr ; M' est choisi parmi un ou plusieurs éléments parmi un métal alcalin, un métal alcalino-terreux, un métal de transition, un élément du groupe IIIA, un élément du groupe IVA, un lanthanide et Sb, éventuellement parmi un ou plusieurs éléments parmi Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La et Ce, et éventuellement encore parmi un ou plusieurs éléments parmi Mg, Al, Si, Zn, Zr et Sn ; où le pyrophosphate comporte LiₐQP₂O₇ et/ou Q_{b}(P₂O₇)_{c}, où 0 ≤ a ≤ 2, 1 ≤ b ≤ 4, 1 ≤ c ≤ 6, les valeurs de a, b et c satisfont à la condition de maintenir LiₐQP₂O₇ ou Q_{b}(P₂O₇)_{c} électriquement neutre, et Q dans LiₐQP₂O₇ et Q_{b}(P₂O₇)_{c} est choisi chacun indépendamment parmi un ou plusieurs éléments parmi Fe, Ni, Mg, Co, Cu, Zn, Ti, Ag, Zr, Nb ou Al, où le phosphate présente un espacement interplanaire de 0,244-0,425 nm, éventuellement de 0,345-0,358 nm, et un angle inclus d'orientation cristalline (111) de 20,00°-37,00°, éventuellement de 24,25°-26,45° ; et le pyrophosphate présente un espacement interplanaire de 0,293-0,470 nm, éventuellement de 0,293-0,326 nm, et un angle inclus d'orientation cristalline (111) de 18-32,57°, éventuellement de 19,211°-30,846°, éventuellement encore de 26,41°-32,57°, où le pyrophosphate et le phosphate présentent chacun indépendamment une cristallinité de 10% à 100%, éventuellement de 50% à 100%, où l'enveloppe comprend une couche de revêtement en carbone, la substance inorganique cristalline se trouve entre le noyau interne (11) et la couche de revêtement en carbone, et le carbone pour la couche de revêtement en carbone est un mélange de carbone de forme SP2 et de carbone de forme SP3, et éventuellement, le rapport molaire du carbone de forme SP2 au carbone de forme SP3 est une valeur numérique quelconque dans une plage de 0,07-13, éventuellement une valeur numérique quelconque dans une plage de 0,1-10, éventuellement une valeur numérique quelconque dans une plage de 2,0-3,0, où l'enveloppe comprend une première couche de revêtement (12) revêtant le noyau interne (11) et une deuxième couche de revêtement (13) revêtant la première couche de revêtement (12), le carbone hybridé SP2 et SP3 étant mesuré selon la méthode décrite au paragraphe [0290] de la traduction anglaise de la demande telle que déposée,
où la première couche de revêtement (12) comprend un pyrophosphate de QP₂O₇ et un phosphate de XPQ₄, et la deuxième couche de revêtement (13) est une couche de revêtement en carbone, où la quantité de revêtement de la première couche de revêtement (12) est supérieure à 0% en poids et inférieure ou égale à 7% en poids, éventuellement de 4-5,6% en poids, sur la base du poids du noyau interne (11), où le rapport pondéral du pyrophosphate au phosphate dans la première couche de revêtement (12) va de 1:3 à 3:1, éventuellement de 1:3 à 1:1, où
la quantité de revêtement de la deuxième couche de revêtement (13) est supérieure à 0% en poids et inférieure ou égale à 6% en poids, éventuellement de 3-5% en poids, sur la base du poids du noyau interne (11).

10. Matériau actif d'électrode positive selon la revendication 9, dans lequel l'enveloppe comprend une première couche de revêtement (12) revêtant le noyau interne (11) et une deuxième couche de revêtement (13) revêtant la première couche de revêtement (12),
où la première couche de revêtement (12) comprend un pyrophosphate cristallin de QP₂O₇ et un oxyde métallique de Q'ₑO_{f}, et la deuxième couche de revêtement (13) est une couche de revêtement en carbone, où la quantité de revêtement de la première couche de revêtement (12) est supérieure à 0% en poids et inférieure ou égale à 7% en poids, éventuellement de 4-5,6% en poids, sur la base du poids du noyau interne (11), où le rapport pondéral du pyrophosphate à l'oxyde dans la première couche de revêtement (12) va de 1:3 à 3:1, éventuellement de 1:3 à 1:1, où la quantité de revêtement de la deuxième couche de revêtement (13) est supérieure à 0% en poids et inférieure ou égale à 6% en poids, éventuellement de 3-5% en poids, sur la base du poids du noyau interne (11), **caractérisé en ce que** l'enveloppe comprend une première couche de revêtement (12) revêtant le noyau interne (11), une deuxième couche de revêtement (13) revêtant la première couche de revêtement (12), et une troisième couche de revêtement (14) revêtant la deuxième couche de revêtement (13) ;
où la première couche de revêtement (12) comprend un pyrophosphate cristallin ;
la deuxième couche de revêtement (13) comprend un oxyde métallique de Q'ₑO_{f} ;
le pyrophosphate cristallin comporte LiₐQP₂O₇ et/ou Q_{b}(P₂O₇)_{c}, où a est supérieur à 0 et inférieur ou égal à 2, b est une valeur numérique quelconque dans une plage de 1-4, et c est une valeur numérique quelconque dans une plage de 1-3 ; et
la troisième couche de revêtement (14) comprend du carbone, où la quantité de revêtement de la première couche de revêtement (12) est supérieure à 0 et inférieure ou égale à 6% en poids, éventuellement supérieure à 0 et inférieure ou égale à 5,5% en poids, éventuellement encore supérieure à 0 et inférieure ou égale à 2% en poids, sur la base du poids du noyau interne (11) ; et/ou
la quantité de revêtement de la deuxième couche de revêtement (13) est supérieure à 0 et inférieure ou égale à 6% en poids, éventuellement supérieure à 0 et inférieure ou égale à 5,5% en poids, éventuellement encore de 2% en poids-4% en poids, sur la base du poids du noyau interne (11) ; et/ou
la quantité de revêtement de la troisième couche de revêtement (14) est supérieure à 0 et inférieure ou égale à 6% en poids, éventuellement supérieure à 0 et inférieure ou égale à 5,5% en poids, éventuellement encore supérieure à 0 et inférieure ou égale à 2% en poids, sur la base du poids du noyau interne (11).

11. Matériau actif d'électrode positive selon la revendication 10, dans lequel
la première couche de revêtement (12) a une épaisseur de 2-10 nm ;
la deuxième couche de revêtement (13) a une épaisseur de 3-15 nm ;
la troisième couche de revêtement (14) a une épaisseur de 5-25 nm, où, sur la base du poids du matériau actif d'électrode positive,
la teneur en élément manganèse est dans une plage de 10% en poids-35% en poids, éventuellement dans une plage de 15% en poids-30% en poids, éventuellement encore dans une plage de 17% en poids-20% en poids ; et
la teneur en élément phosphore est dans une plage de 12% en poids-25% en poids, éventuellement dans une plage de 15% en poids-20% en poids ; et
le rapport pondéral entre l'élément manganèse et l'élément phosphore est dans une plage de 0,90-1,25, éventuellement encore dans une plage de 0,95-1,20.

12. Matériau actif d'électrode positive selon la revendication 9, le matériau actif d'électrode positive comprenant une première couche de revêtement (12) revêtant le noyau interne (11), une deuxième couche de revêtement (13) revêtant la première couche de revêtement (12), et une troisième couche de revêtement (14) revêtant la deuxième couche de revêtement (13), où
la première couche de revêtement (12) comprend un pyrophosphate cristallin de LiₐQP₂O₇ ou Q_{b}(P₂O₇)_{c},
la deuxième couche de revêtement (13) comprend un phosphate cristallin de XPQ₄, et
la troisième couche de revêtement (14) est constituée de carbone, où la quantité de revêtement de la première couche de revêtement (12) est supérieure à 0 et inférieure ou égale à 6% en poids, éventuellement supérieure à 0 et inférieure ou égale à 5,5% en poids, éventuellement encore supérieure à 0 et inférieure ou égale à 2% en poids, sur la base du poids du noyau interne (11) ;
la quantité de revêtement de la deuxième couche de revêtement (13) est supérieure à 0 et inférieure ou égale à 6% en poids, éventuellement supérieure à 0 et inférieure ou égale à 5,5% en poids, éventuellement encore de 2-4% en poids, sur la base du poids du noyau interne (11) ;
la quantité de revêtement de la troisième couche de revêtement (14) est supérieure à 0 et inférieure ou égale à 6% en poids, éventuellement supérieure à 0 et inférieure ou égale à 5,5% en poids, éventuellement encore supérieure à 0 et inférieure ou égale à 2% en poids, sur la base du poids du noyau interne (11), où
la première couche de revêtement (12) a une épaisseur de 1-10 nm ;
la deuxième couche de revêtement (13) a une épaisseur de 2-15 nm ;
la troisième couche de revêtement (14) a une épaisseur de 2-25 nm, où
sur la base du poids du matériau actif d'électrode positive, la teneur en élément manganèse est dans une plage de 10% en poids-35% en poids, éventuellement dans une plage de 15% en poids-30% en poids, et éventuellement encore dans une plage de 17% en poids-20% en poids, la teneur en élément phosphore est dans une plage de 12% en poids-25% en poids, éventuellement dans une plage de 15% en poids-20% en poids, et le rapport pondéral entre l'élément manganèse et l'élément phosphore est dans une plage de 0,90-1,25, éventuellement de 0,95-1,20.

13. Plaque d'électrode positive, comprenant un collecteur de courant d'électrode positive et une couche de film d'électrode positive disposée sur au moins une surface du collecteur de courant d'électrode positive, où la couche de film d'électrode positive comprend un matériau actif d'électrode positive selon l'une quelconque des revendications 1-12, où la teneur en matériau actif d'électrode positive dans la couche de film d'électrode positive est de 10% en poids ou plus, éventuellement de 95-99,5% en poids, sur la base du poids total de la couche de film d'électrode positive.

14. Batterie secondaire (5), comprenant le matériau actif d'électrode positive selon l'une quelconque des revendications 1-12.

15. Module de batterie (4), comprenant la batterie secondaire (5) selon la revendication 14.
